Europäisches Patentamt

European Patent Office

Office européen des brevets

(19)

(11) Publication number: **0 036 559**
**A1**

# EUROPEAN PATENT APPLICATION

(21) Application number: **81101758.1**

(22) Date of filing: **10.03.81**

(51) Int. Cl.³: **G 09 B 17/00,** G 09 B 7/04,
G 06 F 3/16, G 10 L 1/08

(30) Priority: **26.03.80 US 134239**

(43) Date of publication of application: **30.09.81**
**Bulletin 81/39**

(84) Designated Contracting States: **DE FR GB IT**

(71) Applicant: **TEXAS INSTRUMENTS INCORPORATED,**
**13500 North Central Expressway, Dallas**
**Texas 75265 (US)**

(72) Inventor: **Barnes, R, Hugh, 851- Louisville Drive, Lubbock**
**Texas (US)**
Inventor: **Weinstein, Steve, 3510 76th Street, Lubbock**
**Texas (US)**
Inventor: **Thompson, Barbara, 14622 Reforma, Dallas**
**Texas (US)**

(74) Representative: **Leiser, Gottfried, Dipl.-Ing. et al,**
**Patentanwälte Prinz-Hauser-Leiser Ernsberger**
**Strasse 19, D-8000 München 60 (DE)**

(54) **Electronic reading learning aid.**

(57) An electronic handheld reading learning aid including a speech synthesis device. The speech synthesis device includes a digital filter, excitation circuitry, interpolation circuitry, a parameter decoder, a digital-to-analog converter and associated timing circuits. A non-volatile memory stores digital data representative of the correct spellings and coded filter coefficients sufficient to cause the speech synthesis integrated circuit to audibly pronounce a preselected list of words. Various modes of operation are utilized to enhance basic reading skills.

## BACKGROUND OF THE INVENTION

This invention relates to electronic language learning aids, teaching machines and electronic training aids. More specifically, this invention relates to electronic language learning aids, teaching machines and electronic training aids having means for producing synthesized speech.

The prior art suggests various techniques for synthesizing human speech from digital data. For instance, some of the techniques used are briefly described in "Voice Signals: Bit by Bit" at pages 28-34 of the October 1973 issue of IEEE Spectrum. An important technique for synthesizing human speech, and the techniques used by the speech synthesizer chip described herein, is called linear predictive coding. For a detailed discussion of this technique, see "Speech Analysis and Synthesis by Linear Prediction of the Speech Wave" by B.S. Atal and Suzanne L. Hanauer which appears at pp. 637-50 of Volume 50, number 2 (part 2) of the Journal of the Acoustical Society of America.

In U.S. Patent Application S/N 905,328, entitled "Lattice Filter Waveform or Speech Synthesis Circuits Using Digital Logics" describes a lattice filter capable of being implemented on a single semiconductor chip. The learning aid described herein makes use of the lattice filter described in the aforementioned U.S. Patent Application.

- 1 -

It is one object of this invention that a learning aid be equipped to audibly pronounce words in a human language.

It is another object of this invention that the words and phrases which the learning aid is equipped to audibly pronounce be randomly accessible.

It is yet another object of this invention that learning aid circuits be implemented on a miniature semiconductor chip so that the entire learning aid is constructable as a portable device.

The foregoing objects are achieved as is now described. The words to be pronounced by the machine are stored as digital codes in a memory device. This memory is preferably of the non-volatile type so that the words are not erased when power is disconnected from the apparatus. A speech synthesizer circuit is connected to the output of the memory for converting the signals stored therein to audible speech. Several types of speech synthesis circuits are known. In a disclosed embodiment, the speech synthesizer is implemented using linear predictive coding and integrated on a single semiconductor chip. A speaker is provided to convert output from the speech synthesizer to audible sounds. A keyboard and display, both of which preferably are capable of accommodating alphanumeric characters, are preferably provided. The display and keyboard are preferably coupled to the speech synthesis circuit and memory via a controller circuit. In the embodiment disclosed, the controller's function is provided by an appropriately programmed microprocessor device. The controller circuit controls the memory to read out the digital signals corresponding to the words and phrases to be pronounced, the words and phrases preferably being randomly selectable from a plurality of words stored therein. The words and phrases are converted to audible signls by means of the synthesizer circuit in combination with the speaker. When the operator selects a

- 2 -

word to be pronounced by inputting a word at the keyboard, the controller compares the inputted word with the words stored in the memory and the operator is informed of the appropriate pronounciation of the selected word. The operator may be so informed audibly via the speech synthesis circuit and speaker. Of course, the particular words selected for any given library is a design choice. The learning aid is installed in an easily portable case. The size of the speech synthesis chip is on the order of 45,000 square mils using conventional MOS design rules and a convention P-MOS processing technique. Of course, using C-MOS processing would tend to increase the size of the chip somewhat.

In an embodiment disclosed, the learning aid is preferably equipped with other modes of operation which are described in detail.

BRIEF DESCRIPTION OF THE DRAWINGS

The novel features believed characteristic of the invention are set forth in the appended claims. The invention itself, however, as well as a preferred mode of use, further objects and advantages thereof, will be best understood by reference to the following detailed description of an illustrative embodiment when read in conjunction with the accompanying drawings, wherein:

FIGURE 1 is a front view of an electronic learning aid;

FIGURE 2 depicts the segment details of the display;

FIGURE 3 is a block diagram of the major components preferably making up the learning aid;

FIGURES 4a and 4b form a composite block diagram (when placed side by side) of the speech synthesis chip;

FIGURE 5 is a timing diagram of various timing signals preferably used on the synthesizer;

FIGURE 6 pictorially shows the data compression scheme preferably used to reduce the data rate required by the synthesizer;

FIGURES 7a-7d form a composite logic diagram of the synthesizer's timing circuits;

FIGURES 8a-8f form a composite logic diagram of the synthesizer's ROM/Controller interface logics;

FIGURES 9a-9d form a composite logic diagram of the interpolator logics;

FIGURES 10a-10c form a composite logic diagram of the array multiplier;

FIGURES 11a-11d form a composite logic diagram of the speech synthesizer's lattice filter and excitation generator;

FIGURES 12a and 12b are schematic diagrams of the parameter RAM;

FIGURES 13a-13c are schematic diagrams of the parameter ROM;

- 4 -

FIGURES 14a-14b form a composite diagram of the chirp ROM;

FIGURES 15a-15b form a composite block diagram of a microprocessor which may be utilized as the controller;

FIGURES 16a-16c form a composite logic diagram of the segment decoder of the microprocessor;

FIGURE 17 depicts the digit output buffers and digit registers of the microprocessor;

FIGURE 18 depicts the KB selector circuit of the microprocessor;

FIGURE 19 is a block diagram of ROMs 12a, 12b, 13a or 13b;

FIGURES 20a-20f form a composite logic diagram of the control logic for ROMs 12a, 12b, 13a or 13b;

FIGURES 21a-21d form a composite logic diagram of the X and Y address decoders and the array of memory cells;

FIGURE 22 is a plan view of the synthesizer chip herein described, showing the metal mask or metal pattern, enlarged about fifty times;

FIGURES 23a, b and c depict embodiments of the speaker system.

## GENERAL DESCRIPTION

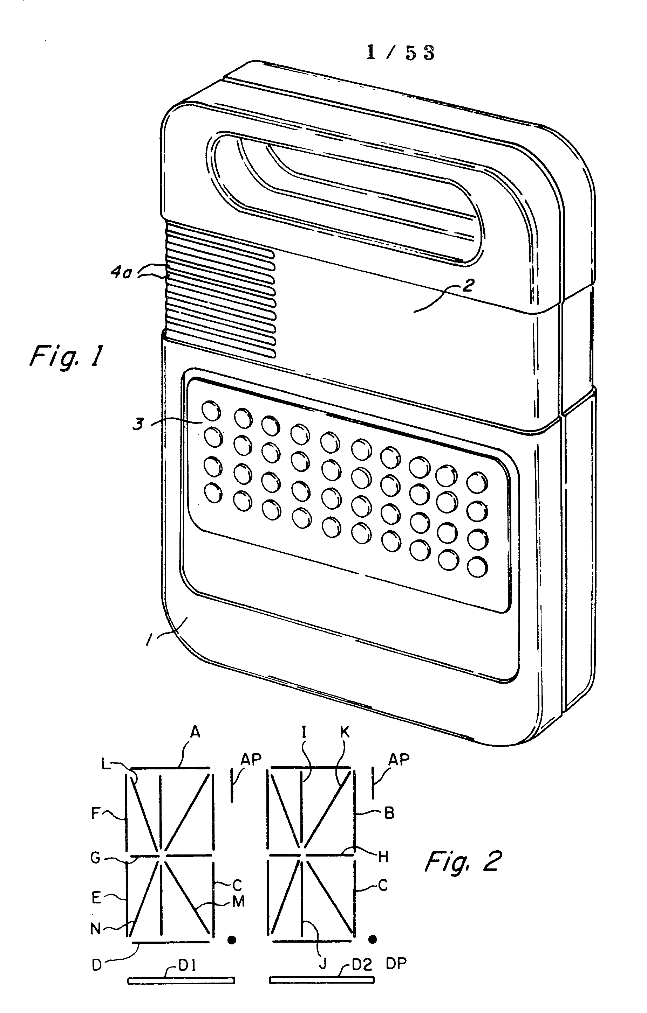

FIGURE 1 is a front view of an electronic learning aid of the type which may embody the present invention. The learning aid includes a case 1 which encloses electronic circuits preferably implemented on integrated circuits (not shown in this figure). These circuits are coupled to a display 2, a keyboard 3 and a speaker 4 or other voice coil means (also not shown in FIGURE 1). However, the openings are shown behind which speaker 4 is preferably mounted. The display is preferably of the vacuum fluorescent type in the embodiment to be described; however, it will be appreciated by those skilled in the art that other display means, such as arrays of light emitting diodes, liquid crystal devices, electrochromic devices, gas discharge devices, plasma displays or cathode ray tube displays, the latter two being better suited for simultaneous rather than sequential operation. Also, in this embodiment, as a matter of design choice, the display has ten character positions. The keyboard 3 of the learning aid of this embodiment has forty key switch positions, twenty-six of which are used to input the letters of the alphabet into the learning aid. Of the remaining fourteen key switch positions, six are utilized for mode keys (word zap/on, hear it, read it, picture read, letter stumpers and word maker), another six in its modes (go, enter, erase, module select, replay and word zapper key) and the remaining two comprise an apostrophe key and an off key. The words spoken by the learning aid, as well as the correct spelling of those words, are stored as digital information in one or more Read-Only-Memories.

The learning aid depicted in FIGURE 1 may be battery powered or powered from a source of external electrical power, as desired. The case is preferably made from injection molded plastic and the keyboard switches may be provided by arrays of key switches of the type disclosed in U.S. Patent No. 4,005,293, if desired. Of course, other types of case materials or switches alternatively may be used.

- 6 -

Having described the outward appearance of the learning aid, the modes in which the learning aid may operate will be first described followed by a description of the block diagrams and detailed logic diagrams of the various electronic circuits used to implement the learning aid of FIGURE 1.

## MODES OF OPERATION

The first mode, the "word zap" mode, is entered by pressing the word zap/on key. The "word zap" mode causes the learning aid to audibly pronounce a word within the phrase "Zap the word ___." A series of confusingly similar words is then visually displayed. When the pronounced word is displayed the operator indicates his recognition of it by depressing the word zapper key. Appropriate reward or error phrases are then audibly pronounced. This mode of operation is effective in teaching reading skills which a non-speaking learning aid could not implement. An example of the "word zap" mode can be seen in Table I.

The "hear it" mode allows the operator to enter a word via the alphabet keys. After the word has been entered (by depressing the enter key) the learning aid will audibly pronounce the entered word, if it is contained in the non-volatile memory. Unlike a dictionary or simple visual translator device, this mode of operation teaches correct pronounciation without having to utilize complete complex phonetic symbols. An example of the "hear it" mode can be seen in Table II.

The "read it" mode presents an audible phrase to the operator containing a missing word. Various possible words are then presented visibly. The operator selects the proper word to complete the phrase. Entry of the proper word will generate an appropriate reward phrase. An example of the "read it" phrase can be seen in Table III.

- 7 -

In the "picture read" mode, the learning aid audibly directs the operator to an appropriate picture in an accompanying text. The operator must then correctly enter the spelling of the object pictured to generate the reward phrase. An example of the "picture read" mode can be seen in Table IV.

In the "letter stumper" mode the learning aid audibly pronounces a letter of the alphabet. Upon entry of that letter, at the keyboard, by the operator, an additional letter is pronounced and is added to the sequence. The operator must correctly enter the entire incremented sequence. This mode teaches auditory memory functions. In addition to memory functions, this mode teaches recognition of alphabet letters in conjunction with the correct pronounciation of the letters. If the operator correctly enters the proper sequence of letters after some nominal number of incrementations, an appropriate reward phrase is generated. An example of the "letter stumper" mode can be seen in Table V.

In the "word maker" mode of operation phonetic skills are taught. A syllable is pronounced audibly and the operator is audibly told to add a letter to the syllable to form a specific word. A correct choice of alphabet keys will cause the learning aid to pronounce the formed word. This mode of operation will teach the basic phonetic skills necessary to form simple words. An example of the "word maker" mode can be seen in Table VI.

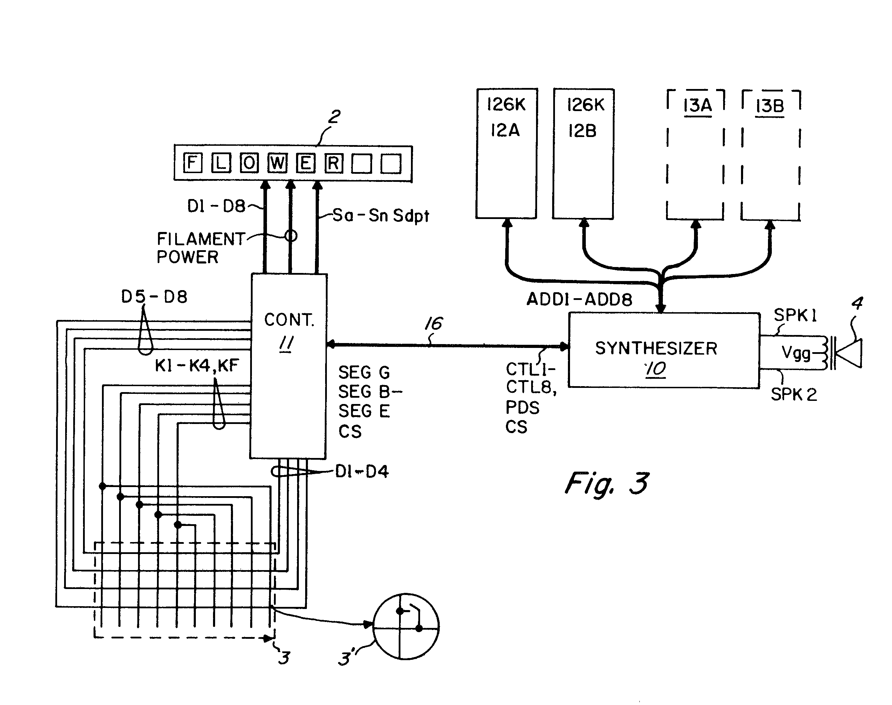

Referring now to FIGURE 2, there is shown a preferred arrangement of the segments of display 2. Display 2 preferably has eight character positions each of which is provided by a sixteen segment character which has fourteen segments arranged somewhat like a "British flag" with an additional two segments for an apostrophe and a decimal point. In FIGURE 2, segments a-n are arranged more or less in the shape of the "British flag" while segment ap provides apostrophe and segment dpt provides a decimal point. Segment conductors Sa through Sn, SDP and Sap are respectively coupled to segments a through n, dpt and ap in the eight character positions of display 2. Also, for each character position, there is a common electrode, labeled ad D1-D8. When display 2 is provided by a vacuum fluorescent display device, the segments electrodes are provided anodes in the vacuum fluorescent display device, while each common electrode is preferably provided by a grid associated with each character position. By appropriately multiplexing signals on the segment conductors (Sa-Sn, Sdpt and Sap) with signals on the character common electrodes (D1-D8) the display may be caused to show the various letters of the alphabet, a period, and an apostrophe and various numerals. For instance, by appropriately energizing segment conductors A, B, C, E and F when character common electrode D1 is appropriately energized, the letter A is actuated in the first character position of display 2. Further, by appropriate strobing segment conductors A, B, C, D, H, I and J when character common electrode D2 is appropriately energized, the letter B is caused to be actuated in the second character position of display 2. It should be evident to those skilled in the art that the other letters of the alphabet as well as the apostrophe, period and numerals may be formed by appropriate energization of appropriate segment conductors and common electrodes. In operation, the character common electrodes D1-D8 are sequentially energized with an appropriate voltage potential as selected segment conductors are energized to their appropriate voltage potential to produce a display of characters at display 2. Of course, the segment electrodes could alternatively be sequentially energized as the digit electrodes are selectively energized in producing a display at display 2.

BLOCK DIAGRAM OF THE LEARNING AID

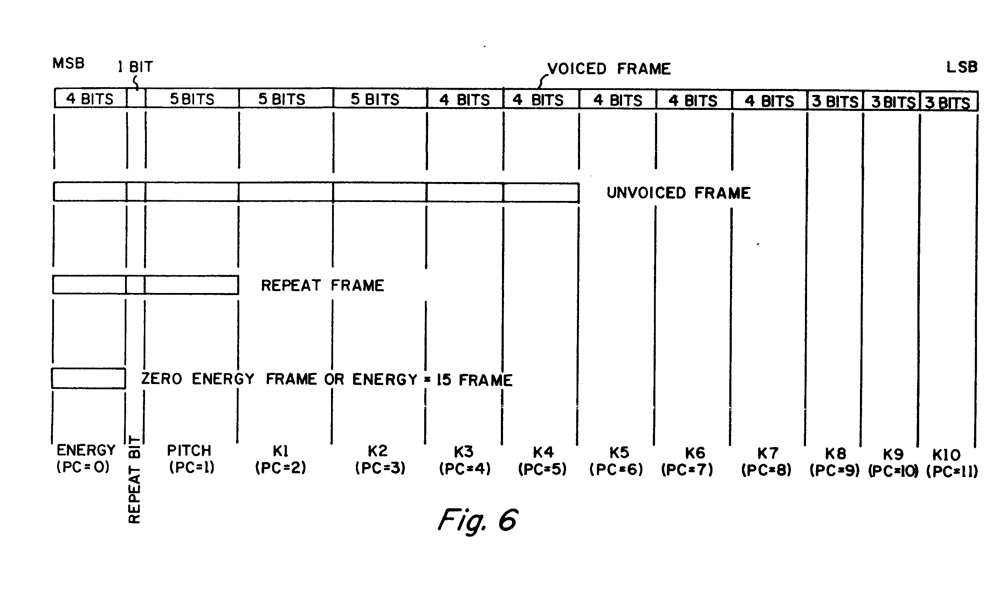

FIGURE 3 is a block diagram of the major components making up the disclosed embodiment of an electronic learning aid. The electronics of the disclosed learning aid may be divided into three major functional groups, one being a controller 11, another being a speech synthesizer 10, and another being a read-only-memory (ROM) 12. In the embodiment

- 9 -

disclosed, these major electronic funtional groups are each integrated on separate integrated circuit chips except for the ROM functional group which is integrated onto two integrated circuit chips. Thus, the speech synthesizer 10 is preferably implemented on a single integrated circuit denoted by the box labeled 10 in FIGURE 3 while the controller is integrated on a separate integrated circuit denoted by a box 11 in FIGURE 3. The word list for the learning aid is stored in the ROM functional group 12, which stores both the correct spellings of the words as well as frames of digital coding which are converted by speech synthesizer 10 to an electrical signal which drives speaker or other voice coil means 4. In the embodiment disclosed, ROM functional group 12 is preferably provided with 262,144 bits of storage. As a matter of design choice, the 262,144 bits of data are divided between two separate read-only-memory chips, represented in FIGURE 3 at numerals 12a and 12b. The memory capability of ROM functional group 12 is a design choice; however, using the data compression features which are subsequently discussed with reference to FIGURE 6, the 262,144 bits of read-only-memory may be used to store on the order of 250 words of spoken speech and their correct spellings.

Of course, the number of chips on which the learning aid is implemented is a design choice and as large scale integration techniques are improved (using electron beam etching and other techniques), the number of integrated circuit chips may be reduced from four to as few as a single chip.

Synthesizer chip 10 is interconnected with the read-only memories via data path 15 and is interconnected with controller 11 via data path 16. The controller 11, which may be provided by an appropriately programmed microprocessor type device, preferably actuates display 2 by providing segment information on segment conductors Sa-Sn, Sdpt and Sap along with character position information on connectors D1-D8. In the embodiment herein disclosed, controller 11 preferably also provides filament power to display 2

- 10 -

when a vacuum fluorescent device is used therefor. Of course, if a liquid crystal, electrochromographic, light emitting diode or gas discharge display were used such filament power would not be required. One technique for generating filament power on a controller chip is described in U.S. Patent Application S/N 843,017 filed October 17, 1977. Controller 11 also scans keyboard 3 for detecting key depressions thereat. Keyboard 3 has forty switch positions which are shown in representative form in FIGURE 3, the switch locations occurring where the conductors cross within the dashed line at numeral 3 in FIGURE 3. A switch closure causes the conductors shown as crossing in FIGURE 3 to be coupled together. At numeral 3' the switch occurring at a crossing of conductors at numeral 3 is shown in detail. In addition to actuating display 2 and sensing key depression at keyboard 3, controller 11 also perform such functions as providing addresses for addressing ROMs 12a and 12b (via synthesizer 10), and other such functions which will become apparent. Addresses from controller 11 are transmitted to ROMs 12a-b by synthesizer 10 because, as will be seen, synthesizer 10 preferably is equipped with buffers capable of addressing a plurality of read-only-memories. Preferably, only one of the pairs of ROMs will output information in response to this addressing because of a chip select signal which is transmitted from synthesizer 10 to all the Read-Only-Memories. Controller 11, in this embodiment, transmits addresses to the ROMs via synthesizer 10 so that only synthesizer 10 output buffers need be sized to transmit addresses to a plurality of ROMs simultaneously. Of course, controller 11 output buffers could also be sized to transmit information to a plurality of read-only-memories simultaneously and thus in certain embodiments it may be desirable to also couple controller 11 directly to the ROMs.

As will be seen, synthesizer chip 10 synthesizes human speech or other sounds according to frames of data stored in ROMs 12a-12b or 13a or 13b. The synthesizer 10 employs a digital lattice filter of the type described in U.S.

Patent Application S/N 905,328, filed May 12, 1978. U.S. Patent Application Serial Number 905,328 is hereby incorporated herein by reference. The following discussion of the speech synthesizer assumes that the reader has a basic understanding of the operation of the lattice filter described in U.S. Patent Application S/N 905,328 therefore, the reader is encouraged to read that patent before delving into the following detailed discussion of the speech synthesizer. As will also be seen, synthesizer 10 also includes a digital to analog (D to A) converter for converting the digital output from the lattice filter to analog signals for driving speaker 4 or other voice coil means with those analog signals. Synthesizer 10 also includes timing, control and data storage and data compression systems which will be subsequently described in detail.

SYNTHESIZER BLOCK DIAGRAM

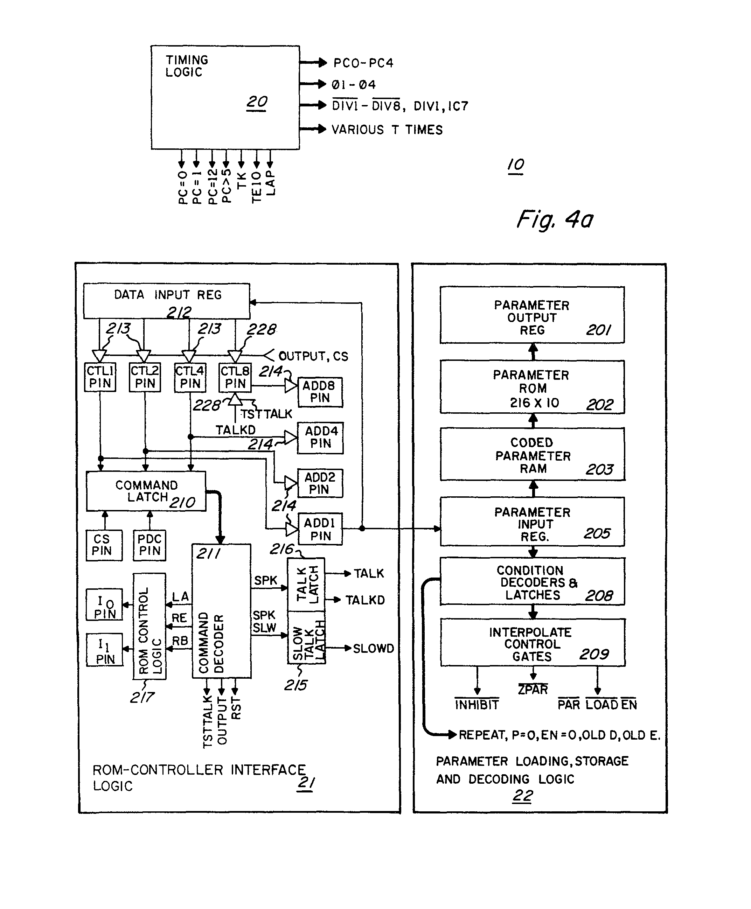

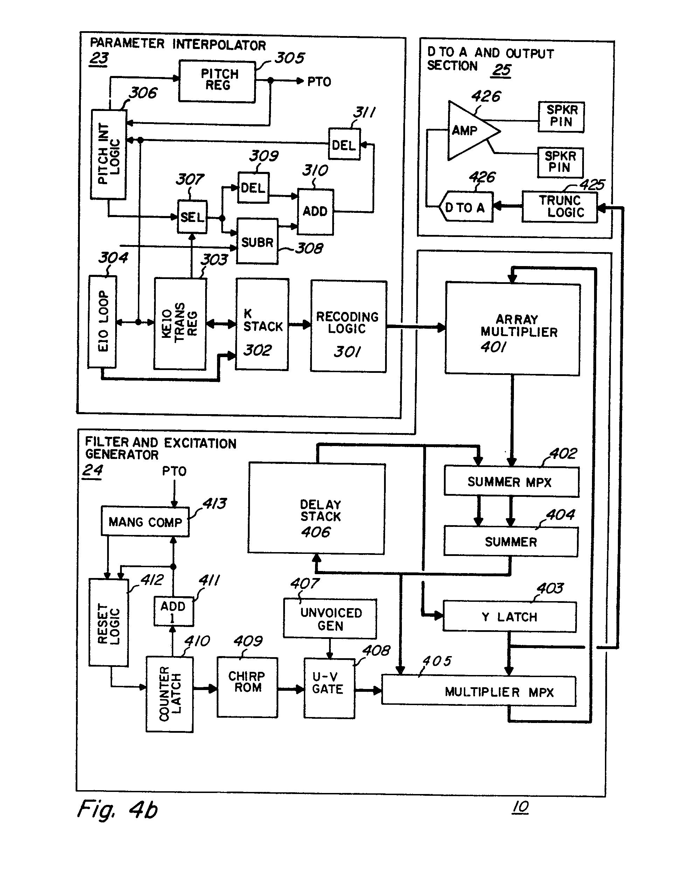

FIGURES 4a and 4b form a composite block diagram of the synthesizer 10. Synthesizer 10 is shown as having six major functional blocks, all but one of which are shown in greater detail in block diagram form in FIGURES 4a and 4b. The six major functional blocks are timing logic 20; ROMController interface logic 21; parameter loading, storage and decoding logic 22; parameter interpolator 23; filter and excitation generator 24 and D to A and output section 25. Subsequentially, these major functional blocks will be described in detail with respect to FIGURES 6, 7a-d, 8a-f, 9a-d, 10a-c, 11a-d, and 12a-b.

Rom/Controller Interface Logic

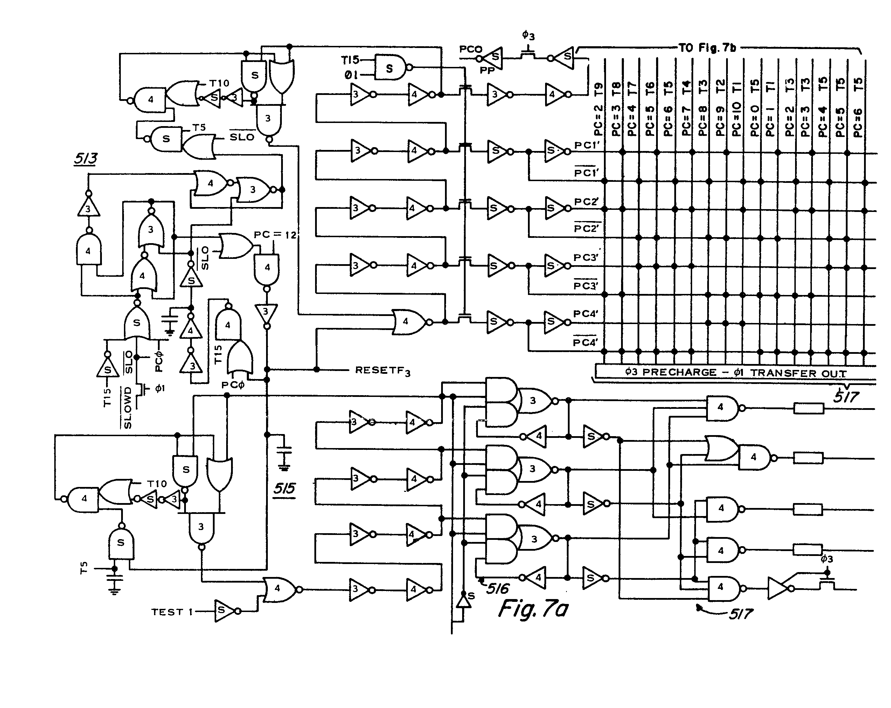

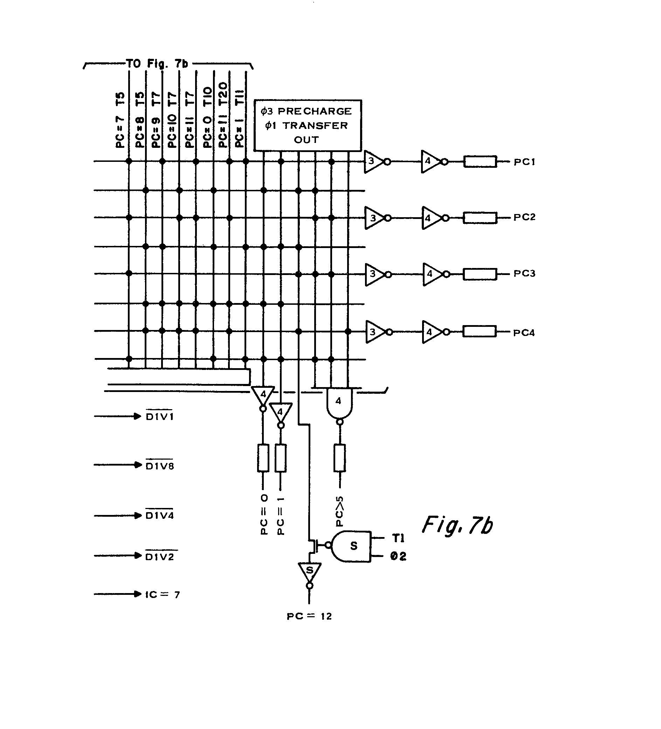

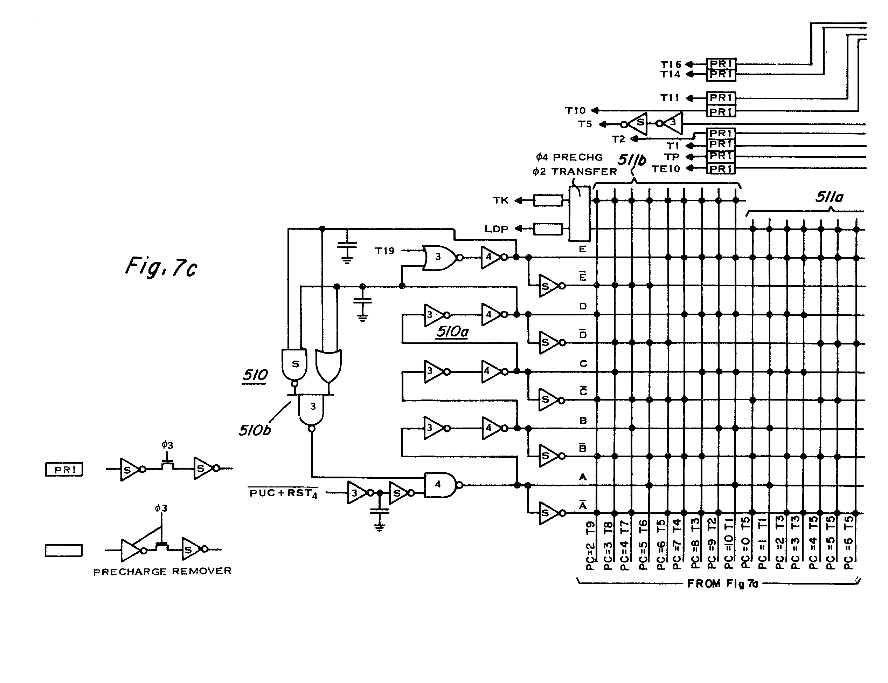

Referring again to FIGURES 4a and 4b, ROM/Controller interface logic 21 couples synthesizer 10 to read-only-memories 12a and 12b and to controller 11. The control 1-8 (CTL1-CTL8), chip select (CS) and processor data clock (PDC) pins are coupled, in this embodiment, to the controller while the address 1-8 (ADD1-ADD8) and instruction 0-1 (I0-I1) pins

- 12 -

are connected to ROMs 12a and 12b (as well as ROMs 13a-13b, if used). ROM/Controller interface logic 21 sends address information from controller 11 to the Read-Only-Memories 12a-12b and preferably returns digital information from the ROMs back to the controller 12; logic 21 also brings data back from the ROMs for use by synthesizer 10 and initiates speech. A Chip Select (CS) signal enables tristate buffers, such as buffers 213, and a three bit command latch 210. A Processor Data Clock (PDC) signal sets latch 210 to hold the data appearing at CTL1-CTL4 pins from the controller. Command latch 210 stores a three bit command from controller 11, which is decoded by command decoder 211. Command decoder 211 is responsive to eight commands which are: speak (SPK) or speak slowly (SPKSLOW) for causing the synthesizer to access data from the Read-Only-Memory and speak in response thereto either at a normal rate or at a slow rate; a reset (RST) command for resetting the synthesizer to zero; a test talk (TTALK) so that the controller can ascertain whether or not the synthesizer is still speaking; a load address (LA) where four bits are received from the controller chip at the CTL1-CTL8 pins and transferred to the ROMs as an address digit via the ADD1-ADD8 pins and associated buffers 211; a read and branch (RB) command which causes the Read-Only-Memory to take the contents of the present and subsequent address and use that for a branch address; a read (RE) command which causes the Read-Only-Memory to output one bit of data on ADD1, which data shifts into a four bit data input register 212; and an output command which transfers four bits of data in the data input register 212 to controller 11 via buffers 213 and the CTL1-CTL8 pins. Once the synthesizer 10 has commenced speaking in response to a SPK or SPKSLOW command it continues speaking until ROM interface logic 21 encounters a RST command or an all ones gates 207 (see FIG. 7a-7d) detects an "energy equal to fifteen" code and resets talk latch 216 in response thereto. As will be seen, an "energy equal to 15" code is used as the last frame of data in a plurality of frames of data for generating words, phases or sentences. The LA, RE and RB commands decoded by decoder 211 are re-encoded via ROM control logic 217 and transmitted to the read-only-

- 13 -

memories via the instruction (I0-I1) pins.

The processor Data Clock (PDC) signal serves other purposes than just setting latch 210 with the data on CTL1-CTL4. It signals that an address is being transferred via CTL1-CTL8 after an LA or output command has been decoded or that the TTALK test is to be performed and outputted on pin CTL8. A pair of latches 218A and B (FIGURES 7a-7d) associated with decoder 211 disable decoder 211 when the aforementioned LA, TSTTALK and OUTPUT commands have been decoded and a subsequent PDC occurs so that the data then on pins CTL1-CTL8 is not decoded.

A TALK latch 216 is set in response to a decoded SPK or SPKSLW command and is reset: (1) during a power up clear (PUC) which automatically occurs whenever the synthesizer is energized; (2) by a decoded RST command or (3) by an "energy equals fifteen" code in a frame of speech data. The TALKD output is delayed output to permit all speech parameters to be inputed into the synthesizer before speech is attempted. The talk slow latch 215 is set in response to a decoded SPKSLOW command and reset in the same manner as latch 216. The SLOWD output is similarly a delayed output to permit all the parameters to be inputted into the synthesizer before speech is attempted.

Parameter Loading, Storage and Decoding Logic

The parameter loading, storage and decoding logic 22 includes a six bit long parameter input register 205 which receives serial data from the read-only-memory via pin ADD1 in response to a RE command outputted to the selected read-only-memory via the instruction pins. A coded parameter random access memory (RAM) 203 and condition decoders and latches 208 are connected to receive the data inputted into the parameter input register 205. As will be seen, each frame of speech data is inputted in three to six bit portions via parameter input register 205 to RAM 203 in a coded format where the frame is temporarily stored. Each of the coded pa-

- 14 -

rameters stored in RAM 203 are converted to a ten bit parameter by parameter ROM 202 and temporarily stored in a parameter output register 201.

As will be discussed with respect to FIGURE 6, the
frames of data may be either wholly are partially inputted
into parameter input register 205, depending upon the length
of the particular frame being inputted. Condition decoders
and latches 208 are responsive to particular portions of the
frame of data for setting repeat, pitch equal zero, energy
equal zero, old pitch and old energy latches. The function
of these latches will be discussed subsequently with respect
to FIGURES 7a-7d. The condition decoders and latches 208
as well as various timing signals are used to control various interpolation control gates 209. Gates 209 generate an
inhibit signal when interpolation is to be inhibited, a zero parameter signal when the parameter is to be zeroed and
a parameter load enable signal which, among other things,
permits data in parameter input register 205 to be loaded
into the coded parameter RAM 203.

Parameter Interpolater

The parameters in parameter output registers 201
are applied to the parameter interpolator functional block
23. The inputted K1-K10 speech parameters, including speech
energy are stored in a K-stack 302 and E10 loop 304, while
the pitch parameter is stored in a pitch register 305. The
speech parameters and energy are applied via recoding logic
301 to array multiplier 401 in the filter and excitation generator 24. As will be seen, however, when a new parameter
is loaded into parameter output register 201 it is not immediately inserted into K-stack 302 or E10 loop 304 or register 305 but rather the corresponding value in K-stack 302,
E10 loop 304 or register 305 goes through eight interpolation cycles during which a portion of the difference between
the present value in the K-stack, E10 loop 304 or register
305 and the target value of that parameter in parameter output register 201 is added to the present value in K-stack
203, E10 loop 304 or register 305.

- 15 -

0036559

Essentially the same logic circuits are used to perform the interpolation of pitch, energy and the K1-K10 speech parameters. The target value from the parameter output register 201 is applied along with the present value of the corresponding parameter to a subtractor 308. A selector 307 selects either the present pitch from pitch logic 306 or present energy or K coefficient data from KE10 transfer register 303, according to which parameter is currently in parameter output register 201, and applies the same to subtractor 308 and a delay circuit 309. As will be seen, delay circuit 309 may provide anywhere between zero delay to three bits of delay. The output of delay circuit 309 as well as the output of subtractor 308 is supplied to an adder 310 whose output is applied to a delay circuit 311. When the delay associated with delay circuit 309 is zero the target value of the particular parameter in parameter output register 201 is effectively inserted into K-stack 302, E10 loop 304 or pitch register 305, as is appropriate. The delay in delay circuit 311 is three to zero bits, being three bits when the delay in the delay circuit 309 is zero bits, whereby the total delay through selector, 307 delay, 309 and 311, adder 310 and subtractor 308 is constant. By controlling the delays in delay circuit 309 and 311, either all, 1/2, 1/4 or 1/8 of the difference outputted from subtractor 308 (that being the difference between the target value and the present value) is added back into the present value of the parameter. By controlling the delays in the fashion set forth in Table VII, a relatively smooth eight step parameter interpolation is accomplished.

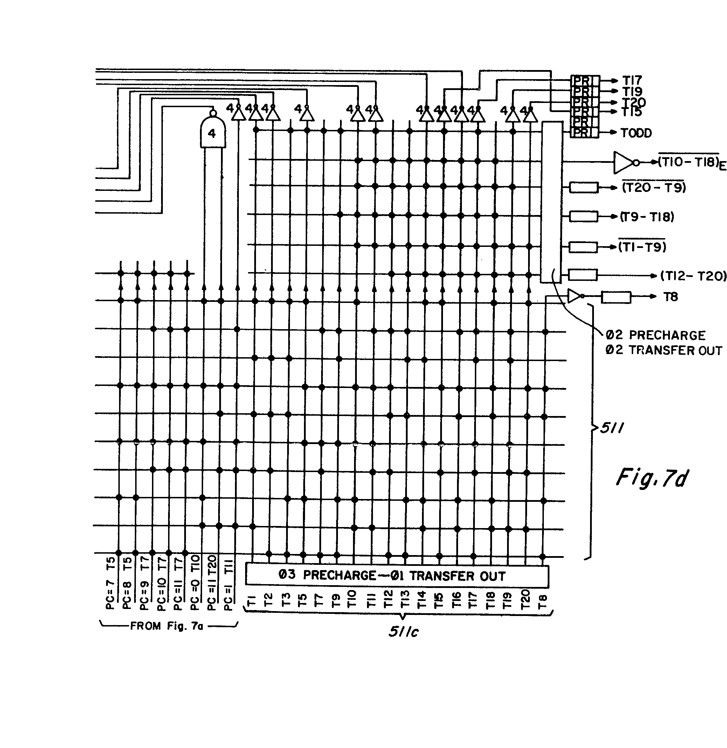

U.S. Patent application S.N. 905,328 discusses with reference to FIGURE 7 thereof a speech synthesis filter wherein speech coefficients K1-K9 are stored in the K-stack continuously, until they are updated; while the K10 coefficient and the speech energy (referred to by the letter A in U.S. Patent Application S.N. 905,328) are periodically exchanged. In parameter interpolator 23, speech coefficients K1-K9 are likewise stored in stack 302, until they are updated, whereas the energy parameter and the K10 coefficient

- 16 -

effectively exchange places in K-stack 302 during a twenty time period cycle of operations in the filter and excitation generator 24. To accomplish this function, E10 loop 304 stores both the energy parameter and the $K_{10}$ coefficient and alternately inputs the same into the appropriate location in K-stack 302. KE10 transfer register 303 is either loaded with the K10 or energy parameter from E10 loop 304 or the appropriate K1-K9 speech coefficient from K-stack 302 for interpolation by logics 307-311.

As will be seen, recoding logic 301 preferably performs a Booth's algorithm on the data from K-stack 302, before such data is applied to array multiplier 401. Recoding logic 301 thereby permits the size of the array multiplier 401 to be reduced compared to the array multiplier described in U.S. Patent Application S/N 905,328.

Filter and Excitation Generator

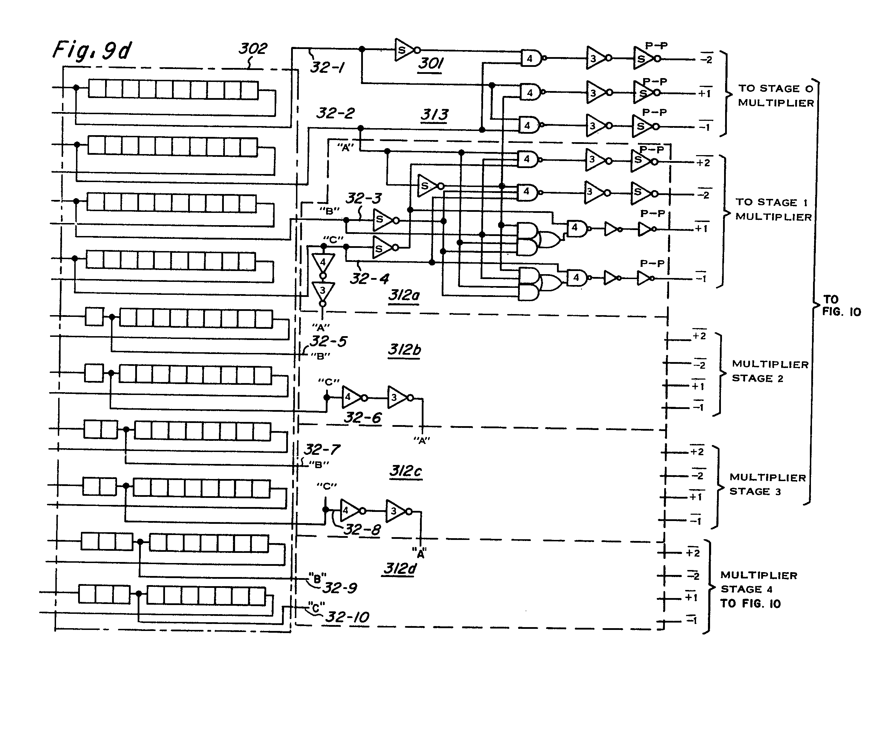

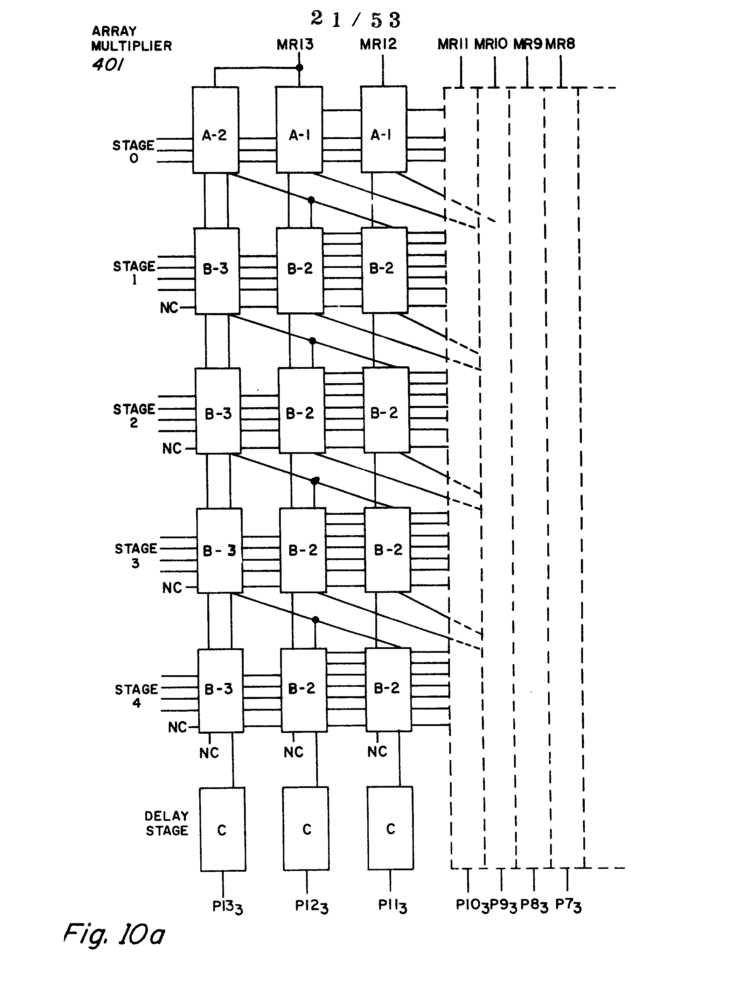

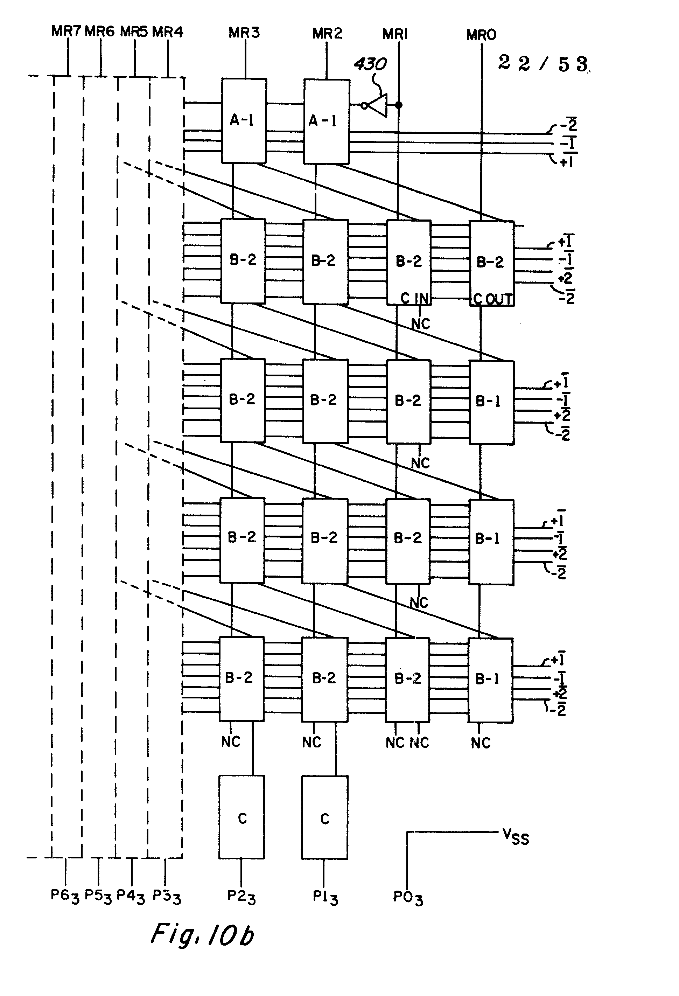

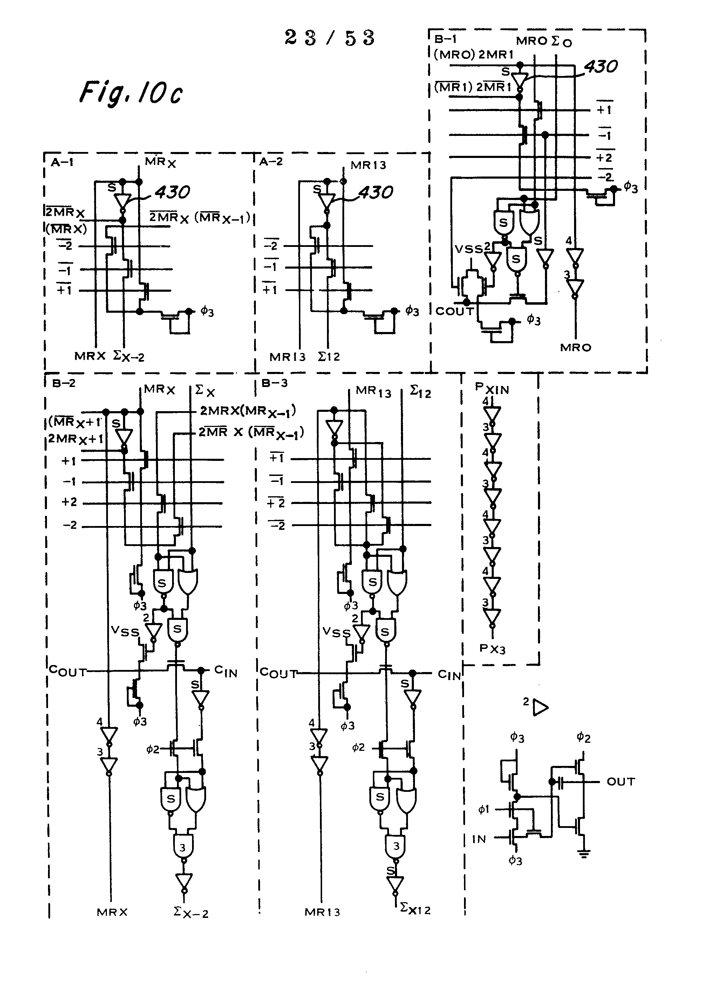

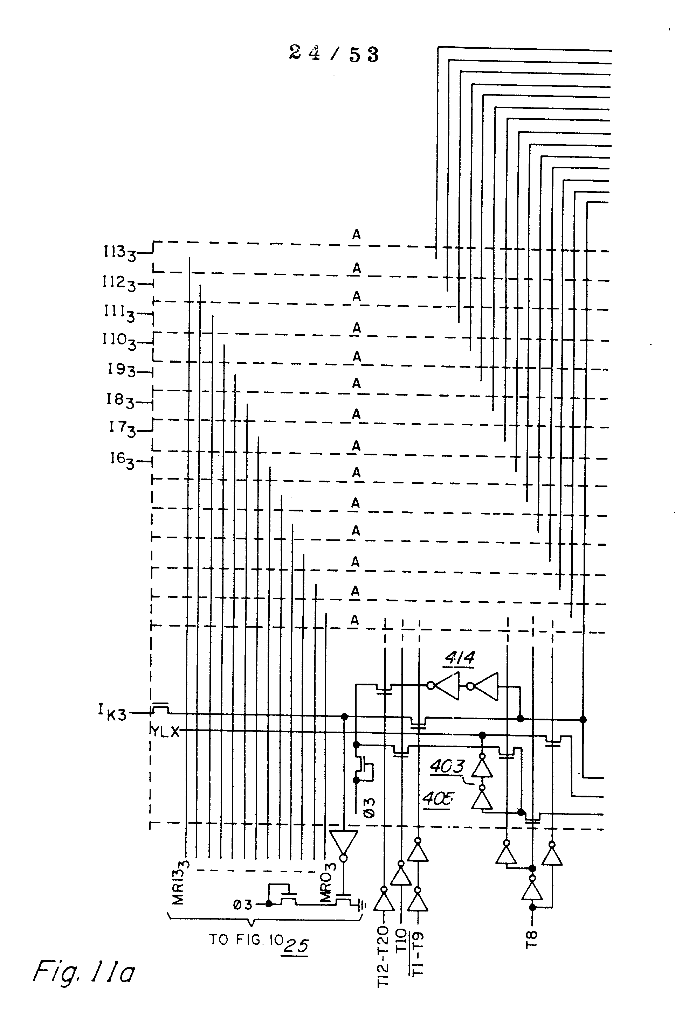

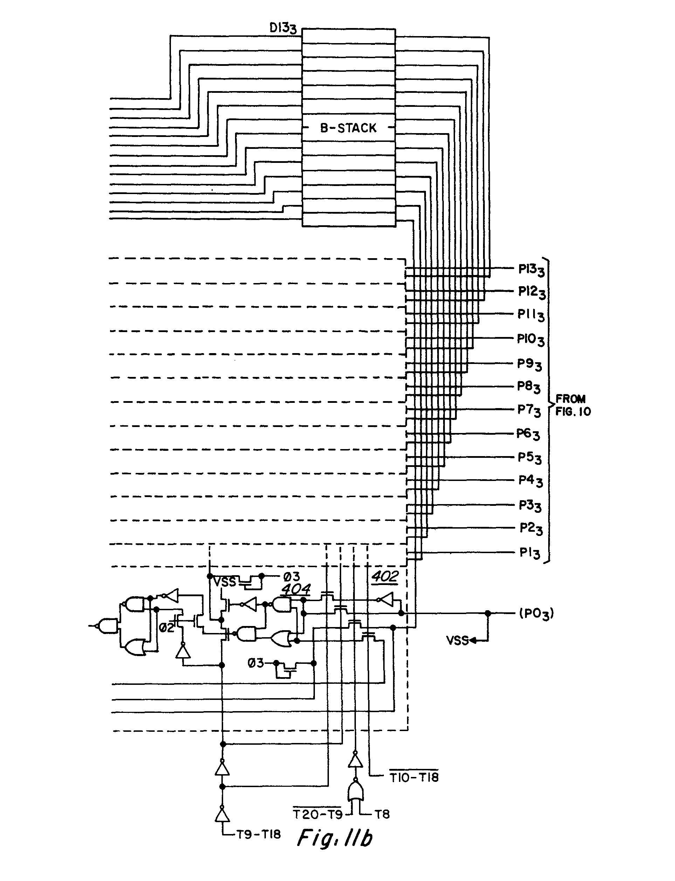

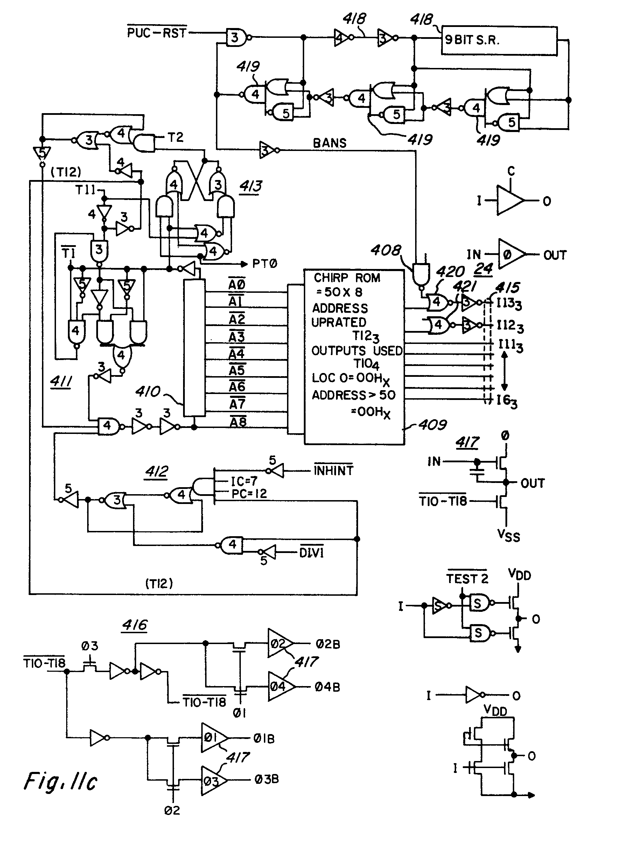

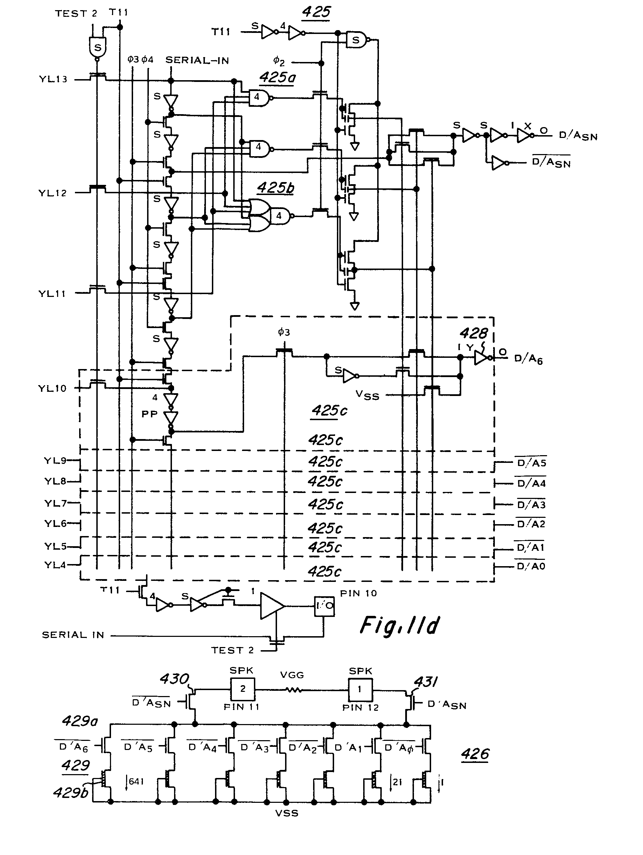

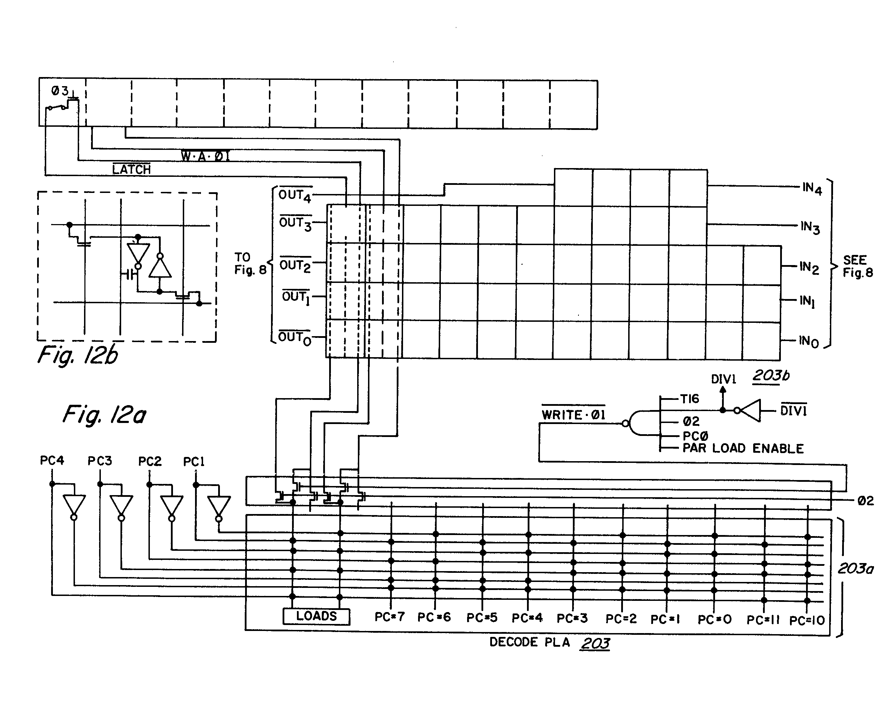

The filter excitation generator 24 includes the array multiplier 401 whose output is connected to a summer multiplexer 402. The output of summer multiplexer 402 is coupled to the input of summer 404 whose output is coupled to a delay stack 406 and multiplier multiplexer 405. The output of the delay stack is applied as an input to summer multiplexer 402 and to Y latch 403. The output of Y latch 403 is coupled to an input of multiplier multiplexer 405 along with truncation logic 501. The output of multiplier multiplexer 405 is applied as an input to array multiplier 401. As will be seen filter and excitation generator 24 make use of the lattice filter described in U.S. Patent Application S.N. 905,328. Various minor interconnections are not shown in FIGURE 4b for sake of clarity, but which will be described with reference to FIGURES 10a-10c, 11a - 11d. The arrangement of the foregoing elements generally agrees with the arrangement shown in FIGURE 7 of U.S. Patent Application S.N. 905,328 thus array multiplier 401 corresponds to element 30', summer multiplexer 402 corresponds to elements 37b', 37c' and 37d', gates 414 (FIGURES 11a and 11b) correspond to element 33', delay stack 406 corresponds to elements 34' and 35', Y latch 403 corresponds to element 36' and multiplier multiplexer 405 corresponds to elements 38a', 38b', 38c' and 38d'.

The voice excitation data is supplied from unvoiced/voice gate 408. As will be subsequently described in greater detail, the parameters inserted into parameter input gate 205 are supplied in a compressed data format. According to the data compression scheme used, when the coded pitch parameter is equal zero in input register 205, it is interpreted as an unvoiced condition by condition decoders and latches 208. Gate 408 responds by supplying randomized data from unvoiced generator 407 as the excitation input on line 414. When the coded pitch parameter is of some other value, however, it is decoded by parameter ROM 202, loaded into parameter output register 201 and eventually inserted into pitch register 305, either directly or by the interpolation scheme previously described. Based on the period indicated by the number in pitch register 305, voiced excitation is derived from chirp ROM 409. As discussed in U.S. Patent Application S.N. 905,328 the voiced excitation signal may be an impulse function or some other repeating function such as a repeating chirp function. In this embodiment, a chirp has been selected as this tends to reduce the "fuzziness" from the speech generated (because it apparently more closely models the action of the vocal cards than does a impulse function) which chirp is repetitively generated by chirp ROM 409. Chirp ROM 409 is addressed by counter latch 410, whose address is incremented in an add one circuit 411. The address in counter latch 410 continues to increment in add one circuit 411, recirculating via reset logic 412 until magnitude comparator 413, which compares the magnitude of the address being outputted from add one circuit 411 and the contents of the pitch register 305, indicates that the value in counter latch 410 then compares with or exceeds the value in pitch register 305, at which time reset logic 412 ze-

- 18 -

0036559

roes the address in counter 410. Beginning at address zero and extending through approximately fifty addresses is the chirp function in chirp ROM 409. Counter latch 410 and chirp ROM 409 are set up so that addresses larger than fifty do not cause any portion of the chirp function to be outputted from chirp ROM 409 to UV gate 408. In this manner the chirp function is repetitively generated on a pitch related period during voiced speech.

SYSTEM TIMING

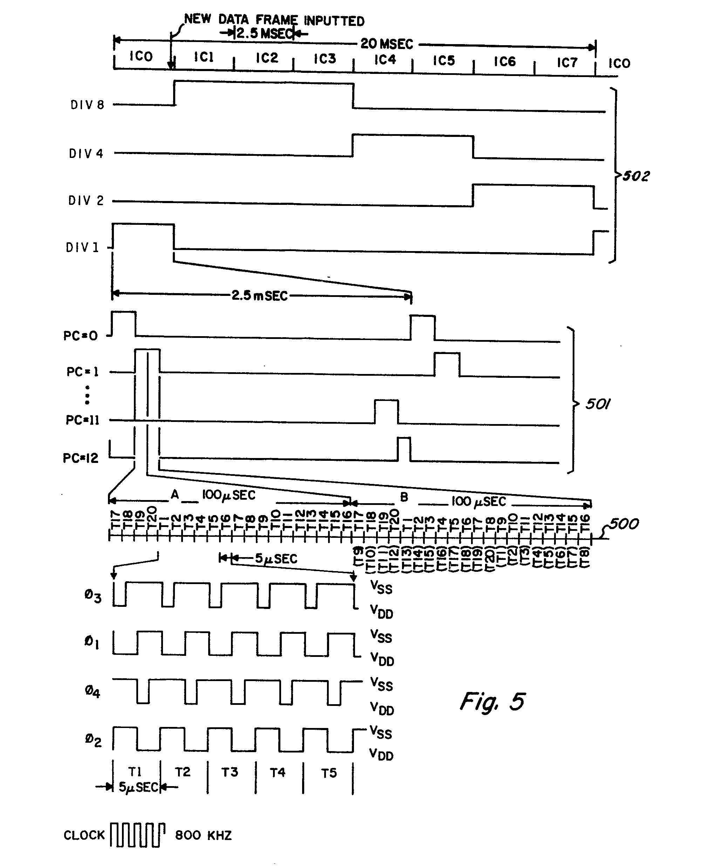

FIGURE 5 depicts the timing relationships between the occurrences of the various timing signals generated on synthesizer chip 10. Also depicted are the timing relationships with respect to the time new frames of data are inputted to synthesizer chip 10, the timing relationship with respect to the interpolations performed on the inputted parameters, the timing relations with respect to the foregoing with the time periods of the lattice filter and the relationship of all the foregoing to the basic clock signals.

The synthesizer is preferably implemented using precharged, conditional discharge type logics and therefore FIGURE 5 shows clocks $\phi 1$- $\phi 4$ which may be appropriately used with such precharge-conditional discharge logic. There are two main clock phases ($\phi 1$ and $\phi 2$) and two precharge clock phases ($\phi 3$ and $\phi 4$). Phase $\phi 3$ goes low during the first half of phase $\phi 1$ and serves as a precharge therefor. Phase $\phi 4$ goes low during the first half of phase $\phi 2$ and serves as a precharge therefore. A set of clocks $\phi 1$ - $\phi 4$ required to clock one bit of data and thus correspond to one time period.

The time periods are labeled T1-T20 and each preferably has a time period on the order of five microseconds. Selecting a time period on the order of five microseconds permits, as will be seen, data to be outputted from the digital filter at a ten kilohertz rate (i.e., at a 100 micro-

- 19 -

second period) which provides for a frequency response of five kilohertz in the D to A output section 25 (FIGURE 4b). It will be appreciated by those skilled in the art, however, that depending on the frequency response which is desired and depending upon the number of Kn speech coefficients used, and also depending upon the type of logics used, that the periods or frequencies of the clocks and clock phases shown in FIGURE 5 may be substantially altered, if desired.

As is explained in U.S. Patent Application S.N. 905,328, one cycle time of the lattice filter in filter excitation generator 24, preferably comprises twenty time periods, T1-T20. For reasons not important here, the numbering of these time periods differs between this application and U.S. Patent Application S.N. 905,328. To facilitate the reader's understanding of the differences in the numbering of the time periods, both numbering schemes are shown at the time period time line 500 in FIGURE 5. At time line 500, the time periods, T1-T20 which are not enclosed in parenthesis identify the time periods according to the convention used in this application. On the other hand, the time periods convention used in U.S. Patent Application S.N. 905,328. Thus, time period T17 is equivalent to time period (T9).

At numeral 501 is depicted the parameter count (PC) timing signals. In this embodiment there are thirteen PC signals, PC=0 through PC=12. The first twelve of these, PC=0 through PC=11 correspond to times when the energy, pitch, and K1-K10 parameters, respectively, are available in parameter output register 201. Each of the first twelve PC's comprise two cycles, which are labeled A and B. Each such cycle starts at time period T17 and continues to the following T17. During each PC the target value from the parameter output register 201 is interpolated with the existing value in K-stack 302 in parameter interpolator 23. During the A cycle, the parameter being interpolated is withdrawn from the K-stack 302, E10 loop 304 or register 305, as appropriate, during an appropriate time period. During the B cycle the newly interpolated

- 20 -

value is reinserted in the K-stack (or E10 loop or pitch register). The thirteenth PC, PC=12, is provided for timing purposes so that all twelve parameters are interpolated once each during a 2.5 milisecond interpolation period.

As was discussed with respect to the parameter interpolator 23 of FIGURE 4b and Table VII, eight interpolations are performed for each inputting of a new frame of data from ROMs 12a-b into synthesizer 10. This is seen at numeral 502 of FIGURE 5 where timing signals DIV 1, DIV 2, DIV 4 and DIV 8 are shown. These timing signals occur during specific interpolation counts (IC) as shown. There are eight such interpolation counts, IC0-IC7. New data is inputted from the ROMs 12a-b into the synthesizer during IC0. These new target values of the parameters are then used during the next eight interpolation counts, IC1 through IC0; the existing parameters in the pitch register 305 K-stack 302 and E10 loop 304 are interpolated once during each interpolation count. At the last interpolation count, IC0, the present value of the parameters in the pitch register 305, K-stack 302 and E10 loop 304 finally attain the target values previously inputted toward the last IC0 and thus new target values may then again be inputted as a new frame of data. Inasmuch as each interpolation count has a period of 2.5 milliseconds, the period at which new data frames are inputted to the synthesizer chip is 20 microseconds or equivalent to a frequency of 50 hertz. The DIV 8 signal corresponds to those interpolation counts in which one-eighth of the difference produced by subtractor 308 is added to the present values in adder 310 whereas during DIV 4 one-fourth of the difference is added in, and so on. Thus, during DIV 2, 1/2 of the difference from subtractor 308 is added to the present value of the parameter in adder 310 and lastly during DIV 1 the total difference is added in adder 310. As has been previously mentioned, the effect of this interpolation scheme can be seen in Table VII.

PARAMETER DATA COMPRESSION

It has been previously mentioned that new parameters are inputted to the speech synthesizer at a 50 hertz rate. It will be subsequently seen that in parameter interpolator and excitation generator 24 (FIGURE 4b) the pitch data, energy data and $K_1$-$K_n$ parameters are stored and utilized as ten bit digital binary numbers. If each of these twelve parameters were updated with a ten bit binary number at a fifty hertz rate from an external source, such as ROMs 12a and 12b, this would require a 12x10x50 or 6,000 hertz bit rate. Using the data compression techniques which will be explained, reduce this bit rate required for synthesizer 10 to on the order of 1,000 to 1,200 bits per second. And more importantly, it has been found that the speech compression schemes herein disclosed do not appreciably degrade the quality of speech generated thereby in comparison to using the data uncompressed.

The data compression scheme used is pictorially shown in FIGURE 6. Referring now to FIGURE 6, it can be seen that there is pictorially shown four different lengths of frames of data. One, labeled voiced frame, has a length of 49 bits while another entitled unvoiced frame, has a length of 28 bits while still another called "repeat frame" has a length of ten bits and still another which may be alternatively called zero energy frame or energy=15 frame has the length of but four bits. The "voiced frame" supplies four bits of data for a coded energy parameter as well as coded four bits for each of five speech parameters K3 through K7. Five bits of data are reserved for each of three coded parameters, pitch, K1 and K2. Additionally, three bits of data are provided for each of three coded speech parameters K8 to K10 and finally another bit is reserved for a repeat bit.

In lieu of inputting ten bits of binary data for each of the parameters, a coded parameter is inputted which is converted to a ten bit parameter by addressing parameter ROM 202 with the coded parameter. Thus, coefficient K1, for example, may have any one of thirty-two different values, according to the five bit code for K1, each one of the thirty-two values being a ten bit numerical coefficient stored in parameter ROM 202. Thus, the actual values of coefficients K1 and K2 may have one of thirty-two different values while the actual values of coefficients K3 through K7 may be one of sixteen different values and the values of coefficients K8 through K9 may be one of eight different values. The coded pitch parameter is five bits long and therefore may have up to thirty-two different values. However, only thirty-one of these reflect actual pitch values, a pitch code of 00000 being used to signify an unvoiced frame of data. The coded energy parameter is four bits long and therefore would normally have sixteen available ten bit values; however, a coded energy parameter equal to 0000 indicates a silent frame such as occur as pauses in and between words, sentences and the like. A coded energy parameter equal to 1111 (energy equals fifteen), on the other hand, is used to signify the end of a segment of spoken speech, thereby indicating that the synthesizer is to stop speaking. Thus, of the sixteen codes available for the coded energy parameter, fourteen are used to signify different ten bit speech energy levels.

Coded coefficients K1 and K2 have more bits than coded coefficients K3-K7 which in turn have more bits than coded coefficients K8 through K10 because coefficient K1 has a greater effect on speech than K2 which has a greater effect on speech than K3 and so forth through the lower order coefficients. Thus given the greater significance of coefficients K1 and K2 than coefficients K8 through K10, for example, more bits are used in coded format to define coefficients K1 and K2 than K3-K7 or K8-K10.

Also it has been found that voiced speech data needs more coefficients to correctly model speech than does unvoiced speech and therefore when unvoiced frames are encountered, coefficients K5 through K10 are not updated, but

23   -

rather are merely zeroed. The synthesizer realizes when an unvoiced frame is being outputted because the uncoded pitch parameter is equal to 00000.

It has also been found that during speech there often occur instances wherein the parameters do not significantly change during a twenty milisecond period; particularly, the K1-K10 coefficients will often remain nearly unchanged. Thus, a repeat frame is used wherein new energy and new pitch are inputted to the synthesizer, however, the K1 to K10 coefficients previously inputted remain unchanged. The synthesizer recognizes the ten bit repeat frame because the repeat bit between energy and pitch then comes up whereas it is normally off. As previously mentioned, there occur pauses between speech or at the end of speech which are preferably indicated to the synthesizer; such pauses are indicated by a coded energy frame equal to zero, at which time the synthesizer recognizes that only four bits are to be sampled for that frame. Similarly, only four bits are sampled when an "energy equals fifteen." Using coded values for the speech in lieu of actual values, alone would reduce the data rate to 48x50 or 2400 bits per second. By additionally using variable frame lengths, as shown in FIGURE 6, the data rate maybe further reduced to on the order of one thousand to twelve hundred bits per second, depending on the speaker and on the material spoken.

The effect of this data compression scheme can be seen from Table VIII where the coding for the word "HELP" is shown. Each line represents a new frame of data. As can be seen, the first part of the word "HELP", "HEL", is mainly voiced while the "P" is unvoiced. Also note the pause between "HEL" and "P" and the advantages of using the repeat bit. Table IX sets forth the encoded and decoded speech parameter. The 3, 4 or 5 bit code appears as a hexadecimal number in the left-hand column, while the various decoded parameter values are shown as ten bit, two's complement numbers expressed as hexadecimal numbers in tabular form under the various parameters. The decoded speech parameter are stored in ROM 203. The repeat bit is shown in Table VIII between the pitch and K parameters for sake of clarity; preferably, according to the embodiment of FIGURE 6, the repeat bit occurs just before the most significant bit (MSB) of the pitch parameter.

## SYNTHESIZER LOGIC DIAGRAMS

The various portions of the speech synthesizer of FIGURES 4a and 4b will now be described with reference to FIGURES 7a through 14b which, depict, in detail, the logic circuits implemented on a semiconductor chip, for example, to form the synthesizer 10. The following discussion, with reference to the aforementioned drawings, refers to logic signals available at many points in the circuit. It is to be remembered that in P channel MOS devices a logical zero corresponds to a negative voltage, that is Vdd, while a logical one refers to a zero voltage, that is, Vss. It should be further remembered that P-channel MOS transistors depicted in the aforementioned figures are conductive when a logical zero, that is, a negative voltage, is applied at their respective gates. When a logic signal is referred to which is unbarred, that is, has no bar across the top of it, the logic signal is to be interpreted as "TRUE" logic; that is, a binary one indicates the presence of the signal (Vss) whereas a binary zero indicates the lack of the signal (Vdd). Logic signal names including a bar across the top thereof are "FALSE" logic; that is, a binary zero (Vdd voltage) indicates the presence of the signal whereas a binary one (Vss voltage) indicates that the signal is not present. It should also be understood that a numeral three in clocked gates indicates that phase $\phi 3$ is used as a precharge whereas a four in a clocked gate indicates that phase $\phi 4$ is used as a precharge clock. An "S" in the gate indicates that the gate is statically operated.

Timing Logic Diagram

Referring now to FIGURES 7a - 7d, they form a composite detailed logic diagram of the timing logic for synthesizer 10. Counter 510 is a pseudorandom shift counter including a shift register 510a and feed back logic 510b. The counter 510 counts into pseudorandom fashion and the TRUE and FALSE outputs from shift register 510a are supplied to the input section 511 of a timing PLA. The various T time periods decoded by the timing PLA are indicated adjacent to the output lines thereof. Section 511c of the timing PLA is applied to an output timing PLA 512 generating various combinations and sequences of time period signals, such as T odd, $\overline{T10}$-$\overline{T18}$; and so forth. Sections 511a and 511b of timing PLA 511 will be described subsequently.

The parameter count in which the synthesizer is operating is maintained by a parameter counter 513. Parameter counter 513 includes an add one circuit and circuits which are responsive to SLOW and SLOW D. In SLOW, the parameter counter repeats the A cycle of the parameter count twice (for a total of three A cycles) before entering the B cycle. That is, the period of the parameter count doubles so that the parameters applied to the lattice filter are updated and interpolated at half the normal rate. To assure that the inputted parameters are interpolated only once during each parameter count during SLOW speaking operations each parameter count comprises three A cycles followed by one B cycle. It should be recalled that during the A cycle the interpolation is begun and during the B cycle the interpolated results are reinserted back into either K-stack 302, E10 loop 304 or pitch register 305, as appropriate. Thus, merely repeating the A cycle has no affect other than to recalculate the same value of a speech parameter but since it is only reinserted once back into either K-stack 302, E10 loop 304 or pitch register 305 only the results of the interpolation immediately before the B cycle are retained.

- 26 -

Inasmuch as parameter counter 513 includes an add one circuit, the results outputted therefrom, PC1-PC4, represent in binary form, the particular parameter count in which the synthesizer is operating. Output PC0 indicates in which cycle, A or B, the parameter count is. The parameter counter outputs PC1-PC4 are decoded by timing PLA 514. The particular decimal value of the parameter count is decoded by timing PLA 514 which is shown in adjacent to the timing PLA 514 with nomenclature such as PC=0, PC=1, PC=7 and so forth. The relationship between the particular parameters and the value of PC is set forth in FIGURE 6. Output portions 511a and 511b of timing PLA 511 are also interconnected with outputs from timing PLA 514 whereby the Transfer K (TK) signal goes high during T9 of PC=2 or T8 of PC=3 or T7 of PC=4 and so forth through T1 of PC=10. Similarly, a LOAD Parameter (LDP) timing signal goes high during T5 of PC=0 or T1 of PC=1 or T3 of PC=2 and so forth through T7 of PC=11. As will be seen, signal TK is used in controlling the transfer of data from parameter output register 201 to subtractor 308, which transfer occurs at different T times according to the particular parameter count the parameter counter 513 is in to assure that the appropriate parameter is being outputted from KE10 transfer register 303. Signal LDP is, as will be seen, used in combination with the parameter input register to control the number of bits which are inputted therein according to the number of bits associated with the parameter then being loaded according to the number of bits in each coded parameter as defined in FIGURE 6.

Interpolation counter 515 includes a shift register and an add one circuit for binary counting the particular interpolation cycle in which the synthesizer 10 is operating. The relationship between the particular interpolation count in which the synthesizer is operating and the DIV1, DIV2, DIV4 and DIV8 timing signals derived therefrom is explained in detail with reference to FIGURE 6 and therefore additional discussion here would be superfluous.

It will be noted, however, that interpolation counter 515 includes a three bit latch 516 which is loaded at TI. The output of three bit latch 516 is decoded by gates 517 for producing the aforementioned DIV1 through DIV8 timing signals. Interpolation counter 515 is responsive to a signal RESETF from parameter counter 513 for permitting interpolation counter 515 to increment only after PC=12 has occurred.

ROM/Controller Interface Logic Diagram

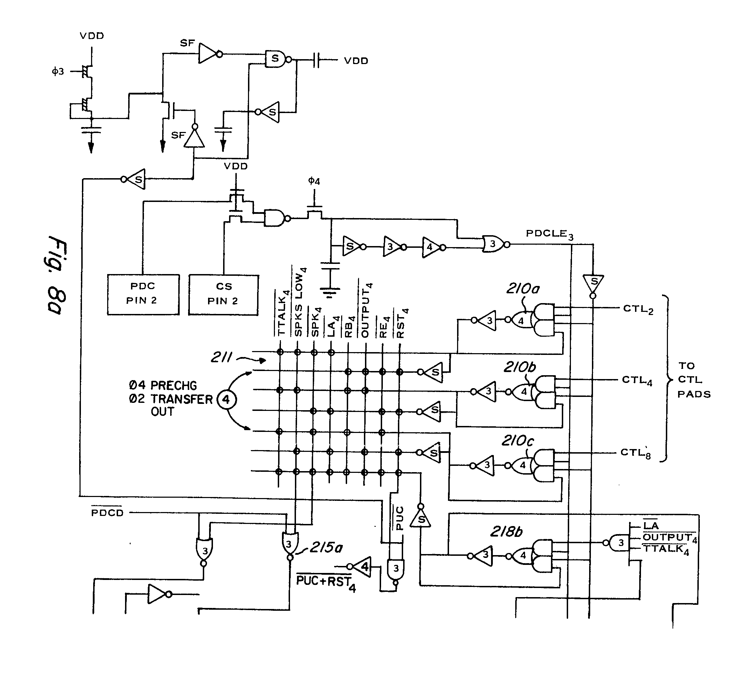

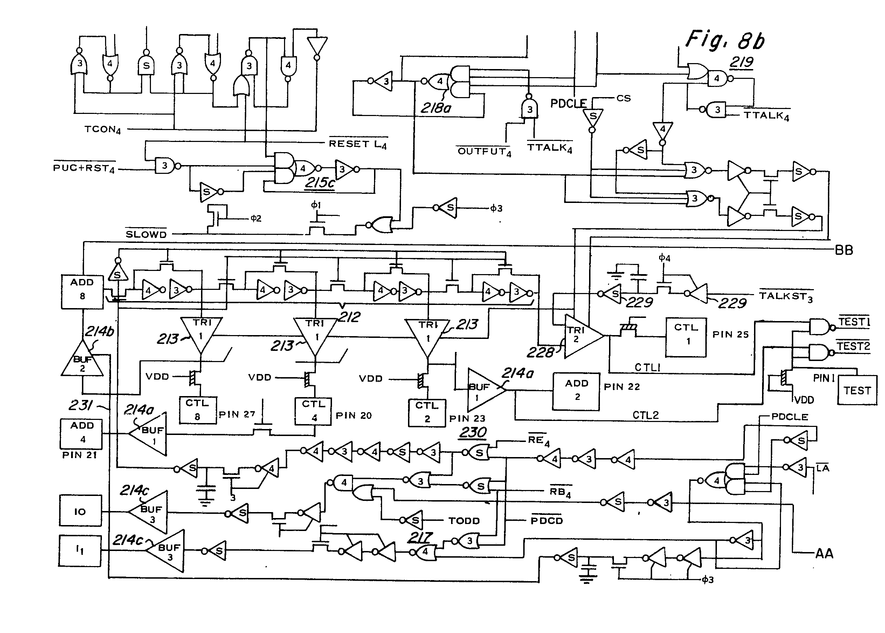

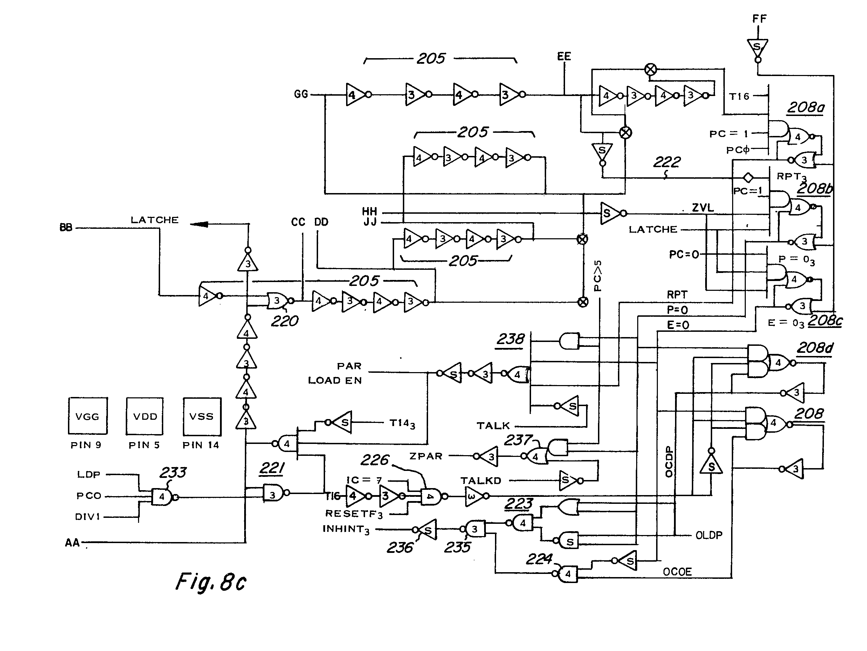

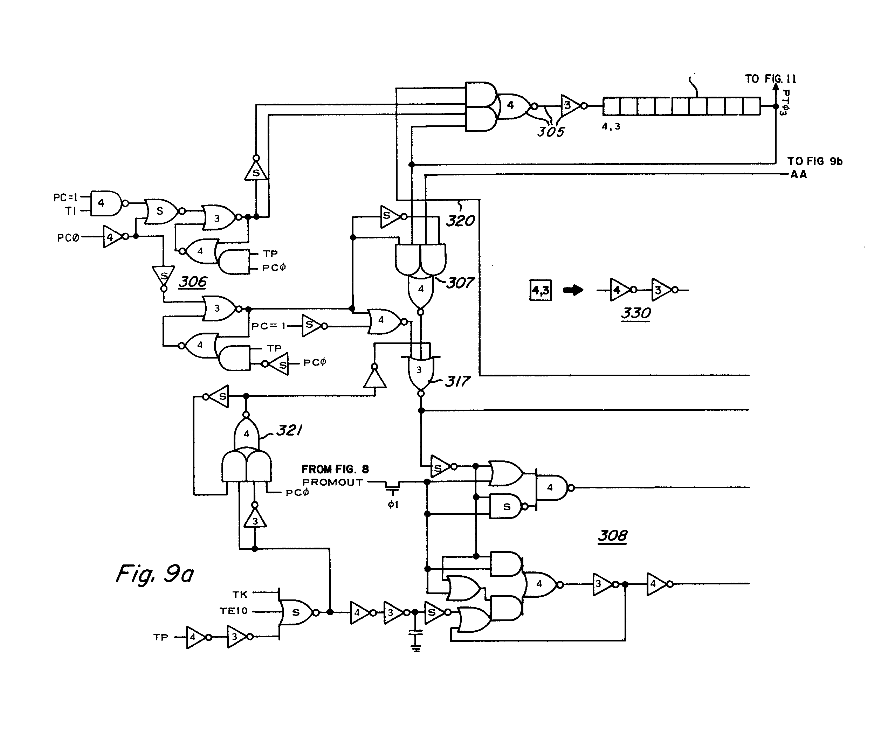

Turning now to FIGURES 8a, and 8b-8f, which form a composite diagram, there is shown a detailed logic diagram of ROM/Controller interface logic 21. Parameter input register 205 is coupled, at its input to address pin ADD8. Register 205 is a six bit shift register, most of the stages of which are two bits long. The stages are two bits long in this embodiment inasmuch as ROMs 12a and b output, as will be seen, data at half the rate at which data is normally clocked in synthesizer 10. At the input of parameter input register 205 is a parameter input control gate 220 which is responsive to the state of a latch 221. Latch 221 is set in response to LDP, PC0 and DIV1 all being a logical one. It is reset at T14 and in response to parameter load enable from gate 238 being a logical zero. Thus, latch 221 permits gate 220 to load data only during the A portion (as controlled by PC0) of the appropriate parameter count and at an appropriate T time (as controlled by LDP) of IC0 (as controlled by DIV1) provided parameter load enable is at a logical one. Latch 221 is reset by T14 after the data has been inputted into parameter register 205.

The coded data in parameter input register 205 is applied on lines IN0-IN4 to coded parameter RAM 203, which is addressed by PC1-PC4 to indicate which coded parameter is then being stored. The contents of register 205 is tested by all one's gate 207, all zeroes gate 206 and repeat latch 208a. As can be seen, gate 206 tests for all zeroes in the four least significant bits of register 205 whereas gate 207 tests for all ones in those bits. Gate 207 is also responsive to PC0, DIV1, T16 and PC=0 so that the zero condition is only tested during the time that the coded energy parameter is being loaded into parameter ROM 205. The repeat bit occurs in this embodiment immediately in front of the coded pitch parameter; therefore, it is tested during the A cycle of PC=1. Pitch latch 208b is set in response to all zeroes in the coded pitch parameter and is therefore responsive to not only gate 206 but also the most significant bit of the pitch data on line 222 as well as PC=1. Pitch latch 208b is set whenever the loaded coded pitch parameter is a 00000 indicating that the speech is to be unvoiced.

Energy=0 latch 208c is responsive to the output of gate 206 and PC=0 for testing whether all zeroes have been inputted as the coded energy parameter and is set in response thereto. Old pitch latch 208d stores the output of the pitch=0 latch 208b from the prior frame of speech data while old energy latch 208e stores the output of energy=0 latch 208c from the prior frame of speech data. The contents of old pitch latch 208d and pitch=0 latch 208b are compared in comparison gates 223 for the purpose of generating an INHIBIT signal. As will be seen, the INHIBIT signal inhibits interpolations and this is desirable during changes from voiced to unvoiced or unvoiced to voiced speech so that the new speech parameters are automatically inserted into K-stack 302, E10 loop 304 and pitch register 305 as opposed to being more slowly interpolated into those memory elements. Also, the contents of old energy latch 208e and energy=0 latch 208c is tested by NAND gate 224 for inhibiting interpolation for a transition from a non-speaking frame to a speaking frame of data. The outputs of NAND gate 224 and gates 223 are coupled to a NAND gate 235 whose output is inverted to INHIBITI by an inverter 236. Latches 208a-208c are reset by gate 225 and latches 208d and 208e are reset by gate 226. When the excitation signal is unvoiced, the K5-K10 coefficients are set to zero, as aforementioned. This is accomplished, in part, by the action of gate 237 which generates a ZPAR signal when pitch is equal to zero and when the parameter counter is greater than five, as indicated by PC 5 from PLA 514.

Also shown in FIGURES 8a-f is a command latch 210 which comprises three latches 210a,b, and c which latch in the data at CTL2,4 and 8 in response to a processor data clock (PDC) signal in conjunction with a chip select (CS) signal. The contents of command latch 210 is decoded by command decoder 211 unless disabled by latches 218a and 218b. As previously mentioned, these latches are responsive to decoded LA, output and TTALK commands for disabling decoder 211 from decoding what ever data happens to be on the CTL2-CTL8 pins when subsequent PDC signals are received in conjunction with the LA, output and TTALK commands. A decoded TTALK command set TTALK latch 219. The output of TTALK latch 219, which is reset by a Processor Data Clock Leading Edge (PDCLE) signal or by an output from latch 218b, controls along with the output of latch 218a NOR gates 227a and b. The output of NOR gate 227a is a logical one if TTALK latch 219 is set, thereby coupling pins CTL1 to the talk latch via tristate buffer 228 and inverters 229. Tristate latch 228 is shown in detail on the right side of FIGURES 8a-f. NOR gate 227b, on the other hand, outputs a logical one if an output code has been detected, setting latch 228a and thereby connecting pins CTL1 to the most significant bit of data input register 212.

Data is shifted into data input register 212 from address pin 8 in response to a decoded read command by logics 230. RE, RB and LA instructions are outputted to ROM via instruction pins $I_0$-$I_1$ from ROM control logic 217 via buffers 214c. The contents of data input register 212 is outputted to CTL1-CTL4 pins via buffers 213 and to the aforementioned CTL1 pin via buffer 228 when NOR gate 227b inputs a logical one. CTL1-CTL4 pins are connected to

- 30 -

address pins ADD1-ADD4 via buffers 214a and CTL8 pin is connected to ADD8 pin 8 via a control buffer 214b which is disabled when addresses are being loaded on the ADD1-ADD8 pins by the signal on line 231.

The Talk latch 216 shown in FIGURES 8a-f preferably comprises three latches 216a, 216b and 216c. Latch 216a is set in response to a decoded SPK command and generates, in response thereto, a speak enable (SPEN) signal. As will be seen, SPEN is also generated in response to a decoded SPKSLOW command by latch 215a. Latch 216b is set in response to speak enable during IC7 as controlled by gate 225. Latches 216a and 216b are reset in response to (1) a decoded reset command, (2) an energy equals fifteen code or (3) on a power-up clear by gate 232. Talk delayed latch 216c is set with the contents of latch 216b at the following IC7 and retains that data through eight interpolation counts. As was previously mentioned, the talk delayed latch permits the speech synthesizer to continue producing speech data for eight interpolation cycles after a coded energy=0 condition has been detected setting latch 208c. Likewise, slow talk latch 215 is implemented with latches 215a, 215b and 215c. Latch 215a enables the speak enable signal while latches 215b and 215c enable the production of the SLOWD signal in much the same manner as latches 216b 21d 216c enable the production of the TALKD signal.

Considering now, briefly, the timing interactions for inputting data into parameter input register 205, it will be recalled that this is controlled chiefly by a control gate 220 in response to the state of a parameter input latch 221. Of course, the state of the latch is controlled by the LDP signal applied to gate 233. The PC0 and DIV1 signals applied to gate 233 to assure that the parameters are loaded during the A cycle of a particular parameter count during IC0. The particular parameter and the parameter T-Time within the parameter count is controlled by LDP according to the portion 511a of timing PLA 511 (FIGURES 7a-7d). The first parameter inputted (Energy) is four bits long and therefore LDP is initiated during time period T5 (as can be seen in FIGURES 7a - 7d). During parameter count 1, the repeat bit and pitch bits are inputted, this being six bits which are inputted according to LDP which comes up at time period T1. Of course, there four times periods difference between T1 and T5 but only two bits difference in the length of the inputted information. This occurs because it takes two time periods to input each bit into parameter input register 205 (which has two stages per each inputted bit) due to the fact that ROMs 12a-12b are preferably clocked at half the rate at that which synthesizer 10 is clocked. By clocking the ROM chips at half the rate, that the synthesizer 10 chip is clocked simplifies the addressing of the read-only-memories in the aforesaid ROM chips and yet, as can be seen, data is supplied to the synthesizer 10 in plenty of time for performing numerical operations thereon. Thus, in section 511a of timing PLA 511, LDP comes up at T1 when the corresponding parameter count indicates that a six bit parameter is to be inputted, comes up at T3 when the corresponding parameter count indicates that a five bit parameter is to be inputted, comes up at T5 when the corresponding parameter count indicates that a four bit parameter is to be inputted and comes up at time period T7 when the corresponding parameter count (EG parameter counts 9, 10 and 11) which correspond to a three bit coded parameter. ROMs 12a-b are signaled that the addressed parameter ROM is to output information when signaled via $I_0$ instruction pin, ROM control logic 217 and line 234 which provides information to ROM control logic 217 from latch 221.

0036559

## Parameter Interpolator Logic Diagram

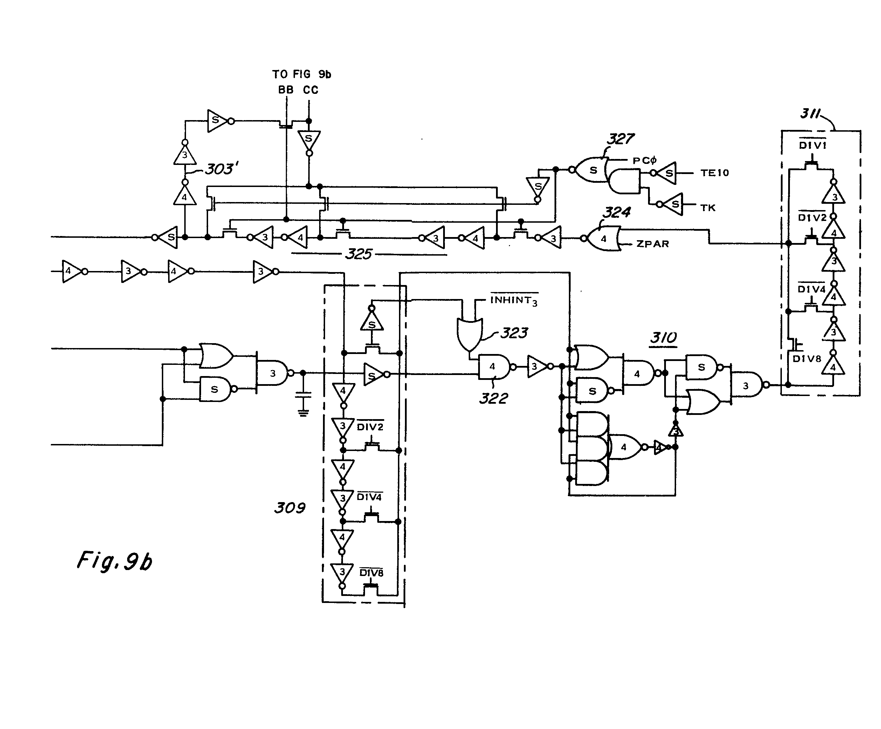

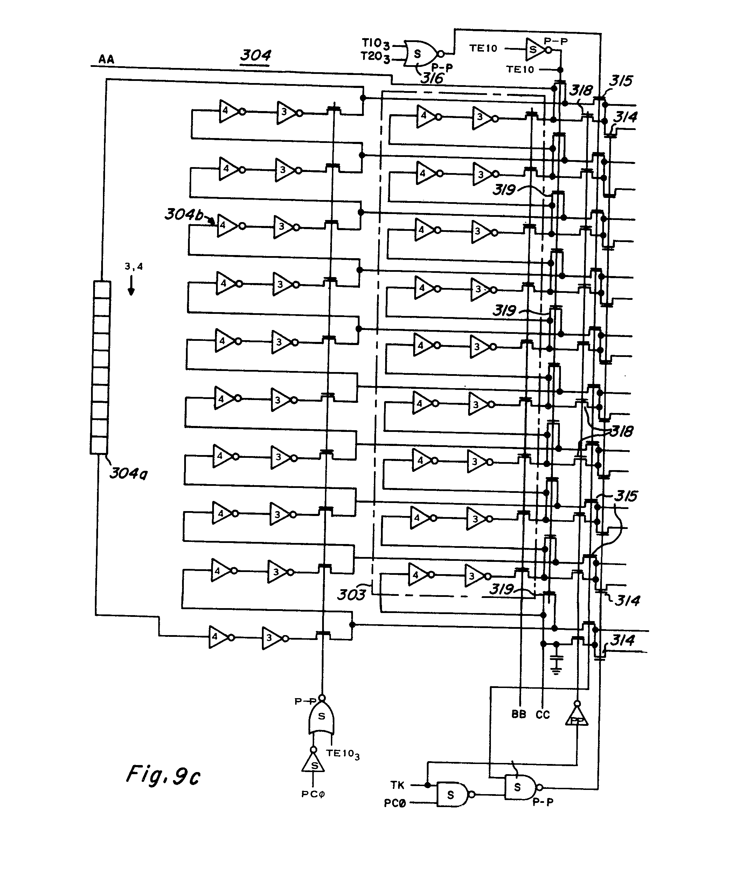

Referring now to FIGURES 9a - 9d, which form a composite diagram the parameter interpolator logic 23 is shown in detail. K-stack 203 comprises ten registers each of which store ten bits of information. Each small square represents one bit of storage, according to the convention depicted at numeral 330. The contents of each shift register is arranged to recirculate via recirculation gates 314 under control of a recirculation control gate 315. K-stack 302 stores speech coefficients K1-K9 and temporarily stores coefficient K10 or the energy parameter generally in accordance with the speech synthesis apparatus of FIGURE 7 of U.S. Patent Application S.N. 905,328. The data outputted from K-stack 302 to recoding logic 30 at various time periods is shown in Table VII. In Table III of U.S. Patent Application S.N. 905,328 is shown the data outputted from the K-stack of FIGURE 7 thereof. Table X of this

- 33 -

patent differs from Table III of the aforementioned patent because of (1) recoding logic 301 receives the same coefficient on lines 32-1 through 32-4, on lines 32-5 and 32-6, on lines 32-7 and 32-8 and on lines 32-9 and 32-10 because, as will be seen, recoding logic 301 responds to two bits of information for each bit which was responded to by the array multiplier of the aforementioned U.S. Patent; (2) because of the difference in time period nomenclature as was previously explained with reference to FIGURE 5; and (3) because of the time delay associated with the recoding logic 301.

Recoding logic 301 couples K-stack 302 to array multiplier 401 (FIGURES 10a - 10c). Recoding logic 301 includes four identical recoding stages 312a-312d, only one of which, 312a, is shown in detail. The first stage of the recoding logic, 313, differs from stages 312a-312d basically because there is, of course, no carry, such as occurs on input A in stages 312a-312d, from a lower order stage. Recoding logic outputs $\overline{+2}$, $\overline{-2}$, $\overline{+1}$ and $\overline{-1}$ to each stage of a five stage array multiplier 401, except for stage zero which receives only $\overline{-2}$, $\overline{+1}$ and $\overline{-1}$ outputs. Effectively recoding logic 301 permits array multiplier to process, in stage thereof, two bits in lieu of one bit of information, using Booth's algorithm. Booth's algorithm is explained in "Theory and Application of Digital Signal Processing", published by Prentice-Hall 1975, at pp. 517-18.

The K10 coefficient and energy are stored in E10 loop 304. E10 loop preferably comprises a twenty stage serial shift register; ten stages 304a of E10 loop 304 are preferably coupled in series and another ten stages 304b which are also coupled in series but also have parallel outputs and inputs to K-stack 302. The appropriate parameter, either energy of the K10 coefficient, is transferred

- 34 -

from E10 loop 304 to K-stack 302 via gates 315 which are responsive to a NOR gate 316 for transferring the energy parameter from E10 loop 304 to K-stack 302 at time period T10 and transferring coefficient K10 from E10 loop 304 to K-stack 302 at time period T20. NOR gate 306 also controls recirculation control gate 315 for inhibiting recirculation in K-stack 302 when data is being transferred.

KE10 transfer register 303 facilitates the transferring of energy or the K1-K10 speech coefficients which are stored in E10 loop 304 or K-stack 302 to adder 308 and delay circuit 309 via selector 307. Register 303 has nine stages provided by paired inverters and a tenth stage being effectively provided by selector 307 and gate 317 for facilitating the transfer of ten bits of information either from E10 loop 304 or K-stack 302. Data is transferred from K-stack 302 to register 303 via transfer gates 318 which are controlled by a Transfer K (TK) signal generated by decoder portion 511b of timing PLA 511 (FIGURES 7a-7d). Since the particular parameter to be interpolated and thus shifted into register 303 depends upon the particular parameter count in which the synthesizer is operating and since the particular parameter available to be outputted from K-stack 302 is a function of particular time period the synthesizer is operating in, the TK signal comes up at T9 for the pitch parameter, T8 for the K1 parameter, T7 for the K2 parameter and so forth, as is shown in FIGURES 7a - 7d. The energy parameter or the K10 coefficient is clocked out of E10 loop 304 into register 303 via gates 319 in response to a TE10 signal generated by a timing PLA 511. After each interpolation, that is during the B cycle, data is transferred from register 303 into (1) K-stack 302 via gates 318 under control of signal TK, at which time recirculation gates 314 are turned off by gate 315, or (2) E10 loop 304 via gates 319.

- 35 -

A ten bit pitch parameter is stored in a pitch register 305 which includes a nine stage shift register as well as recirculation elements 305a which provide another bit of storage. The pitch parameter normally recirculates in register 305 via gate 305a except when a newly interpolated pitch parameter is being provided on line 320, as controlled by pitch interpolation control logic 306. The output of pitch 305 (PTO) or the output from register 303 is applied by selector 307 to gate 317. Selector 307 is also controlled by logics 306 for normally coupling the output of register 303 to gate 317 except when the pitch is to be interpolated. Logics 306 are responsive for outputting pitch to adder 308 and delay 309 during the A cycle of PC=1 and for returning the interpolated pitch value on line 320 on the B cycle of PC=1 to register 305. Gate 317 is responsive to a latch 321 for only providing pitch, energy or coefficient information to adder 308 and delay circuit 309 during the interpolation. Since the data is serially clocked, the information may be started to be clocked during an A portion and PCO may switch to a logical one sometime during the transferring of the information from register 303 or 305 to adder 308 or delay circuit 309, and therefore, gate 317 is controlled by an A cycle latch 321, which latch is set with PCO at the time a transfer coefficient (TK) transfer E10 (TE10) or transfer pitch (TP) signal is generated by timing PLA 511.

The output of gate 317 is applied to adder 308 and delay circuit 309. The delay in delay circuit 309 depends on the state of DIV1-DIV8 signals generated by interpolation counter 515 (FIGURES 7 -7d). Since the data exits gate 317 least significant bit first, by delaying the data in delay circuit 309 a selective amount, and applying the output to adder 310 along with the output of subtractor 308, the more delay there is in circuit 309, the smaller the

- 36 -

effective magnitude of the difference from subtractor
308 which is subsequently added back in by adder 310.
Delay circuit 311 couples adder 310 back into register
303 and 305. Both delay circuits 309 and 303 can insert
up to three bits of delay and when adder 309 is at its
maximum delay 311 is at its minimum delay and vice-versa.
A NAND gate 322 couples the output of subtractor 308
to the input of adder 310. Gate 322 is responsive to
the output of an OR gate 323 which is in turn responsive
to INHIBIT from inverted 236 (FIGURES 8a-f). Gates 322
and 323 act to zero the output from subtractor 308 when
the INHIBIT signal comes up unless the interpolation
counter is at ICO in which case the present values in
K-stack 302, E10 loop 304 and P register 305 are fully
interpolated to their new target values in a one step
interpolation. When an unvoiced frame (FIGURE 6) is
supplied to the speech synthesis chip, coefficients
K5-K10 are set to zero by the action of gate 324 which
couples delay circuit 311 to shift register 325 whose
output is then coupled to gates 305a and 303'. Gate
324 is responsive to the zero parameter (ZPAR) signal
generated by gate 237 (FIGURES 8a-f).

Gate 326 disables shifting in the 304b portion
of E10 loop 304 when a newly interpolated value of energy
or K10 is being inputted into portion 304b from register
303. Gate 327 controls the transfer gates coupling the
stages of register 303, which stages are inhibited from
serially shifting data therebetween when TK or TE10 goes
high during the A cycle, that is, when register 303 is to
be receiving data from either K-stack 302 or E10 loop 304
as controlled by transfer gates 318 or 319, respectively.
The output of gates 327 is also connected to various stages
of shift register 325 and to a gate coupling 303' with
register 303. Whereby up top the three bits which may trail
the ten most significant bits after an interpolation
operation may be zeroed.

- 37 -

Array Multiplier Logic Diagram

Figures 10a and 10b form a composite logic diagram of array multiplier 401. Array multipliers are sometimes referred to as Pipeline Multipliers. For example, see "Pipeline Multiplier" by Granville E. Ott, published by the University of Missouri.

Array multiplier 401 has five stages, stage O through stage 4, and a delay stage. The delay stage is used in array multiplier 41 to give it the same equivalent delay as the array multiplier shown in U.S. Patent Application S.N. 905,328. The input to array multiplier 401 is provided by signals $Mr_0-MR_{13}$ from multiplier multiplexer 4o5. $MR_{13}$ is the most significant bit while $MR_O$ is the least significant bit. Another input to array multiplier are the aforementioned +2, -2, +1 and -1 outputs from recoding logic 301 (FIGURES 8a-f). The output from array multiplier 401, $P_{13}-P_O$, is applied to summer multiplexer 402. The least signifcant bit thereof, PO, is in this embodiment always made a logical one because doing so establishes the mean of the truncation error as zero instead of -1/2 LSB which value would result from a simple truncation of a two's complement number.

Array multiplier 401 is shown by a plurality of box elements labeled A-1, A-2, B-1, B-2, B-3 or B-C. The specific logic elements making up these box elements are shown on the right-hand side of composite FIGURES 10a-10b in lieu of repetitively showing these elements and making up a logic diagram of FIGURE 401, for simplicity sake. The A-1 and A-2 block elements make up stage zero of the array multiplier and thus are each responsive to the $\overline{-2}, \overline{+1}$ and $\overline{-1}$ signals outputted from decoder 313 and are further responsive to MR2-MR13. When multiplies occur in array

- 38 -

multiplier 401, the most significant bit is always maintained in the left most column elements while the partial sums are continuously shifted toward the right. Inasmuch as each stage of array multiplier 401 operates on two binary bits, the partial sums, labeled $\Sigma n$, are shifted to the right two places. Thus no A type blocks are provided for the MRO and MR1 data inputs to the first stage. Also, since each block in array multiplier 401 is responsive to two bits of information from K-stack 302 received via recoding logic 301, each block is also responsive to two bits from multiplier multiplexer 405, which bits are inverted by inverters 430, which bits are also supplied in true logic to the B type blocks.

## Filter and Excitation Generator Logic Diagram

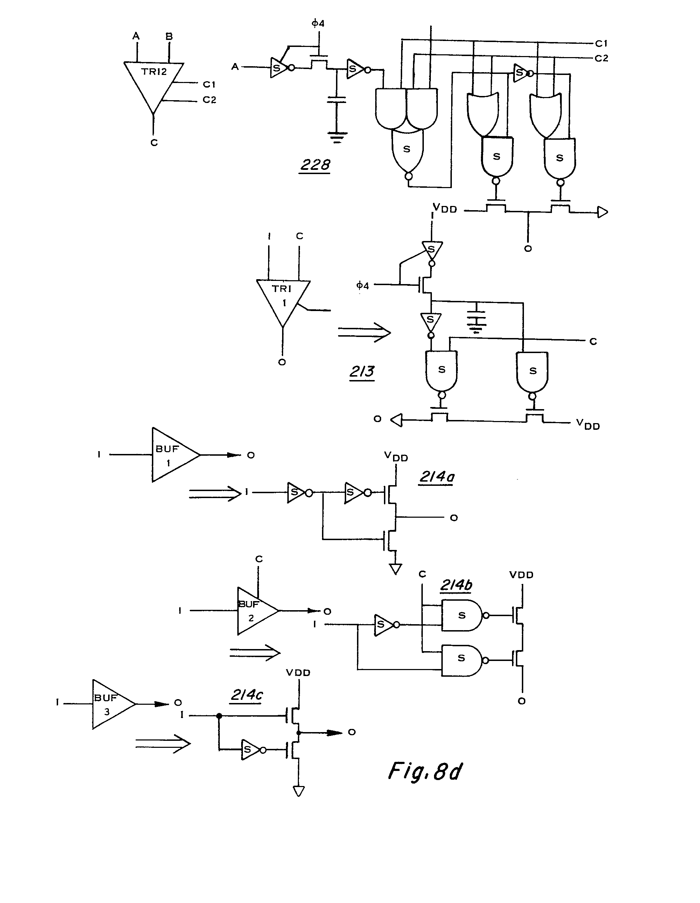

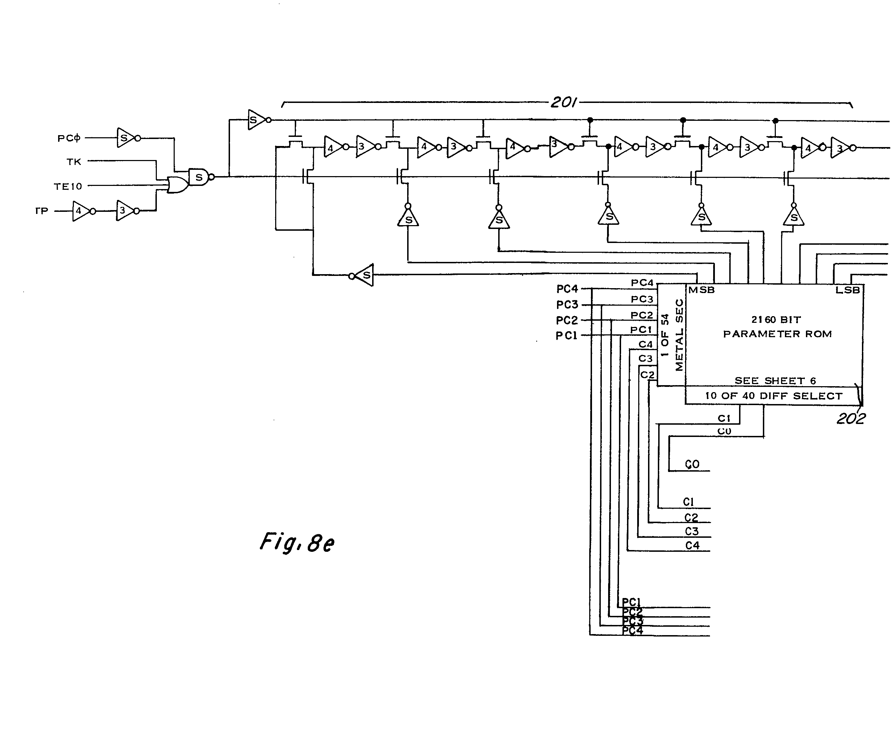

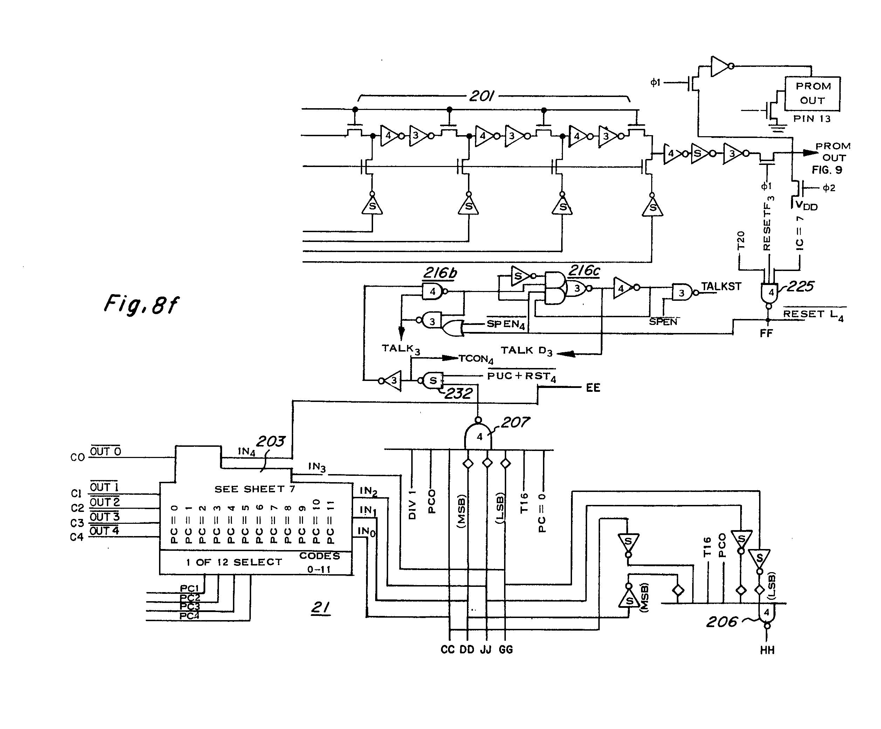

FIGURES 11a-11b form a composite, detailed logic diagram of lattice filter and excitation generator 24 (other than array multiplier 401) and output section 25. In filter and excitation generator 24 is a summer 404 which is connected to receive at one input thereof either the true or inverted output of array multiplier 401 (see FIGURES 10a - 10c) on lines PO-P13 via summer multiplexer 402. The other input of adder 404 is connected via summer multiplexer 402 to receive either the output of adder 404 (at T10-T18), the output of delay stack 406 on lines 440 453 (at T20-T7 and T9), the output of Y-latch 403 (at T8) or a logical zero from $\phi 3$ precharge gate 420 (at T19 when no conditional discharge is applied to this input). The reasons these signals are applied at these times can be seen from FIGURE 8 of the aforementioned U.S. Patent Application S/N 905,328; it is to be remembered of course, that the time period designation differs as discussed with reference to FIGURE 5 hereof.

- 39 -

The output of adder 404 is applied to delay stack 406, multiplier multiplexer 405, one period delay gates 414 and summer multiplexer 402. Multiplier multiplexer 405 includes a one period delay gates 414 which are generally equivalent to one period delay 341 of FIGURE 7 in U.S. Patent Application S.N. 905,328. Y-latch 403 is connected to receive the output of delay stack 406. Multiplier multiplexer 405 selectively applies the output from Y-latch 403, one period delay gates 414, or the excitation signal on bus 415 to the input MRO-MR13 of array multiplier 401. The inputs DO-D13 to delay stack 406 are derived from the outputs of adders 404. The logics for summer multiplier 402, adder 404, Y-latch 403, multiplier multiplexer 405 and one period delay circuit 414 are only shown in detail for the least significant bit as enclosed by dotted line reference A. The thirteen most significant bits in the lattice filter also are provided by logics such as those enclosed by the reference A line, which logics are denoted by long rectangular phantom line boxes labeld "A". The logics for each parallel bit being processed in the lattice filter are not shown in detail for sake of clarity. The portions of the lattice filter handling bits more significant than the least significant bit differ from the logic shown for elements 402, 403, 404, 405, and 414 only with respect to the interconnections made with truncation logics 5o1 and bus 415 which connects to UV gate 408 and chirp ROM 409. In this respect, the output from UV gate 408 and chirp ROM 409 is only applied to inputs I13-I6 and therefore the input labeled $I_x$ within the reference A phantom line is not needed for the six least significant bits in the lattice filter. Similarly, the output from the Y-latch 403 is only applied for the ten most significant bits, $YL_{13}$ through $YL_4$, and therefore the connection labeled YLx within the reference line is not required for the four least significant bits in the lattice filter.

- 40 -

Delay stack 406 comprises 14 nine bit long shift registers, each stage of which comprises inverters clocked on $\phi4$ and $\phi3$ clocks. As is discussed in U.S. Patent Application S.N. 905,328, the delay stack 406 which generally corresponds to shift register 35' of FIGURE 7 of the aforementioned patent, is only shifted on certain time periods. This is accomplished by logics 416 whereby $\phi1B-\phi4B$ clocks are generated from T10-T18 timing signal from PLA 512 (FIGURES 7a and 7b). The clock buffers 417 in circuit 416 are also shown in detail in FIGURES 11a and 11b.

Delay stack 406 is nine bits long whereas shift register 35' in FIGURE 7 of U.S. Patent Application S.N. 905,328 was eight bits long; this difference occurs because the input to delay stack 406 is shown as being connected from the output of adder 404 as opposed to the output of one period delay circuit 414. Of course, the input to delay stack 406 could be connected from the outputs of one period delay circuit 414 and the timing associated therewith modified to correspond with that shown in U.S. Patent Application S.N. 905,328.

The data handled in delay stack 406, array multiplier 401, adder 402, summer multiplexer 402, Y-latch 403, and multiplier multiplexer 405 is preferably handled in two's complement notation.

Unvoiced generator 407 is a random noise generator comprising a shift register 418 with a feedback term supplied by feedback logics 419 for generating pseudorandom terms in shift register 418. An output is taken therefrom and is applied to UV gate 408 which is also responsive to OLDP from latch 208d (FIGURES 8a - 8f). Old pitch latch 208d controls gate 408 because pitch=0 latch 208b changes state immediately when the new speech parameters are

- 41 -

inputted to register 205. However, since this occurs during interpolation count ICO and since, during an unvoiced condition the new values are not interpolated into K-stack 302, E10 loop 304 and pitch register 305 until the following ICO, the speech excitation value cannot change from a periodic excitation from chirp ROM 409 to a random excitation from unvoiced generator 407 until eight interpolation cycles have occurred. Gate 420 nors the output of gate 408 into the most significant bit of the excitation signal, $I_{13}$, thereby effectively causing the sign bit to randomly change during unvoiced speech. Gate 421 effectively forces the most significant bit of the excitation signal, $\hat{I}_{12}$, to a logical one during unvoiced speech conditions. Thus the combined effect of gates 408, 420 and 421 is to cause a randomly changing sign to be associated with a steady decimal equivalent value of .5 to be applied to the lattice filter and Filtering Excitation Generator 24.

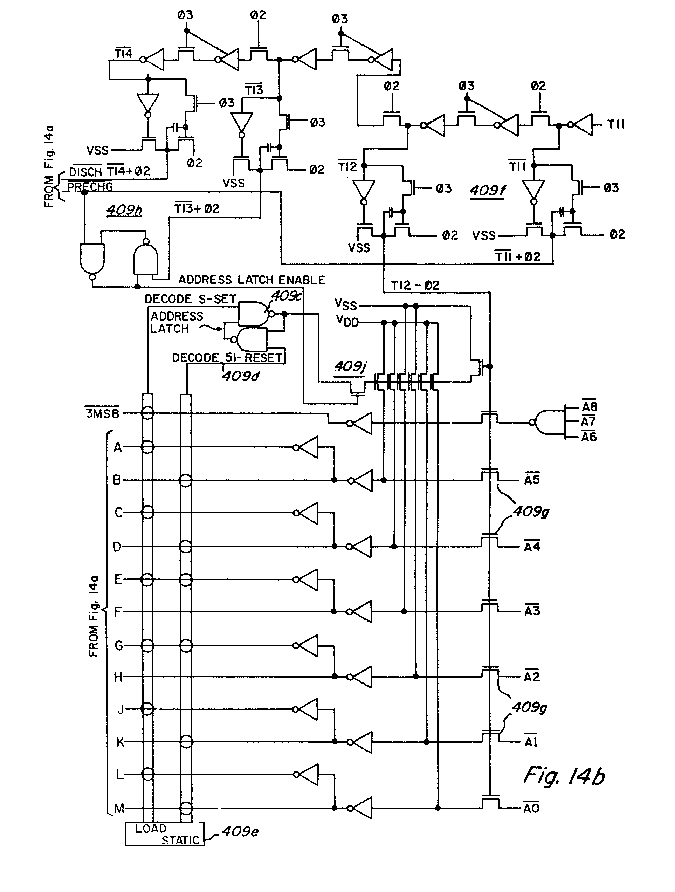

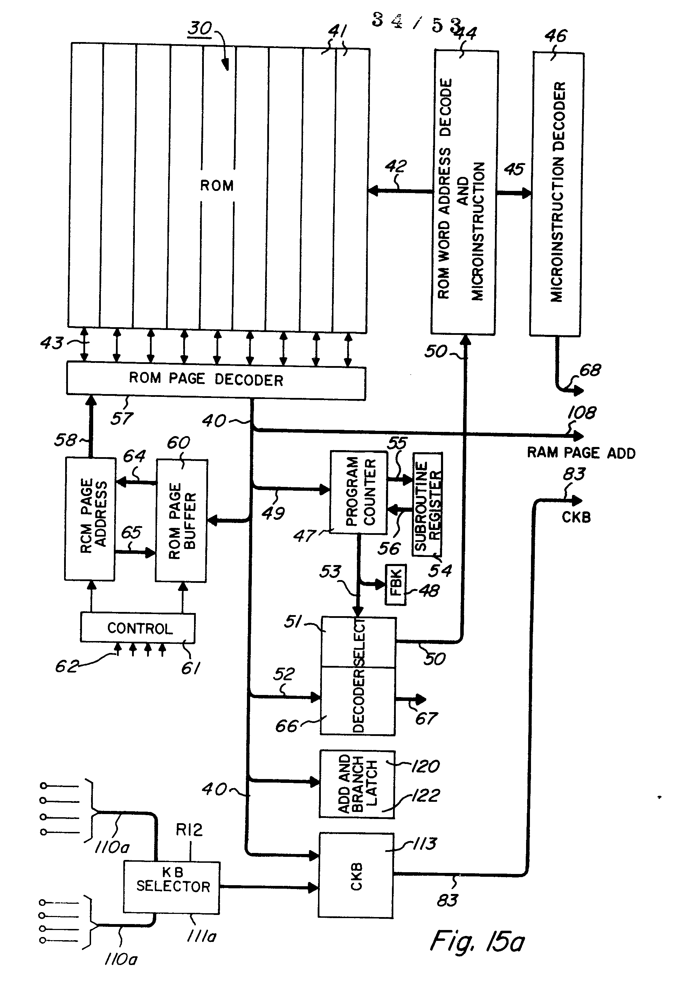

During voiced speech, chirp ROM 409 provides an eight bit output on lines $I_6 - \dot{I}_{13}$ to the lattice filter. This output comprises forty-one successively changing values which, when graphed, represent a chirp function. The contents of ROM 409 are listed in Table XI; ROM 404 is set up to invert its outputs and thus the data is stored therein in complemented format. The chirp function value and the complemented value stored in the chirp ROM are expressed in two's complement hexadecimal notation. ROM 409 is addressed by an eight bit register 410 whose contents are normally updated during each cycle through the lattice filter by add one circuit 411. The output of register 410 is compared with the contents of pitch register 305 in a magnitude comparator 403 for zeroing the contents of 410 when the contents of register 410 become equal to or greater than the contents of register 305. ROM 409, which is shown in greater detail in FIGURES 14a-14b, is arranged so that addresses greater than 110010

- 42 -

cause all zeroes to be outputted on lines $I_{13}$-$I_6$ to multiplier multiplexer 405. Zeroes are also stored in address locations 41-51. Thus, the chirp may be expanded to occupy up to address location fifty, if desired.

Random Access Memory Logic Diagram

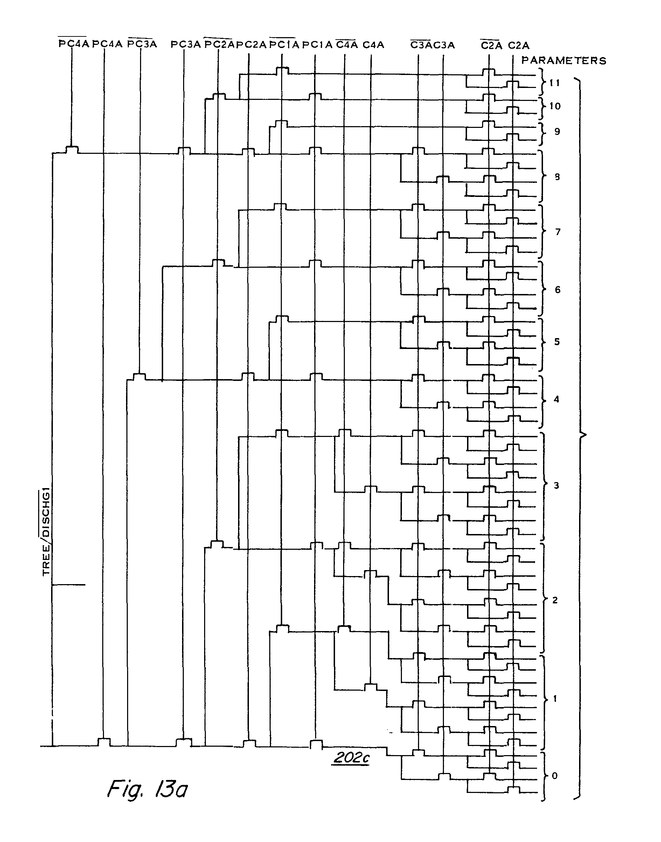

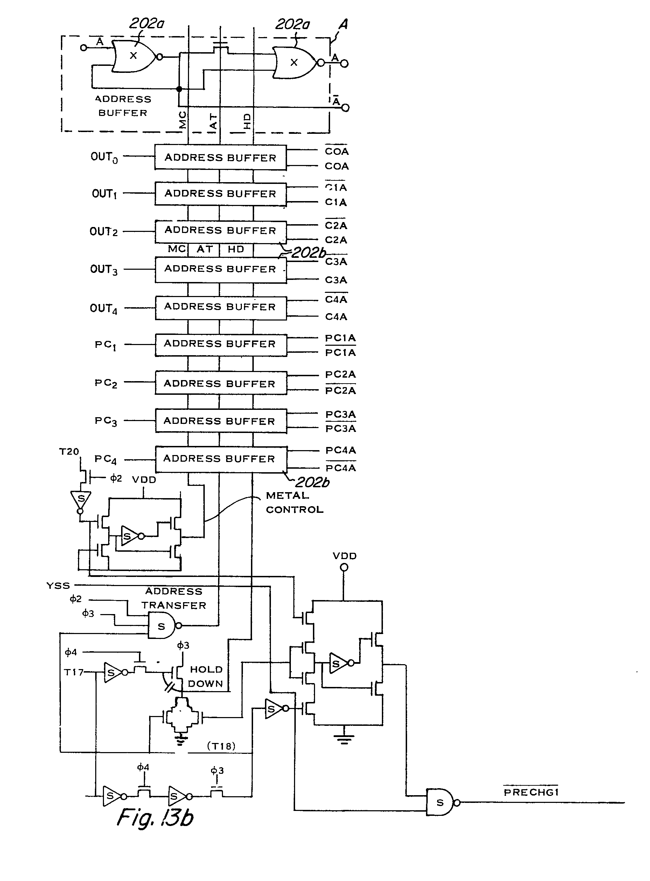

Referring now to FIGURES 12a-12b, there is shown a composite detailed logic diagram of RAM 203. RAM 203 is addressed by address on PC1-PC4, which address is decoded in a PLA 203a and defines which coded parameter is to be inputted into RAM 203. RAM 203 stores the twelve decoded parameters, the parameters having bit lengths varying between three bits and five bits according to the decoding scheme described with reference to FIGURE 6. Each cell, reference B, of RAM 203 is shown in greater detail in FIGURE 12b. Read/Write control logic 203b is responsive to T1, DIV1, PCO and parameter load enable for writing into the RAM 203 during the A cycle of each parameter count during interpolation count zero when enabled by parameter load enable from logics 238 (FIGURE 8a-f). Data is inputted to RAM 203 on lines INO-IN4 from register 205 as shown in FIGURES 8a - 8 f and data is outputted on lines OUT1-OUT5 to ROM 202 as is shown in the aforementioned figures.

Parameter Read-Only-Memory Logic Diagram

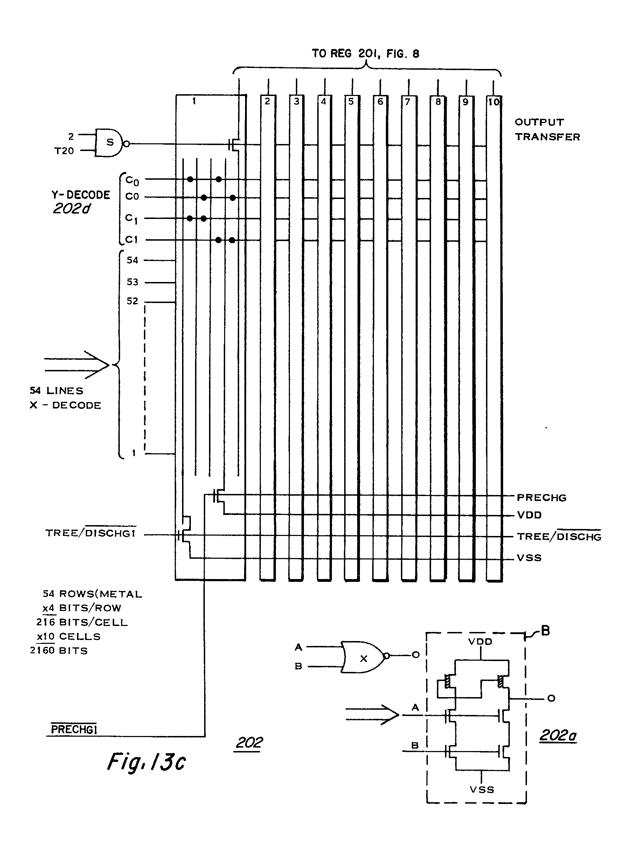

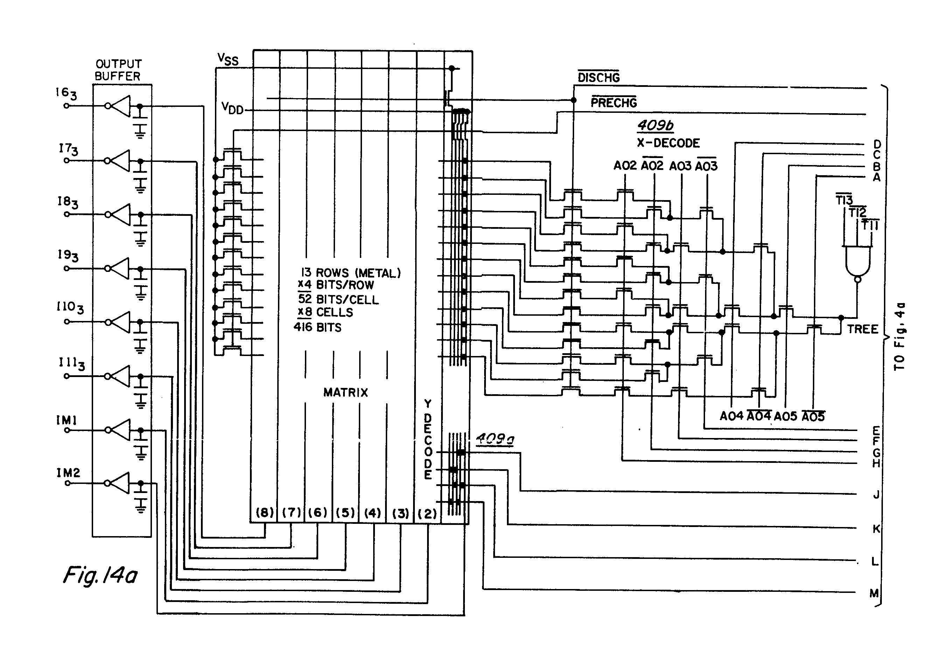

In FIGURES 13a-13c, there is shown a logic diagram of ROM 202. ROM 202 is preferably a virtual ground ROM of the type disclosed in U.S. Patent 3,934,233. Address information from RAM 202 and from parameter counter 513 are applied to address buffers 202b which are shown in detail at reference A. The NOR gates 202a used in address buffers 202b are shown in detail at reference B. The outputs

- 43 -

of the address buffers 202b are applied to an X-decoder 202c or to a Y-decoder 202d. The ROM is divided into ten sections labeled reference C, one of which is shown in greater detail. The outline for output line from each of the sections is applied to register 201 via inverters as shown in FIGURES 8a - 8f. X-decoder selects one of fifty-four X-decode lines while Y-decoder 202d tests for the presence or nonpresence of a transistor cell between an adjacent pair of diffusion lines, as is explained in greater detail in the aforementioned U.S. Patent 3,934,233. The data preferably stored in ROM 202 of this embodiment is listed in Table IX.

## Chirp Read-Only-Memory Logic Diagram

FIGURES 14a-14b form a composite diagram of chirp ROM 409. ROM 409 is addressed via address lines $\overline{A_0}$ - $\overline{A_8}$ from register 410 (FIGURES 11a-11b) and output information on lines $I_6$-$I_{11}$ to multiplier multiplexer 405 and lines $I_{m1}$ and $I_{m2}$ to gates 421 and 420, all which are shown in FIGURES 11a and 11b. As was previously discussed with reference to FIGURES 11a and 11b, chirp ROM outputs all zeroes after a predetermined count is reached in register 410, which, in this case is the count equivalent to a decimal 51. ROM 409 includes a Y-decoder 409a which is responsive to the address on lines $\overline{A_0}$ and $\overline{A_1}$ (and $A_0$ and $A_1$) in an X-decoder 409b which is responsive to the address on lines $\overline{A_2}$ through $\overline{A_5}$ (and $A_2$-$A_5$).

ROM 409 also includes a latch 409c which is set when decimal 51 is detected on lines $\overline{A_0}$-$\overline{A_5}$ according to line 409c from a decoder 409e. Decoder 409e also decodes a logical zero on lines $\overline{A_0}$-$\overline{A_8}$ for resetting latch 409c. ROM 409 includes timing logics 409f which permit data to be clocked in via gates 409g at time period T12. At this

– 44 –

time decoder 409e checks to determine whether either a decimal O or decimal 51 is occurring on address lines $\overline{A_O}$ - $\overline{A_8}$. If either condition occurs, latch 409c, which is a static latch, is caused to flip.

An address latch 409h is set at time period T13 and reset at time period T11. Latch 409h permits latch 409c to force a decimal 51 onto lines $\overline{A_O}$ -$\overline{A_5}$ when latch 409c is set. Thus, for addresses greater than 51 address register 410, the address is first sampled at time period T12 to determine whether it has been reset to zero by reset logic 412 (FIGURES 12a-12b) for the purpose of resetting latch 409c and if the address has not been reset to zero then whatever address has been inputted on lines $\overline{A_O}$ -$\overline{A_8}$ is written over by logics 409j at T13. Of course, at location 51 in ROM 409 will be stored all zeroes on the output lines I6-I11, IM1 and IM2. Thus by the means of logics 409c, 409h and 409j addresses of a preselected value, in this case a decimal 51, are merely tested to determine whether a reset has occurred but are not permitted to address the array of ROM cells via decoders 409a and 409b. Addresses between a decimal O and 50 address the ROM normally via decoders 409a and 409b. The ROM matrix is preferably of the virtual ground type described in U.S. Patent 3,934,233. As aforementioned, the contents of ROM 409 are listed in Table XI. The chirp function is located at addresses 00-40 while zeroes are located at addresses 41-51.

## Truncation Logic and Digital-To-Analog Converter

Turning again to FIGURES 11a - 11d, the truncation logic 425 and Digital-to-Analog (D/A) converter is shown in detail. Truncation logic 425 includes circuitry for converting the two's complement data on $YL_{13}$-$YL_{14}$ to sign magnitude data. Logics 425a test the MSB from Y-latch 403 on line $YL_{13}$ for the purpose of generating a sign bit and

- 45 -

for controlling the two's complement to sign magnitude conversion accomplished by logics 425c. The sign bit is supplied in true and false logic on lines D/Asn and $\overline{\text{D/Asn}}$ to D/A converter 426.

Logics 425c convert the two's complement data from Y-latches 403 in lines $YL_{10}-YL_4$ to simple magnitude notation on lines $\overline{\text{D/A}_6}-\overline{\text{D/A}_0}$. Only the logics 425c associated with YL10 are shown in detail for sake of simplicity.

Logics 425b sample the $YL_{12}$ and $YL_{11}$ bits from the Y-latches 403 and perform a magnitude truncation function thereon by forcing outputs $\overline{\text{D/A}_6}$ through $\overline{\text{D/A}_0}$ to a logic zero (i.e., a value of one if the outputs were in true logic) wherever either $YL_{12}$ or $YL_{11}$ is a logical one and $YL_{13}$ is a logical zero, indicating that the value is positive or either $YL_{12}$ or $YL_{11}$ is a logical zero and $YL_{13}$ is a logical one, indicating that the value is negative (and complemented, of course). Whenever one of these conditions occurs, a logical zero appears on line 427 and Vss is thereby coupled to the output buffer 428 in each of logics 425c. The magnitude function effectively truncates the more significant bits on $YL_{11}$ and $YL_{12}$. It is realized that this is somewhat unorthodox truncation, since normally the less significant bits are truncated in most other circuits where truncation occurs. However, in this circuit, large positive or negative values are effectively clipped. More important digital speech information, which has smaller magnitudes, is effectively amplified by a factor of four by this truncation scheme.

The outputs $\overline{\text{D/A}_6}-\overline{\text{D/A}_0}$, along with $\overline{\text{D/Asn}}$ and D/Asn are coupled to D/A converter 426. D/A converter 426 preferably has seven MOS devices 429 coupled to the seven lines $\overline{\text{D/A}_6}$ through $\overline{\text{D/A}_0}$ from truncation logics 425. Devices 429 are arranged, by controlling their length to width rations, to pass different amounts of electrical current, the device

- 46

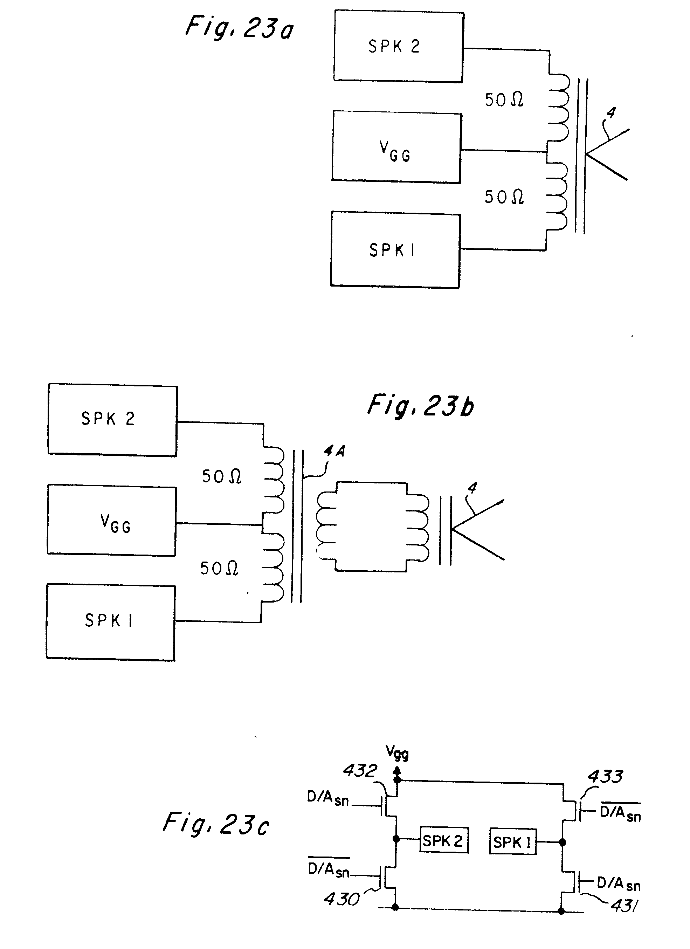

429 coupled to $\overline{D/A_6}$ passing twice as much current (when on) as the device 429 coupled to $\overline{D/A_5}$ . Likewise the device 429 coupled to $\overline{D/A_5}$ is capable of passing twice as much current as the device 429 coupled to $\overline{D/A_4}$. This two to one current passing capability similarly applies to the remaining devices 429 coupled to the remaining lines $\overline{D/A_3} - \overline{D/A_0}$. Thus, device 429 coupled to $\overline{D/A_1}$ is likewise capable of passing twice as much current as the device 429 coupled to $\overline{D/A_2}$. All devices 429 are connected in parallel, one side of which are preferably coupled to Vss and the other side is preferably coupled to either side of the speaker 4 via transistors 430 and 431. Transistor 430 is controlled by $\overline{D/Asn}$ which is applied to its gates; transistor 431 is turned off and on in response to D/Asn. Thus, either transistor 430 or 431 is on depending on the state of the sign bit, D/Asn. The voice coil of speaker 4 preferably has a 100 ohm impedance and has a center tap connected to Vgg as shown in FIGURE 23a. Thus, the signals on lines $\overline{D/A_6-DA_0}$ control the magnitude of current flow through the voice coil while the signals on lines D/Asn and D/Asn control the direction of that flow.

Alternatively to using a center-tapped 100 ohm voice coil, a more conventional eight ohm speaker may be used along with a transformer having a 100 ohm center tapped primary (connected to Vgg and transistors 430 and 431) and an eight ohm secondary (connected to the speaker's terminals) as shown in FIGURE 23b. In yet another embodiment, the center tap may be eliminated altogether by utilizing transistors 432 and 433 as shown in FIGURE 23c, which are not used in the embodiments utilizing the center tapped transformer or voice coil.

It should now be appreciated by those skilled in the art that D/A converter 426 not only converts digital

- 47 -

sign magnitude information on lines $\overline{D/A_6}$-$\overline{D/A_0}$ and $D/Asn$-$\overline{D/Asn}$ to an analog signal, but has effectively amplified this analog signal to sufficient levels to permit a speaker to be driven directly from the MOS synthesis chip 10 ( or via the aforementioned transformer, if desired). Of course, those skilled in the art will appreciate that simple D/A converters, such as that disclosed here, will find use in other applications in addition to speech synthesis circuits.

<center>THE SPEECH SYNTHESIZER CHIP</center>

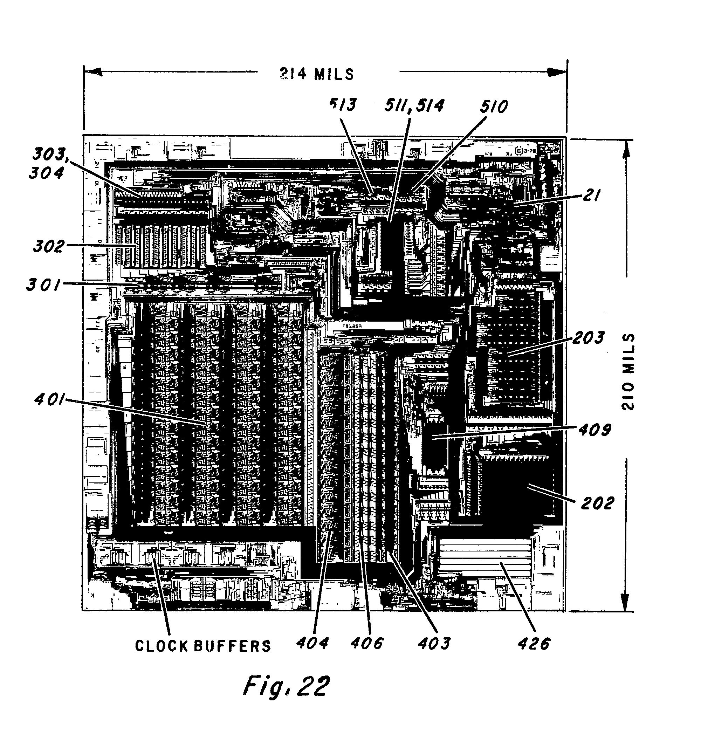

In FIGURE 22 a greatly enlarged plan view of a semiconductor chip which contains the entire system of FIGURES 4a and 4b is illustrated. The chip is only about two hundred fifteen mils (about 0.215 inches) on a side. In the example shown, the chip is manufactured by the P-channel metal gate process using the following design rules: metal line width 0.25 mil; metal line spacing 0.25 mil; diffusion line width 0.15 mil; and diffusion line spacing 0.30 mil. Of course, as design rules are tightened with the advent of electron beam mask production or slice writing, and other techniques, it will be possible to further reduce the size of the synthesizer chip. The size of the synthesizer chip can, of course also be reduced by not taking advantage of some of the features preferable used on the synthesizer chip.

The total active area of speech synthesizer chip 10 is approximately 45,000 square mils.

It will also be appreciated by those skilled in the art, that other MOS manufacturing techniques, such as N-channel, complementary MOS (CMOS) or silicon gate processes may alternatively be used.

<center>- 48 -</center>

The various parts of the system are labeled with the same reference numerals previously used in this description.

CONTROLLER LOGIC DIAGRAMS

The controller used in the learning aid is preferably a microprocessor of the type described in U.S. Patent 4,074,355, with modifications which are subsequently described. U.S. Patent 4,074,355 is hereby incorporated herein by reference. It is to be understood, of course, that other microprocessors, as well as future microprocessors, may well find use in applications such as the speaking learning aid described herein.

The microprocessor of U.S. Patent 4,074,355 is an improved version of an earlier microprocessor described in U.S. Patent 3,991,305. One of the improvements concerned the elimination of digit driver devices so that arrays of light emitting diodes (LED's) forming a display could be driven directly from the microprocessor. As a matter of design choice, the display used with this learning aid is preferably a vacuum fluorescent (VF) display device. Those skilled in the art will appreciate that when LED's are directly driven, the display segments are preferably sequentially actuated while the display's common character position electrodes are selectively actuated according to information in a display register or memory. When VF displays are utilized, on the other hand, the common character position electrodes are preferably sequentially actuated while the segments are selectively actuated according to information in the display register or memory. Thus, the microprocessor of U.S. Patent 4,074,355 is preferably altered to utilize digit scan similar to that used in U.S. Patent 3,991,305.

The microprocessor of U.S. Patent 4,074,355 is a four bit processor and to process alphanumeric information, additional bits are required. By using six bits, which can represent 26 or 64 unique codes, the twenty-six characters of the alphabet, ten numerals as well as several communicated externally via pins SEG G, SEG B, SEG C and SEG D. The 91B type driver coupled to pin SEG E permits the contents of digit register 94-10 to be communicated externally when digit register 94-12 is set. The 91B type driver coupled to pin SEG A permits the contents of the program counter to be outputted during test operations.

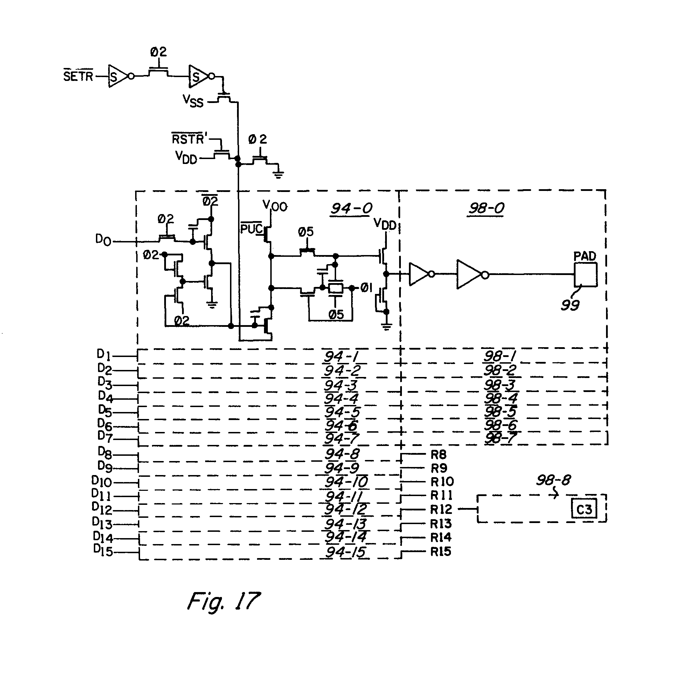

The digit buffers registers and TDO latches of FIGURE 14 of U.S. Patent 4,074,355 are also preferably replaced with the digit buffers registers of FIGURE 17 herein inasmuch as (1) the DDIG signal is no longer used and (2) the digit latches (elements 97 in U.S. Patent 4,074,355) are no longer used. For simplicity's sake, only one of the digit output buffer registers 94 is shown in detail. Further, since in this embodiment of the learning aid, display 2 perferably has eight character positions, eight output buffers 98-O through 98-7 connect $D_O$-$D_7$ to the common electrodes of display 2 via registers 94-O through 94-7 are shown in FIUGRE 17. An additional output buffer 98-8 communicates the contents of registers 94-12, which is the chip select signal, to synthesizer 10.

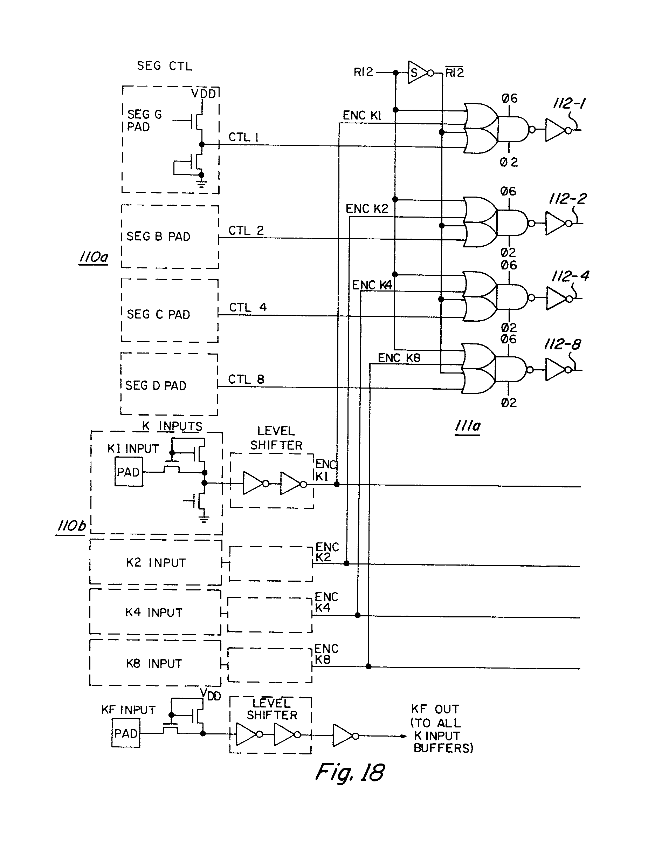

To facilitate bi-directional communication with sythesizer 10, the microprocessor of U.S. Patent 4,074,355 is preferably modified to permit bi-directional communication on pins SEG G, SEG B, SEG C and SEG D. Thus, in FIGURE 18, these SEG pins are coupled to the normal K lines, 112-1 through 112-8, via an input selector 111a for inputting information when digit registers 94-12 (R12) is set. Further, these pins are also coupled to ACC1-ACC8 via segment drivers 91A when digit registers 94-12 (R12) and 94-11 (R11) are set for outputting information in accumulator 77.

- 50 -

Thus, when digit latch 94-12 (which communicates the chip select signal externally) is set, SEG E is coupled to R10 (digit registers 94-10) for communicating the PDC signal to synthesizer 10. Also, ACC1-ACC8 is outputted on SEG G and SEG B-SEG D, during the time R12 special characters can be handled with ease. In lieu of converting the microprocessor of U.S. Patent 4,074,355 directly to a six bit processor, it was accomplished indirectly by software pairing the four bit words into eight bit bytes and transmitting six of those bits to the display decoder.

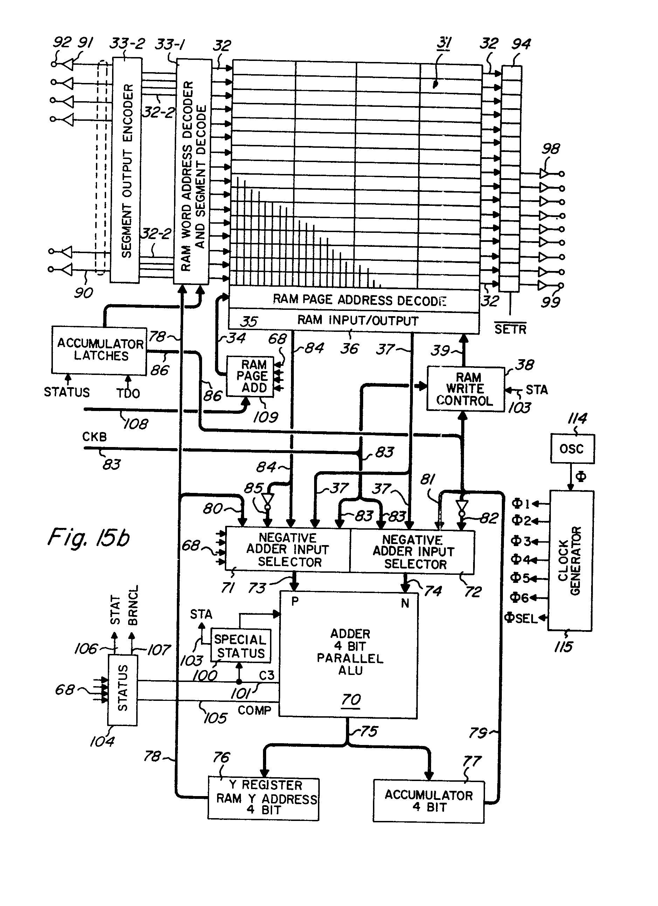

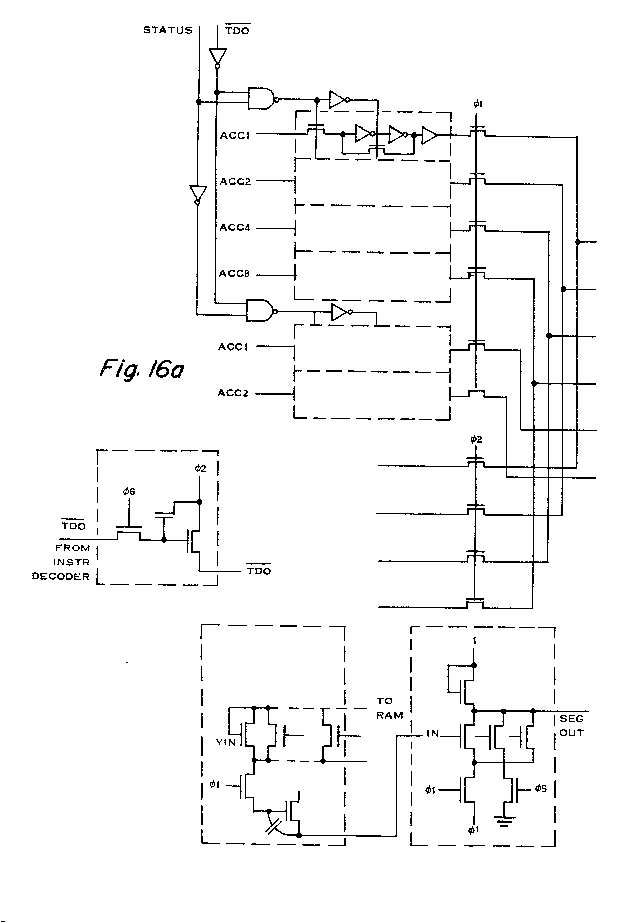

Referring now to FIGURES 15a-15b, which form a composite block diagram of the microprocessor preferably used in the learning aid, it should be appreciated that this block diagram generally corresponds with the block diagram of FIGURES 7a and 7b of U.S. Patent 4,074,355; several modifications to provide the aforementioned features of six bit operation and VF display compatibility are also shown. The numbering shown in FIGURES 15a and 15b generally agrees with that of U.S. Patent 4,074,355. The modifications will now be described in detail.

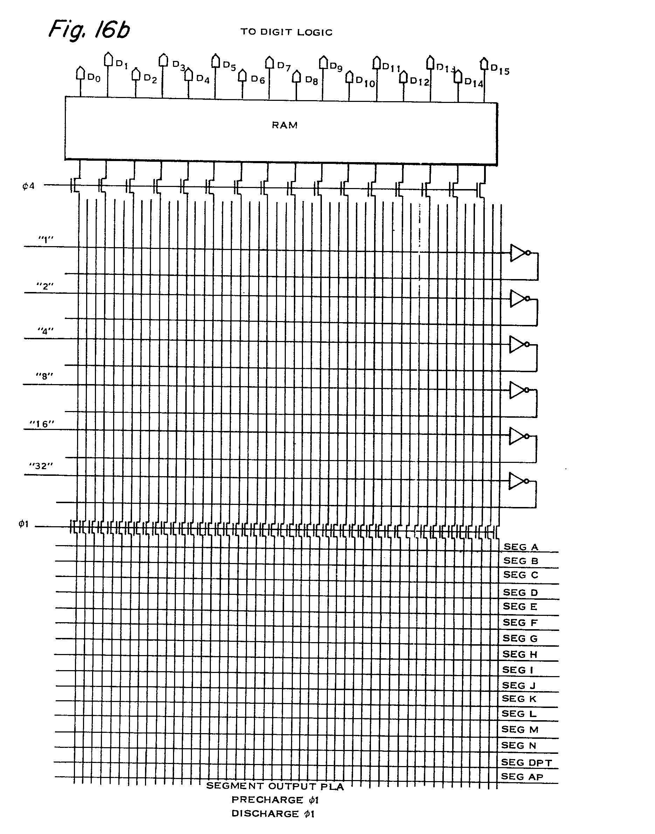

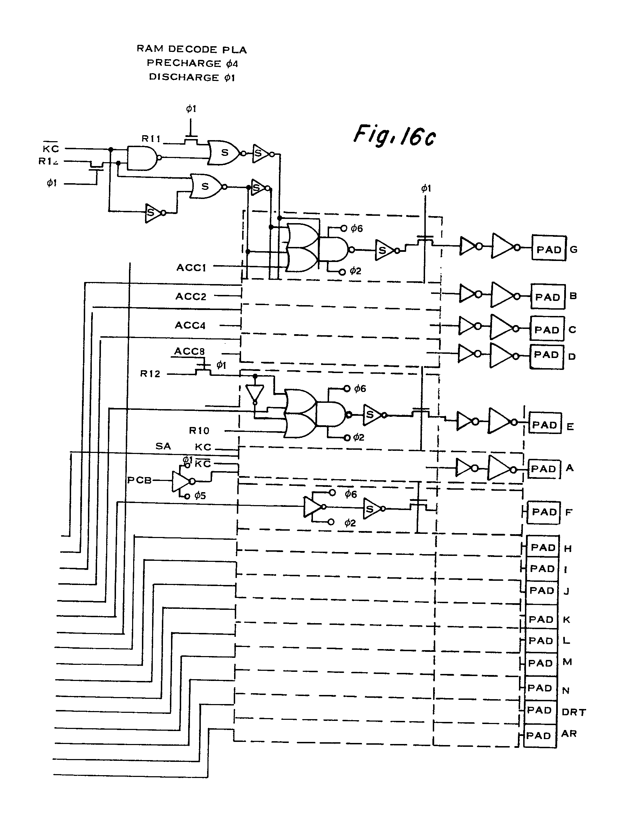

Referring now to the composite diagram formed by FIGURES 16a-16b, which replace FIGURE 13 of U.S. Patent 4,074,355, there can be seen the segment decoder and RAM address decoder 33-1 which decodes RAMY for addressing RAM 31 or ACC1-ACC8 for decoding segment information. Decoder 33-1 generally corresponds to decoder 33 in the aforementioned U.S. Patent. The segment information is re-encoded into particular segment line information in output section 32-2 and outputted on bus 90 to segment drivers 91. Six bits of data from the processor's four bit accumulator 77 are decoded in decoder 33-1 as is now described. First, four bits on bus 86 are latched into accumulator latches 87-1 through 87-8 on a TDO (Transfer Data Out) instruction

- 51 -

when status is a logical one. Then, two bits on bus 86 (from lines 86-1 and 86-2) are latched into accumulator latches 87-16 and 86-32, respectively, on another TDO instruction when status is a logical zero. Then the six bits in latches 87-1 through 87-32 is decoded in decoder 33-1. Segment drivers 91 may preferably be of one of three types, 91A, 91B or 91C as shown on FIGURES 16a-16b. The 91A type drivers permits the data on ACC1-ACC8 to be and R11 are set. When R11 is a logical O, i.e., is reset, segment drivers 91A are turned off and data may be read into CKB circuit 113 for receiving data from ROMs 12a-12b via synthesizer 10, for instance. FIGURE 18 replaces the keyboard circuit 111 shown in FIGURE 22 of U.S. Patent 4,064,554.

Preferably, pins SEG G and SEG-B-SEG D are coupled to CTL-CTL8 pins of synthesizer 10, while pin SEG E is coupled to the PCD pin of synthesizer 10.

In Table XII is listed the set of instructions which may be stored in the main Read-Only-Memory 30 of FIGURES 15a-15b to provide controller 11. Referring now to Table XII, there are several columns of data which are, reading from left to right: STMT (Statement Number), PC (Program Counter), CODE, PLOC (Physical location), TITLE, and DEST (Destination). In U.S. Patent 4,074,355, it can be seen that main Read-Only-Memory 30 is addressed with a seven bit address in program counter 47 and a four bit address in a buffer 60. The address in buffer 60 is referred to as a page address in the main Read-Only-Memory. The instructions listed on Table XII, ROM Page O, correspond to page zero in the microprocessor while the instructions listed in Table XII, ROM Page 1 are those on page one and so forth through to the instructions in Table XII, ROM Page 15, which are stored on page fifteen in the microprocessor.

The program counter 47 of the aforementioned microprocessor is comprised of a feedback shift register and therefore counts in a pseudorandom fashion, thus the addresses in the PC column of Table XII, which are expressed as a hexadecimal number, exhibit such pseudo-randomness. If the instruction starting at page zero were read sequentially from the starting position in the program counter (00) then the instruction would be read out in the order shown in Table XII. In the STMT column is listed a sequentially increasing decimal number associated with each source statement and its instruction and program counter address as well as those lines in which only comments appear. When an instruction requiring either a branch or call is to be performed, the address to which the program counter will jump and the page number to which the buffer will jump, if required, is reflected by the binary code comprising the instruction or instructions performing the branch or call. For sake of convenience, however, the DEST column indicates the statement number in Table XII to which the branch or call will be made. For example, the instruction at statement 107 is a branch instruction, with a branch address of 3E in hexadecimal. To facilitate finding the 3E address in the program counter, the DEST column directs the reader to statement 92 where the 3E address is located.

READ-ONLY-MEMORY LOGIC DIAGRAMS

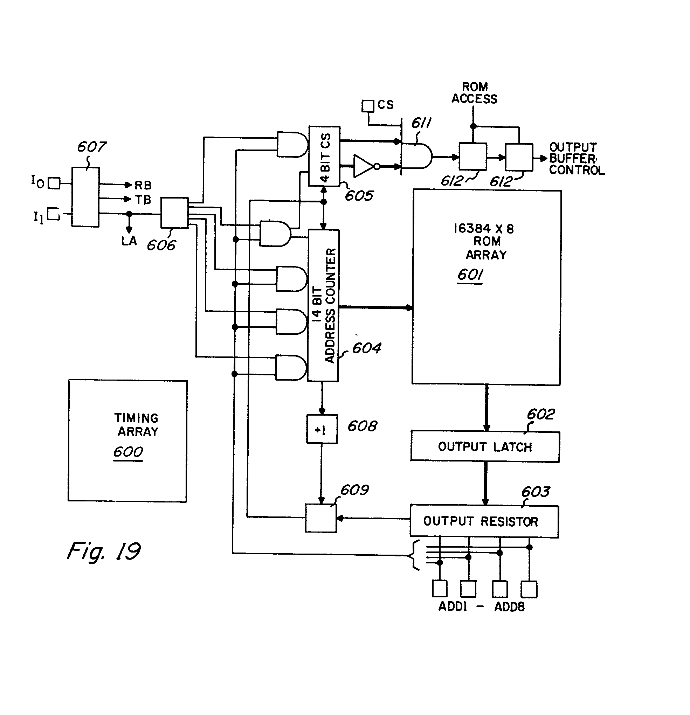

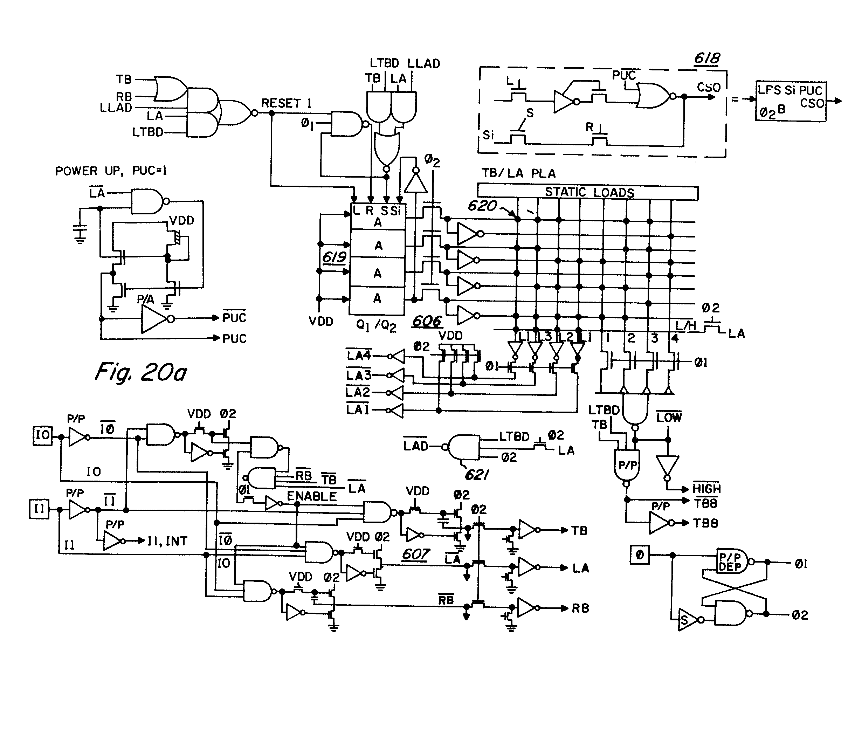

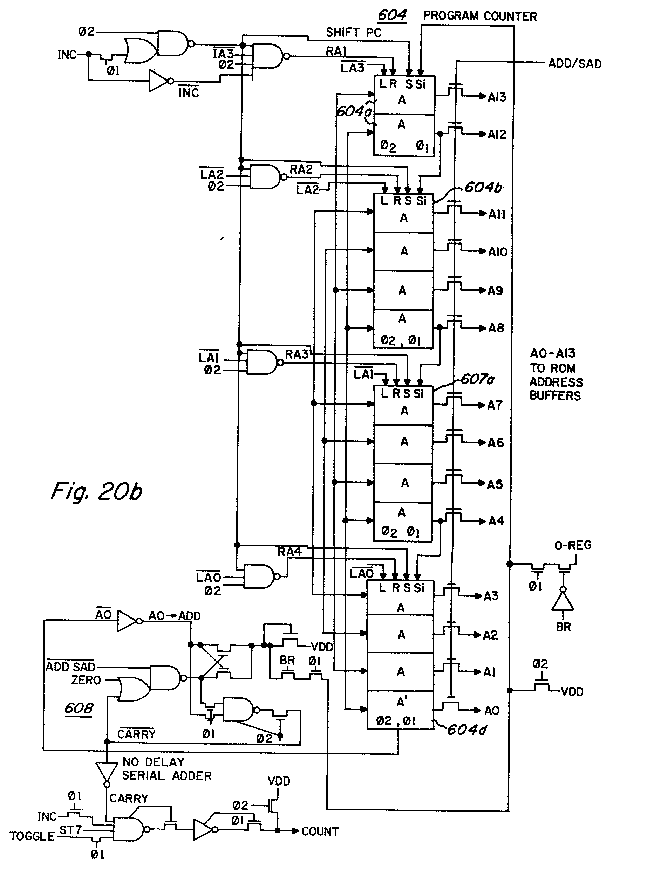

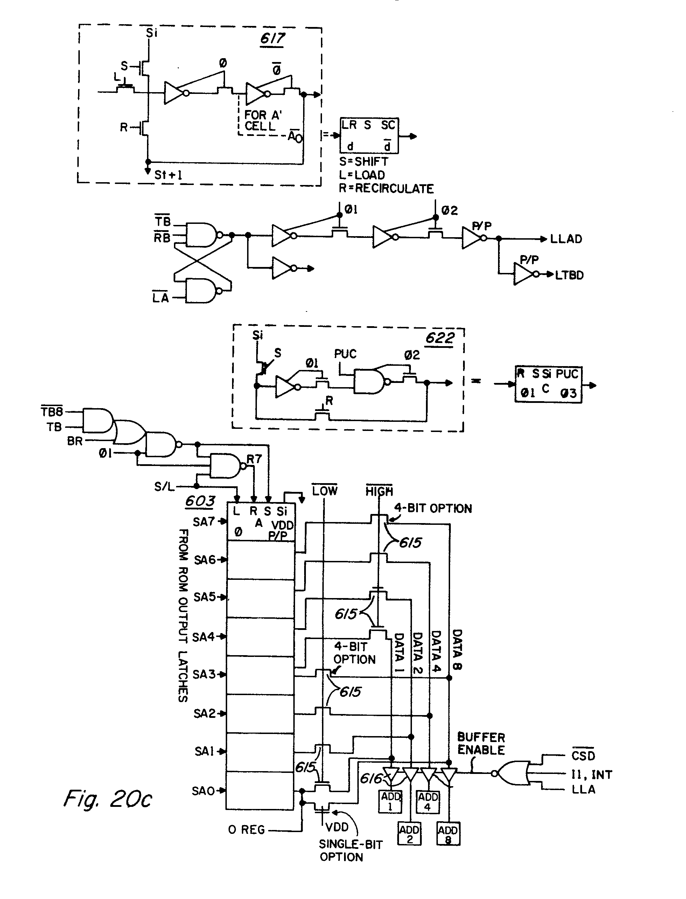

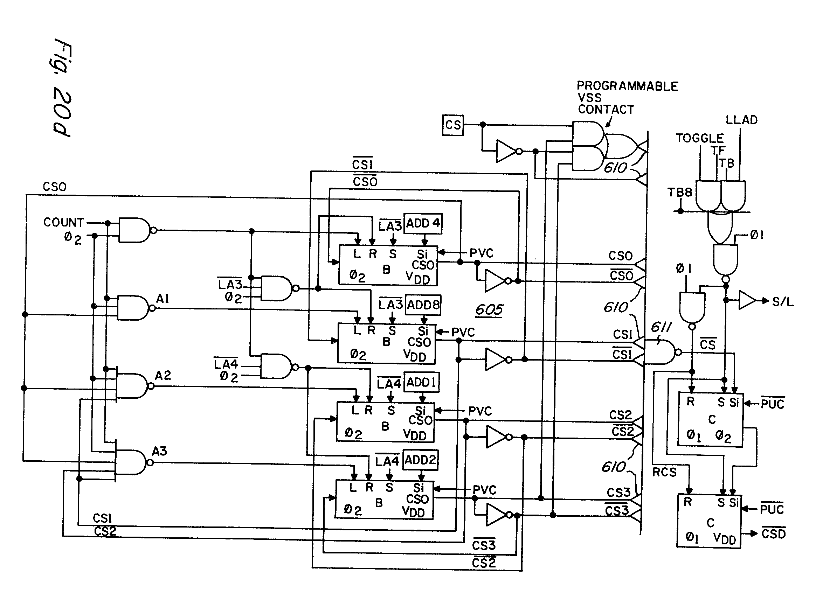

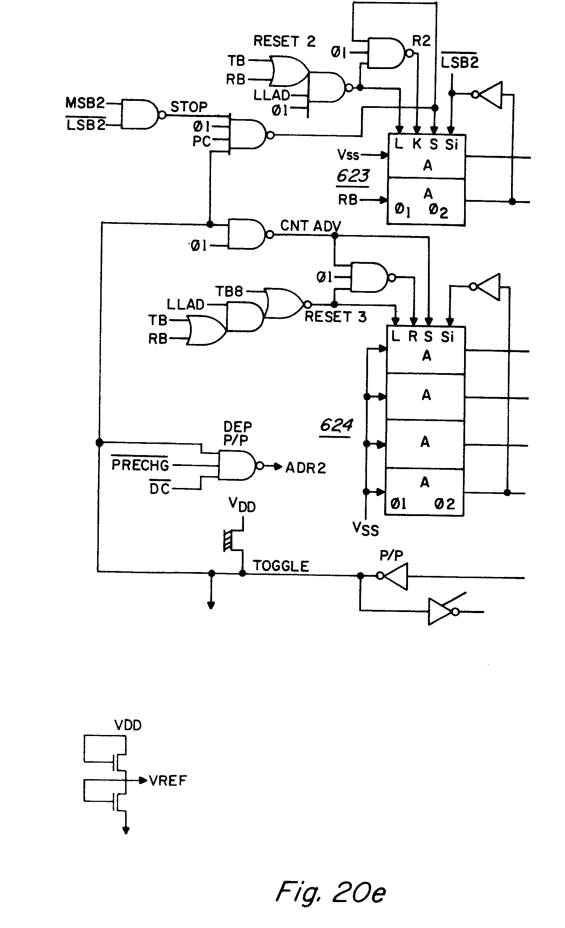

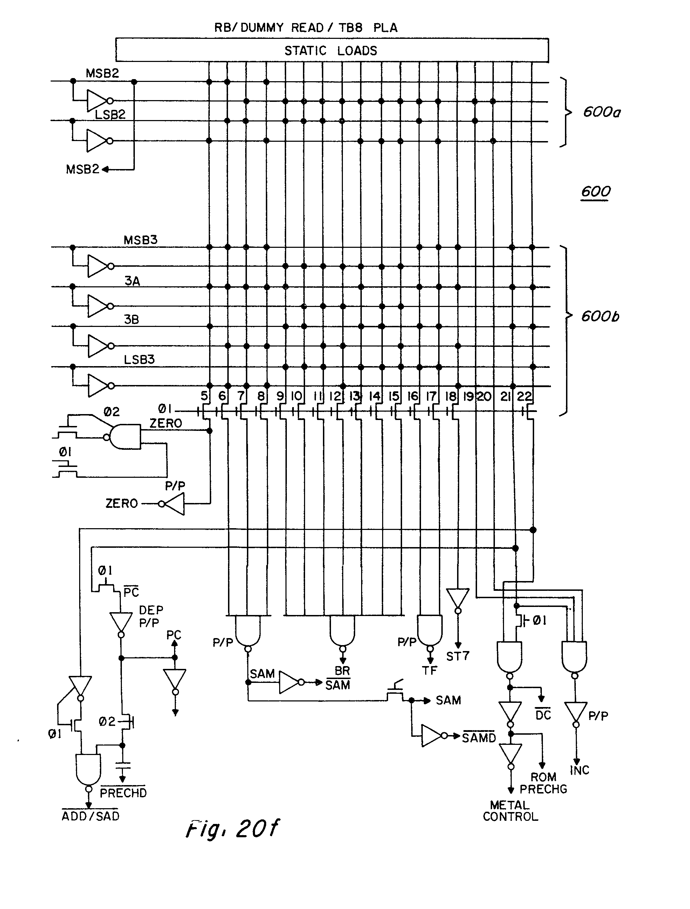

Read-Only-Memories 12a or 12b or 13a or 13b are shown in FIGURES 19, 20a-20f and 21a-d. FIGURE 19 is a block diagram of any of these ROMs. FIGURES 20a-20f form a composite logic diagram of the control logic for the ROMs while FIGURES 20a and 20b form a composite logic diagram of the X and Y address decoders and pictorially show the array of memory cells.

- 53 -

Referring now to FIGURE 19, the RAM array 601
is arranged with eight output lines, one output line from
each section of 16,384 bits. The eight output lines from
ROM array 601 are connected via an output latch 602
to an eight bit output register 603. The output register
603 is interconnected with pins ADD1 and ADD8 and arranged
either to communicate the four high or low order bits
from output register 603 via the four pins ADD1-ADD8 or
alternatively to communicate the bit serially from output
register 603 via pin ADD1. The particular alternative used
may be selective according to mask programmable gates.

ROM array 601 is addressed via a 14 bit address
counter 604. The address counter 604 has associated therewith a four bit chip select counter 605. Addresses in
address counter 604 and chip select counter 605 are loaded
four bits at a time from pins ADD1-ADD8 in response to a
decoded Load Address (LA) command. The first LA command
loads the four least significant bits in address counter
604 (bits $A_0$-$A_3$), and subsequent LA commands load the
higher order bits, ($A_4$-$A_7$, $A_8$-$A_{11}$ and $A_{12}$-$A_{13}$). During
the fourth LA cycle the $A_{12}$ and $A_{13}$ bits are loaded at
the same time the CSO and CS1 bits in chip select counter
605 are loaded. Upon the fifth LA command the two most
significant bits in chip select counter 605 are loaded from
ADD1 and ADD2. A counter 606 counts consecutively
received LA commands for indicating where the four bits on
ADD1-ADD8 are to be inputted into counters 604 and/or 605.

Commands are sent to the ROM chip via $I_0$ and $I_1$
pins to a decoder 607 which outputs the LA command a TB
(transfer bit) and a RE (read and branch) command.

Address register 604 and chip select register
605 have an add-one circuit 608 associated therewith for
incrementing the address contained therein. When a carry

- 54 -

occurs outside the fourteen bit number stored in address register 604 the carry is carried into shift select register 605 which may enable the chip select function if not previously enabled or disable the chip select function if previously enabled, for example. Alternatively, the eight bit contents of output register 603 may be loaded into address register 604 by means of selector 609 in response to an RB command. During an RB command, the first byte read out of array 601 is used as the lower order eight bits while the next successive byte is used for the higher order six bits in counter 604.

The output of chip select register 605 is applied via programmable connectors 610 to gate 611 for comparing the contents of chip select counter 605 with a preselected code entered by the programming of connectors 610. Gate 611 is also responsive to a chip select signal on the chip select pin for permitting the chip select feature to be based on either the contents of the four bit chip select register 605 and/or the state of the chip select bit on the CS pin. The output of gate 611 is applied to two delay circuits 612, the output of which controls the output buffers associated with outputting information from output register 603 to pins ADD1-ADD8. The delay imposed by delay circuits 612 effect the two byte delay in this embodiment, because the address information inputted on pins ADD1-ADD8 leads the data outputted in response thereto by the time to required to access ROM array 601. The CS pin is preferably used in the embodiment of the learning aid disclosed herein.

A timing PLA 600 is used for timing the control signals outputted to ROM array 601 as well as the timing of other control signals.

Referring now to the composite drawing formed by FIGURES 20a to 20f, output register 603 is formed by eight

- 55 -

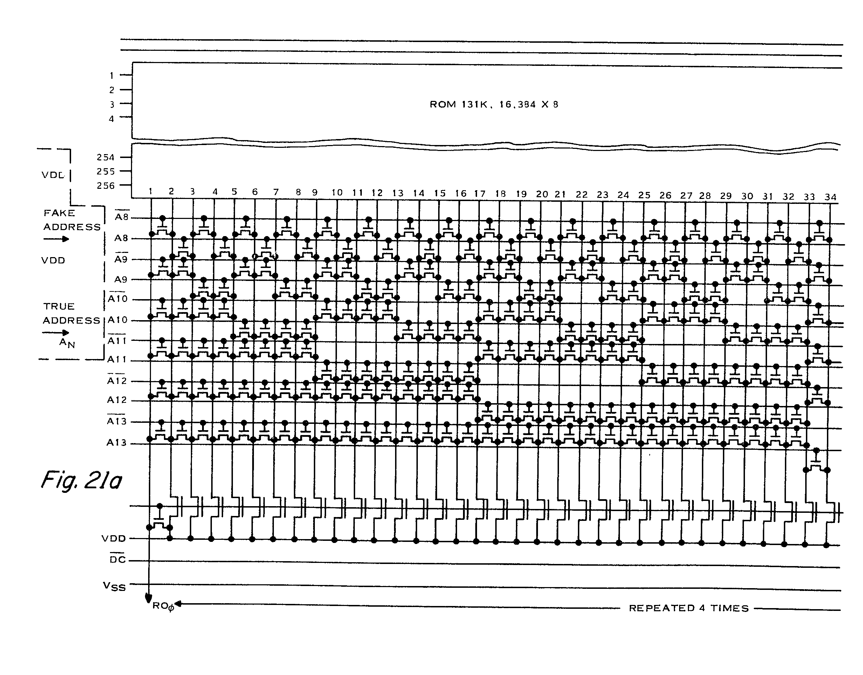

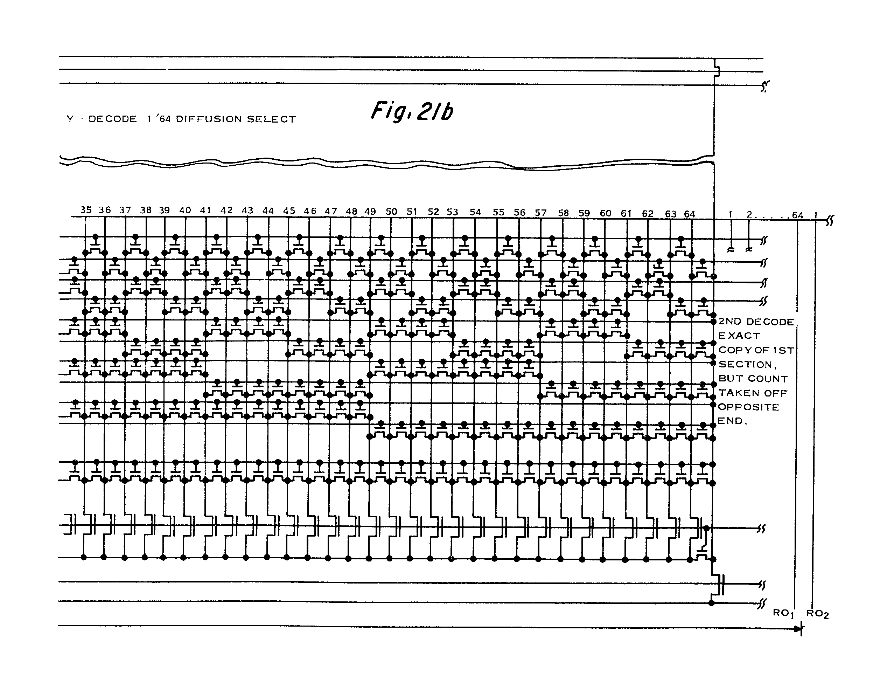

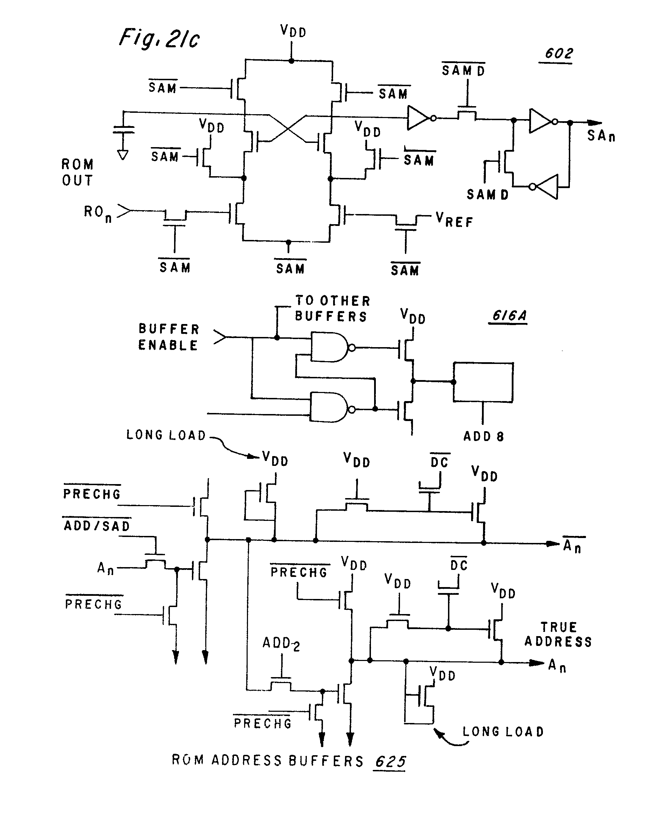

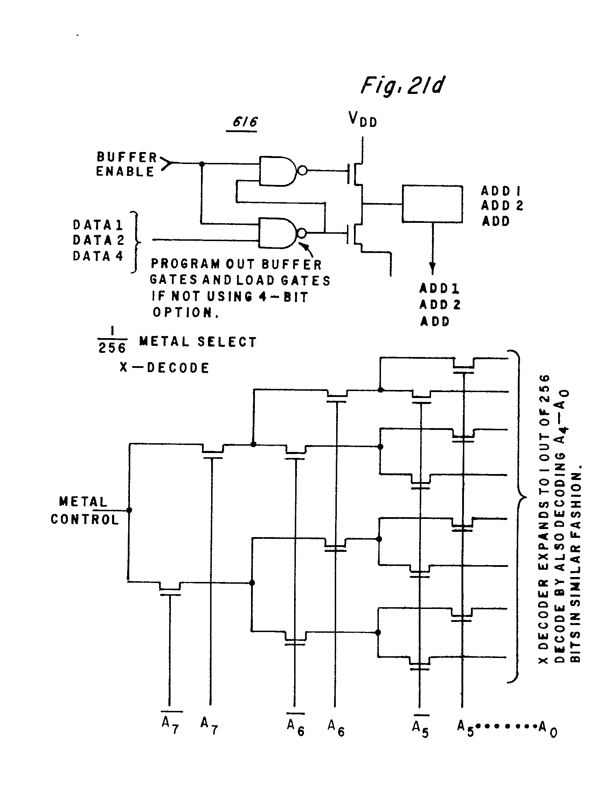

"A" bit latches, an exemplary one of which is shown at 617. The output of register 603 is connected in parallel via a four bit path controlled on $\overline{\text{LOW}}$ and $\overline{\text{HIGH}}$ signals to output buffers 616 for ADD1-ADD4 and 616a for ADD8. Buffers 616 and 616a are shown in detail on FIGURES 21a-21d.

Gates 615 which control the transferring of the parallel outputs from register 603 via in response to $\overline{\text{LOW}}$ and $\overline{\text{HIGH}}$ are preferably mask level programmable gates which are preferably not programmed when this chip is used with the learning aid described herein. Rather the data in register 603 is communicated serially via programmable gate 614 to buffer 616a and pin ADD8. The bits outputted to ADD1-ADD8 in response to a $\overline{\text{HIGH}}$ signal are driven from the third through sixth bits in register 603 rather than the fourth through seventh bits inasmuch as a serial shift will normally be accomplished between a $\overline{\text{LOW}}$ and $\overline{\text{HIGH}}$ signal.

Address register 604 comprises fourteen of the bit latches shown at 617. The address in address 604 on lines $A_0-A_{13}$ is communicated to the ROM X and Y address buffers shown on FIGURE 21a-21d. Register 604 is divided into four sections 601a-601d, the 601d section loading four bits from ADD1-ADD8 in response an $\overline{\text{LA0}}$ signal, the 601c section loading four bits from ADD1-ADD8 in response to an $\overline{\text{LA1}}$ signal and likewise for section 601b in response to an $\overline{\text{LA2}}$ signal. Section 601a is two bits in length and loads the ADD1 and ADD2 bits in response to an $\overline{\text{LA2}}$ signal. The chip select register 605 comprises four B type bit latches of the type shown at 618. The low order bits, CS0 and CS1 are loaded from ADD4 and ADD8 in response to an $\overline{\text{LA3}}$ signal while the high order bits CS2 and CS3 are loaded from ADD1 and ADD2 on an $\overline{\text{LA4}}$ signal. The $\overline{\text{LA0}}$-$\overline{\text{LA4}}$ signals are generated by counter 606. Counter 606 includes a four bit register 619 comprised of four A bit latches 617. The output of the four bit counter 619 is applied to a PLA 620 for decoding

the $\overline{LA1}$-$\overline{LA4}$ signals. The $\overline{LA0}$ signal is generated by a NAND gate 621. As can be seen, the $\overline{LA0}$ signal comes up in response to an LA signal being decoded immediately after a TB signal. The gate 621 looks for a logical one on the LA signal and a logical one on an LTBD (latched transfer bit delay) signal from latch 622. Decoder 607 decodes the $I_0$ and $I_1$ signals applied to pins $I_0$ and $I_1$ for decoding the TB, LA and RB control signals. The signals on the $I_0$ and $I_1$ pins are set out in Table XIII. Latch circuit 622 is responsive to LA, RB and TB for indicating whether the previously received instruction was either an LA or a TB or RB command.

In addition to counting successive LA commands, four bit counter 609 and PLA 620 are used to count successive TB commands. This is done because in this embodiment each TB command transfers one bit from register 603 on pin ADD8 to the synthesizer chip 10 and output register 603 is loaded once each eight successive TB commands. Thus, PLA 620 also generates a TB8 command for initiating a ROM array addressing sequence. The timing sequence of counter 619 and PLA 620 are set forth in Table XIV. Of course, the $\overline{LA1}$-$\overline{LA4}$ signal is only generated responsive to successive LA commands while the TB8 signals only generate in response to successive TB commands.

Add-one circuit 608 increments the number in program counter 604 in response to a TB command or an RB command. Since two successive bytes are used as a new address during an RB cycle, the card address and the present address incremented by one must be used to generate these two bytes. The output of add-one circuit 608 is applied via selector 609 for communicating the results of the incrementation back to the input of counter 604. Selector 609 permits the bits in output register 603 to be communicated to program counter 604 during an RB cycle as controlled by signal BR from array 600. Add-one circuit 608 is also coupled via COUNT

- 57 -

to chip select counter 605 for incrementing the number stored therein whenever a CARRY would occur outside the fourteen bits stored in program counter 604. The output of chip select counter 605 is applied via programmable gate 610 to gate 611. The signal on the CS pin may also be applied to gate 611 or compared with the contents of CS3. Thus, gate 611 can test for either (1) the state of the CS signal, (2) a specific count in counter 605 or (3) a comparison between the state on the chip select and the state of CS3 or (4) some combination of the foregoing, as may be controlled by those knowledgeable in the art according to how programmable links 610 are programmed during chip manufacture. The output of gate 611 is applied via two bit latches of the C type, which are shown at 622. Timing array 600 controls the timing of ROM sequencing during RB and TB sequences. Array 600 includes PLA sections 600a and 600b and counters 623 and 624. Counter 623 is a two bit counter comprising two A type bit latches shown at 617. Counter 63 counts the number of times a ROM access is required to carry out a particular instruction. For instance, a TB command requires one ROM access while an RB command requires three ROM accesses. Counter 624, which comprises four "A" type bit latches of the type shown at 617, counts through the ROM timing sequence for generating various control signals used in accessing ROM array 601. The timing sequence for a TB command is shown in Table XIV which depicts the states in counter 623 and 624 in the signals generated in response thereto. A similar timing sequence for an RB command is shown in Table XVI. The various signals generated by PLA 600a and 600b will now be briefly described. The BR signal controls the transfer of two serial bits from the output register 603 to the program counter 604. The TF signal controls the transfer of eight bits from the sense amp latch 602 (FIGURE 21a-21d) to output register 603 on lines SAO-SA7. INC controls the serial incrementing of the program counter, two bits for each INC signal generated. PC is the precharge signal

- 58 -

for the ROM array and normally exists for approximately ten microseconds. The DC signal discharges the ROM 601 array and preferably lasts for approximately ten microseconds for each DC signal. This particular ROM array uses approximately seventy microseconds to discharge and thus seven DC signals are preferably generated during each addressing sequence. SAM gates the data outputted from the ROM into the sense amp latch 602 while SAD sats the address lines by gating the address from the program counter into the ROM address buffers 625 (FIGURES 21a-21d).

## ALTERNATIVE EMBODIMENTS

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

TABLE I

The following sequence is an example of the learning aid in the Word Zap mode:

| KEY | DISPLAY | SPEAKER |
|---|---|---|
| WORD ZAP | ZAP 1 | TONES- "WORD ZAP LEVEL 1" |
| WORD ZAP | ZAP 2 | TONES- "WORD ZAP LEVEL 2" |
| WORD ZAP | ZAP 3 | TONES- "WORD ZAP LEVEL 3" |
| WORD ZAP | ZAP 3 | TONES- "WORD ZAP LEVEL 1" |
| GO | - | "ZAP THE WORD HAD" |
| | BAD | |
| | DAD | |
| WORD ZAPPER | HAD | ZAP SOUND |
| | HAD | TONES "THAT IS CORRECT, THE WORD IS HAD" |
| | | "NOW ZAP THE WORD TAG" |
| | RAG | |
| WORD ZAPPER | GAG | BUZZ - "MISSED IT THE WORD WAS TAG" |
| | | "CAN YOU ZAP THE WORD FAN?" |
| | PAN | |
| | TAN | |
| WORD ZAPPER | PAN | BUZZ - "THAT'S NOT IT, THE CORRECT WORD IS FAN" |
| | FAN | |

After five groups are given the score is displayed by stars.

"HERE IS YOUR SCORE - TWO CORRECT, THREE INCORRECT"
"PRESS GO TO DO SOME MORE"

Levels of difficulty are increasing speeds. A score will be given in stars and spoken. THere are five sequences of three words each. Words are selected at random from the total word list.

- 60 -

TABLE II

The following sequence is an example of the learning aid
in  the Hear It mode:

| KEY | DISPLAY | SPEAKER |
|---|---|---|
| HEAR IT | HEAR IT | TONE "HEAR IT" |
| T,H,E ENTER | THE | "THIS WORD IS THE"<br>"WHICH WORD?" |
| G,L,A,D ENTER | GLAD | "NOT FOUND"<br>"WHICH WORD" |

TABLE III

The following sequence is an example of the learning aid
in the Read It mode:

| KEY | DISPLAY | SPEAKER |
|---|---|---|
| READ IT | READ IT 1 | READ IT,LEVEL 1 |
| READ IT | READ IT 2 | READ IT, LEVEL 2 |
| READ IT | READ IT 3 | READ IT, LEVEL 3 |
| READ IT | READ IT 1 | READ IT, LEVEL 1 |
| | | "WHICH WORD? PRESS THE LETTERS." |
| | THE | THE |
| | MAN | MAN |
| | HAD | HAD |
| | ON | ON |
| | A | A |
| | ---? | |
| | HAT | HAD |
| | CAT | CAT |
| | BAT | BAT |
| | - | |
| | B | B |
| | BA | A |
| | BAT | T |
| | | "ZZZ (BUZZ SOUND) WRONG, TRY AGAIN." |
| | THE | THE |
| | MAN | MAN |
| | HAD | HAD |
| | ON | ON |
| | A | A |
| | ---? | |
| | HAT | HAT |
| | CAT | CAT |
| | BAT | BAT |

- 62 -

TABLE III Cont'd

| KEY | DISPLAY | SPEAKER |
|---|---|---|
| | C | C |
| | CA | A |
| | CAT | T |
| | CAT | "ZZZ (BUZZ) THAT'S NOT IT, THE CORRECT WORD IS HAT" "WHICH WORD? PRESS THE LETTERS." |
| | WHAT | WHAT |
| | WORD | WORD |
| | RHYMES | RHYMES |
| | WITH | WITH |
| | MAT? | MAT? |
| | FALL | FALL |
| | MAD | MAD |
| | HAT | HAT |
| H | H | H |
| A | HA | A |
| T | HAT | T |
| ENTER | HAT | "VERY GOOD, THE CORRECT WORD IS HAT." |

Activity will continue for a sequence of five, after which the score is given.

| DISPLAY | SPEAKER |
|---|---|
| ***** | "PERFECT SCORE, PRESS GO TO DO SOME MORE" |
| ** | "HERE IS YOUR SCORE, TWO CORRECT, THREE INCORRECT, PRESS GO TO DO SOME MORE." |

There will be ten different lead in sentence which will be used in all levels of difficulty.

- 63 -

TABLE IV

The following sequence is an example of the learning aid in the Picture Read mode:

| KEY | DISPLAY | SPEAKER |
|---|---|---|
| PICTURE READ | PICTURE | "PICTURE READ" |
| GO | 2 | "FIND PICTURE NUMBER 2, SAY IT, PRESS THE LETTERS." |
| REPLAY | 2 | "WHAT WORD GOES HERE? SAY IT, PRESS THE LETTERS. |
| B | B | B |
| E | BE | E |
| L | BEL | L |
| L | BELL | L |
| ENTER | 2 | "WRONG, TRY AGAIN." |
| | | "WHAT WORD GOES HERE? SAY IT, PRESS THE LETTERS." |
| B | B | B |
| E | BE | E |
| L | BEL | L |
| L | BELL | L |
| | BELL | "ZZZZ (BUZZ SOUND) NO, THE ANSWER IS BALL." |
| | 3 | FIND PICTURE NUMBER 4, WHAT WORD GOES HERE? SAY IT, PRESS THE LETTERS." |
| C | C | C |
| A | CA | A |
| T | CAT | "YES, THE ANSWER IS CAT." |

The unit continues in sequence for five pictures, then gives score in stars and verbally, then says "Press go to do some more."

TABLE V

The following sequence is an example of the learning aid in the Letter Stumpers mode:

| KEY | DISPLAY | SPEAKER |
|---|---|---|
| LETTER STUMPERS | STUMPER 1 | "LETTER STUMPER", LEVEL 1 |
| LETTER STUMPERS | STUMPER 2 | "LETTER STUMPER", LEVEL 2 |
| LETTER STUMPERS | STUMPER 3 | "LETTER STUMPER", LEVEL 3 |
| LETTER STUMPERS | STUMPER 1 | "LETTER STUMPER", LEVEL 1 |
| GO | – | |
| C | C | "C" |
| ENTER | c | "C" |
| | | (1 SECOND DELAY UNTIL NEXT GROUP OF LETTERS) |
| | – | CD |
| C | C | C |
| D | CD | D |
| ENTER | CD | |
| | – | CDS |
| C | C | C |
| D | DC | D |
| S | CDS | S |
| | CDS | |
| | – | CDSA |
| C | C | C |
| S | CS | S |
| ERASE | – | |
| C | C | C |
| D | CD | D |
| S | CDS | S |
| S | CDSS | S |
| ENTER | CDSS | "ZZZ" (BUZZ SOUND) YOU GOT THREE CORRECT, PRESS THE LETTERS I SAY." |

- 65 -

TABLE V Cont'd

| KEY | DISPLAY | SPEAKER |
|---|---|---|
|  | — | C |
| C | C |  |
| ENTER | C |  |
|  | — | CD |
| C | C |  |
| D | CD |  |
| ENTER | CD |  |
|  | — | CDS |
| C | C | C |
| D | CD | D |
| S | CDS | S |
| ENTER | CDS |  |
| C | C | C· |
| D | CD | D |
| S | CDS | S |
| A | CDSA | A |
|  |  | CDSAL |
| C | C | C |
| D | CD | D |
| S | CDS | S |

TABLE V cont'd

| KEY | DISPLAY | SPEAKER |
|---|---|---|
| A | CDSA | A |
| L | CDSAL | L |
| ENTER | CDSAL |  |
|  | ***** | "YOU WIN" |

When in "letter stumpers level 1, if the user gets a sequence of 5 correct, the unit says "You win" and shows 5 stars. In letter stumpers level 2, the user must get 9 correct to win (the display will then display 5 stars — display is filled with stars with blanks in between stars).

- 66 -

TABLE V Cont'd

In letter stumpers level 3, the user must repeat the
letters in reverse order and needs 6 to win.  Instructions
will be "Press the letters I say, backwards."

TABLE VI

The following sequence is an example of the learning aid in the Word Maker mode:

| KEY | DISPLAY | SPEAKER |
|---|---|---|
| WORD MAKER | WORD 1 | "WORD MAKER, LEVEL 1" |
| WORD MAKER | WORD 2 | "WORD MAKER, LEVEL 2" |
| WORD MAKER | WORD 3 | "WORD MAKER, LEVEL 3" |
| WORD MAKER | WORD 1 | "WORD MAKER, LEVEL 1" |
| GO | _AT | "ADD B TO AT. WHICH WORD DOES IT MAKE? SAY IT. PRESS THE LETTERS." |
| | _ | |
| REPLAY | _AT | "ADD B TO AT. WHAT WORD DOES IT MAKE? SAY IT, PRESS THE LETTERS |
| | _ | |
| B | B | |
| A | BA | |
| T | BAT | |
| ENTER | BAT | "YES, THAT'S CORRECT. THE WORD IS BAT. "ADD C TO AN. WHAT WORD DOES IT MAKE? SAY IT, PRESS THE LETTERS." |
| | _ | |
| S | S | |
| A | SA | |
| N | SAN | |
| | _AN | "ADD C TO AN. WHAT WORD DOES IT MAKE? SAY IT, PRESS THE LETTERS." |
| | _ | |
| Z | Z | |
| A | ZA | |
| N | ZAN | |
| ENTER | ZAN | "ZZZ (BUZZ SOUND) WRONG, THE ANSWER IS CAN". |

- 68 -

TABLE VI cont'd

Activity continues for a sequence of five, at the end of
sequence score is given.

| DISPLAY | SPEAKER |
|---|---|
| ***** | "PERFECT SCORE, PRESS GO TO DO SOME MORE." |
| *** | "HERE IS YOUR SCORE, THREE CORRECT, TWO INCORRECT. PRESS GO TO DO SOME MORE." |

- 69 -

TABLE VII

The synthesizer 10 includes interpolation logics to accomplish a nearly linear interpolation of all twelve speech parameters at eight points within each frame, that is, once each 2.5 msec. The parameters are interpolated one at a time as selected by the parameter counter. The interpolation logics calculate a new value of a parameter from its present value (i.e. the value currently stored in the K-stack, pitch register or E-10 loop) and the target value stored in encoded form in RAM 203 (and decoded by ROM 202). The value computed by each interpolation is listed below.

Where $P_i$ is the present value of the parameter,

$P_{i+1}$ is the new parameter value

$P_t$ is the target value

$N_i$ is an integer determined by the interpolation counter

The values of $N_i$ for specific interpolation counts and the values $\dfrac{P_i - P_o}{P_t - P_o}$ ($P_O$ is initial parameter value) are as follows:

| INTERPOLATION COUNT | $N_i$ | $\dfrac{P_i - P_o}{P_t - P_o}$ |
| --- | --- | --- |
| 1 | 8 | 0.125 |
| 2 | 8 | 0.234 |
| 3 | 8 | 0.330 |
| 4 | 4 | 0.498 |
| 5 | 4 | 0.623 |
| 6 | 2 | 0.717 |
| 7 | 2 | 0.859 |
| O | 1 | 1.000 |

- 70 -

TABLE VIII

"HELP"

```
0000
0100000201001101111011010111
01110000t
11011001001000010100100010100011011111001010100101010
110110011
11101100111
112110100001010111111010101010101011111001201101101
11011010220011101211104001100114011001001041110111
11211001101100010101001101001111101101010100001a
12111001101
12101001200110104011110001101111011001011110110
10011000001
10010111011
100001101111
00100111000001010001011101110011110012101100101111011
0000
0000
0000
011100000101000101111101111000
0111000002010001010111110110110
0101000001
001100002010011101111101001100
001000002001001011111010101
0000
1111
```

ENERGY PITCH REPEAT K₁ K₂ K₃ K₄ K₅ K₆ K₇ K₈ K₉ K₁₀

HEL

P

- 71 -

TABLE IX · DECODED PARAMETERS

| CODE | E | P | KI | K2 | K3 | K4 | K5 | K6 | K7 | K8 | K9 | K10 |
|---|---|---|---|---|---|---|---|---|---|---|---|---|
| 00 | 000 | 000 | 20B | 288 | 269 | 2DE | 2C2 | 33F | 302 | 333 | 307 | 342 |
| 01 | 001 | 029 | 20E | 29B | 283 | 304 | 2E5 | 368 | 326 | 390 | 349 | 37B |
| 02 | 002 | 02B | 211 | 2B1 | 2A3 | 32F | 30B | 393 | 34C | 3F6 | 392 | 3B7 |
| 03 | 003 | 02D | 216 | 2C8 | 2C9 | 35D | 336 | 3BF | 374 | 05C | 3ED | 3F6 |
| 04 | 004 | 02F | 21B | 2E2 | 2F4 | 38E | 364 | 3EC | 39F | 0BB | 030 | 035 |
| 05 | 006 | 031 | 222 | 2FE | 326 | 3C2 | 395 | 01A | 3CB | 10D | 07E | 073 |
| 06 | 008 | 033 | 22B | 31D | 35E | 3F7 | 3C8 | 047 | 3F8 | 150 | 0C6 | 0AD |
| 07 | 00B | 035 | 235 | 33D | 39A | 02C | 3FD | 073 | 024 | 183 | 105 | 0E3 |
| 08 | 010 | 037 | 242 | 35F | 3D9 | 061 | 031 | 09E | 051 | | | |
| 09 | 017 | 03A | 251 | 384 | 019 | 093 | 065 | 0C6 | 07C | | | |
| 0A | 021 | 03C | 264 | 3A9 | 059 | 0C2 | 096 | 0EB | 0A5 | | | |
| 0B | 02F | 03F | 27B | 3CF | 095 | 0EE | 0C4 | 10E | 0CC | | | |
| 0C | 03F | 042 | 296 | 3F6 | 0CE | 116 | 0EF | 12D | 0F0 | | | |
| 0D | 055 | 046 | 2B5 | 01D | 101 | 139 | 116 | 14A | 112 | | | |
| 0E | 072 | 049 | 2D9 | 044 | 12E | 158 | 139 | 163 | 130 | | | |
| 0F | 000 | 04C | 303 | 06A | 155 | 173 | 158 | 179 | 14C | | | |
| 10 | | 04F | 331 | 08F | | | | | | | | |
| 11 | | 053 | 364 | 0B2 | | | | | | | | |
| 12 | | 057 | 39A | 0D4 | | | | | | | | |
| 13 | | 05A | 3D3 | 0F3 | | | | | | | | |
| 14 | | 05E | 00D | 110 | | | | | | | | |
| 15 | | 063 | 046 | 12B | | | | | | | | |
| 16 | | 067 | 07E | 144 | | | | | | | | |
| 17 | | 06B | 0B3 | 15A | | | | | | | | |
| 18 | | 070 | 0E4 | 16E | | | | | | | | |
| 19 | | 076 | 110 | 180 | | | | | | | | |
| 1A | | 07B | 137 | 190 | | | | | | | | |
| 1B | | 081 | 159 | 19E | | | | | | | | |
| 1C | | 086 | 176 | 1AB | | | | | | | | |
| 1D | | 08C | 18F | 1B6 | | | | | | | | |
| 1E | | 093 | 1A4 | 1C0 | | | | | | | | |
| 1F | | 099 | 1B5 | 1FA | | | | | | | | |

## TABLE X

### DATA OUTPUTTED FROM K-STACK 302 TO RECODING LOGIC 301 BY TIME PERIODS

TIME PERIODS

K-STACK OUTPUT

| BIT LINE | T8 | T9 | T10 | T11 | T12 | T13 | T14 | T15 | T16 | T17 | T18 | T19 | T20 | T21 | T22 | T23 | T24 | T25 | T26 | T27 |
|---|---|---|---|---|---|---|---|---|---|---|---|---|---|---|---|---|---|---|---|---|
| LSB 32-1 | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ | $K_4$ | $K_3$ |
| 32-2 | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ | $K_4$ | $K_3$ |
| 32-3 | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ | $K_4$ | $K_3$ |
| 32-4 | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ | $K_4$ | $K_3$ |
| 32-5 | $K_3$ | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ | $K_4$ |
| 32-6 | $K_3$ | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ | $K_4$ |
| 32-7 | $K_4$ | $K_3$ | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ |
| 32-8 | $K_4$ | $K_3$ | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ | $K_5$ |
| 32-9 | $K_5$ | $K_4$ | $K_3$ | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ |
| MSB 32-10 | $K_5$ | $K_4$ | $K_3$ | $K_2$ | $K_1$ | $\Lambda$ | $K_9$ | $K_8$ | $K_7$ | $K_6$ | $K_5$ | $K_4$ | $K_3$ | $K_2$ | $K_1$ | $K_{10}$ | $K_9$ | $K_8$ | $K_7$ | $K_6$ |

TABLE XI

CHIRP ROM CONTENTS

| ADDRESS | CHIRP FUNCTION VALUE | STORED VALUE (COMPLEMENTED) |
|---|---|---|
| 00 | 00 | FF |
| 01 | 2B | D4 |
| 02 | D4 | 2B |
| 03 | 33 | CC |
| 04 | B3 | 4C |
| 05 | 12 | ED |
| 06 | 25 | DA |
| 07 | 14 | EB |
| 08 | 02 | FD |
| 09 | E2 | 1D |
| 10 | C6 | 39 |
| 11 | 03 | FC |
| 12 | 60 | 9F |
| 13 | 5B | A4 |
| 14 | 05 | FA |
| 15 | 0F | F0 |
| 16 | 26 | D9 |
| 17 | FC | 03 |
| 18 | A6 | 59 |
| 19 | A5 | 5A |
| 20 | D6 | 29 |
| 21 | DD | 22 |
| 22 | DD | 22 |
| 23 | FD | 02 |
| 24 | 25 | DA |
| 25 | 2B | D4 |
| 26 | 23 | DC |
| 27 | 22 | DD |
| 28 | 0F | F0 |
| 29 | FF | 00 |
| 30 | F8 | 07 |
| 31 | EF | 10 |
| 32 | ED | 12 |
| 33 | EF | 10 |
| 34 | F7 | 08 |
| 35 | F7 | 08 |
| 36 | FA | 05 |
| 37 | 01 | FE |
| 38 | 04 | FB |
| 39 | 03 | FC |
| 40 | 01 | FE |

Table XII

CD2705    ASSEMBLER FOR   270    CHIP VERS 00.02      02/07/80 (80 038) 15:15:19
                                                       ROM PAGE  0 PAGE 0002
       STMT  PC   CODE PLOC                                     <DEST >
       0001                               TITLE     CD2705
       0002                               OPTION    XREF
       0003 *        RAM MAP
       0004 * REGISTER WORD BIT       CONTENTS
       0005 *    0      0-8   0-1     MSD OF DISPLAY BUFFER
       0006 *           9             SELF-TEST
       0007 *           10            DEBOUNCE
       0008 *           12            DEBOUNCE
       0009 *           13            R-LINE POINTER
       0010 *           14            LSD OF KEY CODE
       0011 *           15            MSD OF KEY CODE
       0012 *    1      0-8           LSD OF DISPLAY BUFFER
       0013 *           9             FLAG FOR RIGHT OR WRONG
       0014 *                         AND FLAG FOR PUTIN1
       0015 *           10-13         ROM ADDRESS SAVE AREA
       0016 *           14            ROM ADDRESS POINTER FOR
       0017 *                         SPEAK AND LINK
       0018 *           15            LINK EDIT POINTER FOR
       0019 *                         SPEAK AND LINK
       0020 *    2      0-8   0-1     MSD OF PLA FOR COMPARE BUFFER
       0021 *           9-10          DELAY COUNTER
       0022 *           12            SELF TEST(JAM HERE)
       0023 *           14            K-LINES
       0024 *           15            LEVEL INDICATOR
       0025 *    3      0-8           LSD OF PLA FOR COMPARE BUFFER
       0026 *           9             SPK+DISP FLAG
       0027 *           10            LOOP COUNTER FOR LOADRESS
       0028 *           11            TEST TALK AND LOADRESS FLAG
       0029 *           12            DELAY FLAGS
       0030 *           13            MSD DECIMAL NUMBER FOR PICTURE
       0031 *                         READ
       0032 *           14            LSD DECIMAL NUMBER FOR PICTURE
       0033 *                         READ
       0034 *           15            MSD HEX NUMBER FOR PICTURE READ
       0035 *    4      0             ZAPSHIFT FLAG
       0036 *           2-13          STORAGE FOR THREE WORDS USED
       0037 *                         IN WORD ZAP, READIT, AND WORDMAKER
       0038 *           14            LSD OF LIMIT FOR RANDOM NUMBER
       0039 *           15            MSD OF LIMIT FOR RANDOM NUMBER
       0040 *    5      0-2           FLAGS TO DISTINGUISH BETWEEN
       0041 *                         READIT AND WORDMAKER
       0042 *           3             GARBAGE
       0043 *           5-9           RANDOM # GENERATOR AND TIME
       0044 *                         OUT COUNTER
       0045 *           10            SAVE LSD OF 1ST RANDOM # OF ZAP
       0046 *           10-13         SAVE AREA FOR READIT AND
       0047 *                         WORDMAKER
       0048 *           14            LSD OF RANDOM #
       0049 *           15            MSD OF RANDOM #
       0050 *    6-7                  ADDRESSES OF LINK FOR PHRASES
       0051 *    8      0             RETN$BCH FLAG
       0052 *           1             SPELLING POINTER FOR OUTADDR
       0053 *           2             FLAG FOR WHERE TO GO AFTER
       0054 *                         OUTADDR
       0055 *           3      1      FLAG FOR WORD ZAP
       0056 *                  2      REPLAY FLAG
       0057 *                  3      FLAG FOR TABLE A OR B IN READIT

- 75 -

Table XII cont'd

```
CD2705     ASSEMBLER FOR   270    CHIP VERS 00. 02      02/07/80 (80 038) 15 15·19
                                                     ROM PAGE  0 PAGE 0003
     STMT   PC  CODE PLOC                                            <DEST >
     0058 *          4            NUMBER DONE
     0059 *          5            NUMBER WRONG
     0060 *          6            NUMBER RIGHT
     0061 *          7            MODE FLAG(0=WORDMAKER, 1=READ IT,
     0062 *                       2=PICTURE, 3=LETTER STUMPERS,
     0063 *                       4=HEAR IT, 8=WORD ZAP)
     0064 *          8    0       GO FLAG(SET=GO HAS NOT BEEN PUSHED)
     0065 *               1       ENTER FLAG(SET=ENTER HAS BEEN PUSHED)
     0066 *               2       REPEAT FLAG
     0067 *               3       MODULE FLAG
     0068 *          9            DISPLAY POINTER
     0069 *          10-13        SAVE AREA FOR ANSWER
     0070 *          14           LOOP COUNTER AND ZAP CORRECT
     0071 *                       ANSWER INDICATOR
     0072 *          15           NUMBER OF WORDS FLASHED
     0073 *                 KEYBOARD SCAN / DISPLAY ROUTINE
     0074 *
     0075 *           THIS ROUTINE DISPLAYS THE CONTENTS OF 'DISPLAY BUFFER' AND
     0076 *           CHECKS FOR A KEYPRESS.
     0077 *
     0078 0000 009A 0001   DISP/KB   LDX      5
     0079 0001 0041 0002             TCY      8
     0080 0003 0060 0003             TCMIY    0        RESET TIMEOUT COUNTER
     0081 0007 0060 0004             TCMIY    0
     0082 000F 0043 0005   DISP/KEY  TCY      12       RESET R12 TO ENABLE DISPLAY
     0083 001F 0036 0006             RSTR
     0084 003F 0006 0007             CLA
     0085 007F 0043 0008   DSP1      TCY      12
     0086 007E 0090 0009             LDX      0
     0087 007D 002D 0010             TAMIYC            STORE DEBOUNCE COUNTER; SET
     0088 007B 0060 0011             TCMIY    0        RESET R-LINE POINTER
     0089 0077 004F 0012             TCY      15
     0090 006F 000D 0013             SETR              R-15, TURN ON FILAMENT
     0091 005F 0040 0014             TCY      0
     0092 003E 0098 0015   DSP2      LDX      1        *
     0093 007C 0029 0016             TMA               *
     0094 0079 00B0 0017             TDO               * LOAD SEGMENT PLA
     0095 0073 0085 0018             BL       TIMEUP   * INCREMENT RANDOM N< 1315>E
          0067 0103 0019
     0096 *                              * TIMEOUT COUNTER
     0097 004F 004B 0020   DISP/KB1  TCY      13
     0098 001E 0032 0021             IMAC              INCREMENT R-LINE POINTER
     0099 003D 002F 0022             TAM
     0100 007A 002B 0023             TAY
     0101 0075 0004 0024             DYN
     0102 006B 0036 0025             RSTR              RESET LAST R-LINE
     0103 0057 004F 0026             TCY      15
     0104 002E 000D 0027             SETR              TURN ON FILAMENT
     0105 005C 002B 0028             TAY
     0106 0038 0059 0029             YNEC     9        SCAN COMPLETE?
     0107 0070 013E 0030             BRANCH   DSP2     NO                < 0092>
     0108 0061 004F 0031             TCY      15       YES
     0109 0043 0036 0032             RSTR              RESET FILAMENT
     0110 0006 0090 0033             LDX      0
     0111 000D 0045 0034             TCY      10
     0112 001B 0032 0035             IMAC              INCREMENT DEBOUNCE COUNTER
     0113 0037 015D 0036             BRANCH   DSP3                       < 0115>
```

Table XII cont'd

```
CD2705     ASSEMBLER FOR  270   CHIP VERS 00 02       02/07/80 (80 038) 15 15:19
                                                      ROM PAGE  0 PAGE 0004
     STMT  PC   CODE PLOC                                                <DEST >
     0114 006E 002F 0037            TAM
     0115 005D 0043 0038   DSP3     TCY      12
     0116 003A 0032 0039            IMAC
     0117 0074 0049 0040            TCY      9
     0118 0069 0021 0041            TBIT     2
     0119 0053 0147 0042            BRANCH   TDISPINC                   < 0144>
     0120 0026 00E5 0043            ALEC     10
     0121 004C 017F 0044            BRANCH   DSP1       CONTINUE DISPLAY IF<< 0085>
     0122 0018 009C 0045            LDX      3
     0123 0031 0043 0046            TCY      12
     0124 0062 0022 0047            TBIT     1
     0125 0045 0117 0048            BRANCH   DISLP+1.                   < 0138>
     0126 000A 0087 0049            LDP      14
     0127 0015 004D 0050            TCY      11
     0128 002B 0020 0051            TBIT     0
     0129 0056 0110 0052            BRANCH   SPKREG+1                   < 1918>
          ******** SPKREG+1 IS NOT ON SAME ROM PAGE
     0130 002C 0080 0053            LDP      0
     0131 0058 000E 0054            KNEZ
     0132 0030 015E 0055            BRANCH   DSP5                       < 0139>
     0133 0060 0043 0056   DSP4     TCY      12
     0134 0041 009C 0057            LDX      3
     0135 0002 0020 0058            TBIT     0
     0136 0005 0117 0059            BRANCH   DISLP+1.                   < 0138>
     0137 000B 017F 0060            BRANCH   DSP1                       < 0085>
     0138 0017 008A 0061   DISLP+1. BL       DISLP+1                    < 0797>
          002F 014E 0062
     0139 005E 0045 0063   DSP5     TCY      10
     0140 003C 0090 0064            LDX      0
     0141 0078 0023 0065            TBIT     3
     0142 0071 0132 0066            BRANCH   KEYDOWN                    < 0155>
     0143 0063 0160 0067            BRANCH   DSP4                       < 0133>
     0144 0047 00E0 0068   TDISPINC ALEC     0
     0145 000E 017F 0069            BRANCH   DSP1                       < 0085>
     0146 001D 008B 0070            BL       DISPINC                    < 1749>
          003B 0130 0071
     0147 *
     0148 *
     0149 *
     0150 0076 002E 0072   KD3      TAMZA               ADD 5 TO KEY
     0151 006D 007A 0073            ACACC    5          CODE EACH TIME
     0152 005B 0047 0074            TCY      14         R-LINE POINTER IS DECREMENTE
     0153 0036 0085 0075            CALLL    ADDCARRY                   < 1334>
          006C 01E7 0076
     0154 0059 014B 0077            BRANCH   KD2                        < 0177>
     0155 0032 0060 0078   KEYDOWN  TCMIY    0          RESET DEBOUNCE COUNTER
     0156 0064 0094 0079            LDX      2          PUT K LINES IN 2 14
     0157 0049 0047 0080            TCY      14
     0158 0012 000A 0081            TKM
     0159 0025 0033 0082            MNEZ                DOUBLE CHECK KEY DOWN
     0160 004A 0152 0083            BRANCH   KD1                        < 0162>
     0161 0014 0085 0084            BL       CAR1       KEY NOT DOWN    < 1348>
          0029 0106 0085
     0162 0052 0090 0086   KD1      LDX      0          CLEAR KEY CODE
     0163 0024 0060 0087            TCMIY    0
     0164 0048 0060 0088            TCMIY    0
     0165 0010 004B 0089            TCY      13
```

Table XII cont'd

```
CD2705     ASSEMBLER FOR  270   CHIP VERS 00. 02       02/07/80 (80 038) 15. 15: 19
                                                            ROM PAGE  0 PAGE 0005
   STMT  PC   CODE PLOC                                                 <DEST >
   0166 0021 002A 0090              TMY
   0167 0042 0036 0091              RSTR            RESET PRESENT R-LINE
   0168 0004 004B 0092              TCY      13
   0169 0009 0006 0093              CLA
   0170 0013 007E 0094              ACACC    7      PUT 7 IN ACC
   0171 0027 000E 0095              KNEZ            SEE IF KEY IS ON VSS
   0172 004E 014B 0096              BRANCH   KD2     VSS                 < 0177>
   0173 001C 0009 0097              MNEA
   0174 0039 0165 0098              BRANCH   KD2A                        < 0176>
   0175 0072 0066 0099              TCMIY    6      RLINE=7 THEN RLINE=6
   0176 0065 0029 0100    KD2A      TMA
   0177 004B 002F 0101    KD2       TAM            * STORE 7 IF K=VSS
   0178 0016 004B 0102              TCY      13
   0179 002D 0007 0103              DMAN
   0180 005A 0176 0104              BRANCH   KD3                         < 0150>
   0181 0034 0094 0105    KLINES    LDX      2      ROUTINE TO CAL VALUE OF K
   0182 0068 0047 0106              TCY      14            **
   0183 0051 0029 0107              TMA                    **
   0184 0022 00E4 0108              ALEC     2
   0185 0044 0166 0109              BRANCH   ARND+5                      < 0193>
   0186 0008 007F 0110              ACACC    15
   0187 0011 00EC 0111              ALEC     3
   0188 0023 0166 0112              BRANCH   ARND+5                      < 0193>
   0189 0046 007B 0113              ACACC    13
   0190 000C 00E2 0114              ALEC     4
   0191 0019 0166 0115              BRANCH   ARND+5                      < 0193>
   0192 0033 0075 0116              ACACC    10
   0193 0066 007F 0117    ARND+5    ACACC    15            **
   0194 004D 0090 0118              LDX      0             **
   0195 001A 0085 0119              CALLL    ADDCARRY                    < 1334>
        0035 01E7 0120
   0196 006A 0047 0121              TCY      14
   0197 0055 0029 0122              TMA
   0198 002A 004F 0123              TCY      15
   0199 0054 0084 0124              LDP      2
   0200 0028 0022 0125              TBIT     1
   0201 0050 0100 0126              BRANCH   MSD=2                       < 0327>
        ******** MSD=2    IS NOT ON SAME ROM PAGE
        ******** LAST ERROR AT  0129
   0202 0020 0088 0127              BL       MSD=1ORO                    < 0246>
        0040 0118 0128
```

- 78 -

Table XII cont'd

```
CD2705     ASSEMBLER FOR  270   CHIP VERS 00 02        02/07/80 (80 038) 15:15:19
                                                            ROM PAGE  1 PAGE 0006
   STMT  PC   CODE PLOC                                             <DEST >
   0203                            ORGPG       1
   0204 0000 0021 0001  RETN*BC1 TBIT         2
   0205 0001 016B 0002           BRANCH      DISX                          < 0225>
   0206 0003 008D 0003           CALLL       RIGHT2    PUT LEVEL IN ACC    < 1459>
        0007 01E7 0004
   0207 000F 0091 0005  INCR.8-9 LDX          8
   0208 001F 0049 0006           TCY          9
   0209 003F 00E8 0007           ALEC         1        WHAT LEVEL ARE YOU IN 0,1
   0210 007F 017B 0008           BRANCH      INCR.Y    OR 2                < 0213>
   0211 007E 0007 0009           DMAN                  DECREMENT DISPLAY POINTER
   0212 007D 0177 0010           BRANCH      STOREY                        < 0214>
   0213 007B 0032 0011  INCR.Y   IMAC                  INCREMENT DISPLAY POINTER
   0214 0077 002F 0012  STOREY   TAM                   IN LEVELS 0 AND 1
   0215 006F 00BF 0013           RETN
   0216 005F 008D 0014           BL          CONSON1                       < 1509>
        003E 011D 0015
   0217 007C 004E 0016  DSP9     TCY          7
   0218 0079 0021 0017           TBIT         2        MODE = HEARIT?
   0219 0073 017A 0018           BRANCH      DIS                           < 0224>
   0220 0067 0085 0019           LDP         10
   0221 004F 002A 0020           TMY
   0222 001E 0054 0021           YNEC         2
   0223 003D 0148 0022           BRANCH      SAYTHE#                       < 1413>
        ******** SAYTHE#  IS NOT ON SAME ROM PAGE
        ******** LAST ERROR AT   0201
   0224 007A 0080 0023  DIS      BL          DISP/KB                       < 0078>
        0075 0100 0024
   0225 006B 008E 0025  DISX     LDP          7
   0226 0057 0022 0026           TBIT         1
   0227 002E 012A 0027           BRANCH      PRESSGO                       < 1078>
        ******** PRESSGO  IS NOT ON SAME ROM PAGE
        ******** LAST ERROR AT   0223
   0228 005C 0084 0028           LDP          2
   0229 0038 0020 0029           TBIT         0
   0230 0070 0135 0030           BRANCH      REPLAY4                       < 0447>
        ******** REPLAY4  IS NOT ON SAME ROM PAGE
        ******** LAST ERROR AT   0227
   0231 0061 0177 0031           BRANCH      DISP                          < 0338>
        ******** DISP     IS NOT ON SAME ROM PAGE
        ******** LAST ERROR AT   0230
   0232 0043 0040 0032  REPLAY2  TCY          0
   0233 0006 0064 0033           TCMIY        2
   0234 000D 008F 0034           LDP         15
   0235 001B 0002 0035           YNEA
   0236 0037 011C 0036           BRANCH      PICT3     MODE=PICTURE READ   < 2074>
        ******** PICT3    IS NOT ON SAME ROM PAGE
        ******** LAST ERROR AT   0231
   0237 006E 0044 0037           TCY          2        MODE=READ IT
   0238 005D 0062 0038           TCMIY        4
   0239 003A 0087 0039  SPEAK2   BL          SPEAK                         < 1844>
        0074 013E 0040
   0240 0069 0085 0041  REPLAY3  CALLL       FIVETO1                       < 1403>
        0053 01A1 0042
   0241 0026 0081 0043           BL          WORDMAK8                      < 1091>
        004C 017E 0044
   0242 *
   0243.*       THE FOLLOWING ROUTINE DIRECTS THE PROGRAM FLOW ACCORDING TO THE
```

- 79 -

Table XII cont'd

```
CD2705     ASSEMBLER FOR   270    CHIP VERS 00.02      02/07/80 (80 038) 15 15.19
                                                       ROM PAGE  1 PAGE 0007
     STMT  PC   CODE PLOC                                            <DEST >
     0244 *          KEY PRESSED.
     0245 *
     0246 0018 0020 0045  MSD=10R0 TBIT      0
     0247 0031 0112 0046           BRANCH    MSD=1                    < 0279>
     0248 0062 009C 0047  LETTER   LDX       3         LETTER KEYS
     0249 0045 0043 0048           TCY       12
     0250 000A 0020 0049           TBIT      0
     0251 0015 017A 0050           BRANCH    DIS                      < 0224>
     0252 002B 0091 0051           LDX       8
     0253 0056 004E 0052           TCY       7
     0254 002C 0023 0053           TBIT      3         WHAT MODE ARE YOU IN?
     0255 0058 017A 0054           BRANCH    DIS       A LETTER IS UNACCEPT< 0224>
     0256 *                        IN ZAP IT
     0257 0030 0041 0055           TCY       8
     0258 0060 0020 0056           TBIT      0
     0259 0041 017A 0057           BRANCH    DIS       HAS GO BEEN PUSHED? < 0224>
     0260 0002 0022 0058           TBIT      1
     0261 0005 017A 0059           BRANCH    DIS                      < 0224>
     0262 000B 0049 0060  LETTER1  TCY       9
     0263 0017 0033 0061           MNEZ
     0264 002F 017B 0062           BRANCH    LETTER2                  < 0266>
     0265 005E 008B 0063           CALLL     BLANKDIS                 < 1739>
          003C 0198 0064
     0266 0078 0098 0065  LETTER2  LDX       1         PUT LSD IN DISPLAY BUFFER
     0267 0071 008D 0066           CALLL     RCOMX8                   < 1538>
          0063 019C 0067
     0268 0047 0059 0068           YNEC      9
     0269 000E 013B 0069           BRANCH    FILLBUFF                 < 0271>
     0270 001D 017A 0070           BRANCH    DIS                      < 0224>
     0271 003B 002F 0071  FILLBUFF TAM
     0272 0076 0090 0072           LDX       0
     0273 006D 004F 0073           TCY       15        Y = 15 FOR THE MSD
     0274 005B 0029 0074           TMA
     0275 0036 008D 0075           CALLL     RCOMX8                   < 1538>
          006C 019C 0076
     0276 0059 002E 0077           TAMZA
     0277 0032 018F 0078           CALL      INCR.8-9                 < 0207>
     0278 0064 0085 0079           BL        SAYLETTR                 < 1381>
          0049 0147 0080
     0279 0012 00E5 0081  MSD=1    ALEC      10        KEY = A LETTER?
     0280 0025 0162 0082           BRANCH    LETTER                   < 0248>
     0281 004A 008E 0083           LDP       7
     0282 0014 00ED 0084           ALEC      11
     0283 0029 0134 0085           BRANCH    MODSELEC  KEY = MODULE SELECT?< 1061>
     ******** MODSELEC IS NOT ON SAME ROM PAGE
     ******** LAST ERROR AT   0236
     0284 0052 0084 0086           LDP       2
     0285 0024 00EB 0087           ALEC      13
     0286 0048 013B 0088           BRANCH    ERAORENT  KEY=ERASE? OR KEY=EN< 0398>
     ******** ERAORENT IS NOT ON SAME ROM PAGE
     ******** LAST ERROR AT   0283
     0287 0010 0C85 0089           LDP       10        PUT BACK CURRENT PAGE
     0288 0021 00E7 0090           ALEC      14
     0289 0042 0161 0091           BRANCH    OFF       KEY = OFF?           < 1346>
     ******** OFF      IS NOT ON SAME ROM PAGE
     ******** LAST ERROR AT   0286
     0290 0004 0049 0092           TCY       9         IN SELF-TEST?
```

Table XII cont'd

```
CD2705    ASSEMBLER FOR  270   CHIP VERS 00.02        02/07/80 (80 038) 15 15.19
                                                      ROM PAGE  1 PAGE 0008
     STMT  PC  CODE PLOC                                              <DEST >
     0291 0009 008B 0093            LDP       13
     0292 0013 0022 0094            TBIT      1
     0293 0027 011B 0095            BRANCH    BLANKDIS  YES, THEN BRANCH TO < 1739>S
          ******** BLANKDIS IS NOT ON SAME ROM PAGE
          ******** LAST ERROR AT  0289
     0294 004E 0084 0096            CALLL     FILLOOP          .         < 0355>
          001C 01E1 0097
     0295 0039 008B 0098 GOPRESS    CALLL     BLANKDIS                   < 1739>
          0072 019B 0099
     0296 0065 009C 0100 RBIT3-12   LDX       3
     0297 004B 0043 0101            TCY       12
     0298 0016 0060 0102            TCMIY     0
     0299 002D 00BF 0103            RETN
     0300 005A 008A 0104            CALLL     RATE2     NO, THEN--       < 0773>
          0034 013B 0105                       .
     0301 0068 008E 0106            CALLL     ZEROROM1           .       < 1015>
          0051 0195 0107
     0302 0022 008D 0108            CALLL     LSTUMPER                   < 1491>
          0044 01AB 0109
     0303 0008 00A4 0110            RBIT      0                             .
     0304 0011 00A6 0111            RBIT      1
     0305 0023 00A5 0112            RBIT      2
     0306 *                     THEN GO HAS BEEN PRESSED
     0307 *
     0308 *      DECIDE WHICH MODULE YOU ARE IN AND PUT
     0309 *        IN THE ROM ADDRESS 1 13
     0310 0046 002A 0113 ·         TMY
     0311 000C 0098 0114           LDX       1
     0312 0019 0051 0115           YNEC      8
     0313 0033 011A 0116           BRANCH    RADDO                      < 0316>
     0314 0066 004B 0117 RADDB  .  TCY       13
     0315 004D 0061 0118           TCMIY     8
     0316 001A 0045 0119 RADDO     TCY       10
     0317 0035 008C 0120           LDP       3         DEPENDING ON WHAT MODE
     0318 006A 00E0 0121           ALEC      0         YOU ARE IN YOU BRANCH TO
     0319 0055 0165 0122           BRANCH    WORDMAKE  DIFFERENT PLACES  < 0553>
          ******** WORDMAKE IS NOT ON SAME ROM PAGE
          ******** LAST ERROR AT  0293
     0320 002A 00EB 0123           ALEC      1
     0321 0054 0146 0124           BRANCH    READIT                     < 0566>
          ******** READIT  IS NOT ON SAME ROM PAGE
          ******** LAST ERROR AT  0319                   .
     0322 0028 0100 0125           BRANCH    WHICHONE                   < 0456>
          ******** WHICHONE IS NOT ON SAME ROM PAGE
          ******** LAST ERROR AT  0321
     0323 0050 0060 0126 ZAPIT     TCMIY     0
     0324 0020 01FB 0127           CALL      INCR.Y                     < 0213>
     0325 0040 0139 0128           BRANCH    GOPRESS   MODE AND GO FLAG  < 0295>
```

- 81 -

Table XII cont'd

CD2705     ASSEMBLER FOR   270    CHIP VERS 00. 02        02/07/80 (80 038) 15·15·19
                                                              ROM PAGE  2 PAGE 0009
  STMT  PC  CODE PLOC                                             <DEST >
  0326                            ORGPG      2
  0327 0060 00E0 0001  MSD=2      ALEC       0
  0328 0001 013B 0002             BRANCH     ERAORENT                    < 0398>
  0329 0003 0091 0003             LDX        8
  0330 0007 004E 0004             TCY        7
  0331 000F 0077 0005             ACACC      14
  0332 001F 015F 0006             BRANCH     MODE                        < 0339>
  0333 003F 008A 0007  ZAPO       LDP        5
  0334 007F 0023 0008             TBIT       3
  0335 007E 014D 0009             BRANCH     ZAPKEY                      < 0817>
        ******** ZAPKEY   IS NOT ON SAME ROM PAGE
        ******** LAST ERROR AT    0322
  0336 007D 00E0 0010  DISP.      ALEC       0
  0337 007B 0135 0011             BRANCH     REPLAY4                     < 0447>
  0338 0077 0080 0012  DISP       BL         DISP/KB                     < 0078>
       006F 0100 0013
  0339 005F 00E2 0014  MODE       ALEC       4      SUBTRACT 2 FROM KEY CODE
  0340 003E 0179 0015             BRANCH     MODES1                      < 0342>
  0341 007C 007C 0016             ACACC      3
  0342 0079 0009 0017  MODES1     MNEA
  0343 0073 013D 0018             BRANCH     NEWMODE    NEW MODE WAS PUSHED < 0347>
  0344 0067 0041 0019  SAMEMODE   TCY        8
  0345 004F 0020 0020             TBIT       0
  0346 001E 0137 0021             BRANCH     LEVEL2.                     < 0364>
  0347 003D 004E 0022  NEWMODE    TCY        7
  0348 007A 002D 0023  NEWMODE1   TAMIYC
  0349 0075 00A0 0024             SBIT       0      RESET GO FLAG
  0350 006B 00A6 0025             RBIT       1      RESET ENTER FLAG
  0351 0057 00A5 0026             RBIT       2
  0352 002E 01BA 0027             CALL       LEVEL2                      < 0367>
  0353 005C 006F 0028             TCMIY      15
  0354 0038 008B 0029             CALLL      BLANKDIS                    < 1739>
       0070 0198 0030
  0355 0061 0091 0031  FILLOOP    LDX        8
  0356 0043 0060 0032  FIL$LOOP   TCMIY      0      RESET POINTER .
  0357 0006 005E 0033             YNEC       7
  0358 000D 0143 0034             BRANCH     FIL$LOOP                    < 0356>
  0359 001B 00BF 0035             RETN
  0360 *     INCREMENT THE LEVEL COUNTER IN 2-15
  0361 *     PUT THE ADDRESS FOR TONES IN 1-10
  0362 *     (THE SAME SET OF TONES IS USED FOR EVERY LEVEL
  0363 *     AND EVERY MODE)
  0364 0037 0042 0036  LEVEL2.    TCY        4      HAVE JUST SAID PRESS GO TO D
  0365 006E 0021 0037             TBIT       2      SOME MORE AND USER PRESSED M
  0366 005D 013D 0038             BRANCH     NEWMODE                     < 0347>
  0367 003A 0094 0039  LEVEL2     LDX        2
  0368 0074 004F 0040             TCY        15     INCREMENT THE LEVEL POINTER
  0369 0069 0032 0041             IMAC
  0370 0053 00BF 0042             RETN
  0371 0026 00E4 0043             ALEC       2
  0372 004C 0131 0044             BRANCH     LEVEL4                      < 0374>
  0373 0018 0006 0045             CLA
  0374 0031 002D 0046  LEVEL4     TAMIYC
  0375 0062 0091 0047             LDX        8
  0376 0045 0060 0048             TCMIY      0
  0377 000A 008E 0049  LEVELO     CALLL      ZEROROMA  PUT CORRECT TONE FOR< 1016>
       0015 01AB 0050

- 82 -

Table XII cont'd

```
STMT  PC   CODE PLOC                                                <DEST >
0378 *                        IN ACC
0379 002B 0067 0051           TCMIY     14
0380 0056 0065 0052           TCMIY     10
0381 002C 009C 0053  TONE     LDX       3
0382 0058 0060 0054           TCMIY     0
0383 0030 008E 0055           BL        ADDCTR6                      < 1046>
     0060 0129 0056
0384 0041 004E 0057  ERASE    TCY       7
0385 0002 002A 0058           TMY
0386 0005 005C 0059           YNEC      3        CANNOT ERASE IN LS
0387 000B 012F 0060           BRANCH    ERASE2                      < 0389>
0388 0017 0177 0061           BRANCH    DISP                        < 0338>
0389 002F 008D 0062  ERASE2   CALLL     ZERO89                      < 1447>
     005E 019F 0063
0390 003C 00E0 0064           ALEC      0
0391 0078 0166 0065           BRANCH    REPLAY                      < 0444>
0392 0071 008B 0066           CALLL     BLANKDIS                    < 1739>
     0063 0198 0067
0393 0047 0040 0068           TCY       0        PUT THE UNDERSCORE IN THE
0394 000E 0063 0069           TCMIY     12       FIRST POSITION. THE UNDERSCO
0395 *                        DOES NOT MOVE, BUT IT DISAPPEARS           C
0396 *                        WHEN A LETTER IS PUSHED.                   C
0397 001D 0177 0070           BRANCH    DISP                        < 0338>
0398 003B 009C 0071  ERAORENT LDX       3
0399 0076 0043 0072           TCY       12
0400 006D 0020 0073           TBIT      0
0401 005B 0177 0074           BRANCH    DISP                        < 0338>
0402 0036 0091 0075           LDX       8
0403 006C 004E 0076           TCY       7
0404 0059 0023 0077           TBIT      3
0405 0032 0177 0078           BRANCH    DISP                        < 0338>
0406 0064 0041 0079           TCY       8
0407 0049 0020 0080           TBIT      0        HAS GO BEEN PUSHED?
0408 0012 0177 0081           BRANCH    DISP                        < 0338>
0409 0025 0022 0082           TBIT      1        HAS ENTER BEEN PUSHED?
0410 004A 017D 0083           BRANCH    DISP.                       < 0336>
0411 0014 00E3 0084           ALEC      12       KEY=ERASE?
0412 0029 0141 0085           BRANCH    ERASE                       < 0384>
0413 0052 00A2 0086           SBIT      1        SET ENTER FLAG
0414 0024 01CB 0087           CALL      EIGHT7                      < 0430>
0415 0048 0090 0088           LDX       0        IN SELF-TEST?
0416 0010 0049 0089           TCY       9
0417 0021 008B 0090           LDP       13
0418 0042 0022 0091           TBIT      1
0419 0004 011C 0092           BRANCH    SUM350   YES, THEN SUM THE 35< 1790>
     ******** SUM350   IS NOT ON SAME ROM PAGE
     ******** LAST ERROR AT   0335
0420 0009 0081 0093           LDP       8
0421 0013 00EC 0094           ALEC      3
0422 0027 016F 0095           BRANCH    COMPARE                     < 1093>
     ******** COMPARE   IS NOT ON SAME ROM PAGE
     ******** LAST ERROR AT   0419
0423 004E 0083 0096           CALLL     LDX9TRAN                    < 1609>
     001C 01BA 0097
0424 0039 006E 0098           BL        HEARSRC1                    < 1052>
     0072 0109 0099
0425 *
```

Table XII cont'd

```
      STMT  PC  CODE PLOC                                           <DEST >
      0426 *        PUT SPELLING AND SPEECH OF MODE
      0427 *        IN 1-10
      0428 *
      0429 0065 0068 0100  LEVEL1   TCMIY    1         FLAG=1
      0430 004B 0091 0101  EIGHT7   LDX      8
      0431 0016 004E 0102           TCY      7
      0432 *                        PUT MODE IN ACC
      0433 002D 0029 0103      .    TMA
      0434 005A 00BF 0104           RETN
      0435 0034 008E 0105           CALLL    ZEROROMA              < 1016>
           0068 01AB 0106
      0436 0051 008A 0107           CALLL    EIGHT7.              < 0780>
           0022 01B2 0108
      0437 0044 0020 0109           TBIT     0
      0438 0008 0123 0110           BRANCH   ODD                  < 0440>
      0439 0011 007F 0111           ACACC    15
      0440 0023 0079 0112  ODD      ACACC    9
      0441 0046 0098 0113           LDX      1
      0442 000C 004D 0114           TCY      11
      0443 0019 0086 0115           BL       SPK+DSP              < 0836>
           0033 017D 0116
      0444 0066 004E 0117  REPLAY   TCY      7         YOU CAN REPLAY IN
      0445 004D 0021 0118           TBIT     2         WORDMAKER, READ IT
      0446 001A 0177 0119           BRANCH   DISP      PICTURE READ         < 0338>
      0447 0035 008A 0120  REPLAY4  CALLL    RATE2                < 0773>
           006A 01BB 0121
      0448 0055 01CB 0122           CALL     EIGHT7               < 0430>
      0449 002A 0088 0123           LDP      1
      0450 0054 00E0 0124           ALEC     0
      0451 0028 0169 0125           BRANCH   REPLAY3              < 0240>
      ******** REPLAY3  IS NOT ON SAME ROM PAGE
      ******** LAST ERROR AT  0422
      0452 0050 00E4 0126           ALEC     2
      0453 0020 0143 0127           BRANCH   REPLAY2              < 0232>
      ******** REPLAY2  IS NOT ON SAME ROM PAGE
      ******** LAST ERROR AT  0451
      0454 0040 013A 0128           BRANCH   SPEAK2               < 0239>
      ******** SPEAK2   IS NOT ON SAME ROM PAGE
      ******** LAST ERROR AT  0453
```

Table XII cont'd

```
CD2705     ASSEMBLER FOR  270    CHIP VERS 00.02        02/07/80 (80 038) 15 15 19
                                                          ROM PAGE  3 PAGE 0012
     STMT  PC   CODE PLOC                                               <DEST >
     0455                              ORGPG      3
     0456 0000 00E4 0001  WHICHONE ALEC       2
     0457 0001 0125 0002           BRANCH     P.R.                      < 0537>
     0458 0003 008D 0003           LDP        11
     0459 0007 00EC 0004           ALEC       3
     0460 000F 0100 0005           BRANCH     STUMPERS                  < 1441>
          ******** STUMPERS IS NOT ON SAME ROM PAGE
          ******** LAST ERROR AT   0454
     0461 001F 0086 0006  HOWMANY  CALLL      MEMADDR                   < 0914>
          003F 01B6 0007
     0462 007F 0086 0008           CALLL      OUTADDR2                  < 0854>
          007E 01BD 0009
     0463 007D 0092 0010  FOUR14   LDX        4         PUT LEAST SIG DIG
     0464 007B 0047 0011           TCY        14        OF LIMIT IN 4-14
     0465 0077 00BF 0012           RETN
     0466 006F 0086 0013           CALLL      LOADR+1                   < 0850>
          005F 019E 0014
     0467 003E 0091 0015  RANDLIM  LDX        8
     0468 007C 0047 0016           TCY        14
     0469 0079 0060 0017           TCMIY      0
     0470 0073 0092 0018           LDX        4         PUT LEAST SIG DIG
     0471 *                          OF LIMIT IN 4-15
     0472 0067 0086 0019           CALLL      LOADRES1                  < 0843>
          004F 01BE 0020
     0473 001E 004E 0021           TCY        7         IN HEAR IT?
     0474 003D 008E 0022           LDP        7
     0475 007A 0021 0023           TBIT       2
     0476 0075 016C 0024           BRANCH     HEARBEG                   < 1038>
          ******** HEARBEG  IS NOT ON SAME ROM PAGE
          ******** LAST ERROR AT   0460
     0477 006B 0020 0025           TBIT       0
     0478 0057 0100 0026           BRANCH     READITO                   < 0968>
          ******** READITO  IS NOT ON SAME ROM PAGE
          ******** LAST ERROR AT   0476
     0479 002E 008C 0027           LDP        3
     0480 005C 0046 0028  TCY6     TCY        6
     0481 *
     0482 *     SUBROUTINE TO GET A RANDOM NUMBER BETWEEN
     0483 *     APPROPRIATE  LIMITS
     0484 *
     0485 0038 009A 0029  RANDOM#  LDX        5
     0486 0070 0029 0030           TMA
     0487 0061 00F1 0031  RAND#    YMCY       8         TRANSFER RANDOM NUMBER
     0488 0043 002F 0032           TAM
     0489 0006 0092 0033           LDX        4
     0490 000D 0001 0034  RANDOM   ALEM                 RANDOM < OR = LIMIT
     0491 001B 013A 0035           BRANCH     OK                        < 0495>
     0492 0037 007E 0036           ACACC      7         ADJUST RANDOM TO BE
     0493 006E 0092 0037           LDX        4         DUMMY INSTRUCTION
     0494 005D 010D 0038           BRANCH     RANDOM    BETWEEN THE LIMITS  < 0490>
     0495 003A 0057 0039  OK       YNEC       14
     0496 0074 010A 0040           BRANCH     MOSTSDIG                  < 0506>
     0497 0069 009A 0041  LSTSDIG  LDX        5         PUT LEAST SIG DIG IN 5-14
     0498 0053 0040 0042           TCY        0
     0499 0026 0060 0043           TCMIY      0
     0500 004C 0047 0044           TCY        14
     0501 *                          ONE OF THEM 1
```

Table XII cont'd

```
CD2705    ASSEMBLER FOR  270   CHIP VERS 00.02      02/07/80 (80 038) 15:15:19
                                                    ROM PAGE  3 PAGE 0013
                                                              <DEST >
STMT  PC   CODE PLOC
0502 0018 002C 0045  NOTEQUAL TAMDYN
0503 0031 00BF 0046           RETN
0504 0062 002F 0047           TAM
0505 0045 0149 0048           BRANCH   PICT8                              < 0536>
0506 000A 0009 0049  MOSTSDIG MNEA               MOST SIG DIG = LIMIT?
0507 0015 0171 0050           BRANCH   OKTOO                              < 0523>
0508 002B 009A 0051  RANDNUM1 LDX      5          YES,MOST SIG DIG = LIMIT
0509 0056 004F 0052           TCY      15
0510 002C 002D 0053           TAMIYC
0511 005B 0020 0054           TBIT     0          CHECK LEAST SIG DIG
0512 0030 015E 0055           BRANCH   YIS6       LEAST SIG IS IN Y=60< 0520>
0513 0060 004A 0056           TCY      5
0514 0041 0029 0057           TMA
0515 0002 0040 0058  RANDNUM  TCY      0
0516 0005 0022 0059           TBIT     1
0517 000B 0169 0060           BRANCH   LSTSDIG                            < 0497>
0518 0017 004A 0061           TCY      5
0519 002F 0161 0062           BRANCH   RAND#                              < 0487>
0520 005E 0046 0063  YIS6     TCY      6
0521 003C 0029 0064           TMA
0522 0078 0102 0065           BRANCH   RANDNUM                            < 0515>
0523 0071 009A 0066  OKTOO    LDX      5
0524 0063 0040 0067           TCY      0
0525 0047 00A2 0068           SBIT     1
0526 000E 012B 0069           BRANCH   RANDNUM1                           < 0508>
0527 001D 009A 0070  RANDOM1  LDX      5
0528 003B 0040 0071           TCY      0
0529 0076 00A0 0072           SBIT     0
0530 006D 009A 0073  RANDOM2  LDX      5
0531 005B 004E 0074           TCY      7
0532 0036 0029 0075           TMA
0533 006C 0046 0076           TCY      6
0534 0059 0161 0077           BRANCH   RAND#                              < 0487>
0535 0032 0086 0078  PICT7    CALLL    LOADRESS                          < 0844>
     0064 01FC 0079
0536 0049 0082 0080  PICT8    BL       TRANSFER                          < 0582>
     0012 0100 0081
0537 0025 0068 0082  P.R.     TCMIY    1
0538 004A 0086 0083           CALLL    MEMADDR                           < 0914>
     0014 01B6 0084
0539 0029 01FD 0085           CALL     FOUR14     PUT LIMIT IN 4-14  < 0463>
0540 0052 006D 0086           TCMIY    11
0541 0024 0091 0087           LDX      8
0542 0048 0042 0088           TCY      4
0543 0010 0029 0089           TMA
0544 0021 0033 0090           MNEZ
0545 0042 0132 0091           BRANCH   PICT7      FIRST ONE OR NOT?  < 0535>
0546 0004 00C2 0092  P.R.1    ACNAA    4
0547 0009 013E 0093           BRANCH   RANDLIM                           < 0467>
0548 0013 0089 0094  FIVE?O   LDP      9          HAVE YOU DONE FIVE?
0549 0027 0021 0095           TBIT     2
0550 004E 0177 0096           BRANCH   SCOREIS    YES, THEN SAY THE SC< 1206>
        ******** SCOREIS  IS NOT ON SAME ROM PAGE
        ******** LAST ERROR AT  0478
0551 001C 004C 0097           TCY      3          NO, THEN GO ON
0552 0039 0088 0098           BL       ZAPIT      TO THE NEXT PROBLEM < 0323>
     0072 0150 0099
```

Table XII cont'd

```
CD2705     ASSEMBLER FOR  270   CHIP VERS 00 02        02/07/80 (80 038) 15 15 19
                                                          ROM PAGE  3 PAGE 0014
     STMT  PC   CODE PLOC                                           .<DEST >
     0553 0065 008D 0100  WORDMAKE CALLL      RIGHT2      .          < 1459>
          004B 01E7 0101
     0554 *                              EACH LEVEL HAS A DIFFERENT
     0555 *                              STARTING ADDRESS
     0556 0016 007C 0102           ACACC     3
     0557 002D 0015 0103           AMAAC
     0558 005A 0098 0104           LDX       1
     0559 0034 0045 0105           TCY       10
     0560 0068 002E 0106           TAMZA
     0561 0051 0086 0107           CALLL     MEMADDR   POINT TO THE STARTIN< 0914>
          0022 01B6 0108
     0562 0044 01FD 0109           CALL      FOUR14    ADDRESS             < 0463>
     0563 0008 006C 0110           TCMIY     3         PUT LIMIT IN 4-14 AND
     0564 0011 00C5 0111           ACNAA     10        IN 4-15 (LIMIT=19)
     0565 0023 013E 0112           BRANCH    RANDLIM                       < 0467>
     0566 0046 006B 0113  READIT   TCMIY     13
     0567 000C 01FD 0114           CALL      FOUR14    PUT LIMIT IN 4-14   < 0463>
     0568 0019 0069 0115           TCMIY     9         4-15
     0569 0033 0060 0116  RANDOM3  TCMIY     0         THERE ARE 10 SENTENCES
     0570 0066 015C 0117           BRANCH    TCY6                          < 0480>
     0571 004D 00A4 0118  READIT20 RBIT      0                             < 0670>
     0572 001A 0082 0119           CALLL     PUTIN1.                       < 0670>
          0035 01C2 0120
     0573 006A 011F 0121           BRANCH    HOWMANY                       < 0461>
     0574 0055 01ED 0122  ONCE     CALL      RANDOM2                       < 0530>
     0575 002A 012B 0123           BRANCH    ONCEA                         < 0577>
     0576 0054 019D 0124  ,TWICE   CALL      RANDOM1                       < 0527>
     0577 0028 0082 0125  ONCEA    LDP       4
     0578 0050 0009 0126           MNEA
     0579 0020 0172 0127           BRANCH    CHECK#2                       < 0677>
          ******** CHECK#2   IS NOT ON SAME ROM PAGE
          ******** LAST ERROR AT   0550
     0580 0040 011C 0128           BRANCH    TWICE2                        < 0676>
          ******** TWICE2    IS NOT ON SAME ROM PAGE
          ******** LAST ERROR AT   0579
```

Table XII cont'd

CD2705     ASSEMBLER FOR   270    CHIP VERS 00.02        02/07/90 (80 038) 15 15:19
                                                          ROM PAGE   4 PAGE 0015

```
 STMT  PC   CODE PLOC                                                    <DEST >
 0581                                ORGPG      4
 0582 0000 0045 0001  TRANSFER TCY   10
 0583 0001 0098 0002  FROM1TO4 LDX   1          TRANSFER ADDRESS FROM ROM
 0584 0003 0029 0003           TMA              AREA TO REGISTER 4
 0585 0007 0092 0004           LDX   4
 0586 000F 002D 0005           TAMIYC
 0587 001F 0057 0006           YNEC  14
 0588 003F 0101 0007           BRANCH FROM1TO4                           < 0583>
 0589 007F 0006 0008           CLA
 0590 007E 0074 0009           ACACC 2
 0591 007D 004E 0010  LDX8TCY7 TCY   7
 0592 007B 0091 0011           LDX   8
 0593 0077 00BF 0012           RETN
 0594 006F 008D 0013  ADDRESS  CALLL FILLSPAC ADD LSD OF RANDOM# T< 1527>
      005F 01A4 0014
 0595 *                          STARTING ADDRESS
 0596 003E 0092 0015           LDX   4         ADDRESSES ARE 8 DIGITS
 0597 007C 0085 0016           CALLL TCY10                               < 1333>
      0079 01F3 0017
 0598 0073 008F 0018           CALLL FIVE15    ADD MSD OF RANDOM# T< 2091>
      0067 018C 0019
 0599 *                          STARTING ADDRESS
 0600 004F 0085 0020           CALLL FOUR-11                             < 1378>
      001E 01F8 0021
 0601 003D 009A 0022           LDX   5
 0602 007A 0048 0023           TCY   1
 0603 0075 0085 0024           LDP   10
 0604 006B 0021 0025           TBIT  2
 0605 0057 0133 0026           BRANCH READIT4                            < 1425>
      ******** READIT4  IS NOT ON SAME ROM PAGE
      ******** LAST ERROR AT   05B0
 0606 002E 0082 0027           LDP   4         CHECK THE BIT TO INDICATE
 0607 005C 0040 0028           TCY   0         THAT ADDRESS IS BEING CAL-
 0608 0038 0021 0029           TBIT  ·2
 0609 0070 0106 0030           BRANCH TRANSFRO CULATED                   < 0612>
 0610 0061 00A1 0031           SBIT  2
 0611 0043 016F 0032           BRANCH ADDRESS                            < 0594>
 0612 0006 00A5 0033  TRANSFRO RBIT  2
 0613 000D 01FD 0034           CALL  LDX8TCY7                            < 0591>
 0614 001B 0023 0035           TBIT  3
 0615 0037 0145 0036           BRANCH TRANSFR1                           < 0626>
 0616 006E 0029 0037           TMA
 0617 005D 008A 0038           BL    PICTURE                            < 0709>
      003A 0100 0039
 0618 0074 009A 0040  ONCEB    LDX   5
 0619 0069 004D 0041           TCY   11
 0620 0053 0146 0042           BRANCH ALLRIGHT                           < 0691>
 0621 0026 0180 0043  WORDMAK7 CALL  TRANSFER  PUT THE SPEECH FOR T< 05B2>
 0622 *                          FAMILY IN 4-10
 0623 004C 01AF 0044  PUTIN1A  CALL  PUTIN1                              < 0641>
 0624 0018 0061 0045           TCMIY 8
 0625 0031 0086 0046           BL    MEMADDR                            < 0914>
      0062 0136 0047
 0626 0045 0047 0048  TRANSFR1 TCY   14        INCREMENT COUNTER FOR
 0627 000A 0032 0049           IMAC            HOW MANY TIMES THROUGH THE
 0628 0015 002F 0050           TAM             LOOP
 0629 002B 008C 0051           LDP   3
```

- 88 -

Table XII cont'd

```
CD2705    ASSEMBLER FOR  270   CHIP VERS 00 02          02/07/80 (80.038) 15 15 19
                                                        ROM PAGE  4 PAGE 0016
     STMT  PC  CODE PLOC                                          <DEST >
     0630 0056 00E8 0052          ALEC      1
     0631 002C 0155 0053          BRANCH    ONCE                  < 0574>
          ******** ONCE     IS NOT ON SAME ROM PAGE
          ******** LAST ERROR AT  0605
     0632 0058 00E4 0054          ALEC      2         ONE TIME?
     0633 0030 0154 0055          BRANCH    TWICE                 < 0576>
          ******** TWICE    IS NOT ON SAME ROM PAGE
          ******** LAST ERROR AT  0631
     0634 0060 0092 0056 FINISHED LDX       4
     0635 0041 0064 0057          TCMIY     2         WHICH CHOICE IS RIGHT 0,1,
     0636 *                       OR 2
     0637 0002 01B3 0058          CALL      RANDOM3               < 0569>
          ******** RANDOM3  IS NOT ON SAME ROM PAGE
          ******** LAST ERROR AT  0633
     0638 0005 0047 0059          TCY       14
     0639 000B 00B2 0060 OK3      COMXB
     0640 0017 002D 0061          TAMIYC              PUT RANDOM# IN 8-14
     0641 002F 0098 0062 PUTIN1   LDX       1
     0642 005E 0047 0063          TCY       14
     0643 003C 0065 0064          TCMIY     10
     0644 0078 00E0 0065          ALEC      0         CALCULATE Y IF CORRECT=0
     0645 0071 011D 0066          BRANCH    CORRECTO              < 0649>
     0646 0063 00E8 0067          ALEC      1         CALCULATE Y IF CORRECT=1
     0647 0047 013B 0068          BRANCH    CORRECT1              < 0650>
     0648 000E 0176 0069          BRANCH    CORRECT2  CALCULATE Y IF CORRE< 0652>
     0649 001D 007A 0070 CORRECTO ACACC     5         ACC=0 THEN Y=10
     0650 003B 007A 0071 CORRECT1 ACACC     5         ACC=1 THEN Y=6
     0651 *                       TRANSFER ADDRESS FROM REG
     0652 0076 0049 0072 CORRECT2 TCY       9
     0653 006D 002F 0073          TAM                 4 TO REG 1 DEPENDING ON
     0654 005B 002A 0074 CORRECT3 TMY
     0655 0036 0092 0075          LDX       4         WHAT Y EQUALS
     0656 006C 0029 0076          TMA
     0657 0059 0098 0077          LDX       1
     0658 0032 0047 0078          TCY       14        1-14 IS THE ROM SAVE AREA
     0659 0064 002A 0079          TMY                 POINTER
     0660 0049 002F 0080          TAM
     0661 0012 0047 0081          TCY       14
     0662 0025 0032 0082          IMAC                INCREMENT ROM SAVE AREA POIN
     0663 004A 002D 0083          TAMIYC
     0664 0014 00EB 0084          ALEC      13        FINISHED THE ADDRESS?
     0665 0029 0109 0085          BRANCH    INCR4PNT              < 0672>
     0666 0052 0091 0086          LDX       8
     0667 0024 0044 0087          TCY       2
     0668 0048 00BF 0088          RETN
     0669 0010 0086 0089          BL        SPK+DSP2              < 0834>
          0021 017F 0090
     0670 0042 0006 0091 PUTIN1.  CLA
     0671 0004 012F 0092          BRANCH    PUTIN1                < 0641>
     0672 0009 0049 0093 INCR4PNT TCY       9
     0673 0013 0032 0094          IMAC
     0674 0027 002F 0095          TAM
     0675 004E 015B 0096          BRANCH    CORRECT3              < 0654>
     0676 001C 0085 0097 TWICE2   CALLL     INCPOINT              < 1423>
          0039 018C 0098
     0677 0072 0047 0099 CHECK#2  TCY       14
     0678 0065 0029 0100          TMA
```

- 89 -

Table XII cont'd

```
CD2705     ASSEMBLER FOR  270   CHIP VERS 00 02      02/07/80 (80 038) 15.15 19
                                                     ROM PAGE   4 PAGE 0017
     STMT  PC   CODE PLDC                                            <DEST >
     0679 C04B 00B2 0101              COMX8
     0680 0016 0020 0102              TBIT       0
     0681 002D 0174 0103              BRANCH     ONCEB                < 0618>
     0682 005A 004D 0104              TCY        11
     0683 0034 00B2 0105              COMX8
     0684 0068 0009 0106              MNEA
     0685 0051 C146 0107              BRANCH     ALLRIGHT             < 0691>
     0686 0022 004F 0108              TCY        15
     0687 0044 0029 0109              TMA
     0688 0008 0077 0110              ACACC      14
     0689 0011 0146 0111              BRANCH     ALLRIGHT             < 0691>
     0690 0023 0072 0112              ACACC      4
     0691 0046 002F 0113     ALLRIGHT TAM
     0692 000C 0092 0114     ZAPSHIFT LDX       4
     0693 0019 0040 0115              TCY        0      ROUTINE PUTS STARTING
     0694 0033 0060 0116              TCMIY      0 .    ADDRESS FOR ZAP,WM,
     0695 0066 004B 0117     SHIFT1   TCY        13     IN ALL THREE ADDRESS SPOT
     0696 004D 0029 0118              TMA               SHIFTING ROM ADDRESS FROM
     0697 001A 0004 0119     SHIFT    DYN               4-13 TO 4-2
     0698 0035 0003 0120              XMA
     0699 006A 0054 0121              YNEC       2
     0700 0055 011A 0122              BRANCH     SHIFT                < 0697>
     0701 002A 0040 0123              TCY        0
     0702 0054 0032 0124              IMAC
     0703 0028 002F 0125              TAM
     0704 0050 00EC 0126              ALEC       3
     0705 0020 0166 0127              BRANCH     SHIFT1               < 0695>
     0706 0040 00BF 0128              RETN
     0707 ******************   O LEFT  ******************
```

Table XII cont'd

```
CD2705    ASSEMBLER FOR  270   CHIP VERS 00 02        02/07/80 (80.038) 15 15 19
                                                        ROM PAGE   5 PAGE 0018
    STMT   PC  CODE PLOC                                              <DEST >
    0708                              ORGPG      5
    0709 0C00 009A 0001   PICTURE     LDX        5
    0710 0001 00E8 0002               ALEC       1
    0711 0003 017E 0003               BRANCH     WORDMAKO                < 0715>
    0712 0007 009E 0004   PICTUR      CALLL      ZEROROMA                < 1016>
         000F 01AB 0005
    0713 001F 0061 0006               TCMIY      8
    0714 003F 0083 0007               BL         PRPH                    < 1633>
         007F 0178 0008
    0715 007E 0048 0009   WORDMAKO    TCY        1
    0716 007D 00E0 0010               ALEC       0
    0717 007B 0175 0011               BRANCH     WORDMAK                 < 0729>
    0718 0077 0023 0012   READIT2     TBIT       3
    0719 006F 0175 0013               BRANCH     WORDMAK                 < 0729>
    0720 005F 00A1 0014               SBIT       2        THREE TIMES
    0721 003E 0138 0015               BRANCH     ADDRES                  < 0734>
    0722 007C 0020 0016   READIT16    TBIT       0
    0723 0079 0106 0017               BRANCH     WORDMAK5                < 0737>
    0724 0073 0157 0018               BRANCH     WORDMAK1                < 0731>
    0725 0067 00A4 0019   READIT17    RBIT       0
    0726 004F 00A7 0020               RBIT       3
    0727 001E 0083 0021      .        CALLL      TRANS-3                 < 1615>
         003D 0198 0022
    0728 007A 015D 0023               BRANCH     WORDMAK3                < 0740>
    0729 0075 0022 0024   WORDMAK     TBIT       1        ADD # TO STARTING
    0730 006B 0161 0025               BRANCH     WORDMAK2 ADDRESS SIX TIMES  < 0735>
    0731 0057 0032 0026   WORDMAK1    IMAC
    0732 002E 002F 0027               TAM
    0733 005C 00BF 0028      .        RETN
    0734 0038 0082 0029   ADDRES      BL         ADDRESS                 < 0594>
         0070 016F 0030
    0735 0061 0023 0031   WORDMAK2    TBIT       3
    0736 0043 017C 0032               BRANCH     READIT16                < 0722>
    0737 0006 00A6 0033   WORDMAK5    RBIT       1
    0738 000D 0082 0034               CALLL   ,  PUTIN1.                 < 0670>
         001B 01C2 0035
    0739 0037 0086 0036               CALLL      MEMADDR                 < 0914>
         006E 01B6 0037
    0740 005D 0086 0038   WORDMAK3 CALLL         LOADRESS                < 0844>
         003A 01FC 0039
    0741 0074 009A 0040               LDX        5
    0742 0069 0048 0041               TCY        1
    0743 0053 0020 0042               TBIT       0
    0744 0026 0167 0043               BRANCH     READIT17                < 0725>
    0745 004C 0082 0044               CALLL      TRANSFER PUT IN REGISTER 4  < 0582>
         0018 0180 0045
    0746 0031 0029 0046               TMA
    0747 0062 009A 0047               LDX        5
    0748 0045 0044 0048               TCY        2        ONE
    0749 000A 0081 0049               LDP        8
    0750 0015 0022 0050               TBIT       1
    0751 002B 0100 0051               BRANCH     WORDMAK9 TWO TIMES?     < 1085>
         ******** WORDMAK9 IS NOT ON SAME ROM PAGE
         ******** LAST ERROR AT   0637
    0752 0056 0032 0052               IMAC
    0753 002C 0082 0053               CALLL      ALLRIGHT SHIFT OVER 4 PLACES < 0691>
         0058 01C6 0054
```

0036559

Table XII cont'd

```
CD2705      ASSEMBLER FOR   270    CHIP VERS 00 02        02/07/80 (80 038) 15:15:19
                                                          ROM PAGE  5 PAGE 0019
  STMT  PC   CODE PLOC                                                    <DEST >
  0754 0030 015D 0055            BRANCH   WORDMAK3                        < 0740>
  0755 0060 004F 0056  FLASH     TCY      15
  0756 0041 006F 0057            TCMIY    15
  0757 0002 01D1 0058            CALL     THREE-12  SET BIT TO INDICATE   < 0807>
  0758 *                              ARE FLASHING THE WORDS
  0759 0005 0068 0059            TCMIY    1
  0760 000B 01E4 0060  FLASH0    CALL     ATESEVEN                        < 0781>
  0761 0017 0006 0061  RATE3     CLA
  0762 002F 0020 0062            TBIT     0
  0763 005E 015B 0063            BRANCH   RATE1                           < 0776>
  0764 003C 0094 0064  ZAPRATE   LDX      2
  0765 0078 004F 0065            TCY      15
  0766 *                              ZAP RATE IS DEPENDENT ON
  0767 *                                  WHICH LEVEL
  0768 0071 0022 0066            TBIT     1
  0769 0063 016D 0067            BRANCH   RATE0                           < 0775>
  0770 0047 0020 0068            TBIT     0
  0771 000E 015B 0069            BRANCH   RATE1                           < 0776>
  0772 001D 0136 0070            BRANCH   ZERO29                          < 0777>
  0773 003B 0006 0071  RATE2     CLA
  0774 0076 0074 0072            ACACC    2
  0775 006D 0074 0073  RATE0     ACACC    2         PUT 0 IN 2-9,2-10
  0776 005B 007A 0074  RATE1     ACACC    5         PUT 4 IN 2-9,2-10
  0777 0036 0094 0075  ZERO29    LDX      2
  0778 006C 0049 0076            TCY      9
  0779 0059 002D 0077            TAMIYC
  0780 0032 002E 0078  EIGHT7    TAMZA
  0781 0064 0091 0079  ATESEVEN  LDX      8
  0782 0049 004E 0080            TCY      7
  0783 0012 00BF 0081            RETN
  0784 0025 004F 0082            TCY      15
  0785 004A 01D7 0083            CALL     WORDMAK1                        < 0731>
  0786 0014 00E4 0084            ALEC     2
  0787 0029 0113 0085            BRANCH   TRAN421                         < 0795>
  0788 0052 0081 0086  WRONG3    CALLL    ZAPCOMP                        < 1136>
       0024 0197 0087
  0789 0048 004E 0088            TCY      7
  0790 0010 0082 0089            LDP      4
  0791 0021 0020 0090            TBIT     0
  0792 0042 014C 0091            BRANCH   PUTIN1A                        < 0623>
       ******** PUTIN1A  IS NOT ON SAME ROM PAGE
       ******** LAST ERROR AT   0751
  0793 0004 004C 0092            TCY      3
  0794 0009 00A2 0093            SBIT     1
  0795 0013 0086 0094  TRAN421   BL       TRAN4TO1                       < 082B>
       0027 0100 0095
  0796 *           COMMUNICATION PART 2
  0797 004E 0090 0096  DISLP+1   LDX      0
  0798 001C 002F 0097            TAM
  0799 0039 0094 0098            LDX      2         INCREMENT PAUSE COUNTER
  0800 0072 0049 0099            TCY      9
  0801 0065 0085 0100            CALLL    CARRYON                        < 1338>
       004B 01FA 0101
  0802 0016 0045 0102            TCY      10
  0803 002D 0029 0103            TMA
  0804 005A 00E9 0104            ALEC     9         FINISHED WITH PAUSE?
  0805 0034 0155 0105            BRANCH   PAUSECON  OR FLASH              < 0821>
```

- 92 -

Table XII cont'd

```
CD2705     ASSEMBLER FOR  270   CHIP VERS 00 02        02/07/80 (80 038) 15.15.19
                                                        ROM PAGE  5 PAGE 0020
    STMT  PC  CODE PLOC                                          <DEST >
    0806 0068 01BB 0106               CALL     RATE2            < 0773>
    0807 0051 009C 0107  THREE-12 LDX    3
    0808 0022 0043 0108               TCY      12
    0809 0C44 CCBF 0109               RETN
    0810 0008 0020 0110               TBIT     0
    0811 0011 010B 0111               BRANCH   FLASH0    DISPLAY NEXT WORD   < 0760>
    0812 0023 009F 0112               LDP      15
    0813 0046 0021 0113               TBIT     2
    0814 000C 0163 0114               BRANCH   FIVE?     FINISHED DISPLAYING < 2047>
         ******** FIVE?    IS NOT ON SAME ROM PAGE
         ******** LAST ERROR AT   0792
    0815 0019 00A6 0115               RBIT     1
    0816 0033 0090 0116  DISP/KB.  BL   DISP/KB                 < 0078>
         0066 0100 0117
    0817 004D 01D1 0118  ZAPKEY    CALL    THREE-12             < 0807>
    0818 001A 0020 0119               TBIT     0
    0819 0035 0152 0120               BRANCH   WRONG3           < 0788>
    0820 006A 0133 0121               BRANCH   DISP/KB.         < 0816>
    0821 0055 01D1 0122  PAUSECON CALL    THREE-12              < 0807>
    0822 002A 0022 0123               TBIT     1
    0823 0054 0133 0124               BRANCH   DISP/KB          < 0816>
    0824 0028 0090 0125               LDX      0
    0825 0050 0029 0126               TMA
    0826 0020 0080 0127               BL       DSP1     GO BACK TO DISPLAY   < 0085>
         0040 017F 0128
```

Table XII cont'd

```
CD2705     ASSEMBLER FOR  270   CHIP VERS 00.02      02/07/60 (60 038) 15 15 19
                                                       ROM PAGE  6 PAGE 0021
  STMT  PC   CODE PLOC                                                  <DEST >
  0827                               ORGPG     -6
  0828 0000 0082 0001  TRAN4TO1 CALLL     PUTIN1                        < 0641>
       0001 01AF 0002
  0829 0003 0068 0003           TCMIY     1
  0830 0007 004E 0004           TCY       7
  0831 000F 0023 0005           TBIT      3
  0832 001F 017B 0006           BRANCH    SPK+DISP  THE CORRECT ANSWER  < 0837>
  0833 003F 0136 0007           BRANCH    MEMADDR                       < 0914>
  0834 007F 0061 0008  SPK+DSP2 TCMIY     8
  0835 007E 017B 0009           BRANCH    SPK+DISP                      < 0837>
  0836 007D 002F 0010  SPK+DSP  TAM
  0837 007B 009C 0011  SPK+DISP LDX       3
  0838 0077 0049 0012           TCY       9
  0839 006F 00A0 0013           SBIT      0
  0840 005F 0136 0014           BRANCH    MEMADDR                       < 0914>
  0841 *   NEW PAGE
  0842 *   COMMUNICATION PART 1
  0843 003E 002F 0015  LOADRES1 TAM
  0844 007C 0045 0016  LOADRESS TCY       10        GETS 16 BITS OF DATA
  0845 0079 009C 0017           LDX       3
  0846 0073 006C 0018           TCMIY     3                *
  0847 0067 0006 0019           CLA
  0848 004F 0071 0020           ACACC     8
  0849 *                              MEMORY FOR LOOP
  0850 001E 002E 0021  LOADR+1  TAMZA
  0851 *    OUTADDR2:
  0852 *    LOADS 4 BITS INTO K-LINES USING PDC AND OUTPUT 4 BITS
  0853 *
  0854 003D 0043 0022  OUTADDR2 TCY       12        ** CHIP SELECT
  0855 007A 000D 0023           SETR                      **
  0856 0075 004D 0024           TCY       11        L/R = 0
  0857 006B 000D 0025           SETR
  0858 0057 0045 0026           TCY       10
  0859 002E 0006 0027           CLA                 ACC=OUTPUT 4 BITS COMMAND
  0860 005C 0071 0028           ACACC     8               **
  0861 0038 000D 0029           SETR                      **
  0862 0070 0036 0030           RSTR                      **
  0863 0061 000D 0031           SETR                      **
  0864 0043 0036 0032           RSTR                      **
  0865 0006 000D 0033           SETR                      **
  0866 000D 0036 0034           RSTR                      **
  0867 001B 000D 0035           SETR                      **
  0868 0037 0036 0036           RSTR                      **
  0869 006E 0045 0037           TCY       10        **DUMMY INST FOR RSTR***
  0870 005D 0045 0038           TCY       10
  0871 003A 0073 0039           ACACC     12
  0872 0074 000D 0040           SETR                1ST PDC LOADS COMMAND
  0873 0069 0036 0041           RSTR                      *
  0874 0053 004D 0042           TCY       11
  0875 0026 0036 0043           RSTR
  0876 004C 0045 0044           TCY       10
  0877 0018 000D 0045           SETR                2ND PDC APPLIES SR TO K-LINE
  0878 0031 0036 0046           RSTR                      *
  0879 0062 0045 0047           TCY       10
  0880 0045 0045 0048           TCY       10
  0881 000A 0008 0049           TKA                 LOAD INTO ACC
  0882 0015 000D 0050           SETR                3RD PDC DISCONNECTS SR
```

Table XII cont'd

```
CD2705    ASSEMBLER FOR  270   CHIP VERS 00 02      02/07/80 (80 038) 15 15 19
                                                     ROM PAGE  6 PAGE 0022
     STMT  PC   CODE PLOC                                            :DEST :
     0883 0028 0036 0051          RSTR                     *
     0884 0C56 004D 0052          TCY     11
     0885 002C 000D 0053          SETR
     0886 0058 009C 0054          LDX     3
     0887 0030 0023 0055          TBIT    3
     0888 0060 0105 0056          BRANCH  LSHIFT-1             < 0895>
     0889 0041 009A 0057          LDX     5
     0890 0002 00BF 0058          RETN
     0891 *
     0892 *   END OF OUTADDR2 SUBROUTINE
     0893 *
     0894 *
     0895 0005 004B 0059  LSHIFT-1 TCY    13
     0896 000B 0098 0060          LDX     1
     0897 0017 0003 0061  LSHIFT   XMA             SHIFT ROUTINE
     0898 002F 0004 0062          DYN                     *
     0899 005E 0059 0063          YNEC    9               *
     0900 003C 0117 0064          BRANCH  LSHIFT          *       < 0897>
     0901 0078 0045 0065          TCY     10      TEST LOOP COUNT
     0902 0071 009C 0066          LDX     3               *
     0903 0063 0007 0067          DMAN                    *
     0904 0047 011E 0068          BRANCH  LOADR+1         *       < 0850>
     0905 000E 004D 0069          TCY     11
     0906 001D 00A7 0070          RBIT    3
     0907 003B 0049 0071          TCY     9
     0908 0076 0060 0072          TCMIY   0
     0909 006D 0091 0073          LDX     8
     0910 005B 00BF 0074          RETN
     0911 *
     0912 *   SETS 350 POINTER TO CORRECT POSITION
     0913 *
     0914 0036 0043 0075  MEMADDR  TCY    12      CHIP SELECT
     0915 006C 000D 0076          SETR
     0916 0059 004D 0077          TCY     11      L/R = 1 (INPUT)
     0917 0032 000D 0078          SETR            R11 = 1
     0918 0064 0045 0079          TCY     10
     0919 0049 0006 0080          CLA
     0920 0012 007C 0081          ACACC   3       FOR LOOP COUNT, ACC = 3
     0921 0025 009C 0082          LDX     3       MEMORY FOR LOOP (SAVE ADDR)
     0922 004A 002E 0083  MEMLOOP  TAMZA
     0923 0014 0074 0084          ACACC   2
     0924 0029 000D 0085          SETR            LOADS COMMAND
     0925 0052 0036 0086          RSTR                    *
     0926 0024 0045 0087          TCY     10
     0927 0048 0098 0088          LDX     1
     0928 0010 0029 0089          TMA             4 BITS OF ADDR -->ACC
     0929 0021 000D 0090          SETR            LOADS DATA
     0930 0042 0036 0091          RSTR                    *
     0931 0004 004B 0092          TCY     13
     0932 0009 0003 0093  SHIFTUP  XMA            SHIFT ROUTINE       *
     0933 0013 0004 0094          DYN             *   SHIFT UP IN     *
     0934 0027 0059 0095          YNEC    9       *   SAME REGISTER   *
     0935 004E 0109 0096          BRANCH  SHIFTUP * * * * * * * * * < 0932>
     0936 001C 0045 0097          TCY     10      ORIGINAL WORD
     0937 0039 009C 0098          LDX     3       REG-6
     0938 0072 0007 0099          DMAN            MEM-1, --> ACC   LOOP
     0939 0065 014A 0100          BRANCH  MEMLOOP                 < 0922>
```

Table XII cont'd

```
CD2705     ASSEMBLER FOR  270   CHIP VERS 00 02       02/07/80 (80 038) 15 15 19
                                                          ROM PAGE  6 PAGE 0023
     STMT  PC   CODE PLOC                                                <DEST >
     0940 004B 007C 0101          ACACC    .3
     0941 0016 000D 0102          SETR
     0942 002D 0036 0103          RSTR
     0943 005A 0045 0104          TCY      10         **DUMMY INST FOR RSTR***
     0944 0034 0006 0105          CLA
     0945 0068 000D 0106          SETR
     0946 0051 0036 0107          RSTR
     0947 0022 0098 0108  MEMDRED LDX      1          * DUMMY READ TO SETUP MEMORY
     0948 0044 0045 0109          TCY      10               **
     0949 0008 0071 0110          ACACC    8                **
     0950 0011 000D 0111          SETR                      **
     0951 0023 0036 0112          RSTR                      **
     0952 0046 009C 0113          LDX      3
     0953 000C 0049 0114          TCY      9
     0954 0019 0020 0115          TBIT     0
     0955 0033 017C 0116          BRANCH   LOADRESS                      < 0844>
     0956 0066 00BF 0117          RETN
     0957 004D 0040 0118  BLANKCOM TCY     0
     0958 001A 0094 0119  HERE1   LDX      2
     0959 0035 0068 0120          TCMIY    1
     0960 006A 0004 0121          DYN
     0961 0055 009C 0122          LDX      3
     0962 002A 006D 0123          TCMIY    11
     0963 0054 0059 0124          YNEC     9
     0964 0028 011A 0125          BRANCH   HERE1                         < 0958>
     0965 0050 00BF 0126          RETN
     0966 0020 0083 0127          BL       OUTADDR                       < 1573>
          0040 0100 0128
```

Table XII cont'd

```
CD2705     ASSEMBLER FOR   270    CHIP VERS 00 02        02/07/80 (80 038) 15 15 19
                                                              ROM PAGE  7 PAGE 0024
    STMT   PC   CODE PLOC                                              <DEST >
    0967                            ORGPG     7
    0968  0000  0092 0001  READITO  LDX       4
    0969  0001  0047 0002           TCY       14
    0970  0003  0007 0003  DEC#     DMAN
    0971  0007  013F 0004           BRANCH    READITC                  < 0974>
    0972  000F  002F 0005           TCMIY     15
    0973  001F  0100 0006           BRANCH    DEC#                     < 0970>
    0974  003F  006D 0007  READITC  CALLL     RIGHT2A                  < 1458>
          007F  01F3 0008
    0975  *                         WHAT LEVEL ARE YOU IN?
    0976  007E  0022 0009           TBIT      1
    0977  007D  013E 0010           BRANCH    READIT1                  < 0981>
    0978  007B  0020 0011           TBIT      0
    0979  0077  0137 0012           BRANCH    READIT3                  < 0985>
    0980  006F  008C 0013  TCY6     BL        RANDOM1                  < 0527>
          005F  011D 0014
    0981  003E  009A 0015  READIT1  LDX       5
    0982  007C  004A 0016           TCY       5
    0983  0079  0020 0017           TBIT      0
    0984  0073  016F 0018           BRANCH    TCY6                     < 0980>
    0985  0067  0091 0019  READIT3  LDX       8
    0986  004F  004C 0020           TCY       3
    0987  001E  00A3 0021           SBIT      3
    0988  003D  016F 0022           BRANCH    TCY6                     < 0980>
    0989  *
    0990  007A  0081 0023  HEARO    CALLL     COMPARE   IS THAT THE WORD? < 1093>
          0075  01EF 0024
    0991  006B  0059 0025           YNEC      9         YES, FINISHED
    0992  0057  0143 0026           BRANCH    NOTFOUND                 < 1000>
    0993  002E  0082 0027  FOUNDIT  CALLL     TRANSFER  STORE IN REG 4 FOR M< 0582>
          005C  0180 0028
    0994  *                         KEY
    0995  0038  01AB 0029           CALL      ZEROROMA  SAY            < 1016>
    0996  *                         THE WORD IS -----.
    0997  0070  0066 0030           TCMIY     6
    0998  0061  0171 0031           BRANCH    SAY1                     < 1029>
    0999  *                         NO
    1000  0043  0083 0032  NOTFOUND CALLL     LDX9TRAN  THEN COMPARE TO NEXT< 1609>
          0006  013A 0033
    1001  000D  0006 0034           CLA
    1002  001B  0074 0035           ACACC     2
    1003  0037  0085 0036           CALLL     LDX1                     < 1332>
          006E  01F9 0037
    1004  005D  008D 0038           CALLL     FILLSPAC  FINISHED?      < 1527>
          003A  01A4 0039
    1005  0074  0092 0040           LDX       4
    1006  0069  0009 0041           MNEA
    1007  0053  012F 0042           BRANCH    HEARSRC6  NO THEN CONTINUE THE< 1026>
    1008  0026  004F 0043           TCY       15
    1009  004C  0029 0044           TMA
    1010  0018  009A 0045           LDX       5
    1011  0031  0009 0046           MNEA
    1012  0062  012F 0047           BRANCH    HEARSRC6                 < 1026>
    1013  0045  0098 0048           LDX       1
    1014  000A  004B 0049           TCY       13
    1015  0015  0029 0050  ZEROROM1 TMA
    1016  002B  0098 0051  ZEROROMA LDX       1
```

- 97 -

Table XII cont'd

```
CD2705     ASSEMBLER FOR  270   CHIP VERS 00 02      02/07/80 (80 038) 15:15:19
                                                        ROM PAGE  7 PAGE 0025
     STMT  PC  CODE PLOC                                            <DEST >
     1017 0056 0045 0052              TCY       10
     1018 002C 0060 0053   CLEAR      TCMIY     0       CLEAR WORDS 10 TO 13
     1019 0058 5057 0054              YNEC      14
     1020 0030 012C 0055              BRANCH    CLEAR                 < 1018>
     1021 0060 0045 0056              TCY       10
     1022 0041 00BF 0057              RETN
     1023 0002 00EE 0058              ALEC      7
     1024 0005 0178 0059   .          BRANCH    HEARIT10              < 1028>
     1025 000B 008C 0060              BL        HOWMANY               < 0461>
          0017 011F 0061                           '
     1026 002F 0085 0062   HEARSRC6 CALLL        INCPOINT             < 1423>
          005E 018C 0063
     1027 003C 011C 0064              BRANCH    HEARSRC               < 1056>
     1028 0078 0063 0065   HEARIT10 TCMIY       12      SAY NOT FOUND
     1029 0071 006B 0066   SAY1       TCMIY     13
     1030 0063 0091 0067   HEARIT     LDX       8
     1031 0047 0044 0068              TCY       2
     1032 000E 0060 0069              TCMIY     0
     1033 001D 0091 0070   HEARBEGN LDX         8
     1034 003B 0040 0071              TCY       0
     1035 0076 0061 0072              TCMIY     8
     1036 006D 00BF 0073              RETN
     1037 005B 0089 0074   LINK.      BL        LINK                  < 1248>
          0036 0178 0075
     1038 006C 0041 0076   HEARBEG    TCY       8
     1039 0059 0023 0077              TBIT      3
     1040 0032 0110 0078              BRANCH    HEARROM               < 1048>
     1041 0064 019D 0079   HEARBEG2 CALL        HEARBEGN              < 1033>
     1042 0049 0083 0080              CALLL     TRANS-3               < 1615>
          0012 0198 0081
    .1043 0025 01AB 0082              CALL      ZEROROMA SAY WHICH WORD?  < 1016>
     1044 004A 0066 0083              TCMIY     6
     1045 0014 0061 0084   SAY1106    TCMIY     8
     1046 0029 0086 0085   ADDCTR6    CALLL     SPK+DISP              < 0837>
          0052 01FB 0086
     1047 0024 0087 0087              BL        ADDWDS2               < 1910>
          0048 0149 0088
     1048 0010 0098 0089   HEARROM    LDX       1
     1049 0021 004B 0090              TCY       13
     1050 0042 0023 0091              TBIT      3
     1051 0004 0164 0092              BRANCH    HEARBEG2              < 1041>
     1052 0009 009A 0093   HEARSRC1 LDX         5
     1053 0013 0047 0094              TCY       14
     1054 0027 0060 0095              TCMIY     0
     1055 004E 0060 0096              TCMIY     0
     1056 001C 0083 0097   HEARSRC    CALLL     TRANS-3               < 1615>
          0039 0198 0098
     1057 0072 008D 0099              CALLL     LSTUMPER              < 1491>
          0065 01AB 0100
     1058 004B 0044 0101              TCY       2
     1059 0016 0063 0102              TCMIY     12
     1060 002D 0086 0103              BL        SPK+DISP              < 0837>
          005A 017B 0104
     1061 0034 01AB 0105   MODSELEC CALL        ZEROROMA              < 1016>
     1062 006B 006D 0106              TCMIY     11
     1063 0051 0064 0107              TCMIY     2
     1064 0022 004B 0108              TCY       13
```

- 98 -

Table XII cont'd

```
CR2705     ASSEMBLER FOR  270   CHIP VERS 00 02        02/07/80 (80 038) 15 15 19
                                                       ROM PAGE   7 PAGE 0026
     STMT  PC   CODE PLOC                                         :DEST :
     1065 0044 0086 0109          CALL    SPK+DSP2                : 0834:
          0008 01FF 0110
     1066 0011 0098 0111          LDX     1          IS THERE A DROPIN IN PLACE
     1067 0023 002A 0112          TMY
     1068 0046 0059 0113          YNEC    9          IF SO THEN THERE IS A 9 AT
     1069 000C 014D 0114          BRANCH  DP/KB2     2B                    : 1074:
     1070 0019 0041 0115          TCY     8          ALTERNATE BETWEEN THE
     1071 *                               RESIDENT AND THE DROPIN
     1072 *                               ROMS
     1073 0033 008F 0116          BL      ZAP                              : 2028:
          0066 0118 0117
     1074 004D 0041 0118  DP/KB2  TCY     8          WHY DO THIS?
     1075 001A 0091 0119          LDX     8
     1076 0035 00A7 0120          RBIT    3
     1077 006A 0080 0121  DSP/    BL      DISP/KB                          : 0078:
          0055 0100 0122
     1078 002A 0062 0123  PRESSGO TCMIY   4
     1079 0054 0041 0124          TCY     8
     1080 0028 00A0 0125          SBIT    0
     1081 0050 01AB 0126          CALL    ZEROROMA   PRESS GO TO DO        : 1016:
     1082 0020 0067 0127          TCMIY   14         SOME MORE
     1083 0040 0114 0128          BRANCH  SAY1106                          : 1045:
```

- 99 -

Table XII cont'd

```
CD2705    ASSEMBLER FOR  270   CHIP VERS 00 02        02/07/60 (80 038) 15-15 19
                                                     ROM PAGE  8 PAGE 0027
  STMT  PC   CODE PLOC                                           <DEST >
  1084                              ORGPG       8
  1085 0000 00A6 0001  WORDMAK9 RBIT   1
  1086 0001 00E0 0002           ALEC        0
  1087 0003 013F 0003           BRANCH      WORDMAK8              < 1090>
  1088 0007 0091 0004           LDX         8
  1089 000F 0085 0005           BL          READIT12             < 1401>
       001F 0110 0006
  1090 003F 0083 0007  WORDMAK& CALLL   PUTIN5                   < 1653>
       007F 0194 0008
  1091 007E 006E 0009  WORDMAK8 CALLL   HEARIT                   < 1030>
       007D 01E3 0010
  1092 007B 0086 0011           BL          MEMADDR              < 0914>
       0077 0136 0012
  1093 006F 0040 0013  COMPARE  TCY     0
  1094 005F 009C 0014  COMPARO  LDX     3
  1095 003E 0029 0015           TMA
  1096 007C 0098 0016           LDX         1         COMPARE LSDS
  1097 0079 0009 0017           MNEA                  NOT EQUAL THEN WRONG
  1098 0073 0169 0018           BRANCH      WRONG                < 1119>
  1099 0067 0094 0019           LDX         2         EQUAL THEN COMPARE MSDS
  1100 004F 0006 0020           CLA
  1101 001E 0020 0021           TBIT        0
  1102 003D 0175 0022           BRANCH      ONE                  < 1104>
  1103 007A 016B 0023           BRANCH      ZERO                 < 1105>
  1104 0075 0078 0024  ONE      ACACC   1
  1105 006B 0090 0025  ZERO     LDX     0
  1106 0057 0009 0026           MNEA
  1107 002E 0169 0027           BRANCH      WRONG                < 1119>
  1108 005C 0005 0028           IYC
  1109 003B 0059 0029           YNEC        9         COMPARE ALL 9 DIGITS
  1110 0070 015F 0030           BRANCH      COMPARO              < 1094>
  1111 0061 00BF 0031           RETN
  1112 0043 0084 0032           CALLL       EIGHT7               < 0430>
       0006 01CB 0033
  1113 000D 0045 0034           TCY         10
  1114 001B 00E4 0035           ALEC        2
  1115 0037 010E 0036           BRANCH      RIGHT                < 1144>
  1116 006E 0046 0037           TCY         6         INCREMENT LETTER
  1117 005D 0032 0038           IMAC
  1118 003A 008D 0039           BL          RIGHT2A              < 1458>
       0074 0173 0040
  1119 0069 00BF 0041  WRONG    RETN
  1120 0053 0084 0042           CALLL       EIGHT7               < 0430>
       0026 01CB 0043
  1121 004C 0041 0044           TCY         8
  1122 0018 00E4 0045           ALEC        2
  1123 0031 010C 0046           BRANCH      TRYAGAIN             < 1183>
  1124 0062 00EC 0047           ALEC        3
  1125 0045 0160 0048           BRANCH      LSSCORE              < 1133>
  1126 000A 00A6 0049  WRONG2   RBIT    1
  1127 0015 0098 0050           LDX         1
  1128 002B 0049 0051           TCY         9
  1129 0056 0065 0052           TCMIY       10
  1130 002C 0006 0053           CLA
  1131 0058 00CB 0054           ACNAA       13
  1132 0030 016D 0055           BRANCH      RGHTWRNG             < 1148>
  1133 0060 004A 0056  LSSCORE  TCY     5
```

Table XII cont'd

```
CD2705     ASSEMBLER FOR  270   CHIP VERS 00 02        02/07/80 (80 039) 15 15 19
                                                        ROM PAGE  8 PAGE 0028
     STMT  PC  CODE PLOC                                               (DEST )
     1134 0041 0C9D 0057           CALLL     PUT6INM                   ( 1701)
          0002 01BF 0058
     1135 0005 0C89 0059           BL        SCORE                     ( 1227)
          000B 013A 0060
     1136 0017 0091 0061  ZAPCOMP  LDX       8
     1137 002F 0047 0062           TCY       14
     1138 0C5E 0029 0063           TMA
     1139 003C 006F 0064           RETN
     1140 0078 0005 0065           IYC                       IS THE # FLASHED EQUAL TO
     1141 0071 0009 0066           MNEA                      THE # OF THE CORRECT ONE?
     1142 0063 0169 0067           BRANCH    WRONG                     ( 1119)
     1143 0047 0041 0068           TCY       8
     1144 000E 002D 0069  RIGHT    TYA
     1145 001D 0098 0070           LDX       1
     1146 003B 0049 0071           TCY       9
     1147 0076 006D 0072           TCMIY     11            PUT ADDRESS OF CORRECT
     1148 006D 002D 0073  RGHTWRNG TAMIYC
     1149 005B 0065 0074           TCMIY     10            PUT ADDRESS OF TONES
     1150 0036 0060 0075           TCMIY     0             IN REG 1
     1151 006C 0060 0076           TCMIY     0
     1152 0059 004F 0077           TCY       15
     1153 0032 0006 0078           CLA
     1154 0064 0086 0079           CALLL     SPK+DSP                   ( 0836)
          0049 01FD 0080
     1155 0012 008A 0081           CALLL     RATE2                     ( 0773)
          0025 01BB 0082
     1156 004A 0088 0083           CALLL     RBIT3-12                  ( 0296)
          0014 01E5 0084
     1157 0029 0089 0085           CALLL     LINK0                     ( 1253)
          0052 01F6 0086
     1158 0024 008B 0087           CALLL     BLANKDIS                  ( 1739)
          0048 0198 0088
     1159 *                                  · PUT ADDRESS FOR WRONG OR
     1160 *                                  RIGHT PRAISE PHRASES IN ROM
     1161 0010 008E 0089           CALLL     ZEROROM1  ADDRESS AREA    ( 1015)
          0021 0195 0090
     1162 0042 004D 0091           TCY       11
     1163 0004 002D 0092           TAMIYC
     1164 0009 0091 0093           LDX       8
     1165 0013 0040 0094           TCY       0
     1166 0027 006A 0095           TCMIY     5
     1167 004E 007D 0096           ACACC     11
     1168 001C 0028 0097           TAY
     1169 0039 0032 0098  INCSCORE IMAC                      INCREMENT POINTER FOR HOW
     1170 0072 002F 0099           TAM                       MANY HAVE BEEN DONE
     1171 0065 0042 0100           TCY       4               CHOOSE WHICH PRAISE
     1172 004B 0029 0101           TMA                       PHRASE YOU USE
     1173 0016 00EC 0102  RANDSCOR ALEC      3
     1174 002D 0134 0103           BRANCH    LINK5A                    ( 1176)
     1175 005A 007F 0104           ACACC     15
     1176 0034 004C 0105  LINK5A   TCY       3
     1177 0068 002F 0106           TAM         ·
     1178 0051 0015 0107  LINK5    AMAAC
     1179 *                                  ADD IT TO THE STARTING ADDRESS
     1180 0022 0085 0108           CALLL     LDX1      OF THE PRAISE PHRASE( 1332)
          0044 01F9 0109
     1181 0008 0086 0110           CALLL     SPK+DISP                  ( 0837)
```

0036559

Table XII cont'd

```
CD2705      ASSEMBLER FOR  270    CHIP VERS 00 02        02/07/80 (80 038) 15 15 19
                                                          ROM PAGE  8 PAGE 0029
     STMT  PC  CODE PLOC                                                      <DEST >
           0011 01FB 0111
     1182 0023 0089 0112          BL        LINKEDIT                          < 1251>
           0046 0147 0113
     1183 000C 0021 0114 TRYAGAIN TBIT      2
     1184 0019 010A 0115          BRANCH    WRONG2                            < 1126>
     1185 0033 00A1 0116          SBIT      2          SET REPEAT FLAG
     1186 0066 00A6 0117          RBIT      1          RESET ENTER FLAG
     1187 004D 0040 0118          TCY       0          SET FLAG FOR RETN$BCH
     1188 001A 006A 0119          TCMIY     5
     1189 0035 0049 0120          TCY       9          ZERO DISPLAY POINTER
     1190 006A 0060 0121          TCMIY     0
     1191 0055 008E 0122          CALLL     ZEROROMA                          < 1016>
           002A 01AB 0123
     1192 0054 0067 0124          TCMIY     14         SAY WRONG TRY AGAIN
     1193 0028 006E 0125          TCMIY     7
     1194 0050 008E 0126          BL        ADDCTR6                           < 1046>
           0020 0129 0127
```

Table XII cont'd

```
CD2705     ASSEMBLER FOR   370   CHIP VERS 00 02        02/07/90 (90 038) 15 15 19
                                                              ROM PAGE  9 PAGE 0030
                                                                         <DEST >
STMT  PC  CODE PLOC
1195                            ORGPG     9
1196 0000 004E 0001  PERFECT1  TCY       7
1197 0001 002A 0002            TMY
1198 0003 005C 0003            YNEC      3
1199 0007 011F 0004            BRANCH    PERFECT                          < 1201>
1200 000F 0077 0005            ACACC     14
1201 001F 008E 0006  PERFECT   CALLL     ZEROROMA                         < 1016>
     003F 01AB 0007
1202 *                              PERFECT SCORE OR
1203 007F 00CD 0008            ACNAA     11         YOU WIN
1204 007E 002D 0009            TAMIYC
1205 007D 006E 0010            BL        SAY1106                          < 1045>
     007B 0114 0011
1206 0077 004A 0012  SCOREIS   TCY       5
1207 006F 0029 0013            TMA
1208 005F 0015 0014            AMAAC                   WRONG IN REG 4
1209 003E 008E 0015            CALLL     ZEROROMA                         < 1016>
     007C 01AB 0016
1210 0079 0085 0017  NUMB64    CALLL     TCMIY4                           < 1330>
     0073 01BE 0018
1211 0067 0086 0019            CALLL     SPK+DISP                         < 0837>
     004F 01FB 0020
1212 001E 0082 0021            CALLL     TRANSFER                         < 0582>
     003D 0190 0022
1213 007A 0082 0023            CALLL     ZAPSHIFT                         < 0692>
     0075 018C 0024
1214 006B 008B 0025  STARS     CALLL     BLANKDIS                         < 1739>
     0057 0198 0026
1215 002E 0046 0027  STARS2    TCY       6
1216 005C 0091 0028  STARS3    LDX       8
1217 0038 0029 0029            TMA
1218 0070 0040 0030            TCY       0
1219 0061 00BF 0031            RETN
1220 0043 0098 0032            LDX       1
1221 0006 00E0 0033  STARS1    ALEC      0                                < 1227>
1222 000D 013A 0034            BRANCH    SCORE
1223 001B 007F 0035            ACACC     15
1224 0037 0067 0036            TCMIY     14
1225 006E 00F0 0037            YMCY      0                                < 1221>
1226 005D 0106 0038            BRANCH    STARS1
1227 003A 004A 0039  SCORE     TCY       5          PERFECT SCORE?        < 1216>
1228 0074 01DC 0040            CALL      STARS3
1229 0069 0066 0041            TCMIY     6
1230 0053 00E0 0042            ALEC      0                                < 1196>
1231 0026 0100 0043            BRANCH    PERFECT1                         < 1215>
1232 004C 01AE 0044  SCORE2    CALL      STARS2     # RIGHT               < 1016>
1233 0018 008E 0045            CALLL     ZEROROMA
     0031 01AB 0046
1234 *                              ADD # TO ADDRESS OF THE
1235 0062 0085 0047            CALLL     TCMIY4                           < 1330>
     0045 01BE 0048
1236 000A 01AE 0049            CALL      STARS2                           < 1215>
1237 0015 0085 0050            CALLL     LDX1                             < 1332>
     002B 01F9 0051
1238 0056 0086 0052            CALLL     SPK+DISP                         < 0837>
     002C 01FB 0053
1239 0058 0082 0054            CALLL     TRANSFER                         < 0582>
```

- 103 -

Table XII cont'd

```
_02705    ASSEMBLER FOR  270   CHIP VERS 00 02      02/07/80 (80 038) 15:15.19
                                                       ROM PAGE  9 PAGE 0031
     STMT  PC  CODE PLOC                                        <DEST >
          0030 0180 0055
     1240 0060 002A 0056           TMY
     1241 0041 005C 0057           YNEC      3
     1242 0002 010B 0058           BRANCH    NOTLS                        < 1244>
     1243 0005 007F 0059           ACACC     15        IN LETTER STUMPERS YOU
     1244 000B 006E 0060  NOTLS    CALLL     ZEROROMA  SAY YOU REMBERED 000< 1016>
          0017 01AB 0061
     1245 002F 0060 0062           TCMIY     0         HERE IS YOUR SCORE
     1246 005E 0073 0063           ACACC     12        0000
     1247 003C 002D 0064           TAMIYC              CORRECT
     1248 0078 0098 0065  LINK     LDX       1         INITIALIZE LINK EDIT POINT
     1249 0071 004F 0066           TCY       15
     1250 0063 0060 0067           TCMIY     0
     1251 0047 0086 0068  LINKEDIT CALLL     MEMADDR                      < 0914>
          000E 01B6 0069
     1252 001D 0086 0070  LINKIT   CALLL     LOADRESS                     < 0844>
          003B 01FC 0071
     1253 0076 0098 0072  LINKO    LDX       1
     1254 006D 0047 0073           TCY       14
     1255 005B 0065 0074           TCMIY     10        INITIALIZE ROM ADDRESS
     1256 *                              POINTER
     1257 0036 0047 0075  LINK1    TCY       14
     1258 006C 002A 0076           TMY
     1259 0059 0029 0077           TMA                 TRANSFER ONE DIGIT TO ACC
     1260 *                        FROM REGISTER 1
     1261 0032 004F 0078           TCY       15
     1262 0064 002A 0079           TMY
     1263 0049 0000 0080           COMX
     1264 0012 002F 0081           TAM                 TRANSFER TO LINK EDIT REG6
     1265 0025 0000 0082           COMX
     1266 004A 0047 0083           TCY       14
     1267 0014 0032 0084           IMAC                INCREMENT ROM ADDRESS
     1268 0029 002F 0085           TAM                 POINTER
     1269 0052 002A 0086           TMY
     1270 0024 0029 0087           TMA
     1271 0048 004F 0088           TCY       15
     1272 0010 002A 0089           TMY
     1273 0021 009E 0090           LDX       7
     1274 0042 002F 0091           TAM                 TRANSFER TO LINK EDIT REG7
     1275 0004 0098 0092           LDX       1
     1276 0009 004F 0093           TCY       15        INCREMENT LINK EDIT POINTER
     1277 0013 0032 0094           IMAC
     1278 0027 002C 0095           TAMDYN
     1279 004E 0032 0096           IMAC                INCREMENT ROM ADDRESS
     1280 001C 002C 0097           TAMDYN              POINTER
     1281 0039 00E3 0098           ALEC      12        ADDRESS IS FINISHED?
     1282 0072 0136 0099           BRANCH    LINK1                        < 1257>
     1283 0065 00BF 0100           RETN
     1284 004B 0033 0101           MNEZ
     1285 0016 0168 0102           BRANCH    ENDOFPH1  CHECK TO SEE IF YOU < 1289>
     1286 002D 0029 0103  ENDOFPH  TMA                 THE END OF THE PHRASE
     1287 005A 00E9 0104           ALEC      1
     1288 0034 010C 0105           BRANCH    FILBLANK                     < 1296>
     1289 0068 004F 0106  ENDOFPH1 TCY       15
     1290 0051 0033 0107           MNEZ
     1291 0022 011D 0108           BRANCH    LINKIT                       < 1252>
     1292 0044 0040 0109           TCY       0
```

- 104 -

Table XII cont'd

```
CD2705     ASSEMBLER FOR   270   CHIP VERS 00 02     02/07/80 (90 038) 15 15 19
                                                        ROM PAGE  9 PAGE 0032
       STMT  PC  CCDE PLOC                                          <DEST >
       1293 0008 0092 0110              LDX      4
       1294 0011 004F 0111              TCM1Y    15
       1295 0023 0087 0112              BL       SPEAK                  < 1844>
            0046 013E 0113
       1296 000C 0004 0114   FILBLANK   DYN
       1297 0019 0055 0115              YNEC     10
       1298 0033 012D 0116              BRANCH   ENDOFPH                < 1286>
       1299 0066 004F 0117              TCY      15
       1300 004D 0029 0118              TMA
       1301 001A 0077 0119              ACACC    14
       1302 0035 002D 0120              TAMIYC
       1303 006A 0092 0121              LDX      4
       1304 0055 002E 0122              TAMZA
       1305 002A 0098 0123              LDX      1
       1306 0054 0045 0124              TCY      10
       1307 0028 0087 0125              LDP      14
       1308 0050 0033 0126              MNEZ
       1309 0020 017F 0127              BRANCH   NOTZERO                < 1837>
            ******** NOTZERO  IS NOT ON SAME ROM PAGE
            ******** LAST ERROR AT  0814
       1310 0040 0107 0128         .    BRANCH   FROM421                < 1835>
            ******** FROM421  IS NOT ON SAME ROM PAGE
            ******** LAST ERROR AT  1309
       1311 *************       0 LEFT     ******************
```

0036559

Table XII cont'd

```
STMT  PC  CODE PLOC                                                      <DEST >
1312                              ORGPG     10
1313 0000 002F 0001  TAMA C      TAM
1314 0001 0167 0002              BRANCH    ADDCARRY                      < 1334>
1315 0003 0090 0003  TIMEUP      LDX       0            *
1316 0007 0029 0004              TMA                    *
1317 000F 0009 0005              MNEA                   *
1318 001F 00B0 0006              TDO                    *
1319 003F 000D 0007              SETR                   TURN ON NEW R-LINE
1320 007F 004F 0008              TCY       15
1321 007E 0036 0009              RSTR                   R-15, TURN OFF FILAMENT
1322 007D 000E 0010              KNEZ
1323 007B 0169 0011              BRANCH    TESTJAM1                      < 1355>
1324 0077 004A 0012              TCY       5
1325 006F 009A 0013  CARRYON5    LDX       5
1326 005F 017A 0014              DRANCH    CARRYON                       < 1338>
1327 *
1328 *   CARRY· FOR ADDITION IN ROM ADDR SECTION OF RAM
1329 *
1330 003E 0062 0015  TCMIY4      TCMIY     4
1331 007C 0066 0016  TCMIY6      TCMIY     6
1332 0079 0098 0017  LDX1        LDX       1
1333 0073 0045 0018  TCY10       TCY       10
1334 0067 0015 0019  ADDCARRY    AMAAC
1335 004F 013D 0020              BRANCH    CARRY                         < 1337>
1336 001E 016B 0021              BRANCH    NOCARRY                       < 1340>
1337 003D 002D 0022  CARRY       TAMIYC                 CARRY
1338 007A 0032 0023  CARRYON     IMAC                   INCREMENT MEM IF CARRY
1339 0075 013D 0024              BRANCH    CARRY                         < 1337>
1340 006B 002F 0025  NOCARRY     TAM
1341 0057 00BF 0026              RETN
1342 002E 0049 0027              TCY       9
1343 005C 0029 0028              TMA
1344 0038 00EC 0029              ALEC      3            CHECK TIMEOUT COUNTER
1345 0070 0106 0030              BRANCH    CAR1                          < 1348>
1346 0061 004B 0031  OFF         TCY       13
1347 0043 0036 0032              RSTR
1348 0006 0090 0033  CAR1        LDX       0
1349 000D 015E 0034              BRANCH    CAR3                          < 1377>
1350 001B 00EB 0035  CAR5        ALEC      13
1351 0037 015E 0036              BRANCH    CAR3                          < 1377>
1352 006E 0090 0037  KEYDOW      LDX       0
1353 005D 0045 0038              TCY       10
1354 003A 0080 0039              BL        KEYDOWN                       < 0155>
     0074 0132 0040
1355 0069 0008 0041  TESTJAM1    TKA
1356 0053 0028 0042              TAY
1357 0026 005B 0043              YNEC      13           K-LINES EQUALS 1, 4, 8?
1358 004C 012C 0044              BRANCH    TESTJAM                       < 1367>
1359 0018 002A 0045              TMY                    R-LINE EQUALS 2?
1360 0031 0054 0046              YNEC      2
1361 0062 012C 0047              BRANCH    TESTJAM                       < 1367>
1362 0045 0049 0048              TCY       9            ALREADY IN SELF-TEST?
1363 000A 0022 0049              TBIT      1
1364 0015 012C 0050            . BRANCH    TESTJAM                       < 1367>
1365 *                                    SET THE SELF-TEST FLAG
1366 002B 006B 0051              BL        SELFTEST                      < 1689>
     0056 0100 0052
```

- 106 -

Table XII cont'd

```
LD270S     ASSEMBLER FOR  270   CHIP VERS 00 02        02/07/80 (80 038) 15 15.19
                                                          ROM PAGE 10 PAGE 0034
   STMT  PC   CODE PLOC                                                   <DEST >
   1367 002C 0094 0053  TESTJAM  LDX       2
   1368 0058 0043 0054           TCY       12
   1369 0030 0020 0055           TBIT      0          TEST JAMCODE FLAG
   1370 0060 016E 0056           BRANCH    ·KEYDOW                        < 1352>
   1371 0041 0090 0057           LDX       0
   1372 0002 0029 0058           TMA
   1373 0005 0045 0059           TCY       10
   1374 000B 0023 0060           TBIT      3          TEST DEBOUNCE COUNTER
   1375 0017 011B 0061           BRANCH    CAR5       ACCEPT KEY IF COUNTE< 1350>
   1376 002F 0060 0062           TCMIY     0          RESET DEBOUNCE COUNTER
   1377 005E 0080 0063  CAR3     BL        DISP/KB1                       < 0097>
        003C 014F 0064                     .
   1378 0078 0092 0065  FOUR-11  LDX       4
   1379 0071 004D 0066  ELEVEN   TCY       11
   1380 0063 0167 0067           BRANCH    ADDCARRY                       < 1334>
   1381 0047 0040 0068  SAYLETTR TCY       0
   1382 000E 0062 0069           TCMIY     4
   1383 001D 0090 0070           LDX       0
   1384 003B 0047 0071           TCY       14
   1385 0076 008E 0072           CALLL     ZEROROM1                       < 1015>
        006D 0195 0073
   1386 005B 0180 0074    .       CALL      TAMA C.                       < 1313>
   1387 0036 004F 0075           TCY       15
   1388 006C 0090 0076           LDX       0
   1389 0059 0029 0077  SAYLETT1 TMA                  DOUBLE THE MSD AND
   1390 0032 0015 0078     ·      AMAAC                THE STARTING ADDRESS TO
   1391 0064 0098 0079           LDX       1          BOTH THE LSD AND MSD
   1392 0049 01F1 0080           CALL      ELEVEN                         < 1379>
   1393 0012 0006 0081           CLA
   1394 0025 00CF 0082           ACNAA     15         THE LETTERS START AT 000C
   1395 004A 01F9 0083           CALL      LDX1                           < 1332>
   1396 0014 0006 0084           CLA
   1397 0029 00CC 0085           ACNAA     3
   1398 0052 01F1 0086           CALL      ELEVEN                         < 1379>
   1399 0024 008E 0087  SAY2     BL   ·    ADDCTR6    RETURN TO(DISPLAY)  < 1046>
        0048 0129 0088
   1400 *                                 SET THE BIT FOR
   1401 0010 0062 0089  READIT12 TCMIY     4          PUTTING THE WORDS
   1402 *                                 OF THE SENTENCE IN
   1403 0021 0045 0090  FIVETO1  TCY       10         THE DISPLAY
   1404 0042 009A 0091  COMX .   LDX       5          TRANSFER THE ADDRESS
   1405 0004 0029 0092           TMA                  OF THE SENTENCE TO REG
   1406 0009 0098 0093           LDX       1          ONE
   1407 0013 002D 0094           TAMIYC           .
   1408 0027 0057 0095           YNEC      14
   1409 004E 0142 0096           BRANCH    COMX                           < 1404>
   1410 001C 00BF 0097           RETN
   1411 0039 0086 0098           CALLL     SPK+DISP                       < 0837>
        0072 01FB 0099
   1412 0065 0120 0100           BRANCH    LINK4                          < 1435>
   1413 004B 0040 0101  SAYTHE#  TCY       0
   1414 0016 0062 0102           TCMIY     4
   1415 002D 0084 0103           CALLL     LEVEL2                         < 0367>
        005A 01BA 0104
   1416 0034 0041 0105           TCY       8
   1417 0068 008F 0106           CALLL     DISPLAY#                       < 2081>
        0051 01B4 0107
```

- 107 -

Table XII cont'd

```
CLZ705     ASSEMBLER FOR   370    CHIP VERS 00 02      02/07/80 (90 038) 15·15 19
                                                          ROM PAGE 10 PAGE 0035
     STMT  PC   CODE PLOC                                               <DEST >
     1418 0022 0075 0108              ACACC    10
     1419 0044 008E 0109              CALLL    ZEROROMA  10 THE ACC      < 1016>
          0008 01AB 0110
     1420 0011 0180 0111              CALL     TAMA C.                   < 1313>
     1421 0023 0066 0112              TCMIY    6
     1422 0046 0124 0113              BRANCH   SAY2                      < 1399>
     1423 000C 0047 0114   INCPOINT   TCY      14
     1424 0019 016F 0115              BRANCH   CARRYON5                  < 1325>
     1425 0033 0083 0116   READIT4    LDP      12
     1426 0066 0023 0117              TBIT     3
     1427 004D 014A 0118              BRANCH   READIT5                   < 1652>
          ******** READIT5  IS NOT ON SAME ROM PAGE
          ******** LAST ERROR AT  1310
     1428 001A 00A3 0119              SBIT     3
     1429 0035 008E 0120              CALLL    ZEROROMA  SAY WHICH WORD PRESS< 1016>
          006A 01AB 0121
     1430 0055 0063 0122              TCMIY    12        LETTERS
     1431 002A 006F 0123              TCMIY    15
     1432 0054 0091 0124              LDX      8
     1433 0028 0040 0125              TCY      0
     1434 0050 00A0 0126              SBIT     0
     1435 0020 0089 0127   LINK4      BL       LINK                      < 1248>
          0040 0178 0128
     1436 *
     1437 *
     1438 *
```

Table XII cont'd

```
CD2705    ASSEMBLER FOR  270   CHIP VERS 00 02        02/07/80 (80 038) 15 15 19
                                                          ROM PAGE 11 PAGE 0036
      STMT  PC  CODE PLOC                                              <DEST >
      1439                         ORGPG     11
      1440 *                                                              o
      1441 C000 00EA 0001  STUMPERS TCMIY    5           PUT ADDRESS FOR PRESS THE
      1442 0001 00E9 0002           TCMIY    9           LETTERS I SAY IN THE ROM
      1443 *                            ADDRESS AREA
      1444 C003 0060 0003           TCMIY    0
      1445 0007 0060 0004           TCMIY    0
      1446 000F 01E7 0005           CALL     RIGHT2                     < 1459>
      1447 001F 0091 0006  ZERO89   LDX      8
      1448 C03F 0049 0007           TCY      9
      1449 007F 0060 0008           TCMIY    0
      1450 007E 00BF 0009           RETN
      1451 007D 00EB 0010           ALEC     1
      1452 007B 015F 0011           BRANCH   ZEROOONE                   < 1456>
      1453 0077 0098 0012           LDX      1          IN LEVEL 2 SAY PRESS THE
      1454 *                            LETTERS I SAY BACKWARDS
      1455 006F 0069 0013           TCMIY    9
      1456 005F 0086 0014  ZEROOONE CALLL    BLANK.COM                  < 0957>
           003E 01CD 0015
      1457 007C 0089 0016  LINK4A   BL       LINK                       < 1248>
           0079 0178 0017
      1458 0073 002F 0018  RIGHT2A  TAM
      1459 C067 0094 0019  RIGHT2   LDX      2
      1460 004F 004F 0020           TCY      15
      1461 001E 0029 0021           TMA
      1462 003D 00BF 0022           RETN
      1463 007A 019C 0023           CALL     RCOMX8                     < 1538>
      1464 0075 00EB 0024           ALEC     1          LEVEL=0?
      1465 006B 0106 0025           BRANCH   ZEROONE                    < 1472>
      1466 0057 0056 0026  LEVEL=2  YNEC     6          BACKWARDS
      1467 002E 0174 0027           BRANCH   SHIFTR1                    < 1480>
      1468 005C 0091 0028  SCORE6   LDX      8
      1469 0038 0046 0029           TCY      6
      1470 0070 006A 0030           TCMIY    5
      1471 0061 0089 0031           BL       STARS                      < 1214>
           0043 016B 0032
      1472 0006 00E0 0033  ZEROONE  ALEC     0
      1473 000D 0137 0034           BRANCH   LEVEL=0                    < 1475>
      1474 001B 007C 0035           ACACC    3
      1475 0037 007A 0036  LEVEL=0  ACACC    5          HAVE THEY DONE 5? OR 9?
      1476 006E 0002 0037           YNEA                
      1477 005D 012B 0038           BRANCH   LSTUMPER   DEPENDING ON THE LEV< 1491>
      1478 003A 015C 0039           BRANCH   SCORE6                     < 1468>
      1479 *                            HAVE THEY PUSHED 6 LETTERS
      1480 0074 007F 0040  SHIFTR1  ACACC    15
      1481 0069 0040 0041  SHIFT1SP TCY      0
      1482 0053 0003 0042  SHIFT2SP XMA                 SHIFT EVERYTHING OVER 1
      1483 0026 0005 0043           IYC                 PLACE AND PUT A SPACE IN
      1484 004C 0059 0044           YNEC     9          ZERO
      1485 0018 0153 0045           BRANCH   SHIFT2SP                   < 1482>
      1486 0031 00BF 0046           RETN
      1487 0062 0006 0047           CLA
      1488 0045 007D 0048           ACACC    11
      1489 000A 009C 0049           LDX      3
      1490 0015 01E9 0050           CALL     SHIFT1SP                   < 1481>
      1491 002B 0091 0051  LSTUMPER LDX      8
      1492 0056 0040 0052           TCY      0
```

- 109 -

Table XII cont'd

```
                                                                    <DEST >
STMT  PC   CODE PLOC
1493 002C 0064 0053              ICMIY    2
1494 0058 0041 0054              TCY      8
1495 0030 00BF 0C55              RETN     .
1496 0060 00A6 0056              RBIT     1
1497 0041 0042 0057              TCY      4
1498 0C02 0056 0058              TCMIY    6
1499 0005 003B 0059              CALLL    BLANKDIS                   < 1739>
     000B 0198 0060
1500 0017 0092 0061              LDX      4
1501 002F 0047 0062              TCY      14
1502 005E 0069 0063              TCMIY    9        PUT LIMIT FOR # OF LETTERS
1503 003C 0068 0064              TCMIY    1        IN 4-14 AND 4-15
1504 007B 008C 0065              CALLL    TCY6                       < 0480>
     0071 01DC 0066
1505 0063 01E7 0067              CALL     RIGHT2                     < 1459>
1506 *                           IN LEVEL 2 YOU DONT CHANGE
1507 0047 00E8 0068              ALEC     1        DISPLAY POINTER
1508 000E 019F 0069              CALL     ZERO89                     < 1447>
1509 001D 009C 0070   CGNSON1    LDX      3        TRANSFER POINTER TO Y
1510 003B 019C 0071              CALL     RCOMX8                     < 1538>
1511 0076 002A 0072              TMY               IS Y POINTING
1512 006D 005D 0073              YNEC     11       AT A
1513 005B 0132 0074              BRANCH   CONSON2   BLANK            < 1518>
1514 0036 01CE 0075              CALL     LDX2                       < 1537>
1515 006C 0020 0076              TBIT     0
1516 0059 0124 0077              BRANCH   FILLSPAC  YES, THEN FILL THE B< 1527>
1517 *                           WITH THE NEXT LETTER
1518 0032 009C 0078   CONSON2    LDX      3
1519 0064 019C 0079              CALL     RCOMX8                     < 1538>
1520 *                           PUT LSD IN THE ROM ADDRESS
1521 0049 008E 0080              CALLL    ZEROROM1  AREA             < 1015>
     0012 0195 0081
1522 0025 0085 0082              CALLL    TAMA.C.                    < 1313>
     004A 0180 0083
1523 0014 01CE 0084              CALL     LDX2                       < 1537>
1524 *                           PUT LEAST SIG DIG IN THE
1525 *                           ROM ADDRESS AREA
1526 0029 0085 0085              BL       SAYLETT1                   < 1389>
     0052 0159 0086
1527 0024 009A 0087   FILLSPAC   LDX      5
1528 0048 0047 0088              TCY      14
1529 0010 0029 0089              TMA
1530 0021 009C 0090              LDX      3
1531 0042 00BF 0091              RETN
1532 *                           PUT LSD IN BLANK SPOT
1533 0004 019C 0092              CALL     RCOMX8                     < 1538>
1534 0009 002F 0093              TAM
1535 0013 008F 0094              CALLL    FIVE15                     < 2091>
     0027 018C 0095
1536 *                           PUT MSD IN BLANK SPOT
1537 004E 0094 0096   LDX2       LDX      2
1538 001C 0049 0097   RCOMX8     TCY      9
1539 0039 00B2 0098   COMX8      COMX8
1540 0072 002A 0099              TMY               PUT DAM IN Y-POINTER
1541 0065 00B2 0100              COMX8
1542 004B 00BF 0101              RETN
1543 0016 002F 0102              TAM
```

Table XII cont'd

```
CD2705     ASSEMBLER FOR   270    CHIP VERS 00 05       02/07/80 (80 038) 15 15 19
                                                        ROM PAGE 11 PAGE 0036
    STMT  PC   CODE PLOC                                                <DEST >
    1544  002D 009E 0103            CALLL     HEARBEGN                  < 1033>
          005A 019D 0104
    1545  0034 0132 0105            BRANCH    CONSON2                   < 1518>
    1546  0068 002E 0106  READIT10  TAMZA
    1547  0051 0023 0107            TBIT      3
    1548  0022 0146 0108            BRANCH    READIT8                   < 1553>
    1549  0044 0021 0109            TBIT      2
    1550  0008 0123 0110            BRANCH    READIT9                   < 1552>
    1551  0011 0078 0111            ACACC     1          NEED TO SEE WHICH IS RIGHT
    1552  0023 0078 0112  READIT9   ACACC     1
    1553  0046 00A7 0113  READIT8   RBIT      3
    1554  000C 00A5 0114            RBIT      2
    1555  0019 0091 0115            LDX       8          PUT THE NUMBER OF THE
    1556  0033 0047 0116            TCY       14
    1557  0C66 002E 0117            TAMZA                CORRECT RESPONSE IN 8-15
    1558  004D 004C 0118            TCY       3
    1559  001A 0023 0119            TBIT      3
    1560  0035 0155 0120            BRANCH    READIT11                  < 1562>
    1561  006A 0077 0121            ACACC     14
    1562  0055 007D 0122  READIT11  ACACC     11
    1563  002A 006E 0123            CALLL     ZEROROMA                  < 1016>
          0054 01AB 0124
    1564  0028 0086 0125            CALLL     SPK+DSP                   < 0836>
          0050 01FD 0126
    1565  0020 0082 0127            BL        TRANSFER                  < 0582>
          0040 0100 0128
```

Table XII cont'd

```
CD2705     ASSEMBLER FOR  270.  CHIP VERS 00 02       02/07/80 (80.038) 15.15 19
                                                      ROM PAGE 12 PAGE 0039
 STMT  PC  CODE PLOC                                                   <DEST >
 1566                           ORGPG      12
 1567 *
 1568 *
 1569 *     OUTADDR-
 1570 *        LOADS CORRECT SPELLING BUFFER WITH ACTUAL SPELLING CODE
 1571 *
 1572 *
 1573 0000 0086 0001  OUTADDR   CALLL      OUTADDR2                    < 0854>
      0001 01BD 0002
 1574 0003 009C 0003            LDX        3
 1575 0007 0048 0004            TCY        1              *
 1576 000F 008D 0005            CALLL      COMX8                       < 1539>
      001F 01B9 0006
 1577 003F 0086 0007            CALLL      LOADR+1        PDC FOR OU< 0850>M
      007F 019E 0008
 1578 007E 0094 0009            LDX        2
 1579 007D 0048 0010            TCY        1
 1580 007B 008D 0011            CALLL      COMX8                       < 1539>
      0077 01B9 0012
 1581 006F 002F 0013            TAM
 1582 005F 0021 0014            TBIT       2              END OF SPELLING?
 1583 003E 011B 0015            BRANCH     SETBIT1                     < 1601>
 1584 007C 0091 0016  OUTADD.   LDX        8
 1585 0079 0048 0017            TCY        1
 1586 0073 0032 0018            IMAC                      INCREMENT COR SPEL
 1587 0067 002D 0019            TAMIYC
 1588 004F 0022 0020            TBIT       1              TEST FLAG
 1589 001E 017A 0021            BRANCH     LNK$ET                      < 1591>
 1590 003D 0100 0022            BRANCH     OUTADDR        ADDR--> AL< 1573>A
 1591 007A 00A6 0023  LNK$ET    RBIT       1
 1592 0075 0048 0024            TCY        1
 1593 006B 0060 0025  LNK$ET+1  TCMIY      0
 1594 0057 0020 0026            TBIT       0
 1595 002E 0106 0027            BRANCH     LOAD       TEST TO SEE IF DISPL< 1600>
 1596 005C 0086 0028            CALLL      LOADRESS   GET ADDRESS FOR THE < 0844>
      0038 01FC 0029
 1597 0070 0044 0030            TCY        2
 1598 0061 0023 0031            TBIT       3
 1599 0043 0169 0032            BRANCH     TRANS-1                     < 1611>
 1600 0006 008B 0033  LOAD      BL         LOADDISP                    < 1702>
      000D 017F 0034
 1601 001B 00B2 0035  SETBIT1   COMX8
 1602 0037 0044 0036            TCY        2
 1603 006E 00A2 0037            SBIT       1
 1604 005D 017C 0038            BRANCH     OUTADD                      < 1584>
 1605 *
 1606 *     TRANS-->STORES CALCULATED ADDRESS IN DAM FOR USE IN
 1607 *     LINK/EDIT
 1608 *
 1609 003A 0099 0039  LDX9TRAN  LDX        9
 1610 0074 0131 0040            BRANCH     TRANS-2                     < 1616>
 1611 0069 008E 0041  TRANS-1   LDP        7
 1612 0053 0021 0042            TBIT       2
 1613 0026 017A 0043            BRANCH     HEARO                       < 0990>
      ******** HEARO      IS NOT ON SAME ROM PAGE
      ******** LAST ERROR AT   1427
 1614 004C 0083 0044            LDP        12
```

Table XII cont'd

```
CD2705     ASSEMBLER FOR  270    CHIP VERS 00.02          02/07/80 (80 038) 15 15 19
                                                               ROM PAGE 12 PAGE 0040
                                                                          <DEST >
    STMT  PC  CODE PLOC
    1615 0018 0096 0045  TRANS-3  LDX     1
    1616 0031 0045 0046  TRANS-2  TCY     10
    1617 0062 0029 0047  TRANS    TMA                     LOADS ADDRESS FROM TO SAVE
    1618 0045 00B2 0046           COMX8                   ADDRESS AREA IN DAM
    1619 000A 002D 0049           TAMIYC
    1620 0015 00B2 0050           COMX8
    1621 002B 0057 0051           YNEC    14
    1622 0056 0162 0052           BRANCH  TRANS                               < 1617>
    1623 002C 00BF 0053           RETN
    1624 0058 0084 0054  TRANS1   CALLL   EIGHT7                              < 0430>
         0030 01CB 0055
    1625 0060 008E 0056           CALLL   ZEROROMA                            < 1016>
         0041 01AB 0057
    1626 0002 00E0 0058           ALEC    0
    1627 0005 016C 0059           BRANCH  WORDM                               < 1646>
    1628 000B 00E8 0060           ALEC    1
    1629 0017 0154 0061           BRANCH  READIT14                            < 1686>
    1630 002F 00E4 0062           ALEC    2
    1631 005E 0149 0063           BRANCH  PICTO                               < 1649>
    1632 003C 0005 0064           IYC                     PUT STARTING ADDRESS FOR
    1633 0078 0063 0065  PRPH     TCMIY   12              ZAP PRAISE PHRASE IN
    1634 *                                ROM ADDRESS
    1635 0071 004F 0066           TCY     15
    1636 0063 0060 0067           TCMIY   0
    1637 0047 0091 0068           LDX     8
    1638 000E 0042 0069           TCY     4
    1639 001D 0029 0070           TMA                     PUT PRAISE PHRASE POINTER
    1640 003B 0081 0071           LDP     8
    1641 0076 00EC 0072           ALEC    3
    1642 006D 0151 0073           BRANCH  LINK5                               < 1178>
         ******** LINK5     IS NOT ON SAME ROM PAGE
         ******** LAST ERROR AT  1613
    1643 005B 00CE 0074           ACNAA   7
    1644 0036 0151 0075           BRANCH  LINK5                               < 1178>
         ******** LINK5     IS NOT ON SAME ROM PAGE
         ******** LAST ERROR AT  1642
    1645 *                                PUT PRAISE PHRASE IN LINK
    1646 006C 0063 0076  WORDM    TCMIY   12
    1647 0059 0067 0077           TCMIY   14
    1648 0032 006E 0078  LINK6    BL      HEARBEGN                            < 1033>
         0064 011D 0079
    1649 0049 0061 0080  PICTO    TCMIY   8               SAY WHAT WORD GOES HERE
    1650 0012 006D 0081           TCMIY   11              SAY IT PRESS THE LETTERS
    1651 0025 0132 0082           BRANCH  LINK6                               < 1648>
    1652 004A 00A5 0083  READIT5  RBIT    2
    1653 0014 0045 0084  PUTIN5   TCY     10
    1654 0029 0098 0085  PUTIN5   LDX     1
    1655 0052 0029 0086           TMA
    1656 0024 009A 0087           LDX     5
    1657 0048 002D 0088           TAMIYC
    1658 0010 0057 0089           YNEC    14
    1659 0021 0129 0090           BRANCH  PUTIN5                              < 1654>
    1660 0042 00BF 0091           RETN
    1661 0004 0091 0092           LDX     8
    1662 0009 004C 0093           TCY     3
    1663 0013 0023 0094           TBIT    3
    1664 0027 0146 0095           BRANCH  READIT6                             < 1677>
```

Table XII cont'd

```
CD2705     ASSEMBLER FOR   270    CHIP VERS 00 02        02/07/80 (SO 038) 15 15 19
                                                              ROM PAGE 12 PAGE 0041
     STMT  PC   CODE PLOC                                                 <DEST >
     1665 004E 0092 0096  READIT7  LDX      4
     1666 001C 002B 0097           TYA               ADD TWO THE ADDRESS TO
     1667 0039 007F 0098           ACACC    15       ACCOUNT FOR THE ADDRESS
     1668 0072 0085 0099           CALLL    TCY10    OF LINK OF THE SENTE< 1333>
          0065 01F3 0100
     1669 004B 0082 0101           CALLL    PUTIN1.                    < 0670>
          0016 01C2 0102
     1670 002D 0086 0103           CALLL    MEMADDR                    < 0914>
          005A 01B6 0104
     1671 0034 0086 0105           CALLL    OUTADDR2                   < 0854>
          0068 01BD 0106
     1672 0051 0047 0107           TCY      14   -    GET THE NUMBER OF CHOICES
     1673 *                             AFTER THE SENTENCE
     1674 0022 0086 0108           CALLL    LOADR+1                    < 0850>
          0044 019E 0109
     1675 0008 004F 0110           TCY      15
     1676 0011 008D 0111           BL       READIT10                  < 1546>
          0023 0168 0112
     1677 0046 0092 0113  READIT6  LDX      4
     1678 000C 004F 0114           TCY     ·15
     1679 0019 0029 0115       .   TMA                                      .
     1680 0033 0085 0116           CALLL    ELEVEN                    < 1379>
          0066 01F1 0117                .
     1681 004D 0047 0118           TCY      14
     1682 001A 0029 0119           TMA
     1683 0035 0085 0120           CALLL    TCY10                     < 1333>
          006A 01F3 0121
     1684 0055 0042 0122           TCY      4
     1685 002A 014E 0123           BRANCH   READIT7                   < 1665>
     1686 0054 008B 0124  READIT14 CALLL    RBIT3-12                  < 0296>
          0028 01E5 0125
     1687 0050 0084 0126           BL       ERASE2                    < 0389>
          0020 012F 0127
```

Table XII cont'd

```
STMT  PC  CODE PLOC                    .                                    (DEST )
1688                            ORGPG      13
1689 0000 00A2 0001  SELFTEST  SBIT       1
1690 0001 0198 0002            CALL       BLANKDIS                          < 1739>
1691 0003 0074 0003            ACACC      2          TURN ON ALL SEGMENTS IN
1692 0007 002C 0004  ALLSEG    TAMDYN                 THE DISPLAY
1693 000F 0107 0005            BRANCH     ALLSEG                            < 1692>
1694 001F 011D 0006            BRANCH     DSP/KB2                           < 1764>
1695 *
1696 *     LOADDISP--)
1697 *     SUBROUTINE TO DISPLAY WORD
1698 *     TRANSFERING IT FROM THE COMPARE BUFFER
1699 *     TO THE DISPLAY BUFFER
1700 *
1701 003F 0066 0007  PUT6INM   TCMIY      6
1702 007F 0040 0008  LOADDISP  TCY        0          INITIALIZE Y/POINT
1703 007E 0094 0009  DPLOAD    LDX        2          TRANSFER LSW'S
1704 007D 0029 0010            TMA                   *
1705 007B 0090 0011            LDX        0          *
1706 0077 002F 0012            TAM                   *
1707 006F 009C 0013            LDX        3          TRANSFER MSW'S
1708 005F 0029 0014            TMA                   *
1709 003E 0098 0015            LDX        1          *
1710 007C 002D 0016            TAMIYC
1711 0079 0059 0017  LDONE+1   YNEC       9
1712 0073 017E 0018            BRANCH     DPLOAD     NO, LOOP--< 1703>
1713 0067 00BF 0019            RETN
1714 004F 0091 0020            LDX        8
1715 001E 0044 0021            TCY        2          TEST DISPLAY ONLY BIT
1716 003D 0020 0022            TBIT       0
1717 007A 0171 0023            BRANCH     DSP/KB2A                          < 1760>
1718 0075 0021 0024            TBIT       2
1719 006B 0143 0025            BRANCH     DISP&SAY                          < 1725>
1720 0057 0040 0026            TCY        0
1721 002E 0087 0027            LDP        14
1722 005C 0020 0028            TBIT       0          WHERE DO I RETURN TO?
1723 0038 0149 0029            BRANCH     ADDWDS2                           < 1910>
     ******* ADDWDS2  IS NOT ON SAME ROM PAGE
     ******** LAST ERROR AT   1644
1724 0070 0082 0030            BL         WORDMAK7                          < 0621>
     0061 0126 0031
1725 0043 0094 0032  DISP&SAY  LDX        2
1726 0006 004F 0033            TCY        15
1727 000D 0022 0034            TBIT       1
1728 001B 015D 0035            BRANCH     READIT15                          < 1730>
1729 0037 0087 0036  ADDWD     BL         SBIT3121                          < 1907>
     006E 0159 0037
1730 005D 008E 0038  READIT15  CALLL      ZEROROMA   ADDRESS OF SOUNDS OF< 1016>
     003A 01AB 0039
1731 0074 006D 0040            TCMIY      11         SILENCE
1732 0069 0064 0041            TCMIY      2
1733 0053 0086 0042            CALLL      SPK+DISP                          < 0837>
     0026 01FB 0043
1734 004C 0137 0044            BRANCH     ADDWD                             < 1729>
1735 *
1736 *
1737 *         BLANK THE DISPLAY
1738 *
```

Table XII cont'd

| STMT | PC | CODE | PLOC | | | | <DEST > |
|---|---|---|---|---|---|---|---|
| 1739 | 001B | 0040 | 0045 | BLANKDIS | TCY | 0 | |
| 1740 | 0031 | 0090 | 0046 | HERE | LDX | 0 | |
| 1741 | 0062 | 0068 | 0047 | | TCMIY | 1 | CLEAR THE DISPLAY |
| 1742 | 0045 | 0004 | 0048 | | DYN | | |
| 1743 | 000A | 0098 | 0049 | | LDX | 1 | |
| 1744 | 0015 | 006D | 0050 | | TCMIY | 11 | |
| 1745 | 002B | 0059 | 0051 | | YNEC | 9 | |
| 1746 | 0056 | 0131 | 0052 | | BRANCH | HERE | <1740> |
| 1747 | 002C | 00BF | 0053 | | RETN | | |
| 1748 | 0058 | 0113 | 0054 | | BRANCH | SETDSP1 | <1787> |
| 1749 | 0030 | 0098 | 0055 | DISPINC | LDX | 1 | |
| 1750 | 0060 | 004E | 0056 | | TCY | 7 | |
| 1751 | 0041 | 002A | 0057 | | TMY | | |
| 1752 | 0002 | 005D | 0058 | | YNEC | 11 | |
| 1753 | 0005 | 0132 | 0059 | | BRANCH | DISPINC2 | <1771> |
| 1754 | 000B | 0090 | 0060 | | LDX | 0 | |
| 1755 | 0017 | 0040 | 0061 | | TCY | 0 | |
| 1756 | 002F | 0060 | 0062 | ZRODISP | TCMIY | 0 | |
| 1757 | 005E | 0051 | 0063 | | YNEC | 8 | |
| 1758 | 003C | 012F | 0064 | | BRANCH | ZRODISP | <1756> |
| 1759 | 0078 | 0129 | 0065 | | BRANCH | PART1 | <1778> |
| 1760 | 0071 | 004C | 0066 | DSP/KB2A | TCY | 3 | |
| 1761 | 0063 | 0081 | 0067 | | LDP | 8 | |
| 1762 | 0047 | 0022 | 0068 | | TBIT | 1 | |
| 1763 | 000E | 0117 | 0069 | | BRANCH | ZAPCOMP | <1136> |
| | | | | ******** ZAPCOMP IS NOT ON SAME ROM PAGE | | | |
| | | | | ******** LAST ERROR AT 1723 | | | |
| 1764 | 001D | 0080 | 0070 | DSP/KB2 | BL | DISP/KB | <0078> |
| | 003B | 0100 | 0071 | | | | |
| 1765 | 0076 | 0090 | 0072 | PREGO | LDX | 0 | |
| 1766 | 006D | 0049 | 0073 | | TCY | 9 | |
| 1767 | 005B | 00A5 | 0074 | | RBIT | 2 | |
| 1768 | 0036 | 011D | 0075 | | BRANCH | DSP/KB2 | <1764> |
| 1769 | 006C | 00C5 | 0076 | PART2 | ACNAA | 10 | |
| 1770 | 0059 | 0152 | 0077 | | BRANCH | NXTDSP | <1779> |
| 1771 | 0032 | 005F | 0078 | DISPINC2 | YNEC | 15 | |
| 1772 | 0064 | 016C | 0079 | | BRANCH | PART2 | <1769> |
| 1773 | 0049 | 0090 | 0080 | | LDX | 0 | |
| 1774 | 0012 | 004E | 0081 | | TCY | 7 | |
| 1775 | 0025 | 0033 | 0082 | | MNEZ | | |
| 1776 | 004A | 0176 | 0083 | | BRANCH | PREGO | <1765> |
| 1777 | 0014 | 0198 | 0084 | | CALL | BLANKDIS | <1739> |
| 1778 | 0029 | 0006 | 0085 | PART1 | CLA | | |
| 1779 | 0052 | 0098 | 0086 | NXTDSP | LDX | 1 | |
| 1780 | 0024 | 0040 | 0087 | | TCY | 0 | |
| 1781 | 0048 | 002D | 0088 | DSPLETR | TAMIYC | | |
| 1782 | 0010 | 0078 | 0089 | | ACACC | 1 | |
| 1783 | 0021 | 0051 | 0090 | | YNEC | 8 | |
| 1784 | 0042 | 0148 | 0091 | | BRANCH | DSPLETR | <1781> |
| 1785 | 0004 | 0091 | 0092 | SETDSP | LDX | 8 | |
| 1786 | 0009 | 0060 | 0093 | | TCMIY | 0 | |
| 1787 | 0013 | 0090 | 0094 | SETDSP1 | LDX | 0 | |
| 1788 | 0027 | 00A1 | 0095 | | SBIT | 2 | |
| 1789 | 004E | 011D | 0096 | | BRANCH | DSP/KB2 | <1764> |
| 1790 | 001C | 008E | 0097 | SUM350 | CALLL | ZEROROMA | <1016> |
| | 0039 | 01AB | 0098 | | | | |
| 1791 | 0072 | 0083 | 0099 | | CALLL | TRANS-3 | <1615> |

Table XII cont'd

```
CD2705    ASSEMBLER FOR  270   CHIP VERS 00 02        02/07/80 (80 038) 15 15 19
                                                      ROM PAGE 13 PAGE 0044
   STMT  PC   CODE PLOC                                              <DEST >
         0065 0198 0100
   1792 004B 0086 0101         CALLL    MEMADDR                      < 0914>
         0016 0186 0102
   1793 002D 0086 0103  MAINLOOP CALLL  OUTADDR2                     < 0854>
         005A 01BD 0104
   1794 0034 0091 0105         LDX      8
   1795 0068 0085 0106         CALLL    TCY10                        < 1333>
         0051 01F3 0107
   1796 0022 0047 0108         TCY      14
   1797 0044 0060 0109         TCMIY    0
   1798 0008 0098 0110         LDX      1
   1799 0011 0045 0111         TCY      10
   1800 0023 0085 0112         CALLL    CARRYON                      < 1338>
         0046 01FA 0113
   1801 000C 0057 0114         YNEC     14
   1802 0019 012D 0115         BRANCH   MAINLOOP                     < 1793>
   1803 0033 0198 0116         CALL     BLANKDIS                     < 1739>
   1804 0066 011A 0117         BRANCH   QUIT                         < 1806>
   1805 004D 00F9 0118  FINLDISP YMCY    9
   1806 001A 0091 0119  QUIT    LDX      8
   1807 0035 0029 0120         TMA              PUT SUM IN THE DISPLAY
   1808 006A 0098 0121         LDX      1
   1809 0055 00FA 0122         YMCY     5
   1810 002A 002C 0123         TAMDYN
   1811 0054 014D 0124         BRANCH   FINLDISP                     < 1805>
   1812 0028 0090 0125         LDX      0
   1813 0050 0049 0126         TCY      9
   1814 0020 00A6 0127         RBIT     1
   1815 0040 011D 0128         BRANCH   DSP/KB2                      < 1764>
```

Table XII cont'd

```
CD2705    ASSEMBLER FOR  270   CHIP VERS 00.02        02/07/80 (80.038) 15:15:19
                                                              ROM PAGE 14 PAGE 0045
    STMT  PC  CODE PLOC                                              <DEST >
    1816                         ORGPG    14
    1817 ****************************************************************
    1818 * SPEAK                                                        *
    1819 * ROUTINE TO CONTROL SPEECH TO AND FROM SYNTHESIZER           *
    1820 *                                                              *
    1821 * IF SS--SET, SPEAK WAS CALLED                                 *
    1822 * IF SS--RESET, MEMADDR WAS CALLED                            *
    1823 *                                                              *
    1824 * IF SS=1, ADDRESSES ARE TRANSFERED FROM FILES 6 AND 7 TO FILE *
    1825 * 1, WORDS 10-13, ELSE IF SS=0, ADDRESS IS IN FILE 1 PRIOR TO CALL *
    1826 *                                                              *
    1827 * 2 POINTERS USED                                              *
    1828 *    1) LINK/EDIT POINTER FOR WORDS IN FILES 6 AND 7           *
    1829 *    2) ROM ADDR POINTER FOR WORDS IN FILE 1.                  *
    1830 *                                                              *
    1831 ****************************************************************
    1832 *                                                              *
    1833 0000 0083 0001  FROM821  CALLL    LDX9TRAN                    < 1609>
         0001 01BA 0002
    1834 0003 011F 0003           BRANCH   FILLLINK                    < 1836>
    1835 0007 0082 0004  FROM421  CALLL    PUTIN1                      < 0641>
         000F 01AF 0005
    1836 001F 0089 0006  FILLLINK BL       LINK0                       < 1253>
         003F 0176 0007
    1837 007F 0078 0008  NOTZERO  ACACC    1
    1838 007E 0043 0009           TCY      12
    1839 007D 0020 0010           TBIT     0
    1840 007B 0100 0011           BRANCH   FROM821                     < 1833>
    1841 0077 004D 0012           TCY      11
    1842 006F 0020 0013           TBIT     0
    1843 005F 0107 0014           BRANCH   FROM421  LINK EDIT IS FULL? < 1835>
    1844 003E 00B5 0015  SPEAK    SEAC
    1845 007C 0098 0016  SPEAK+1  LDX      1
    1846 0079 004F 0017           TCY      15
    1847 0073 0060 0018           TCMIY    0
    1848 0067 0098 0019  SPKLOP-1 LDX      1
    1849 004F 0047 0020           TCY      14
    1850 001E 0065 0021           TCMIY    10                   INITIALIZE ROM ADD
    1851 003D 002A 0022  SPKLOOP  TMY
    1852 007A 0000 0023           COMX                  GET WORD FROM LNK/EDT
    1853 0075 0029 0024  SPK      TMA                   LOAD WORD IN ACC
    1854 006B 0098 0025           LDX      1            POINTER
    1855 0057 0047 0026           TCY      14           *
    1856 002E 002A 0027  SPKLOP   TMY                   *
    1857 005C 002F 0028           TAM                   STORE WORD
    1858 0038 00BF 0029           RETN
    1859 0070 0047 0030           TCY      14           BUMP POINTER
    1860 0061 0032 0031           IMAC                  *
    1861 0043 002D 0032           TAMIYC                *
    1862 *                        GET FILE FOR NEXT WORD
    1863 0006 002A 0033           TMY
    1864 000D 009E 0034           LDX      7            FILE 6
    1865 *                        WORD--ACC
    1866 001B 01F5 0035           CALL     SPK     FILE 1           < 1853>
    1867 *                        POINTER
    1868 *                            *
    1869 *                        STORE WORD
```

- 118 -

Table XII cont'd

```
CD2705    ASSEMBLER FOR  270   CHIP VERS 00 02       02/07/80 (80 036) 15 15 19
                                                        ROM PAGE 14 PAGE 0046
                                                                      <DEST >
    STMT  PC  CODE PLOC
    1870 0037 004F 0036              TCY      15      BUMP LNK/EDT POINTER
    1871 006E 0032 0037              IMAC             IF > 15, RETURN
    1872 005D 0115 0038              BRANCH   NOMORE0                 < 1885>
    1873 003A 002C 0039              TAMDYN           STORE INCREMENT
    1874 *                         BUMP ROM AREA POINTER
    1875 0074 0032 0040              IMAC                             *
    1876 0069 002F 0041              TAM
    1877 0053 004F 0042              TCY      15                      *
    1878 0026 00EB 0043              ALEC     13               IS Y = 14?
    1879 004C 013D 0044              BRANCH   SPKLOOP                 < 1851>
    1880 0018 0029 0045              TMA
    1881 0031 0040 0046              TCY      0
    1882 0062 0092 0047              LDX      4
    1883 0045 0001 0048              ALEM                             *
    1884 000A 0176 0049              BRANCH   ADDWDS2.      *          < 1902>
    1885 0015 00B4 0050    NOMORE0   REAC
    1886 002B 0091 0051              LDX      8       8-0 TELLS YOU WHERE YOU
    1887 0056 0040 0052              TCY      0       TO GO TO
    1888 002C 0023 0053              TBIT     3
    1889 0058 011D 0054              BRANCH   BITSET0                 < 1901>
    1890 0030 0021 0055              TBIT     2
    1891 0060 0105 0056              BRANCH   LABEL                   < 1893>
    1892 0041 008F 0057         .    BL       FLSHLSWM                < 2034>
         0002 0156 0058
    1893 0005 008E 0059    LABEL     LDP      7
    1894 000B 0022 0060              TBIT     1
    1895 0017 012A 0061              BRANCH   PRESSGO                 < 1078>
         ******** PRESSGO  IS NOT ON SAME ROM PAGE
         ******** LAST ERROR AT   1763
    1896 002F 008A 0062              CALLL    RATE3                   < 0761>
         005E 0197 0063
    1897 003C 008D 0064              CALLL    ZERO89                  < 1447>
         0078 019F 0065
    1898 0071 009C 0066              LDX      3
    1899 0063 0043 0067              TCY      12
    1900 0047 008B 0068              CALLL    PUT6INM                 < 1701>
         000E 01BF 0069
    1901 001D 0080 0070    BITSET0   BL       DISP/KB                 < 0078>
         003B 0100 0071
    1902 0076 0091 0072    ADDWDS2.  LDX      8
    1903 006D 0044 0073              TCY      2
    1904 005B 0086 0074              LDP      6
    1905 0036 0021 0075              TBIT     2
    1906 006C 0136 0076              BRANCH   MEMADDR                 < 0914>
         ******** MEMADDR  IS NOT ON SAME ROM PAGE
         ******** LAST ERROR AT   1895
    1907 0059 009C 0077    SBIT3121  LDX      3
    1908 0032 0043 0078              TCY      12
    1909 0064 00A2 0079              SBIT     1
    1910 0049 0086 0080    ADDWDS2   CALLL    MEMADDR                 < 0914>
         0012 01B6 0081
    1911 0025 0043 0082    MEMADDR2  TCY      12      CS , GIVING SYN. COMMANDS
    1912 004A 000D 0083              SETR             R12 = 1
    1913 0014 0006 0084              CLA
    1914 0029 0075 0085    SPKREG    ACACC    10
    1915 0052 0045 0086              TCY '    10
    1916 0024 000D 0087              SETR
```

- 119 -

Table XII cont'd

CD2705     ASSEMBLER FOR   270   CHIP VERS 00 02        02/07/80 (80 038) 15 15 19
                                                          ROM PAGE 14 PAGE 0047
    STMT  PC   CODE PLOC                                                    <DEST >
    1917 0048 0036 0068              RSTR                      *
    1918 0010 0043 0089  SPKREG+1 TCY          12
    1919 0021 000D 0090              SETR
    1920 0042 0045 0091              TCY          10
    1921 0004 0006 0092              CLA
    1922 0009 0077 0093              ACACC        14           1ST PDC LOADS COMMAND
    1923 0013 000D 0094              SETR
    1924 0027 0036 0095              RSTR                      *
    1925 004E 004D 0096              TCY          11
    1926 001C 0036 0097              RSTR
    1927 0039 0045 0098              TCY          10
    1928 0072 000D 0099              SETR                      2ND PDC APPLIES TALK TO CTL8  ··
    1929 0065 0036 0100              RSTR                      *
    1930 004B 0045 0101              TCY          10
    1931 0016 0045 0102              TCY          10
    1932 002D 0008 0103              TKA
    1933 005A 000D 0104              SETR                      3RD PDC RELEASES OUTPUT
    1934 0034 0036 0105              RSTR                      *
    1935 0068 004D 0106              TCY          11
    1936 0051 000D 0107              SETR
    1937 0022 009C 0108              LDX          3
    1938 0044 004D 0109          .   TCY          11
    1939 0008 002F 0110              TAM
    1940 0011 0020 0111          .   TBIT         0           FINISHED SPEAKING?
    1941 0023 011D 0112              BRANCH       BITSET0                    < 1901>
    1942 0046 0012 0113              CCLA                      SPEAKING A SEQUENCE OF
    1943 *                                         LINKS OR A SINGLE PHRASE
    1944 000C 00E0 0114              ALEC         0
    1945 0019 0166 0115              BRANCH       RETN$BCH                   < 1947>
    1946 0033 0167 0116              BRANCH       SPKLOP-1                   < 1848>
    1947 0066 0091 0117  RETN$BCH LDX            8
    1948 004D 0040 0118              TCY          0           PUT THE RETURN FLAG IN THE
    1949 001A 0084 0119              LDP          2           ACC
    1950 0035 0029 0120              TMA
    1951 006A 00E0 0121              ALEC         0  .
    1952 0055 0165 0122              BRANCH       LEVEL1                     < 0429>
         ******* LEVEL1    IS NOT ON SAME ROM PAGE
         ******* LAST ERROR AT   1906
    1953 002A 0023 0123              TBIT         3
    1954 0054 012F 0124              BRANCH       ERASE2                     < 0389>
         ******* ERASE2    IS NOT ON SAME ROM PAGE
         ******* LAST ERROR AT   1952
    1955 0028 0088 0125              LDP          1
    1956 0050 00EB 0126              ALEC         1
    1957 0020 017C 0127              BRANCH       DSP9     '                 < 0217>
         ******* DSP9      IS NOT ON SAME ROM PAGE
         ******* LAST ERROR AT   1954
    1958 0040 0100 0128              BRANCH       RETN$BC1                   < 0204>
         ******* RETN$BC1 IS NOT ON SAME ROM PAGE
         ******* LAST ERROR AT   1957
    1959 *
    1960 *            END OF SPEECH CONTROL SUBROUTINE
    1961 *
    1962 *            ROM ADDRESSING SUBROUTINE:                             *
    1963 *            ASSUMES X AND Y HAVE BEEN DEFINED PRIOR TO CALLING     *
    1964 *                                                                   *
    1965 *                                                                   *

Table XII cont'd

```
CD2705    ASSEMBLER FOR  270   CHIP VERS 00 02      02/07/80 (80 038) 15 15.19
                                                    ROM PAGE 14 PAGE 0048
  STMT  PC   CODE PLOC                                              <DEST >
  1966 *        LOADS ADDRESS INTO ROM ADDRESS AREA                       *
  1967 *        ALL R LINES, ETC,..  REMAIN THE SAME AS WHEN              *
  1968 *        ENTERING SUBROUTINE.                                      *
  1969 *                                                                  *
  1970 ************************************************************************
  1971 *                                                                  *
  1972 *                                                                  *
  1973 *        END OF ROUTINE                                            
  1974 *                                                                  
```

Table XII cont'd

```
STMT  PC  CODE PLOC                                              <DEST >
1975                         ORGPG     15
1976 *
1977 *                   POWER UP / CLEAR ROUTINE
1978 *
1979 *         THIS ROUTINE SETS UP INITIAL CONDITIONS IN RAM
1980 *
1981 *
1982 0000 009E 0001  CLEAR1   LDX       7                 **
1983 0001 004F 0002           TCY       15
1984 0003 0006 0003           CLA
1985 0007 0031 0004  CLRLOOP  CPAIZ
1986 000F 0000 0005           COMX
1987 001F 002F 0006           TAM
1988 003F 002F 0007           TAM
1989 007F 002F 0008           TAM                         **
1990 007E 002F 0009           TAM
1991 007D 002E 0010           TAMZA
1992 007B 0036 0011           RSTR
1993 0077 0000 0012           COMX                        **
1994 006F 002F 0013           TAM
1995 005F 002C 0014           TAMDYN
1996 003E 0107 0015           BRANCH    CLRLOOP           **    < 1985>
1997 007C 00BF 0016           RETN
1998 0079 0096 0017           LDX       6
1999 0073 0187 0018           CALL      CLRLOOP           **    < 1985>
2000 0067 009A 0019           LDX       5
2001 004F 0187 0020           CALL      CLRLOOP                 < 1985>
2002 001E 0092 0021           LDX       4
2003 003D 0187 0022           CALL      CLRLOOP           **    < 1985>
2004 007A 0091 0023           LDX       8
2005 0075 0187 0024           CALL      CLRLOOP           **    < 1985>
2006 006B 0180 0025           CALL      CLEAR1            **    < 1982>
2007 0057 004B 0026           TCY       13
2008 002E 000D 0027           SETR
2009 005C 00B4 0028           REAC
2010 *
2011 *
2012 *
2013 0038 004D 0029           TCY       11
2014 0070 0036 0030           RSTR
2015 0061 0043 0031           TCY       12
2016 0043 000D 0032           SETR
2017 0006 0045 0033           TCY       10
2018 000D 000D 0034           SETR
2019 001B 0036 0035           RSTR
2020 0037 000D 0036           SETR
2021 006E 0036 0037           RSTR
2022 005D 004D 0038           TCY       11
2023 003A 000D 0039           SETR
2024 0074 0045 0040           TCY       10
2025 0069 000D 0041           SETR
2026 0053 0036 0042           RSTR
2027 0026 0086 0043           CALLL     MEMDRED                 < 0947>
     004C 01A2 0044
2028 0018 0091 0045  ZAP      LDX       8
2029 0031 0029 0046           TMA
2030 0062 0071 0047           ACACC     8
```

- 122 -

Table XII cont'd

```
CD2705    ASSEMBLER FOR   270   CHIP VERS 00 02      02/07/80 (80 038) 15 15 19
                                                         ROM PAGE 15 PAGE 0050
                                                                     <DEST >
STMT  PC   CODE PLOC
2031 0045 002E 0048           TAMZA
2032 000A 0071 0049           ACACC     8
2033 0015 0084 0050           BL        NEWMODE                     < 0347>
     002B 013D 0051
2034 0056 0020 0052  FLSHLSWM TBIT      0
2035 002C 0178 0053           BRANCH    READIT18                    < 2046>
2036 0058 004E 0054           TCY       7
2037 0030 0029 0055           TMA
2038 0060 00E8 0056           ALEC      1
2039 0041 015E 0057           BRANCH    FLASH                       < 2045>
2040 0002 00E4 0058           ALEC      2
2041 0005 0176 0059           BRANCH    PICTREAD                    < 2051>
2042 000B 008D 0060           LDP       11
2043 0017 0020 0061           TBIT      0
2044 002F 012B 0062           BRANCH    LSTUMPER                    < 1491>
       ******** LETUMPER IS NOT ON SAME ROM PAGE
       ******** LAST ERROR AT   1958
2045 005E 008A 0063  FLASH    BL        FLASH                       < 0755>
     003C 0160 0064
2046 0078 008C 0065  READIT18 BL        READIT20                    < 0571>
     0071 014D 0066
2047 0063 0060 0067  FIVE?    TCMIY     0
2048 0047 0091 0068           LDX       8
2049 000E 0042 0069           TCY       4
2050 001D 008C 0070           BL        FIVE?0                      < 0548>
     003B 0113 0071
2051 0076 0085 0072  PICTREAD CALLL     INCPOINT                    < 1423>
     006D 018C 0073
2052 005B 018C 0074           CALL      FIVE15                      < 2091>
2053 0036 009C 0075           LDX       3
2054 006C 002C 0076           TAMDYN
2055 0059 008D 0077           CALLL     FILLSPAC                    < 1527>
     0032 01A4 0078
2056 0064 002C 0079           TAMDYN
2057 0049 0060 0080           TCMIY     0
2058 0012 00E9 0081  LESSTHN9 ALEC      9
2059 0025 0113 0082           BRANCH    SMALLENO                    < 2071>
2060 004A 0047 0083  SUBTRA10 TCY       14      CONVERT THE # FROM HEX
2061 0014 0076 0084           ACACC     6       TO DECIMAL
2062 0029 0148 0085           BRANCH    CARRIES                     < 2065>
2063 0052 002D 0086           TAMIYC
2064 0024 0007 0087           DMAN
2065 0048 002F 0088  CARRIES  TAM
2066 0010 004B 0089           TCY       13
2067 0021 0032 0090           IMAC
2068 0042 002D 0091           TAMIYC
2069 0004 0029 0092           TMA
2070 0009 0112 0093           BRANCH    LESSTHN9                    < 2058>
2071 0013 004F 0094  SMALLENO TCY       15
2072 0027 0033 0095           MNEZ
2073 004E 014A 0096           BRANCH    SUBTRA10                    < 2060>
2074 001C 008B 0097  PICT3    CALLL     BLANKDIS                    < 1739>
     0039 0198 0098
2075 0072 009C 0099           LDX       3
2076 0065 004B 0100           TCY       13
2077 004B 0029 0101           TMA               ONE
2078 0016 00E0 0102           ALEC      0       OR
```

- 123 -

Table XII cont'd

```
CD2705     ASSEMBLER FOR   270    CHIP VERS 00 02        02/07/80 (80 038) 15.15.19
                                                          ROM PAGE 15 PAGE 0051
    STMT  PC  CODE PLOC                                                  <DEST >
    2079 002D 0108 0103            BRANCH   PIC       TWO                < 2086>
    2080 005A 00F4 0104  DISPLAY   YMCY     2          DIGITS IN THE NUMBER?
    2081 0034 0098 0105  DISPLAY#  LDX      -1         PUT THE MOST SIG
    2082 0068 002F 0106            TAM                 DIGIT IN 1-0
    2083 0051 0090 0107            LDX      0
    2084 0022 0064 0108            TCMIY    2
    2085 0044 00BF 0109            RETN
    2086 0008 009C 0110  PIC       LDX      3
    2087 0011 0047 0111            TCY      14
    2088 0023 0029 0112            TMA
    2089 *                                  PUT THE LEAST SIG DIG
    2090 0046 01DA 0113            CALL     DISPLAY   IN 1-1            < 2080>
    2091 000C 009A 0114  FIVE15    LDX      5         PUT FIVE FIFTEEN IN
    2092 0019 004F 0115            TCY      15    ~   THE ACC
    2093 0033 0029 0116            TMA
    2094 0066 00BF 0117            RETN
    2095 004D 00E4 0118  PICT2     ALEC     2
    2096 001A 0120 0119            BRANCH   FINE                        < 2103>
    2097 0035 008D 0120            CALLL    FILLSPAC                    < 1527>
         006A 01A4 0121
    2098 0055 00ED 0122            ALEC     11
    2099 002A 0120 0123            BRANCH   FINE                        < 2103>
    2100 0054 009A 0124            LDX      5
    2101 002B 0060 0125            TCMIY    0         IF AT THE END OF THE LIST
    2102 0050 0060 0126            TCMIY    0         THEN LOOPS AROUND TO THE
    2103 0020 0082 0127  FINE      BL       PUTIN1.   FIRST AGAIN       < 0670>
         0040 0142 0128
    2104 *                                  PUT THE ADDRESS OF THE
    2105 *                                  SPELLING IN 1
    2106                           END
```

Table XII cont'd

```
CD2705      ASSEMBLER FOR   270   CHIP VERS 00 02       02/07/80 (80 008) 15 15 19
                                                                    PAGE 0052
PAGE   STEP   FIRST   LAST
  0     128   0078    0202
  1     128   0203    0325
  2     128   0326    0454
  3     128   0455    0580
  4     128   0581    0707
  5     128   0708    0826
  6     128   0827    0966
  7     128   0967    1083
  8     127   1084    1194
  9     128   1195    1311
 10     128   1312    1438
 11     128   1439    1565
 12     127   1566    1687
 13     128   1688    1815
 14     128   1816    1974
 15     128   1975    2106
THERE ARE   2046 STEPS IN PROGRAM
THERE ARE   2046 INSTRUCTIONS IN PROGRAM
THERE ARE    369 LABELS IN PROGRAM
ASSEMBLY COMPLETED    0 ERRORS   48 WARNINGS
LAST ERROR AT   2044
```

Table XII cont'd

```
MNEMONIC VALUE  DEFN REFERENCES
ACACC         OPC   0151  0170  0186  0189  0192  0193  0331  0341  0439
                    0440  0492  0590  0649  0650  0688  0690  0774  0775
                    0776  0848  0860  0871  0920  0923  0940  0949  1002
                    1104  1167  1175  1200  1223  1243  1246  1301  1474
                    1475  1480  1488  1551  1552  1561  1562  1667  1691
                    1782  1914  1922  2030  2032  2061
ACNAA         OPC   0546  0564  1131  1394  1397  1643  1769
ADDCARRY      1304  0153  0175  1314  1380
ADDCTR6       1045  0383  1194  1399
ADDRES        0734  0721
ADDRESS       0594  0611  0734
ADDWD         1729  1734
ADDWDS2       1910  1047  1723
ADDWDS2.      1902  1884
ALEC          OPC   0120  0144  0184  0187  0190  0209  0262  0285  0288
                    0318  0320  0327  0336  0371  0411  0421  0450  0452
                    0456  0459  0630  0632  0644  0646  0664  0704  0710
                    0716  0786  0804  1023  1086  1114  1122  1124  1173
                    1221  1230  1281  1287  1344  1350  1451  1464  1507
                    1628  1630  1641  1878  1944  1951  1956  2038  2040
                    2058  2078  2095
ALEM          OPC   0490  1883
ALLRIGHT      0691  0620  0685  0689  0753
ALLSEG        1692  1693
AMAAC         OPC   0557  1178  1208  1334  1390
ARND+5        0193  0185  0188  0191
ATESEVEN      0781  0760
BITSET0       1901  1889  1941
BL            OPC   0095  0138  0146  0161  0202  0216  0224  0239  0241
                    0278  0338  0383  0424  0443  0536  0552  0617  0625
                    0669  0714  0734  0795  0816  0826  0966  0980  1025
                    1037  1047  1060  1073  1077  1089  1092  1118  1135
                    1182  1194  1205  1295  1354  1366  1377  1399  1435
                    1457  1471  1526  1565  1600  1648  1676  1687  1724
                    1729  1764  1836  1892  1901  2033  2045  2046  2050
                    2103
BLANKCOM      0957  1456
BLANKDIS      1739  0265  0293  0295  0354  0392  1158  1214  1499  1690
                    1777  1803  2074
BRANCH        OPC   0107  0113  0119  0121  0125  0129  0132  0136  0137
                    0142  0143  0145  0154  0160  0172  0174  0180  0185
                    0188  0191  0201  0205  0210  0212  0219  0223  0227
                    0230  0231  0236  0247  0251  0255  0259  0261  0264
                    0269  0270  0280  0283  0286  0289  0293  0313  0319
                    0321  0322  0325  0328  0332  0335  0337  0340  0343
                    0346  0358  0366  0372  0387  0388  0391  0397  0401
                    0405  0408  0410  0412  0419  0422  0438  0446  0451
                    0453  0454  0457  0460  0476  0478  0491  0494  0496
                    0505  0507  0512  0517  0519  0522  0526  0534  0545
                    0547  0550  0565  0570  0573  0575  0579  0580  0588
                    0605  0609  0611  0615  0620  0631  0633  0645  0647
                    0648  0665  0671  0675  0681  0685  0689  0700  0705
                    0711  0717  0719  0721  0723  0724  0728  0730  0736
                    0744  0751  0754  0763  0769  0771  0772  0787  0792
                    0805  0811  0814  0819  0820  0823  0832  0833  0835
                    0840  0888  0900  0904  0935  0939  0955  0964  0971
                    0973  0977  0979  0984  0988  0992  0998  1007  1012
```

- 126 -

0036559

Table XII cont'd

MNEMONIC VALUE   DEFN REFERENCES

| | | | | | | | | | |
|---|---|---|---|---|---|---|---|---|---|
| | | 1020 | 1024 | 1027 | 1040 | 1051 | 1069 | 1083 | 1087 | 1098 |
| | | 1102 | 1103 | 1107 | 1110 | 1115 | 1123 | 1125 | 1132 | 1142 |
| | | 1174 | 1184 | 1199 | 1222 | 1226 | 1231 | 1242 | 1282 | 1285 |
| | | 1286 | 1291 | 1298 | 1309 | 1310 | 1314 | 1323 | 1326 | 1335 |
| | | 1336 | 1339 | 1345 | 1349 | 1351 | 1358 | 1361 | 1364 | 1370 |
| | | 1375 | 1380 | 1409 | 1412 | 1422 | 1424 | 1427 | 1452 | 1465 |
| | | 1467 | 1473 | 1477 | 1478 | 1485 | 1513 | 1516 | 1545 | 1548 |
| | | 1550 | 1560 | 1583 | 1589 | 1590 | 1595 | 1599 | 1604 | 1610 |
| | | 1613 | 1622 | 1627 | 1629 | 1631 | 1642 | 1644 | 1651 | 1659 |
| | | 1664 | 1685 | 1693 | 1694 | 1712 | 1717 | 1719 | 1723 | 1728 |
| | | 1734 | 1746 | 1748 | 1753 | 1758 | 1759 | 1763 | 1768 | 1770 |
| | | 1772 | 1776 | 1784 | 1789 | 1802 | 1804 | 1811 | 1815 | 1834 |
| | | 1840 | 1843 | 1872 | 1879 | 1884 | 1889 | 1891 | 1895 | 1906 |
| | | 1941 | 1945 | 1946 | 1952 | 1954 | 1957 | 1958 | 1996 | 2035 |
| | | 2039 | 2041 | 2044 | 2059 | 2062 | 2070 | 2073 | 2079 | 2096 |
| | | 2099 | | | | | | | | |
| CALL | OPC | 0277 | 0324 | 0352 | 0414 | 0448 | 0539 | 0562 | 0567 | 0574 |
| | | 0576 | 0613 | 0621 | 0623 | 0637 | 0757 | 0760 | 0785 | 0806 |
| | | 0817 | 0821 | 0995 | 1041 | 1043 | 1061 | 1081 | 1228 | 1232 |
| | | 1236 | 1386 | 1392 | 1395 | 1398 | 1420 | 1446 | 1463 | 1490 |
| | | 1505 | 1508 | 1510 | 1514 | 1519 | 1523 | 1533 | 1690 | 1777 |
| | | 1803 | 1866 | 1999 | 2001 | 2003 | 2005 | 2006 | 2052 | 2090 |
| CALLL | OPC | 0153 | 0195 | 0206 | 0240 | 0265 | 0267 | 0275 | 0294 | 0295 |
| | | 0300 | 0301 | 0302 | 0354 | 0377 | 0389 | 0392 | 0423 | 0435 |
| | | 0436 | 0447 | 0461 | 0462 | 0466 | 0472 | 0535 | 0538 | 0553 |
| | | 0561 | 0572 | 0594 | 0597 | 0598 | 0600 | 0676 | 0712 | 0727 |
| | | 0738 | 0739 | 0740 | 0745 | 0753 | 0788 | 0801 | 0828 | 0974 |
| | | 0990 | 0993 | 1000 | 1003 | 1004 | 1026 | 1042 | 1046 | 1056 |
| | | 1057 | 1065 | 1090 | 1091 | 1112 | 1120 | 1134 | 1154 | 1155 |
| | | 1156 | 1157 | 1158 | 1161 | 1180 | 1181 | 1191 | 1201 | 1209 |
| | | 1210 | 1211 | 1212 | 1213 | 1214 | 1233 | 1235 | 1237 | 1238 |
| | | 1239 | 1244 | 1251 | 1252 | 1385 | 1411 | 1415 | 1417 | 1419 |
| | | 1429 | 1456 | 1499 | 1504 | 1521 | 1522 | 1535 | 1544 | 1563 |
| | | 1564 | 1573 | 1576 | 1577 | 1580 | 1596 | 1624 | 1625 | 1668 |
| | | 1669 | 1670 | 1671 | 1674 | 1680 | 1683 | 1686 | 1730 | 1733 |
| | | 1790 | 1791 | 1792 | 1793 | 1795 | 1800 | 1833 | 1835 | 1896 |
| | | 1897 | 1900 | 1910 | 2027 | 2051 | 2055 | 2074 | 2097 | |
| CAR1 | 1348 | 0161 | 1345 | | | | | | | |
| CAR3 | 1377 | 1349 | 1351 | | | | | | | |
| CAR5 | 1350 | 1375 | | | | | | | | |
| CARRIES | 2065 | 2062 | | | | | | | | |
| CARRY | 1337 | 1335 | 1339 | | | | | | | |
| CARRYON | 1338 | 0801 | 1326 | 1800 | | | | | | |
| CARRYON5 | 1325 | 1424 | | | | | | | | |
| CCLA | OPC | 1942 | | | | | | | | |
| CHECK#2 | 0677 | 0579 | | | | | | | | |
| CLA | OPC | 0084 | 0169 | 0373 | 0589 | 0761 | 0773 | 0847 | 0859 | 0919 |
| | | 0944 | 1100 | 1130 | 1153 | 1393 | 1396 | 1487 | 1778 | 1913 |
| | | 1921 | 1984 | | | | | | | |
| CLEAR | 1018 | 1020 | | | | | | | | |
| CLEAR1 | 1982 | 2006 | | | | | | | | |
| CLRLOOP | 1985 | 1996 | 1999 | 2001 | 2003 | 2005 | | | | |
| COMPARO | 1094 | 1110 | | | | | | | | |
| COMPARE | 1093 | 0422 | 0990 | | | | | | | |
| COMX | 1404 | 1263 | 1265 | 1409 | 1852 | 1986 | 1993 | | | |
| COMX8 | 1539 | 0639 | 0679 | 0683 | 1539 | 1541 | 1576 | 1580 | 1618 | 1620 |
| CONSON1 | 1509 | 0216 | | | | | | | | |

- 127 -

Table XII cont'd

```
CD2705    ASSEMBLER FOR  270   CHIP VERS 00. 02      02/07/80 (80.038) 15 15.19
                                                                  PAGE 0055
MNEMONIC VALUE   DEFN REFERENCES
CONSON2         1518   1513  1545
CORRECT0        0649   0645
CORRECT1        0650   0647
CORRECT2        0652   0648
CORRECT3        0654   0675
CF4IZ           OPC    1985
DEC#           .0970   0973
DIS             0224   0219  0251  0255  0259  0261  0270
DISLP+1         0797   0138
DISLP+1         0138   0125  0136
DISP            0358   0231  0388  0397  0401  0405  0408  0446
DISP&SAY        1725   1719
DISP.           0336   0410
DISP/KB         0078   0224  0338  0816  1077  1764  1901
DISP/KB.        0816   0820  0823
DISP/KB1        0097   1377
DISP/KEY        0082
DISPINC         1749   0146
DISPINC2        1771   1753
DISPLAY         2080   2090
DISPLAY#        2081   1417
DISX            0225   0205 .
DMAN            OPC    0179  0211  0903  0938  0970  2064
DP/KB2          1074   1069
DPLOAD          1703   1712
DSP/            1077
DSP/KB2         1764   1694  1768  1789  1815
DSP/KB2A        1760   1717
DSP1            0085   0121  0137  0145  0926
DSP2            0092   0107
DSP3            0115   0113
DSP4            0133   0143
DSP5            0139   0132
DSP9            0217   1957
DSPLETR         1781   1784
DYN             OPC    0101  0697  0898  0933  0960  1742
EIGHT7          0430   0414  0448  1112  1120  1624
EIGHT7          0780   0436
ELEVEN          1379   1392  1398  1680
END             OPC    2106
ENDOFPH         1286   1298
ENDOFPH1        1289   1285
ERAORENT        0398   0286  0328
ERASE           0384   0412
ERASE2          0389   0387  1687  1954
FIL$LOOP        0356   0358
FILBLANK        1296   1288
FILLBUFF        0271   0269
FILLLINK        1836   1834
FILLOOP         0355   0294
FILLSPAC        1527   0594  1004  1516  2055  2097
FINE            2103   2096  2099
FINISHED        0634
FINLDISP        1805   1811
FIVE15          2091   0598  1535  2052
FIVE? .         2047   0914
FIVE?0          0548   2050
```

- 128 -

Table XII cont'd

| MNEMONIC | VALUE | DEFN | REFERENCES | | | | | | |
|---|---|---|---|---|---|---|---|---|---|
| FIVETO1 | 1403 | 0240 | | | | | | | |
| FLASH | 0755 | 2045 | | | | | | | |
| FLASH | 2045 | 2039 | | | | | | | |
| FLASHO | 0760 | 0911 | | | | | | | |
| FLSHSWM | 2034 | 1892 | | | | | | | |
| FOUNDIT | 0993 | | | | | | | | |
| FOUR-11 | 1378 | 0600 | | | | | | | |
| FOUR14 | 0462 | 0539 | 0562 | 0567 | | | | | |
| FROM1TO4 | 0563 | 0566 | | | | | | | |
| FROM421 | 1835 | 1310 | 1643 | | | | | | |
| FROM621 | 1633 | 1840 | | | | | | | |
| GOPRESS | 0295 | 0325 | | | | | | | |
| HEARO | 0990 | 1613 | | | | | | | |
| HEARBEG | 1038 | 0476 | | | | | | | |
| HEARBEG2 | 1041 | 1051 | | | | | | | |
| HEARBEGN | 1032 | 1041 | 1544 | 1648 | | | | | |
| HEARIT | 1030 | 1091 | | | | | | | |
| HEARIT10 | 1028 | 1024 | | | | | | | |
| HEARROM | 1048 | 1040 | | | | | | | |
| HEARSRC | 1056 | 1027 | | | | | | | |
| HEARSRC1 | 1052 | 0424 | | | | | | | |
| HEARSRC6 | 1026 | 1007 | 1012 | | | | | | |
| HERE | 1740 | 1746 | | | | | | | |
| HERE1 | 0958 | 0964 | | | | | | | |
| HOWMANY | 0461 | 0573 | 1025 | | | | | | |
| IMAC | OPC | 0098 | 0112 | 0116 | 0213 | 0369 | 0627 | 0662 | 0673 | 0702 |
| | | 0731 | 0752 | 1117 | 1169 | 1267 | 1277 | 1279 | 1338 | 1586 |
| | | 1860 | 1871 | 1875 | 2067 | | | | | |
| INCPOINT | 1423 | 0676 | 1026 | 2051 | | | | | |
| INCR.8-9 | 0207 | 0277 | | | | | | | |
| INCR Y | 0213 | 0210 | 0324 | | | | | | |
| INCR4PNT | 0672 | 0665 | | | | | | | |
| INCSCORE | 1169 | | | | | | | | |
| IYC | OPC | 1108 | 1140 | 1483 | 1632 | | | | |
| KD1 | 0162 | 0160 | | | | | | | |
| KD2 | 0177 | 0154 | 0172 | | | | | | |
| KD2A | 0176 | 0174 | | | | | | | |
| KD3 | 0150 | 0180 | | | | | | | |
| KEYDOW | 1352 | 1370 | | | | | | | |
| KEYDOWN | 0155 | 0142 | 1354 | | | | | | |
| KLINES | 0181 | | | | | | | | |
| KNEZ | OPC | 0131 | 0171 | 1322 | | | | | |
| LABEL | 1893 | 1891 | | | | | | | |
| LDONE+1 | 1711 | | | | | | | | |
| LDP | OPC | 0126 | 0130 | 0199 | 0220 | 0228 | 0234 | 0281 | 0284 | 0287 |
| | | 0291 | 0317 | 0333 | 0417 | 0420 | 0449 | 0458 | 0474 | 0479 |
| | | 0548 | 0577 | 0603 | 0606 | 0629 | 0749 | 0790 | 0812 | 1307 |
| | | 1425 | 1611 | 1614 | 1640 | 1721 | 1761 | 1904 | 1949 | 1955 |
| | | 2042 | | | | | | | | |
| LDX | OPC | 0078 | 0086 | 0092 | 0110 | 0122 | 0134 | 0140 | 0156 | 0181 |
| | | 0194 | 0248 | 0252 | 0272 | 0311 | 0329 | 0367 | 0375 | 0381 |
| | | 0398 | 0402 | 0415 | 0430 | 0441 | 0470 | 0485 | 0489 | 0493 |
| | | 0497 | 0508 | 0523 | 0527 | 0530 | 0541 | 0558 | 0583 | 0585 |
| | | 0592 | 0634 | 0641 | 0655 | 0657 | 0666 | 0692 | 0709 | 0747 |
| | | 0764 | 0777 | 0781 | 0799 | 0807 | 0824 | 0837 | 0845 | 0886 |
| | | 0889 | 0896 | 0902 | 0909 | 0921 | 0927 | 0937 | 0947 | 0952 |
| | | 0958 | 0961 | 0985 | 1010 | 1013 | 1016 | 1030 | 1033 | 1052 |

- 129 -

Table XII cont'd

```
LD2705     ASSEMBLER FOR   270    CHIP VERS 00.02        02/07/80 (50 038) 15 15.19
                                                                        PAGE 0057
MNEMONIC VALUE   DEFN REFERENCES
                      1075   1088   1094   1076   1070   1105   1127   1145   1164
                      1216   1220   1248   1273   1275   1293   1303   1305   1315
                      1325   1332   1348   1352   1371   1383   1388   1391   1404
                      1406   1432   1447   1453   1459   1468   1489   1491   1509
                      1518   1530   1555   1584   1609   1615   1637   1654   1656
                      1661   1665   1702   1705   1707   1709   1714   1740   1743
                      1749   1754   1773   1779   1785   1787   1798   1806   1808
                      1812   1845   1848   1854   1864   1882   1886   1907   1937
                      1947   1982   1998   2000   2002   2004   2048   2053   2081
                      2083   2086   2071   2100
LDX1         1332   1003   1180   1237   1395
LDX2         1537   1514   1523
LDX8TCY7     0591   0613
LDX9TRAN     1609   0423   1000   1833
LESSTHN9     2058   2070
LETTER       0248   0280
LETTER1      0262
LETTER2      0266   0264
LEVEL0       0377
LEVEL1       0429   1952
LEVEL2       0367   0352   1415
LEVEL2.      0364   0346
LEVEL4       0374   0372
LEVEL=0      1475   1473
LEVEL=2      1466
LINK         1248   1037   1435   1457
LINK.        1037
LINK0        1253   1157   1836
LINK1        1257   1282
LINK4        1435   1412
LINK4A       1457
LINK5        1178   1642   1644
LINK5A       1176   1174
LINK6        1648   1651
LINKEDIT     1251   1182
LINKIT       1252   1291
LNK$ET       1591   1589
LNK$ET+1     1593
LOAD         1600   1595
LOADDISP     1702   1600
LOADR+1      0850   0466   0904   1577   1674
LOADRES1     0843   0472
LOADRESS     0844   0535   0740   0955   1252   1596
LSHIFT       0897   0900
LSHIFT-1     0895   0988
LSSCORE      1133   1125
LSTSDIG      0497   0517
LSTUMPER     1491   0302   1057   1477   2044
MAINLOOP     1793   1802
MEMADDR      0914   0461   0538   0561   0625   0739   0633   0640   1092   1251
                    1670   1792   1906   1910
MEMADDR2     1911
MEMDRED      0947   2027
MEMLOOP      0922   0939
MNEA         OPC    0173   0342   0506   0578   0684   1006   1011   1097   1106
                    1141   1317
MNEZ         OPC    0159   0263   0544   1284   1290   1308   1775   2072
```

Table XII cont'd

```
MNEMONIC VALUE   DEFN REFERENCES
MODE            0339  0332
MODE=1          0342  0340
MODSELEC        1041  0283
MOSTSDIC        0506  0496
MSD=1           0279  0247
MSD=1ERO        0246  0202
MSD=2           0327  0201
NEWMODE         0347  0343  0366  2033
NEWMODE1        0348
NOCARRY         1340  1336
NOMOREO         1885  1872
NOTEGUAL        0502
NOTFOUND        1000  0992
NOTLS           1244  1242
NOTZERO         1337  1309
NUMB64          1210
NXTDSP          1779  1770
ODD             0440  0438
OFF             1346  0289
OK              0495  0491
OK3             0639
OKTOO           0523  0507
ONCE            0574  0631
ONCEA           0577  0575
ONCEB           0618  0681
ONE             1104  1102
ORGPG    OPC    0203  0326  0455  0581  0708  0827  0967  1084  1195
                1312  1439  1566  1588  1816  1975
OUTADD          1584  1604
OUTADDR         1573  0966  1590
OUTADDR2        0854  0462  1573  1671  1793
P.R.            0537  0457
P.R.1           0546
PART1           1778  1759
PART2           1769  1772
PAUSECON        0821  0805
PERFECT         1201  1199
PERFECT1        1196  1231
PIC             2086  2079
PICTO           1649  1631
PICT2           2095
PICT3           2074  0236
PICT7           0535  0545
PICT8           0536  0505
PICTREAD        2051  2041
PICTUR          0712
PICTURE         0709  0617
PREGO           1765  1776
PRESSGO         1078  0227  1895
PRPH            1633  0714
PUT6INM         1701  1134  1900
PUTIN1          0641  0623  0671  0828  1835
PUTIN1          0670  0572  0738  1669  2103
PUTIN1A         0623  0792
PUTIN5          1654  1659
PUTIN5.         1653  1090
GUIT            1806  1804
```

- 131 -

Table XII cont'd

| MNEMONIC | VALUE | DEFN | REFERENCES | | | | | | | |
|---|---|---|---|---|---|---|---|---|---|---|
| RADD0 | 0316 | 0313 | | | | | | | | |
| RADD9 | 0314 | | | | | | | | | |
| RAND# | 0487 | 0519 | 0534 | | | | | | | |
| RANDLIM | 0467 | 0547 | 0565 | | | | | | | |
| RANDNUM | 0515 | 0522 | | | | | | | | |
| RANDNUM1 | 0509 | 0526 | | | | | | | | |
| RANDOM | 0490 | 0494 | | | | | | | | |
| RANDOM# | 0485 | | | | | | | | | |
| RANDOM1 | 0527 | 0576 | 0980 | | | | | | | |
| RANDOM2 | 0530 | 0574 | | | | | | | | |
| RANDOM3 | 0569 | 0637 | | | | | | | | |
| RANDSCOR | 1173 | | | | | | | | | |
| RATE0 | 0775 | 0769 | | | | | | | | |
| RATE1 | 0776 | 0763 | 0771 | | | | | | | |
| RATE2 | 0773 | 0300 | 0447 | 0806 | 1155 | | | | | |
| RATE3 | 0761 | 1896 | | | | | | | | |
| RBIT | OPC | 0304 | 0305 | 0350 | 0351 | 0571 | 0612 | 0725 | 0726 | 0737 |
| | | 0815 | 0906 | 1076 | 1085 | 1126 | 1186 | 1496 | 1553 | 1554 |
| | | 1591 | 1652 | 1767 | 1814 | | | | | |
| RBIT3-12 | 0296 | 1156 | 1686 | | | | | | | |
| RCOMX8 | 1538 | 0267 | 0275 | 1463 | 1510 | 1519 | 1533 | | | |
| REAC | OPC | 1885 | 2009 | | | | | | | |
| READIT | 0566 | 0321 | | | | | | | | |
| READIT0 | 0968 | 0478 | | | | | | | | |
| READIT1 | 0981 | 0977 | | | | | | | | |
| READIT10 | 1546 | 1676 | | | | | | | | |
| READIT11 | 1562 | 1560 | | | | | | | | |
| READIT12 | 1401 | 1089 | | | | | | | | |
| READIT14 | 1686 | 1629 | | | | | | | | |
| READIT15 | 1730 | 1728 | | | | | | | | |
| READIT16 | 0722 | 0736 | | | | | | | | |
| READIT17 | 0725 | 0744 | | | | | | | | |
| READIT18 | 2046 | 2035 | | | | | | | | |
| READIT2 | 0718 | | | | | | | | | |
| READIT20 | 0571 | 2046 | | | | | | | | |
| READIT3 | 0985 | 0979 | | | | | | | | |
| READIT4 | 1425 | 0605 | | | | | | | | |
| READIT5 | 1652 | 1427 | | | | | | | | |
| READIT6 | 1677 | 1664 | | | | | | | | |
| READIT7 | 1665 | 1685 | | | | | | | | |
| READIT8 | 1553 | 1548 | | | | | | | | |
| READIT9 | 1552 | 1550 | | | | | | | | |
| READITC | 0974 | 0971 | | | | | | | | |
| REPLAY | 0444 | 0391 | | | | | | | | |
| REPLAY2 | 0232 | 0453 | | | | | | | | |
| REPLAY3 | 0240 | 0451 | | | | | | | | |
| REPLAY4 | 0447 | 0230 | 0337 | | | | | | | |
| RETN | OPC | 0215 | 0299 | 0359 | 0370 | 0434 | 0465 | 0503 | 0593 | 0668 |
| | | 0706 | 0733 | 0783 | 0809 | 0890 | 0910 | 0956 | 0965 | 1022 |
| | | 1036 | 1111 | 1139 | 1219 | 1283 | 1341 | 1410 | 1450 | 1462 |
| | | 1486 | 1495 | 1531 | 1542 | 1623 | 1660 | 1713 | 1747 | 1858 |
| | | 1997 | 2085 | 2094 | | | | | | |
| RETN$BC1 | 0204 | 1958 | | | | | | | | |
| RETN$BCH | 1947 | 1945 | | | | | | | | |
| RGHTWRNG | 1148 | 1132 | | | | | | | | |
| RIGHT | 1144 | 1115 | | | | | | | | |
| RIGHT2 | 1459 | 0206 | 0553 | 1446 | 1505 | | | | | |

Table XII cont'd

CD2705   ASSEMBLER FOR  270   CHIP VERS 00 02      02/07/80 (80 038) 15 15 19
                                                              PAGE 0060

| MNEMONIC | VALUE | DEFN | REFERENCES | | | | | | | |
|---|---|---|---|---|---|---|---|---|---|---|
| PIGHT2A | 1458 | 0974 | 1118 | | | | | | | |
| RSTR | OPC | 0083 | 0102 | 0109 | 0107 | 0862 | 0864 | 0866 | 0868 | 0873 |
| | | 0875 | 0878 | 0883 | 0925 | 0930 | 0942 | 0946 | 0951 | 1321 |
| | | 1347 | 1917 | 1924 | 1926 | 1929 | 1934 | 1992 | 2014 | 2019 |
| | | 2021 | 2026 | | | | | | | |
| SAMEMODE | 0344 | | | | | | | | | |
| SAY1 | 1029 | 0996 | | | | | | | | |
| SAY110o | 1045 | 1063 | 1205 | | | | | | | |
| SAY2 | 1399 | 1422 | | | | | | | | |
| SAYLETT1 | 1389 | 1528 | | | | | | | | |
| SAYLETTR | 1381 | 0278 | | | | | | | | |
| SAYTHE# | 1413 | 0223 | | | | | | | | |
| SBIT | OPC | 0349 | 0413 | 0525 | 0529 | 0610 | 0720 | 0794 | 0839 | 0987 |
| | | 1080 | 1185 | 1428 | 1434 | 1603 | 1788 | 1909 | | |
| SBIT3121 | 1907 | 1729 | | | | | | | | |
| SCORE | 1227 | 1135 | 1222 | | | | | | | |
| SCORE2 | 1232 | | | | | | | | | |
| SCORE6 | 1468 | 1478 | | | | | | | | |
| SCOREIS | 1206 | 0550 | | | | | | | | |
| SEAC | OPC | 1844 | | | | | | | | |
| SELFTEST | 1689 | 1366 | | | | | | | | |
| SETBIT1 | 1601 | 1583 | | | | | | | | |
| SETDSP | 1785 | | | | | | | | | |
| SETDSP1 | 1787 | 1748 | | | | | | | | |
| SETR | OPC | 0090 | 0104 | 0855 | 0857 | 0861 | 0863 | 0865 | 0867 | 0872 |
| | | 0877 | 0882 | 0885 | 0915 | 0917 | 0924 | 0929 | 0941 | 0945 |
| | | 0950 | 1319 | 1912 | 1916 | 1919 | 1923 | 1928 | 1933 | 1936 |
| | | 2008 | 2016 | 2018 | 2020 | 2023 | 2025 | | | |
| SHIFT | 0697 | 0700 | | | | | | | | |
| SHIFT1 | 0695 | 0705 | | | | | | | | |
| SHIFT1SP | 1481 | 1490 | | | | | | | | |
| SHIFT2SP | 1482 | 1485 | | | | | | | | |
| SHIFTR1 | 1480 | 1467 | | | | | | | | |
| SHIFTUP | 0932 | 0935 | | | | | | | | |
| SMALLENO | 2071 | 2059 | | | | | | | | |
| SPEAK | 1844 | 0239 | 1295 | | | | | | | |
| SPEAK+1 | 1845 | | | | | | | | | |
| SPEAK2 | 0239 | 0454 | | | | | | | | |
| SPK | 1853 | 1866 | | | | | | | | |
| SPK+DISP | 0837 | 0832 | 0835 | 1046 | 1060 | 1181 | 1211 | 1238 | 1411 | 1733 |
| SPK+DSP | 0636 | 0443 | 1154 | 1564 | | | | | | |
| SPK+DSP2 | 0834 | 0669 | 1065 | | | | | | | |
| SPKLOOP | 1851 | 1879 | | | | | | | | |
| SPKLOP | 1856 | | | | | | | | | |
| SPKLOP-1 | 1848 | 1946 | | | | | | | | |
| SPKREG | 1914 | | | | | | | | | |
| SPKREG+1 | 1918 | 0129 | | | | | | | | |
| STARS | 1214 | 1471 | | | | | | | | |
| STARS1 | 1221 | 1226 | | | | | | | | |
| STARS2 | 1215 | 1232 | 1236 | | | | | | | |
| STARS3 | 1216 | 1228 | | | | | | | | |
| STOREY | 0214 | 0212 | | | | | | | | |
| STUMPERS | 1441 | 0460 | | | | | | | | |
| SUBTRA10 | 2060 | 2073 | | | | | | | | |
| SUM350 | 1790 | 0419 | | | | | | | | |
| TAM | OPC | 0099 | 0114 | 0177 | 0214 | 0271 | 0488 | 0504 | 0628 | 0653 |
| | | 0660 | 0674 | 0691 | 0703 | 0732 | 0798 | 0836 | 0843 | 1170 |

- 133 -

Table XII cont'd

MNEMONIC VALUE   DEFN REFERENCES

|  |  |  | 1177 | 1264 | 1268 | 1274 | 1313 | 1340 | 1534 | 1543 | 1706 |
|---|---|---|---|---|---|---|---|---|---|---|---|
|  |  |  | 1857 | 1876 | 1939 | 1987 | 1988 | 1989 | 1990 | 1994 | 2065 |
|  |  |  | 2082 |  |  |  |  |  |  |  |  |
| TAMA.C | 1313 |  | 1386 | 1420 | 1522 |  |  |  |  |  |  |
| TAMDYN | OPC | 0502 | 1279 | 1280 | 1692 | 1810 | 1973 | 1995 | 2054 |  |  |
| TAMIYC | OPC | 0087 | 0348 | 0374 | 0510 | 0586 | 0640 | 0663 | 0779 | 1148 |  |
|  |  | 1163 | 1204 | 1247 | 1302 | 1337 | 1407 | 1587 | 1619 | 1657 |  |
|  |  | 1710 | 1781 | 1861 | 2063 | 2068 |  |  |  |  |  |
| TAMZA | OPC | 0560 | 0780 | 0850 | 0922 | 1304 | 1546 | 1557 | 1991 | 2031 |  |
| TAY | OPC | 0100 | 0105 | 1168 | 1356 |  |  |  |  |  |  |
| TBIT | OPC | 0118 | 0124 | 0128 | 0135 | 0141 | 0200 | 0218 | 0226 | 0229 |  |
|  |  | 0250 | 0254 | 0258 | 0260 | 0292 | 0334 | 0345 | 0365 | 0400 |  |
|  |  | 0404 | 0407 | 0409 | 0418 | 0445 | 0475 | 0477 | 0511 | 0516 |  |
|  |  | 0549 | 0604 | 0608 | 0614 | 0680 | 0718 | 0722 | 0729 | 0743 |  |
|  |  | 0750 | 0762 | 0768 | 0770 | 0791 | 0810 | 0813 | 0818 | 0822 |  |
|  |  | 0831 | 0887 | 0954 | 0978 | 0983 | 1039 | 1050 | 1101 | 1363 |  |
|  |  | 1369 | 1374 | 1426 | 1515 | 1547 | 1549 | 1559 | 1582 | 1588 |  |
|  |  | 1594 | 1598 | 1612 | 1663 | 1716 | 1718 | 1722 | 1727 | 1762 |  |
|  |  | 1839 | 1842 | 1888 | 1890 | 1894 | 1905 | 1940 | 1953 | 2043 |  |
| TCMIY | OPC | 0080 | 0081 | 0088 | 0155 | 0163 | 0164 | 0175 | 0233 | 0238 |  |
|  |  | 0298 | 0315 | 0323 | 0353 | 0356 | 0376 | 0380 | 0382 | 0394 |  |
|  |  | 0469. | 0499 | 0540 | 0563 | 0566 | 0568 | 0569 | 0624 | 0635 |  |
|  |  | 0643 | 0694 | 0756 | 0759 | 0834 | 0846 | 0908 | 0759 | 0962 |  |
|  |  | 0972 | 0997 | 1018 | 1028 | 1029 | 1032 | 1035 | 1044 | 1045 |  |
|  |  | 1054 | 1055 | 1059 | 1062 | 1063 | 1082 | 1129 | 1147 | 1149 |  |
|  |  | 1150 | 1151 | 1166 | 1188 | 1190 | 1193 | 1224 | 1229 | 1250 |  |
|  |  | 1255 | 1294 | 1330 | 1331 | 1376 | 1382 | 1414 | 1421 | 1431 |  |
|  |  | 1442 | 1444 | 1445 | 1449 | 1455 | 1470 | 1493 | 1498 | 1502 |  |
|  |  | 1503 | 1593 | 1633 | 1636 | 1646 | 1647 | 1650 | 1701 | 1732 |  |
|  |  | 1741 | 1744 | 1756 | 1786 | 1797 | 1847 | 1850 | 2057 | 2084 |  |
|  |  | 2101 | 2102 |  |  |  |  |  |  |  |  |
| TCMIY4 | 1330 |  | 1210 | 1235 |  |  |  |  |  |  |  |
| TCMIY6 | 1331 |  |  |  |  |  |  |  |  |  |  |
| TCY | OPC | 0079 | 0082 | 0085 | 0089 | 0091 | 0103 | 0108 | 0111 | 0115 |  |
|  |  | 0117 | 0123 | 0127 | 0133 | 0152 | 0157 | 0165 | 0168 | 0178 |  |
|  |  | 0182 | 0198 | 0208 | 0232 | 0237 | 0249 | 0253 | 0257 | 0262 |  |
|  |  | 0273 | 0290 | 0297 | 0314 | 0316 | 0330 | 0344 | 0347 | 0364 |  |
|  |  | 0368 | 0399 | 0403 | 0406 | 0416 | 0431 | 0442 | 0464 | 0468 |  |
|  |  | 0480 | 0498 | 0500 | 0509 | 0513 | 0515 | 0518 | 0520 | 0524 |  |
|  |  | 0528 | 0531 | 0533 | 0542 | 0551 | 0559 | 0582 | 0591 | 0602 |  |
|  |  | 0607 | 0619 | 0638 | 0642 | 0652 | 0658 | 0661 | 0667 | 0672 |  |
|  |  | 0682 | 0686 | 0693 | 0695 | 0701 | 0742 | 0748 | 0755 | 0765 |  |
|  |  | 0778 | 0782 | 0784 | 0793 | 0800 | 0808 | 0830 | 0838 | 0844 |  |
|  |  | 0854 | 0856 | 0858 | 0869 | 0870 | 0874 | 0876 | 0879 | 0880 |  |
|  |  | 0884 | 0895 | 0901 | 0905 | 0907 | 0914 | 0916 | 0918 | 0926 |  |
|  |  | 0931 | 0936 | 0943 | 0948 | 0953 | 0957 | 0969 | 0982 | 0986 |  |
|  |  | 1008 | 1014 | 1017 | 1021 | 1031 | 1034 | 1049 | 1053 | 1064 |  |
|  |  | 1070 | 1079 | 1116 | 1128 | 1133 | 1137 | 1143 | 1146 | 1152 |  |
|  |  | 1165 | 1171 | 1176 | 1187 | 1189 | 1218 | 1227 | 1249 | 1254 |  |
|  |  | 1257 | 1261 | 1266 | 1271 | 1276 | 1289 | 1292 | 1299 | 1306 |  |
|  |  | 1320 | 1324 | 1333 | 1342 | 1346 | 1353 | 1362 | 1368 | 1373 |  |
|  |  | 1379 | 1381 | 1384 | 1387 | 1403 | 1413 | 1423 | 1433 | 1448 |  |
|  |  | 1460 | 1469 | 1481 | 1492 | 1494 | 1497 | 1501 | 1528 | 1538 |  |
|  |  | 1556 | 1558 | 1575 | 1579 | 1585 | 1592 | 1602 | 1616 | 1635 |  |
|  |  | 1638 | 1653 | 1662 | 1678 | 1702 | 1715 | 1720 | 1726 | 1739 |  |
|  |  | 1750 | 1755 | 1760 | 1766 | 1774 | 1780 | 1799 | 1813 | 1838 |  |
|  |  | 1841 | 1846 | 1849 | 1855 | 1859 | 1870 | 1877 | 1881 | 1887 |  |

Table XII cont'd

```
CD2705    ASSEMBLER FOR  270    CHIP VERS 00 02       02/07/80 (80 038) 15 15.19
                                                                      PAGE 0052
MNEMONIC VALUE   DEFN REFERENCES
                      1899  1903  1908  1915  1918  1920  1925  1927  1930
                      1931  1935  1938  1948  1983  2007  2013  2015  2017
                      2022  2024  2036  2049  2060  2066  2071  2076  2087
                      2092
TCY10       1332      0597  1668  1683  1795
TCY6        0490      0570  1504
TCY6        0980      0984  0988
TDISPINC    0144      0119
TDO         OPC       0094  1318
TESTJAM     1367      1358  1361  1364
TESTJAM1    1355      1323
THREE-12    0807      0757  0817  0821
TIMEUP      1315      0095
TKA         OPC       0881  1932
TKM         OPC       0158
TMA         OPC       0093  0176  0182  0197  0274  0433  0486  0514  0521
                      0532  0543  0584  0616  0656  0678  0687  0696  0803
                      0825  0928  1009  1015  1095  1138  1172  1207  1217
                      1259  1270  1286  1300  1316  1343  1372  1389  1405
                      1461  1529  1617  1639  1655  1679  1682  1704  1708
                      1807  1853  1880  1950  2029  2037  2069  2077  2088
                      2093
TMY         OPC       0166  0221  0310  0385  0654  0659  1067  1197  1258
                      1262  1269  1272  1359  1511  1540  1751  1851  1856
                      1863
TONE        0381
TRAN421     0795      0787
TRAN4TO1    0828      0795
TRANS       1617      1622
TRANS-1     1611      1599
TRANS-2     1616      1610
TRANS-3     1615      0727  1042  1056  1791
TRANS1      1624
TRANSFER    0582      0536  0621  0745  0993  1212  1239  1565
TRANSFRO    0612      0609
TRANSFR1    0626      0615
TRYAGAIN    1183      1123
TWICE       0576      0633
TWICE2      0676      0580
TYA         OPC       1144  1666
WHICHONE    0456      0322
WORDM       1646      1627
WORDMAK     0729      0717  0719
WORDMAK&    1090      1087
WORDMAK0    0715      0711
WORDMAK1    0731      0724  0785
WORDMAK2    0735      0730
WORDMAK3    0740      0728  0754
WORDMAK5    0737      0723
WORDMAK7    0621      1724
WORDMAK8    1091      0241
WORDMAK9    1085      0751
WORDMAKE    0553      0319
WRONG       1119      1098  1107  1142
WRONG2      1126      1184
WRONG3      0788      0819
XMA         OPC       0698  0897  0932  1482
```

- 135 -

TABLE XIII

TB8 READ SEQUENCE

| STEP | COUNTER 623 CONTENTS (BINARY) | COUNTER 624 CONTENTS (HEX) | SIGNALS GENERATED |
|------|-------------------------------|----------------------------|-------------------|
| 1 | 11 | F | SAD, INC |
| 2 | 11 | E | DC, INC |
| 3 | 11 | C | DC, INC |
| 4 | 11 | 8 | DC, INC |
| 5 | 11 | 0 | DC, INC |
| 6 | 11 | 1 | DC, INC |
| 7 | 11 | 3 | SAM, DC, INC |
| 8 | 11 | 7 | PC |
| 9 | 01 | F | SAD, TF |
| 10 | 01 | E | BR, PC |
| 11 | 01 | C | BR, DC |
| 12 | 01 | 8 | BR, DC |
| 13 | 01 | 0 | BR, DC |
| 14 | 01 | 1 | DC |
| 15 | 01 | 3 | SAM, DC |
| 16 | 01 | 7 | PC |
| 17 | 00 | F | SAD, TF |
| 18 | 00 | E | BR |
| 29 | 00 | C | BR |
| 20 | 00 | 8 | BR |
| 21 | 00 | 0 | |
| 22 | 00 | 1 | |
| 23 | 00 | 3 | |
| 24 | 00 | 7 | PC |
| 25 | 10 | F | SAD, INC |
| 26 | 10 | E | DC, INC |
| 27 | 10 | C | DC, INC |
| 28 | 10 | 8 | DC, INC |
| 29 | 10 | 0 | DC, INC |
| 30 | 10 | 1 | DC, INC |
| 31 | 10 | 3 | SAM, DC, INC |
| 32 | 10 | 7 | PC, ZERO |

- 136 -

TABLE XIV

TB8 READ SEQUENCE

| STEP | COUNTER 623 CONTENTS (BINARY) | COUNTER 624 CONTENTS (HEX) | SIGNALS GENERATED |
|---|---|---|---|
| 1 | 10 | F | SAD, INC |
| 2 | 10 | E | DC, INC |
| 3 | 10 | C | DC, INC |
| 4 | 10 | 8 | DC, INC |
| 5 | 10 | 0 | DC, INC |
| 6 | 10 | 1 | DC, INC |
| 7 | 10 | 3 | SAM, DC, INC |
| 8 | 10 | 7 | PC, $\overline{ZERO}$ |

TABLE XV

$I_0/I_1$ COMMANDS

| $I_0$ | $I_1$ | |
|---|---|---|
| 0 | 0 | No Operation |
| 0 | 1 | Load Address (LA) |
| 1 | 0 | Transfer Bit (TB) |
| 1 | 1 | Read and Branch (RB) |

TABLE XI

Counter 619/PLA 620 Timing Sequence

| STEP | COUNTER CONTENTS (HEX) | SIGNALS GENERATED |
|---|---|---|
| 1 | 0 | $\overline{LA1}$, TB8 |
| 2 | 8 | $\overline{LA2}$ |
| 3 | C | $\overline{LA3}$ |
| 4 | E | $\overline{LA4}$ |
| 5 | F | |
| 6 | 7 | |
| 7 | 3 | |
| 8 | 1 | |

WHAT IS CLAIMED IS:

1. An electronic learning aid comprising: operator input means for receiving an input from an operator of the learning aid; audio means responsive to an input from said operator input means for audibly announcing at least a selected word in a human language corresponding to the input from said operator input means; display means for visually displaying indicia representative of said at least a selected word audibly announced by said audio means; and controller means coupled to said audio means, said display means and said operator input means for interactively regulating the audible output of said audio means and the visual display of said display means in relation to the input from said operator input means; characterized in that said controller means includes circuitry for regulating said audio means, said display means, and said operator input means such that said audio means is effective for audibly announcing at least a portion of one of a selected word or phrase in a human language, said display means is effective for visually displaying a plurality of words in said human language including said selected word, and said operator input means is effective to receive an input from an operator which is indicative of the selection by the operator of a particular one of said visually displayed plurality of words; and further including comparison means coupled to said controller means, said audio means, said display means and said operator input means for providing a signal indicative of whether said particular one of said visually displayed plurality of words is said selected word.

2. An electronic learning aid as set forth in Claim 1, further characterized in that said audio means is effective for audibly announcing a selected word in a human language.

- 139 -

3. An electronic learning aid as set forth in Claim 1, further characterized in that said audio means is effective for audibly announcing a portion of a phrase in a human language intended to contain said selected word, but from which said selected word is omitted.

4. An electronic learning aid as set forth in any of Claims 1-3, further characterized in that said audio means is responsive to the signal provided by said comparison means to audibly announce whether said particular one of said visually displayed plurality of words is said selected word.

5. An electronic learning aid as set forth in any of Claims 1-4, further characterized by memory means for storing digital data including digitized speech data representative of a plurality of words in a human language, said audio means comprising speech synthesis means and audio presentation means, said speech synthesis means being coupled to said memory means and including means for converting said digital data to analog signals representative of human speech, and said audio presentation means being coupled to said speech synthesis means for converting said analog signals into audible human speech for audibly announcing said at least a portion of one of a selected word or phrase in a human language.

6. An electronic learning aid as set forth in Claim 5, characterized in that said audio presentation means is a speaker.

7. An electronic learning aid as set forth in either of Claims 5 or 6, further characterized in that the digitized speech data is stored as a plurality of coefficients representing linear predictive filter coefficients and a voice excitation parameter, and said speech synthesis means including a linear predictive filter responsive to said coefficients and said parameter.

8. An electronic learning aid as set forth in any preceding claim, further characterized in that said display means includes means for displaying said visually displayed plurality of words in a sequential manner.

9. An electronic learning aid as set forth in any of Claims 1-7, further characterized in that said display means includes means for displaying said visually displayed plurality of words simultaneously.

10. An electronic learning aid as set forth in any preceding claim, characterized in that said operator input means comprises a keyboard.

1 / 53

Fig. 1

4a

2

3

1

Fig. 2

A I K AP

L

AP

F B

G H

E C

C

M

N

D D1 J D2 DP

Fig. 3

Fig. 4a

Fig. 4b

Fig. 5

*Fig. 6*

Fig.7a

Fig. 7b

8 / 53

0036559

Fig, 7c

9 / 53

0C35559

PRECHARGE REMOVER

Fig.7d

Fig. 8a

Fig. 8b

Fig. 8c

13 / 53

CO36559

0036559

14 / 53

Fig.8d

Fig. 8e

Fig. 8f

Fig. 9a

TO FIG. 11
PTφ3

TO FIG 9b
AA

305
4,3

306

321

308

330

PC=1
TI
PCØ

TP
PCØ

PC=1

TP
PCØ

320

307

317

FROM FIG. 8
PROMOUT
φ1

PCØ

TK
TE10

TP

17/53

0036559

*Fig. 9b*

311 DIV1 DIV2 DIV4 DIV8

TE10 TK PCφ

327 324 ZPAR

310 323 INHINT 322

325

TO FIG 9b
BB CC

303'

309 DIV2 DIV4 DIV8

Fig.9c

Fig. 9d

Fig. 10a

Fig. 10b

C036559

Fig. 10c

24 / 53

Fig. 11a

*Fig. 11b*

Fig. 11c

Fig. 11d

Fig. 12b

Fig. 12a

SEE Fig. 8

TO Fig. 8

DECODE PLA *203*

0036559

Fig. 13a

*Fig. 13b*

TO REG 201, FIG. 8

OUTPUT TRANSFER

Y-DECODE
*202d*

$C_0$
$C0$
$C_1$
$C1$

54
53
52

54 LINES
X-DECODE

1

PRECHG
VDD
TREE/DISCHG
VSS

TREE/DISCHG1

54 ROWS(METAL
x4 BITS/ROW
216 BITS/CELL
x10 CELLS
2160 BITS

PRECHG1

*Fig. 13c*

*202*

A
B
X
O

VDD
B
A
O
B
VSS

*202a*

Fig. 14a

0036559

Fig. 14b

Fig. 15a

Fig. 15b

Fig. 16a

*Fig. 16b*

TO DIGIT LOGIC

Fig. 16c

*Fig. 17*

Fig. 18

Fig. 19

0036559

Fig. 20a

Fig. 20b

*Fig. 20c*

Fig. 20a

45/53

C036559

Fig. 20e

Fig. 20f

Fig. 21a

ROM 131K, 16,384 X 8

REPEATED 4 TIMES

*Fig. 21b*

35 36 37 38 39 40 41 42 43 44 45 46 47 48 49 50 51 52 53 54 55 56 57 58 59 60 61 62 63 64   1  2 . . . . 64  1

2ND DECODE EXACT COPY OF 1ST SECTION, BUT COUNT TAKEN OFF OPPOSITE END.

RO₁  RO₂

Fig. 2Ic

ROM ADDRESS BUFFERS 625

Fig. 21d

51 / 53

0036559

Fig. 22

*Fig. 23a*

53 / 53

*Fig. 23b*

*Fig. 23c*

0036559

| European Patent Office | EUROPEAN SEARCH REPORT | Application number EP 81 10 1758 |

## DOCUMENTS CONSIDERED TO BE RELEVANT

| Category | Citation of document with indication, where appropriate, of relevant passages | Relevant to claim |
|---|---|---|
| | <u>DE - A - 2 917 161</u> (TEXAS INSTRUMENTS INC.)<br>* The whole document *<br>& US - A - 4 189 779 | 1,2,4,<br>8,10 |
| | <u>CA - A - 1 057 855</u> (BEDDOES M.P. et al. )<br>* Figure 5; page 5, line 14 - page 25 * | 1,2,5,<br>6,10 |
| | <u>FR - A - 2 300 379</u> (DUPITRE)<br>* Claims * | 1,2 |

**CLASSIFICATION OF THE APPLICATION (Int. Cl. ³)**

G 09 B 17/00
7/04
G 06 F 3/16
G 10 L 1/08

**TECHNICAL FIELDS SEARCHED (Int. Cl.³)**

C 09 B 17/00
7/04
G 09 B 5/04
5/06
G 06 F 3/16
G 10 L 1/08

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search The Hague | Date of completion of the search 24-06-1981 | Examiner CARDON |

EPO Form 1503.1 06.78